# EUROPÄISCHE PATENTSCHRIFT

(11) **EP 4 670 816 B1**
(45) Veröffentlichungstag und Bekanntmachung des Hinweises auf die Patenterteilung: **02.12.2026**
(21) Anmeldenummer: 25213236.0
(22) Anmeldetag: 06.02.2024
(51) Int. Cl.: B01D 39/16, A62B 17/00, A62D 5/00, B01D 39/18, B01D 39/20

(54) **SCHUTZ- UND/ODER FILTERMATERIAL, INSBESONDERE ADSORPTIONSFILTERMATERIAL, MIT PARTIKEL- UND/ODER AEROSOLFILTERFUNKTION MIT VERBESSERTER REGENERATIONSBESTÄNDIGKEIT, INSBESONDERE WASCHBESTÄNDIGKEIT**
FILTER MATERIAL, ESPECIALLY ADSORPTION FILTER MATERIAL, WITH IMPROVED REGENERATION RESISTANCE, ESPECIALLY WASHING RESISTANCE II
MATÉRIAU DE FILTRATION ET/OU DE PROTECTION, EN PARTICULIER MATÉRIAU DE FILTRATION ADSORBANT, AVEC UNE FONCTION DE FILTRATION PARTICULAIRE ET/OU AÉROSOL AYANT UNE RÉSISTANCE À LA RÉGÉNÉRATION AMÉLIORÉE, EN PARTICULIER RÉSISTANCE AU LAVAGE II

(30) Priorität: 17.04.2023 DE 102023109610; 11.05.2023 DE 102023112472; 12.05.2023 DE 102023112680; 31.05.2023 DE 102023114239
(43) Veröffentlichungstag der Anmeldung: 31.12.2025
(62) Dokumentnummer(n) der früheren Anmeldung(en) nach Art. 76 EPÜ: 24704351.6 / 4 665 474
(73) Patentinhaber: Blücher GmbH, 40699 Erkrath (DE)
(72) Erfinder: BECKER, Ralf, 40699 Erkrath (DE); SCHULTE, Frederike, 40699 Erkrath (DE); NGUYEN, Cong-Minh, 40699 Erkrath (DE)
(74) Vertreter: Von Rohr Patentanwälte Partnerschaft mbB

(56) Entgegenhaltungen:
- EP-A1- 3 964 275
- CN-U- 218 339 211
- DE-A1- 10 305 307
- DE-A1- 102009 036 991
- JP-A- 2016 129 991
- US-A1- 2007 240 576
- US-A1- 2021 370 218

## Beschreibung

Die vorliegende Erfindung betrifft das technische Gebiet von textilen (Flächen-) Filtermaterialien, insbesondere textilen Schutz- und Filtermaterialien, welche beispielsweise im militärischen oder zivilen Bereich eingesetzt werden können, insbesondere für die Herstellung von Schutzbekleidungen bzw. Schutzausrüstungen, insbesondere mit Schutzfunktion gegenüber chemischen, biologischen und/oder radioaktiven Schad- bzw. Giftstoffen, sowie für diverse Filteranwendungen oder dergleichen.

Die vorliegende Erfindung betrifft in diesem Zusammenhang insbesondere ein textiles Schutz- bzw. Filtermaterial, vorzugsweise Adsorptionsfiltermaterial, mit Partikel- bzw. Aerosolfilterfunktion, wobei das erfindungsgemäße Schutz- bzw. Filtermaterial eine verbesserte Waschbeständigkeit aufweist und wobei das erfindungsgemäße Schutz- bzw. Flächenmaterial einen speziellen Aufbau auf Basis einer wiederum speziellen Partikel- bzw. Aerosolfilterschicht aufweist.

Darüber hinaus betrifft die vorliegende Erfindung auch spezielle Verwendungen des erfindungsgemäßen Schutz- bzw. Filtermaterials, nämlich zur Herstellung von Schutzausrüstungen bzw. Schutzgegenständen, insbesondere von Schutzbekleidung, sowie zur Herstellung von Filtern und Filtermaterialien aller Art. Die vorliegende Erfindung betrifft auch Schutzausrüstungen sowie Schutzgegenstände, insbesondere Schutzbekleidung, und Filter sowie Filtermaterialien, welche das erfindungsgemäße Schutz- bzw. Filtermaterial umfassen bzw. welche unter Verwendung des Schutz- bzw. Filtermaterials nach der Erfindung hergestellt sind.

Im Allgemeinen werden an Flächenfiltermaterialien hohe Anforderungen gestellt, insbesondere was ihre speziellen funktionellen Eigenschaften, wie die Bereitstellung einer Partikel- und/oder Aerosolfilterfunktion bzw. von adsorptiven Eigenschaften, insbesondere gegenüber chemischen, biologischen und/oder radioaktiven Schad- bzw. Giftstoffen, anbelangt. Dies gilt auch vor dem Hintergrund, dass derartige Flächenfiltermaterialien beispielsweise zur Herstellung von Schutzbekleidung für den militärischen bzw. zivilen Bereich (beispielsweise ABC-Schutzbekleidung) sowie darüber hinaus für technische Filteranwendungen, wie Gas- bzw. Luftfiltrationsanwendungen, beispielsweise zur Bereitstellung von Reinlufträumen oder dergleichen, eingesetzt werden und in diesem Zusammenhang eine hohe Anwendungs- und Einsatzsicherheit sowie eine hohe und dauerhafte Leistungsfähigkeit in Bezug auf die bereitgestellten Filtereigenschaften aufweisen sollen.

Dabei besteht eine besondere Herausforderung in Bezug auf derartige Flächenfiltermaterialien auch darin, diametrale bzw. sich entgegenstehende Produkteigenschaften in ein und demselben Material zu vereinen, beispielsweise was die Gewährleistung einer hohen Schutz- bzw. Filterleistung in Bezug auf Gift- bzw. Schadstoffe oder dergleichen einerseits bei gleichzeitig hoher Luftdurchlässigkeit andererseits anbelangt. Derartige Produkteigenschaften sind z.B. bei Schutzbekleidungen erforderlich, um bei hoher Schutzfunktion einen hohen Tragekomfort auch bei körperlicher Belastung bzw. Anstrengung zu gewährleisten, aber auch bei technischen Filteranwendungen von Bedeutung, um bei hoher Aufreinigung entsprechende Umsätze in Bezug auf das aufzureinigende Medium zu erzielen.

Textile Schutz- bzw. Filtermaterialien werden im Stand der Technik beispielsweise zur Bereitstellung von Schutzanzügen im militärischen Bereich, d.h. für militärisches Personal bzw. Soldaten, und zwar oftmals als weiterführender Schutz im Verteidigungs- bzw. Kampfeinsatz, aber auch im zivilen Bereich bzw. Zivilschutzbereich, d.h. für im Katastrophen- bzw. Brandeinsatz befindliches Personal, wie Feuerwehrleuten, oder im Rahmen von Industrieanwendungen, beispielsweise in der chemischen Industrie, eingesetzt. In diesem Zusammenhang besteht eine wichtige Anforderung darin, eine hohe und möglichst langanhaltende Schutzfunktion gegenüber chemischen, biologischen bzw. radioaktiven Schad- bzw. Giftstoffen bereitzustellen, welche beispielsweise in Form von Aerosolen, Gasen oder kontaminierten Partikeln oder dergleichen vorliegen können und zudem auch eine große Bandbreite unterschiedlicher physikochemischer Eigenschaften aufweisen können. Dementsprechend müssen die zugrundeliegende Schutzbekleidungen bzw. die hierzu eingesetzten funktionellen Flächenfiltermaterialien auch über ein entsprechend großes Schutzspektrum verfügen, um einen entsprechend umfangreichen Schutz zu gewährleisten, welcher zudem für große (Einsatz-)Zeiträume gewährleistet werden sollte.

Dies gilt insbesondere auch vor dem Hintergrund, dass insbesondere im militärischen Einsatz befindliche Personen bzw. Soldaten sowie in der Katastrophenabwehr bzw. in der Feuerbekämpfung tätige Personen der permanenten und über den gesamten Einsatzzeitraum vorliegenden Gefahr einer Kontamination mit chemischen, biologischen bzw. radioaktiven Schad- bzw. Giftstoffen ausgesetzt sind. Von derartigen Gift- bzw. Kampfstoffen geht dabei im Allgemeinen ein hohes Gefährdungspotential für damit in Kontakt kommende Personen einher. Dabei ist auch beachtlich, dass bereits geringe Mengen derartiger Substanzen zu einer nachhaltigen gesundheitlichen Beeinträchtigung bis hin zum Tod von mit solchen Substanzen konfrontierten Personen führen können. Dabei ist auch von Bedeutung, dass Schad- bzw. Giftstoffe, wie zuvor angeführt, auch in Form von feinteiligen bzw. feinpartikulären Aerosolen oder dergleichen bzw. in Form von in der (Umgebungs-)Luft vorhandenen Schadstoffpartikeln bzw. Gasen vorliegen können. Dies stellt eine große Herausforderung an entsprechende funktionelle Filtermaterialien dar, zumal die vorgenannten Aerosole, feinteiligen Schadstoffpartikel bzw. Gase entsprechender Schad- bzw. Giftstoffe ein hohes Durchdringungs- bzw. Penetrationspotential insbesondere bei luftdurchlässigen Bekleidungsstücken oder dergleichen aufweisen.

Was die Bereitstellung von Schutzbekleidung anbelangt, so ist in diesem Zusammenhang auch von Bedeutung, dass gerade in militärischen Einsätzen oder im Bereich der Brand- bzw. Katastrophenabwehr tätige Personen oftmals einer hohen körperlichen Aktivität bzw. Belastung ausgesetzt sind, und dies auch über einen langen Einsatzzeitraum. Hinzu kommt, dass oftmals auch widrige Einsatzbedingungen vorliegen, wie eine hohe Hitzebelastung gerade in der Brandbekämpfung oder dergleichen, und dies bei gleichzeitig hoher physischer Belastung. Auch insofern ist durch entsprechende Schutzbekleidung ein hoher Tragekomfort im Hinblick auf die Vermeidung eines Hitzestaus bzw. die Ermöglichung des Abtransports von Wärme bzw. Schweiß und letztlich eines effektiven Luftaustauschs wünschenswert, um hierdurch eine möglichst weitreichende Entlastung von mit entsprechender Schutzbekleidung ausgerüsteten Personen zu gewährleisten. Für den Tragekomfort ist es dabei auch erforderlich, dass die für die Schutzbekleidung eingesetzten Flächenfiltermaterialien ein möglichst angenehmes Tragegefühl bieten, beispielsweise auch im Hinblick auf die Elastizität bzw. Anschmiegsamkeit des Materials. Insofern wird insgesamt ein hoher Tragekomfort der in Rede stehenden Schutzbekleidung angestrebt.

Grundsätzlich gelten die zuvor für Schutzmaterialien bzw. -bekleidung angeführten Erfordernisse an Filterleistung und Luftdurchlässigkeit in entsprechender Weise auch für funktionelle Flächenfiltermaterialien, welche im Bereich der technischen Gas- bzw. Luftfiltration (z.B. als Luftfilter für die (Raum-)Luftaufreinigung oder dergleichen) eingesetzt werden. Dies betrifft im Besonderen auch die Filtereigenschaften gegenüber chemischen, biologischen bzw. radioaktiven Schad- und Giftstoffen in Form von Gasen, Aerosolen, schadstoffbelasteten Partikeln oder dergleichen bei gleichzeitig hoher Filterleistung bzw. Durchsätzen an aufzureinigendem Medium.

Zudem besteht in diesem Zusammenhang - und zwar sowohl im Hinblick auf Schutzmaterialien bzw. Schutzbekleidung als auch im Hinblick auf technische Filteranwendungen - eine große Herausforderung auch darin, entsprechende Flächenfiltermaterialien bereitzustellen, welche eine hohe mechanische Stabilität bzw. Belastbarkeit und eine hohe Dauerhaftigkeit bzw. Lebensdauer aufweisen, und zwar auch was deren Regenerations- bzw. Waschbeständigkeit anbelangt. Eine hohe Regenerations- bzw. Waschbeständigkeit ist dabei insofern wünschenswert, als derartige Flächenfiltermaterialien eine hohe Anzahl an Anwendungs- bzw. Einsatzzyklen ermöglichen, was ressourcenschonend und kosteneffizient und damit sowohl ökonomisch wie auch ökologisch zielführend bzw. nachhaltig ist, zumal auch unter logistischen Gesichtspunkten.

Insgesamt stellt jedoch die Bereitstellung einer hohen Regenerations- bzw. Waschbeständigkeit eine große technische bzw. konstruktive Herausforderung dar, da im Rahmen von Regenations- bzw. Waschbehandlungen (Regenations- bzw. Waschzyklus) eine hohe mechanische Belastung für das zu behandelnde Schutz- bzw. Filtermaterial vorliegt, insbesondere durch z. B. beim Waschen auftretende Biege-, Walk-, Stauch- und/oder Streckkräfte, und dies auch in Kombination mit hohen Temperaturen und chemischen Einwirkungen (z. B. durch Wasch- bzw. Reinigungsmittel).

Die im Stand der Technik beschriebenen Schutzmaterialien bzw. -systeme weisen diesbezüglich oftmals keine optimale Eigenschaften auf, und zwar auch nicht im Hinblick auf die Gewährleistung von über die Lebens- bzw. Einsatzdauer konstanten bzw. hohen Schutzeigenschaften und definierten Luftdurchlässigkeiten und deren Aufrechterhaltung bei der Regeneration bzw. dem Waschen des Materials. Diesbezüglich weisen die aus dem Stand der Technik bekannten Schutzmaterialien bzw. -systeme häufig nur eine geringe oder mitunter gar keine Regenerations- bzw. Waschbeständigkeit auf.

Insbesondere nimmt bei Materialien des Standes der Technik sowohl die Filterleistung als auch die Luftdurchlässigkeit unter Regenerations- bzw. Waschbehandlungen deutlich ab.

Somit ist eine weitere maßgebliche Anforderung an Schutzmaterialien mit funktionellen Eigenschaften (z.B. Partikel- bzw. Aerosolfiltereigenschaften adsorptive Eigenschaften oder dergleichen), wie sie für Schutzbekleidung oder aber für technische Filtersysteme oder dergleichen eingesetzt werden, in der Bereitstellung einer hohen Regenerationsbeständigkeit bzw. Waschbeständigkeit zu sehen, und zwar auch vor dem Hintergrund der Gewährleistung einer langen Gebrauchs- bzw. Anwendungszeit bei entsprechender Bereitstellung der zugrundeliegenden Schutzfunktionen. Funktionelle Flächenfiltermaterialien bzw. Schutzmaterialien des Standes der Technik weisen diesbezüglich aber häufig nicht zufriedenstellende Eigenschaften auf.

Für den Bereich der Schutzbekleidung, beispielsweise für den militärischen Bereich, sind im Stand der Technik luft- und wasserdampfundurchlässige Materialien bekannt, welche im Allgemeinen mit einer gegenüber Gift- bzw. Kampfstoffen undurchlässigen Sperr- bzw. Gummischicht ausgestattet sind. Aufgrund des fehlenden Feuchtigkeits- bzw. Luftaustauschs und der mitunter geringen Biegsamkeit des Materials ist der Tragekomfort jedoch stark eingeschränkt, wobei es zudem aufgrund der fehlenden Luft- und Wasserdampfdurchlässigkeit und der somit fehlenden feuchtigkeits- bzw. thermoregulativen Eigenschaften sehr schnell zu einem Hitzestau kommen kann. Zudem sind derartige Materialien mitunter nicht langzeit- bzw. alterungsbeständig. Beispielsweise kann die undurchlässige Gummischicht durch UV-Einfluss vorzeitig altern oder bei Dekontaminations- bzw. Waschvorgängen zerstört werden, was zu einer Unbrauchbarkeit des Materials führt. Aufgrund der fehlenden Luftdurchlässigkeit eignen sich derartige Materialien zudem im Allgemeinen nicht für technische Filteranwendungen.

Weiterhin sind im Stand der Technik funktionelle Flächenfiltermaterialien bekannt, welche mit einer luftundurchlässigen, jedoch wasserdampfdurchlässig ausgebildeten Membran ausgerüstet sind, welche insbesondere als Sperrschicht gegenüber toxischen Substanzen fungieren soll. Die in diesem Zusammenhang eingesetzte Membran bzw. Sperrschicht ist für Schad- bzw. Giftstoffe im Wesentlichen undurchlässig, so dass auf dieser Basis ein gewisser Schutz gegenüber entsprechenden Gift- bzw. Kampfstoffen bereitgestellt werden kann. Bei Beschädigung der Membran resultieren jedoch undichte Stellen, durch welche Gift- bzw. Schadstoffe hindurchdringen können, einhergehend mit einem Verlust bzw. Einschränkung der Schutzfunktion. Zudem wirkt sich der beschränkte Luftaustausch mitunter negativ auf den Tragekomfort aus. Überdies weisen derartige funktionelle Flächenfiltermaterialien nicht immer die gewünschte Regenerierbarkeit bzw. Waschbeständigkeit auf, zumal die Membran gegenüber mechanischen Einflüssen empfindlich ist. Aufgrund der grundsätzlich luftundurchlässigen Ausbildung derartiger Systeme eignen sich solche Materialien auch nicht im ausreichenden Maße für technische Filteranwendungen.

Weiterhin sind im Stand der Technik luftdurchlässige bzw. permeable funktionelle Flächenfiltermaterialien bekannt, welche zu Zwecken der Gewährleistung einer Schutzfunktion gegenüber Schad- bzw. Giftstoffen mit einer Adsorptionsfilterschicht insbesondere auf Basis von Aktivkohle ausgerüstet sind. Ein derartiges Schutzmaterial ist beispielsweise in der WO 2008/135114 A2 sowie in der zu derselben Patentfamilie gehörenden US 2010/0212071 A bzw. der DE 10 2007 026 340 A1 beschrieben. Aufgrund der grundsätzlich luftdurchlässigen Ausbildung derartiger Systeme eignen sich solche Materialien neben der Bereitstellung von Schutzbekleidung zudem grundsätzlich auch für technische Filteranwendungen. Durch den erhöhten Austausch von Luft und Wasser bzw. Feuchtigkeit weist eine auf dieser Basis hergestellte Schutzbekleidung einen verbesserten Tragekomfort bei grundsätzlich guter Schutzfunktion gegenüber Gift- bzw. Schadstoffen auf, welche aber bei Vorliegen der toxischen Substanzen in Form von Aerosolen und Schadstoffpartikeln unzureichend ist. Zudem besteht das Problem einer lokalen Überlastung bzw. Überladung der Adsorptionsschicht, gerade für den Fall, dass große Mengen an Schad- bzw. Giftstoffen, beispielsweise in Tropfenform, auf die Adsorptionsschicht treffen. Insbesondere weist eine derartige Schutzbekleidung auch nicht immer optimale Wetterschutzeigenschaften auf. Auch ist die Regenerations- bzw. Waschbeständigkeit nicht immer zufriedenstellend, beispielsweise im Hinblick auf eine Zerstörung oder Beeinträchtigung der Adsorptionsfilterschicht durch mechanische Krafteinwirkung beim Waschen. Dies kann zu einem erhöhten Abrieb der eingesetzten Adsorptionsmaterialien, Auflösung der Schichtstruktur oder dergleichen führen.

Zudem kann insbesondere für die Bereitstellung von luftdurchlässigen, permeablen Schutzmaterialien der Einsatz von luftdurchlässigen Partikel- bzw. Aerosolfilterschichten (z. B. auf Basis von HEPA-Filtern oder dergleichen) vorgesehen sein. Aufgrund der vorliegenden Luftdurchlässigkeit eignen sich derartige funktionelle Flächenfiltermaterialien mit Partikel- bzw. Aerosolfilterschichten neben der Verwendung als bzw. für Schutzbekleidung gleichermaßen auch für den Einsatz in technischen Filtersystemen, beispielsweise als Luftfilter oder dergleichen, wobei mitunter jedoch nur beschränkte Filterkapazitäten vorliegen können. Dies kann gerade bei hoher Gift- bzw. Schadstoffkonzentration bzw. bei langen Einsatzzeiten des Filtermaterials mitunter problematisch sein. Zudem liegt auch bei solchen Systemen insbesondere aufgrund der im Hinblick auf die Bereitstellung einer hohen Beständigkeit mitunter nicht optimal ausgebildeten Materialeigenschaften oftmals nur eine unzureichende Regenerations- bzw. Waschbeständigkeit vor. Bei den im Stand der Technik eingesetzten Filtermaterialien ist häufig eine Beschädigung, z.B. durch Reißen oder Brechen bzw. durch ein übermäßiges Schrumpfen der die Partikel- bzw. Aerosolfilterschicht ausbildenden Fasern, unter Kraft- und Temperatureinwirkung beim Waschen bzw. Regenerieren zu beobachten, so dass es in der Folge aufgrund der mechanischen Empfindlichkeit der zugrundeliegenden Fasern auch zu einer Zerstörung bzw. Desintegration des dreidimensionalen Filteraufbaus kommen kann. Dies geht dann mit einer übermäßigen Zunahme der Luftdurchlässigkeit und einer Verringerung der Filtereffizienz gegenüber Partikeln bzw. Aerosolen, bedingt durch eine Zunahme der durch die Fasern begrenzten Poren bzw. Öffnungen in der Partikel- bzw. Aerosolfilterschicht, einher. Die Beanspruchung der Fasern in der partikel- bzw. aerosolfilternden Faseranordnung wird dabei noch dadurch erhöht, dass für die Fasern oftmals eine übermäßige Schrumpfung durch die Wärmeeinwirkung bzw. Feuchtigkeitseinwirkung, wie sie beim Regenerations- bzw. Waschvorgang gegeben ist, vorliegt. Bei den im Stand der Technik gegebenen Konzepten kann die Faserschrumpfung nicht ausreichend kompensiert oder unterbunden werden, was wiederum mit einer erhöhten Belastung und Zerstörung der Fasern bzw. der Faseranordnung einhergeht.

Im Stand der Technik wird für funktionelle Flächenfiltermaterialien auch eine Kombination von Partikel- bzw. Aerosolfilterschichten mit Adsorptionsfilterschichten, beispielsweise auf Aktivkohlebasis vorgeschlagen. Hierdurch kann ein Flächenfiltermaterial gezielt mit verbesserten Schutzeigenschaften gegenüber Gift- und Schadstoffen ausgerüstet werden. Infolgedessen kann die Schutzwirkung gegenüber chemischen, biologischen bzw. radioaktiven Schad- bzw. Giftstoffen erhöht werden, nämlich insofern, als die Adsorptionsfilterschicht und die Aerosol- bzw. Partikelfilterschicht zusammenwirken, wobei ein Teil der Schad- bzw. Giftstoffe (insbesondere in Form von Partikeln bzw. Aerosolen) bereits durch die Partikel- bzw. Aerosolfilterschicht aufgenommen werden kann. Hierdurch können Durchbrüche von Gift- bzw. Schadstoffen und lokale Überlastungen der Adsorptionsfilterschicht verringert bzw. vermieden werden. Die im Stand der Technik vorliegenden Systeme weisen bei gegebener Luftdurchlässigkeit zwar grundsätzlich eine verbesserte Schutzfunktion gegenüber Schad- bzw. Giftstoffen auf, jedoch ist die Regenerationsbeständigkeit, insbesondere Waschbeständigkeit, derartiger Systeme mitunter sogar nochmals verschlechtert, da die Adsorptionsschicht zu einer zusätzlichen mechanischen Belastung der Aerosol- und Partikelfilterschicht führt.

Denn in diesem Zusammenhang - wie zuvor dargelegt - stellt für entsprechende Filtermaterialien des Standes der Technik die Partikel- bzw. Aerosolfilterschicht oftmals die mechanische Schwachstelle bei der Regeneration bzw. beim Waschen dar, wobei die oftmals nicht zufriedenstellende Regenerationsbeständigkeit, insbesondere Waschbeständigkeit, durch den weiterführend vorgesehenen Aufbau bzw. Verbund der für die Flächenfiltermaterialien eingesetzten Schichten bzw. Lagen nochmals verstärkt wird: Durch das zusätzliche Vorliegen einer Adsorptionsschicht auf Basis partikulärer Strukturen, wie Aktivkohleteilchen, wird die mechanische Belastung beim Regenerieren bzw. Waschen nochmals erhöht, da die Teilchen bzw. Partikel der Adsorptionsschicht durch die Walk- und Biegebewegungen zusätzlich auf die Fasern der Partikel- bzw. Aerosolfilterschicht kraftmäßig einwirken. Dieses Problem wiegt dabei umso schwerer, als es im Allgemeinen oftmals vorgesehen ist, die Adsorptionsschicht (z.B. über eine entsprechende Klebstoffschicht) direkt mit der partikel- bzw. aerosolfilternden Faseranordnung zu verbinden. Dies führt zu einer nochmals gesteigerten mechanischen Belastung der Partikel- bzw. Aerosolfilterschicht beim Regenerieren bzw. Waschen, da zusätzliche Kräfte unmittelbar von der Adsorptionsschicht auf die partikel- bzw. aerosolfilternde Faseranordnung einwirken.

Hinzu kommt, dass die mechanische Belastung auf solche Partikel- bzw. Aerosolfilterschichten, wie sie im Stand der Technik eingesetzt werden, durch eine oftmals vorgesehene vollflächige Laminierung sämtlicher Schichten, welche das Flächenfiltermaterial ausbilden, besonders stark ausgeprägt ist, und zwar auch infolge einer im Allgemeinen vorgesehenen unmittelbaren Anordnung bzw. Laminierung der Funktionslage einer Partikel- bzw. Aerosolfilterschicht auf einer Adsorptionsschicht oder dergleichen. Insofern erfolgt eine vollflächige Kraft- und Bewegungsübertragung auf die Fasern der Partikel- bzw. Aerosolfilterschicht beim Regenerieren bzw. Waschen des Materials.

Die vollflächige Verbindung der das Flächenfiltermaterial ausbildenden Schichten bzw. Funktionslagen mittels Laminierung erfolgt dabei insbesondere auch vor dem Hintergrund der Bereitstellung eines erhöhten Tragekomforts, da infolge der vollflächigen Laminierung die Einbettung bzw. der Einschluss wärmeisolierender Luftschichten in dem Flächenfiltermaterial minimiert wird. Derartige Luftschichten vermindern die Fähigkeit der Thermoregulation signifikant und führen zu einer möglichen Überhitzung des Trägers bzw. Anwenders von entsprechend konzipierter Schutzbekleidung. Dies geht im Stand der Technik jedoch mit Nachteilen bei der Regenerations- bzw. Waschbeständigkeit einher.

Die im Stand der Technik eingesetzten Partikel- bzw. Aerosolfilterschichten weisen insgesamt keine optimale Abstimmung im Hinblick auf die Gewährleistung einer dauerhaften Stabilität und Filtereffizienz bei gleichzeitig ausreichender Luftdurchlässigkeit, auch nach einer bestimmten Anzahl an Regenerations- bzw. Waschvorgängen, auf. Insbesondere ist es vorgesehen, eine Filtrationsschicht bzw. Filtrationslage auf Basis einer partikel- bzw. aerosolfiltrierenden Faseranordnung allenfalls auf einer einzelnen Trägerlage einseitig aufzubringen, so dass eine unbedeckte bzw. trägerfreie Seite bzw. Fläche in Bezug auf die Filtrationsschicht vorliegt. Diese ist dann insbesondere mit einer Adsorptionsschicht verbunden, was jedoch zu hohen Faserbelastungen beim Regenerieren bzw. Waschen und letztlich zu einer verminderten Funktionstüchtigkeit führt.

Folglich liegt im Stand der Technik oftmals eine Laminierung von angrenzenden Funktionsschichten, wie einer Adsorptionsschicht, unmittelbar auf die partikel- bzw. aerosolfiltrierenden Funktionslage bzw. -schicht und somit unmittelbar auf die partikel- bzw. aerosolfiltrierenden Faseranordnung vor, was aber im Hinblick auf die mechanische Beanspruchung der Fasern insbesondere bei durchzuführenden Regenerations- bzw. Waschvorgängen nachteilig ist.

Insbesondere kann für Flächenfiltermaterialien des Standes der Technik aufgrund der vorgenannten Defizite eine nur geringe Anzahl an Regenerations- bzw. Waschvorgängen ohne kritische Einbußen in den Partikel- bzw. Aerosolfiltereigenschaften durchgeführt werden. Infolge der konstruktionsbedingt hohen mechanischen Belastung der funktionsgebenden Fasern der Partikel- bzw. Aerosolfilterschicht führen Regenerations- bzw. Waschvorgänge zu einer irreversiblen Schädigung der Fasern bzw. Faseranordnung, was zu einer signifikanten Verringerung der Schutzleistung gegenüber Partikeln und Aerosolen führt, wobei aufgrund der Faserzerstörung die Filterleistung abnimmt und die Luftdurchlässigkeit übermäßig zunimmt. Hieraus folgt auch, dass eine in diesem Zusammenhang gegebenenfalls eingesetzte Adsorptionsschicht auf z. B. Basis von Aktivkohle im höheren Maße Schad- bzw. Giftstoffen ausgesetzt wird, da diese nicht mehr bzw. nur noch in einem geringeren Maße von der Partikel- bzw. Aerosolfilterschicht zurückgehalten werden. Folglich resultiert auch eine frühzeitige Erschöpfung bzw. unzureichende Schutzwirkung der Adsorptionsschicht.

Insgesamt liegt basierend auf den im Stand der Technik konzipierten bzw. eingesetzten partikel- bzw. aerosolfiltrierenden Schichten bei der Regeneration bzw. Waschen oftmals ein vorzeitiger Verlust der Schutzfunktion und somit eine Unbrauchbarkeit des zugrundeliegenden Filtermaterials vor. Folglich sind entsprechende Filtermaterialien des Standes der Technik entweder gar nicht oder nur in einem sehr begrenzten Rahmen regenerierbar bzw. waschbar.

Zusammenfassend ist somit festzustellen, dass die aus dem Stand der Technik bekannten Schutzmaterialien bzw. Filtermaterialien, welche insbesondere zur Herstellung von Schutzbekleidung bzw. -ausrüstung sowie im Bereich der technischen Filtermedien eingesetzt werden können, nicht zufriedenstellend hinsichtlich der Regenerationsbeständigkeit bzw. Waschbeständigkeit sind, was mit einer eingeschränkten Dauerhaftigkeit bzw. Haltbarkeit bzw. mit einer verringerten Anzahl möglicher Anwendungs- bzw. Einsatzzyklen einhergeht. Insbesondere weisen entsprechende Materialien des Standes der Technik häufig keine dauerhaft hohe Schutzfunktion bzw. einen unzureichenden Tragekomfort auf, da sich die diesbezüglichen Eigenschaften bereits nach wenigen Regenerations- bzw. Waschvorgängen deutlich verschlechtern. Insbesondere ist nicht immer eine hohe Regenerations- bzw. Waschbeständigkeit gegeben, so dass im Stand der Technik in diesem Zusammenhang auch eine verschlechterte Nachhaltigkeit bzw. eine nicht optimale Kosten/Nutzen-Bilanz vorliegt.

Die US 2007/240576 A1 betrifft ein Adsorptionsfiltermaterial mit integriertem Partikel- und/oder Aerosolschutz, wobei das Filtermaterial einen mehrschichtigen Aufbau aufweist, wobei der mehrschichtige Aufbau eine Trägerschicht, eine an der Trägerschicht fixierte Adsorptionsschicht und eine auf der der Trägerschicht abgewandten Seite der Adsorptionsschicht angeordnete Schicht aufweist, wobei das Filtermaterial zusätzlich mit einer Partikel- und/oder Aerosolfilterschicht ausgestattet ist.

Insgesamt besteht somit im Stand der Technik ein hoher Bedarf an Flächenfiltermaterialien mit Partikel- bzw. Aerosolfiltereigenschaften gegenüber Gift- bzw. Kampfstoffen mit verbesserter bzw. hoher Regenerationsbeständigkeit, insbesondere Waschbeständigkeit, und zwar auch vor dem Hintergrund einer verbesserten Nachhaltigkeit und erhöhten Beständigkeit bzw. Einsatzlebensdauer. Insofern wird eine hohe Anzahl an Anwendungs- bzw. Einsatzzyklen bei letztlich auch optimierter Kosten/Nutzen-Bilanz angestrebt. Dabei besteht auch ein hoher Bedarf an Flächenmaterialien mit kombinierten Partikel- bzw. Aerosolfiltereigenschaften und adsorptiven Eigenschaften gegenüber Gift- bzw. Kampfstoffen mit entsprechend verlängerter Haltbarkeit bzw. (Gesamt-)Lebensdauer.

Vor diesem Hintergrund besteht eine Aufgabe der vorliegenden Erfindung darin, ein Schutz- bzw. Filtermaterial bzw. textiles Flächenfiltermaterial bereitzustellen, welches sich für eine Verwendung im militärischen sowie zivilen Bereich, beispielsweise zur Herstellung von Schutzanzügen oder dergleichen, sowie für den Bereich der technischen Filteranwendungen, wie für Gas- bzw. Luftfilter, eignet, wobei die zuvor geschilderten Nachteile des Standes der Technik zumindest weitgehend vermieden oder aber wenigstens abgeschwächt werden sollen. Insbesondere soll sich ein solches Schutz- bzw. Filtermaterial für eine Vielzahl von Anwendungen insbesondere im textil- bzw. bekleidungstechnischen Bereich eignen, beispielsweise für die Herstellung von Schutzausrüstungen bzw. -bekleidung mit Schutzfunktion gegenüber chemischen bzw. biologischen bzw. radioaktiven Schad- bzw. Giftstoffen. Zudem soll sich das Schutz- bzw. Filtermaterial zur Herstellung von Filtern und technischen Filtermaterialien eignen.

Eine weitere Aufgabe der vorliegenden Erfindung liegt zudem darin, ein Schutz- bzw. Filtermaterial bzw. textiles Flächenfiltermaterial bereitzustellen, welches bei verbesserten Anwendungs- und Handhabungseigenschaften eine wirksame Schutzfunktion in Bezug auf chemische, biologische bzw. radioaktive Schad- und Giftstoffe mit einem darüber hinausgehenden Schutz gegenüber entsprechenden schädlichen Partikeln und/oder Aerosolen bereitstellt.

**In** diesem Zusammenhang ist eine weitere Aufgabe der vorliegenden Erfindung insbesondere darin zu sehen, ein entsprechendes Schutz- bzw. Filtermaterial bzw. textiles Flächenfiltermaterial bereitzustellen, welches bei gegebenem Partikel- und/oder Aerosolschutz eine insgesamt hohe bzw. gegenüber dem Stand der Technik verbesserte Regenerationsbeständigkeit, insbesondere Waschbeständigkeit, aufweist, und zwar insbesondere dahingehend, dass auch nach einer Vielzahl durchgeführter Regenerations- bzw. Waschvorgänge bzw. -zyklen die Schutzeigenschaften gegenüber chemischen bzw. biologischen bzw. radioaktiven Schad- und/oder Kampfstoffen hoch sind bzw. aufrechterhalten bleiben. Insbesondere soll auch der Partikel- bzw. Aerosolschutz nach einer Vielzahl von Regenerations- bzw. Waschvorgängen gewährleistet sein. Bevorzugt soll auch die Lebensdauer bzw. die Anzahl an Anwendungs- bzw. Einsatzzyklen des bereitgestellten Materials erhöht werden.

Eine nochmals weitere Aufgabe der vorliegenden Erfindung ist auch darin zu sehen, ein entsprechendes Schutz- bzw. Filtermaterial bzw. textiles Flächenfiltermaterial bereitzustellen, welches insbesondere im Hinblick auf dessen Verwendung in oder als Schutzbekleidung oder dergleichen einen hohen Tragekomfort gewährleistet, wobei in diesem Zusammenhang insbesondere eine hohe Biegsamkeit bzw. Dehnbarkeit sowie Anschmiegsamkeit bei gleichzeitig hoher Luftdurchlässigkeit bereitgestellt werden soll. Auch diesbezüglich soll im Rahmen der vorliegenden Erfindung gewährleistet sein, dass der Tragekomfort auch nach einer Vielzahl von Regenerations- bzw. Waschvorgängen bei zumindest im Wesentlichen unveränderter Schutzleistung gewährleistet ist. Insbesondere soll das Material gegenüber dem Stand der Technik einen hohen Tragekomfort bzw. ein verbessertes Tragegefühl auch nach einer Vielzahl von Regenerations- bzw. Waschvorgängen aufweisen.

Eine wiederum weitere Aufgabe der vorliegenden Erfindung liegt auch in der Bereitstellung eines Schutz- bzw. Filtermaterials bzw. textilen Flächenfiltermaterials, welches einerseits einen weiterführenden Partikel- bzw. Aerosolschutz und andererseits gegebenenfalls adsorptive Eigenschaften bei gleichzeitig hoher Regenerationsbeständigkeit, insbesondere Waschbeständigkeit, in ein und demselben Schutz- bzw. Filtermaterial vereint, wobei diese Eigenschaften auch nach einer Vielzahl an Regenerations- bzw. Waschvorgängen bereitgestellt bzw. gewährleistet werden sollen.

Eine nochmals weiterführende Aufgabe der vorliegenden Erfindung besteht auch in der Bereitstellung eines Schutz- bzw. Filtermaterials bzw. Flächenfiltermaterials, welches sich neben dem Einsatz in oder als Schutzbekleidung insbesondere auch zur Verwendung in bzw. Filter als Filtermaterialien - z. B. zur Entfernung von Schad-, Geruchs- und Giftstoffen aller Art, insbesondere aus einem aufzureinigenden Medium, wie aus Luft- bzw. Gasströmen - eignet, wobei in diesem Zusammenhang ein breites Anwendungs- bzw. Einsatzspektrum bereitgestellt werden soll, z.B. Schutzmaskenfilter, Geruchsfilter, Flächenfilter, Luftfilter, (Raum-)Filter und Filter für den medizinischen Bereich. Insbesondere soll bei guter Durchströmbarkeit bzw. hohen Filterdurchsatz für das aufzureinigende Medium auch eine gute Filtereffizienz bei entsprechend hoher Regenerations- bzw. Waschbeständigkeit gewährleistet werden.

Erfindungsgemäß soll insgesamt ein Schutz- bzw. Flächenfiltermaterial für zahlreiche Anwendungs- bzw. Einsatzzwecke bereitgestellt werden, wobei auch die zugrundeliegende Nachhaltigkeit und Kosten/Nutzen-Bilanz optimiert sein soll. Zudem soll eine hohe Dauerhaftigkeit und mechanische Stabilität bei gleichzeitig hoher Aufreinigungs- bzw. Filterfunktion auch nach einer Vielzahl von Regenerations- bzw. Waschvorgängen in Bezug auf das bereitgestellte Schutz- bzw. Filtermaterial gewährleistet werden. Auf dieser Basis soll auch die Anzahl an Anwendungs- bzw. Einsatzzyklen bei Aufrechterhaltung der Materialqualität im Hinblick auf Filter- bzw. Adsorptionsleistung und Tragekomfort erhöht werden.

Zur Lösung der zuvor geschilderten Aufgabe schlägt die vorliegende Erfindung somit - gemäß einem **ersten** Aspekt der vorliegenden Erfindung - ein spezielles Schutz- und/oder Filtermaterial, insbesondere Adsorptionsfiltermaterial, mit Partikel- und/oder Aerosolfilterfunktion, vorzugsweise mit verbesserter Waschbeständigkeit, und mit Schutzfunktion gegenüber chemischen bzw. biologischen bzw. radioaktiven Schad- und/oder Kampfstoffen gemäß Patentanspruch 1 vor; jeweils vorteilhafte Weiterbildungen und Ausgestaltungen dieses Erfindungsaspekts sind Gegenstand der entsprechenden Unteransprüche.

Wiederum weiterer Gegenstand der vorliegenden Erfindung - gemäß einem **zweiten** Aspekt der vorliegenden Erfindung - ist zudem die Verwendung des erfindungsgemäßen Schutz- bzw. Filtermaterials zur Herstellung von Schutzausrüstungen bzw. Schutzgegenständen, insbesondere Schutzbekleidung, aller Art bzw. zur Herstellung von Filtern und Filtermaterialien aller Art gemäß den jeweiligen unabhängigen Verwendungsansprüchen.

Darüber hinaus sind ein wiederum weiterer Gegenstand der vorliegenden Erfindung - gemäß einem **dritten** Aspekt der vorliegenden Erfindung - zudem die erfindungsgemäßen Schutzausrüstungen bzw. Schutzgegenstände, insbesondere Schutzbekleidung, welche das erfindungsgemäße Schutz- bzw. Filtermaterial enthalten bzw. unter Verwendung des Schutz- bzw. Filtermaterials nach der Erfindung hergestellt sind, gemäß dem diesbezüglichen unabhängigen, die erfindungsgemäßen Schutzausrüstungen bzw. Schutzgegenstände betreffenden unabhängigen Anspruch.

Gleichermaßen sind ein wiederum weiterer Gegenstand der vorliegenden Erfindung - gemäß einem **vierten** Aspekt der vorliegenden Erfindung - auch Filter und Filtermaterialien, welche das erfindungsgemäße Schutz- bzw. Filtermaterial aufweisen bzw. welche unter Verwendung des erfindungsgemäßen Schutz- bzw. Filtermaterials hergestellt sind, gemäß dem diesbezüglichen unabhängigen, die Filter bzw. Filtermaterialien nach der Erfindung betreffenden Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Im Übrigen gilt, dass der Fachmann - anwendungsbezogen oder aber einzelfallbedingt - von den nachfolgend angeführten Werte- bzw. Bereichsangaben der vorliegenden Mengen bzw. Gehalte der Inhaltsstoffe bzw. Komponenten erforderlichenfalls abweichen kann, ohne dass er den Rahmen der vorliegenden Erfindung verlässt.

Des Weiteren versteht es sich von selbst, dass einzelne Aspekte und Ausführungsformen der vorliegenden Erfindung auch in beliebiger Kombination mit anderen Aspekten und Ausführungsformen der vorliegenden Erfindung als offenbart gelten und insbesondere auch eine beliebige Kombination von Merkmalen und Ausführungsformen, wie sie sich aus den Rückbezügen aller Patentansprüche ergibt, umfangreich als offenbart gilt, und zwar im Hinblick auf sämtliche sich ergebenden Kombinationsmöglichkeiten.

Insbesondere gilt für die die Erfindung charakterisierenden Merkmale, dass auch beliebige Kombinationen dieser Merkmale als offenbart gelten, wobei Ausführungsformen gleicher Präferenz der verschiedenen Merkmale in ihrer Kombination bevorzugt sind (z.B. Mengen bzw. Mengenbereiche der betreffenden Inhaltsstoffe gleicher Präferenz oder dergleichen). Ebenfalls sind auch sämtliche anderweitige Kombinationen (d.h. Kombinationen auf Basis unterschiedlicher Präferenzen bzw. unterschiedlicher Bevorzugungsebenen) mitoffenbart.

Dies vorausgeschickt, wird im Folgenden die vorliegende Erfindung näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit ein textiles Schutz- und/oder Filtermaterial, vorzugsweise Adsorptionsfiltermaterial, mit Partikel- und/oder Aerosolfilterfunktion, vorzugsweise mit verbesserter Waschbeständigkeit, und mit Schutzfunktion gegenüber chemischen und/oder biologischen und/oder radioaktiven Schad- und/oder Kampfstoffen ("ABC- bzw. CBRN-Schutzfunktion"; mit ABC = atomar, biologisch bzw. chemisch sowie mit CBRN = chemisch, biologisch, radioaktiv und nuklear [wobei die Begriffe ABC einerseits und CBRN andererseits vorliegend synonym verwendet werden]), insbesondere wobei das textile Schutz- und/oder Filtermaterial gasdurchlässig, insbesondere luftdurchlässig, ausgebildet ist,
wobei das textile Schutz- und/oder Filtermaterial als ein mehrlagiges (mehrschichtiges), eine Mehrzahl von miteinander verbundenen Schichten (Lagen) aufweisendes textiles Verbundmaterial ausgebildet ist und
wobei das textile Schutz- und/oder Filtermaterial die folgenden Schichten in der nachfolgend genannten Abfolge aufweist:
   (a) eine erste textile Trägerschicht (synonym auch als "erstes textiles Flächengebilde" bzw. "Oberstoff" bzw. "Oberschicht" bezeichnet), insbesondere erste Abdeckschicht, wobei die erste textile Trägerschicht als ein gasdurchlässiges, bevorzugt luftdurchlässiges, textiles Flächengebilde vorliegt und/oder ausgebildet ist;
   (b) eine der ersten textilen Trägerschicht zugeordnete, insbesondere auf der ersten textilen Trägerschicht angeordnete und/oder mit der ersten textilen Trägerschicht verbundene Partikel- und Aerosolfilterschicht,
      wobei die Partikel- und Aerosolfilterschicht als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
      wobei die Partikel- und Aerosolfilterschicht mehrlagig ausgebildet ist, wobei die Partikel- und Aerosolfilterschicht mindestens jeweils eine äußere Trägerlage und mindestens eine zwischen den äußeren Trägerlagen angeordnete und mit den äußeren Trägerlagen verbundene Funktionslage mit Partikel- und Aerosolfiltereigenschaften aufweist,
      wobei die Partikel- und Aerosolfilterschicht als fester Verbund und/oder als Laminat ausgebildet ist, wobei die Lagen jeweils an ihren Kontaktflächen fest miteinander verbunden und/oder zum Haften gebracht sind,
      wobei die jeweilige feste Verbindung und/oder Haftung vollflächig und/oder über die gesamte Kontaktfläche, aber diskontinuierlich, vorzugsweise punktweise und/oder mit Unterbrechungen, ausgebildet ist, so dass der Verbund und/oder das Laminat gasdurchlässig ausgebildet ist,
      wobei die Funktionslage ein auf Basis von und/oder aus synthetischen Textilfasern gebildetes und/oder die vorgenannten Textilfasern aufweisendes textiles Flächengebilde mit einer durch die Textilfasern begrenzten und/oder ausgebildeten Vielzahl von Poren oder Maschen ist,
      wobei die Funktionslage ein Flächengewicht im Bereich von 0,05 g/m² bis 50 g/m² aufweist, bestimmt gemäß DIN EN 12127, nach 24-stündiger Klimatisierung bei einer Temperatur von 20 °C und einer relativen Luftfeuchtigkeit von 65 %,
      wobei die Funktionslage eine mittlere Porengröße oder mittlere Maschenweite von höchstens 100 µm aufweist, bestimmt gemäß ASTM F316-86, und
      wobei die Trägerlagen, unabhängig voneinander, jeweils als ein Gelege oder Textilverbundstoff ausgebildet sind,
      wobei die Trägerlagen, unabhängig voneinander, jeweils ein Flächengewicht im Bereich von 1 g/m² bis 100 g/m² aufweisen, bestimmt gemäß DIN EN 12127, nach 24-stündiger Klimatisierung bei einer Temperatur von 20 °C und einer relativen Luftfeuchtigkeit von 65 %;
   (c) eine der Partikel- und/oder Aerosolfilterschicht zugeordnete, insbesondere auf der Partikel- und/oder Aerosolfilterschicht angeordnete und/oder mit der Partikel- und/oder Aerosolfilterschicht verbundene, diskontinuierlich ausgebildete und/oder gasdurchlässige, bevorzugt luftdurchlässige, Adsorptionsschicht,
      wobei die Adsorptionsschicht eine Vielzahl einzelner und/oder diskreter Adsorberpartikel umfasst oder hieraus gebildet ist,
      wobei die Adsorberpartikel der Adsorptionsschicht Aktivkohlepartikel, vorzugsweise in Form von Aktivkohlepartikeln in Kornform oder Aktivkohlepartikeln in Kugelform, sind.

Die Anmelderin hat in völlig überraschender Weise gefunden, dass durch die ziel- und zweckgerichtete erfindungsgemäße technische Maßnahme, wonach für die Partikel- und/oder Aerosolfilterschicht des erfindungsgemäßen Schutz- bzw. Filtermaterials die Funktionslage(n) zwischen jeweils äußeren Trägerlagen angeordnet wird, und zwar auf Basis eines Verbunds bzw. Laminats aus den zugrundeliegenden Schichten, die Waschbeständigkeit des erfindungsgemäßen Schutz- bzw. Filtermaterials insgesamt deutlich erhöht wird.

Im Rahmen der vorliegenden Erfindung wird dabei insbesondere auf ein spezielles Schutz- bzw. Filtermaterial, insbesondere Adsorptionsfiltermaterial, abgestellt, welches insbesondere als funktionelles Flächenfiltermaterial ausgebildet ist und welches eine spezielle Partikel- und Aerosolfilterschicht auf Basis einer mehrschichtigen Ausbildung bzw. eines Laminats aufweist. Erfindungsgemäß weist die Partikel- bzw. Aerosolfilterschicht eine Funktionslage mit Partikel- bzw. Aerosolfiltereigenschaften auf, welche zwischen jeweils äußeren Trägerlagen angeordnet ist. Gemäß der vorliegenden Erfindung wird somit auf eine spezielle Partikel- bzw. Aerosolfilterschicht abgestellt, bei welcher die mindestens eine Funktionslage zwischen äußeren Trägerlagen angeordnet ist und somit sozusagen beidseitig bzw. auf beiden Flachseiten von entsprechenden Trägerlagen umgeben ist, so dass die Funktionslage beidseitig durch entsprechende Trägerlagen geschützt ist. Dabei ist die Partikel- und Aerosolfilterschicht als fester Verbund bzw. als Laminat ausgebildet, wodurch die Schutzfunktion gegenüber der Funktionslage nochmals verbessert wird.

Erfindungsgemäß liegt somit für die Partikel- bzw. Aerosolfilterschicht insbesondere ein sandwichartiger Aufbau vor, bei welchem die Funktionslage beidseitig mit jeweils mindestens einer Trägerlage verbunden ist, unter Ausbildung eines festen Verbundes bzw. Laminats. Erfindungsgemäß können dabei auf einer jeweiligen Seite der Funktionslage auch mehrere Trägerlagen eingesetzt werden, wobei die weiteren Trägerlagen dann mittelbar mit der Funktionslage verbunden sind, vorzugsweise gleichermaßen unter Ausbildung eines festen Verbunds bzw. Laminats in Bezug auf die Partikel- bzw. Aerosolfilterschicht als solche. Auch hierdurch können die diesbezüglichen Materialeigenschaften individuell vorgegeben bzw. maßgeschneidert werden.

Erfindungsgemäß weist die Funktionslage mit Partikel- bzw. Aerosolfiltereigenschaften insbesondere spezielle Textilfasern, vorzugsweise Nanofasern, auf, was mit hervorragenden Partikel- bzw. Aerosolfiltereigenschaften einhergeht. Folglich kann es erfindungsgemäß insbesondere vorgesehen sein, dass die Funktionslage als Nanofaserschicht ausgebildet ist. Zudem können auch die jeweiligen Trägerlagen einen speziellen Aufbau auf Basis von wiederum speziellen Textilfasern aufweisen, wobei die gezielte Abstimmung und Anordnung der Schichten der Partikel- bzw. Aerosolfilterschicht zu einem hohen mechanischen Schutz der empfindlichen Funktionslage führen, einhergehend mit einer verbesserten Regenerations- bzw. Waschbeständigkeit des Materials insgesamt.

Durch die erfindungsgemäße Vorgehensweise, wonach die als Aerosol- bzw. Partikelfilter bzw. Filtrationsschicht fungierende Funktionslage beidseitig mit mindestens jeweils einer Trägerlage umgeben und/oder bedeckt bzw. hiermit verbunden ist, wird eine außerordentlich hohe Regenerationsbeständigkeit, insbesondere Waschbeständigkeit, erzielt. Insbesondere kann eine hohe Anzahl an Regenerations- bzw. Waschvorgängen in Bezug auf das erfindungsgemäße Schutz- bzw. Flächenmaterial realisiert werden, ohne dass dies mit einer kritischen und unerwünschten Beeinträchtigung bzw. Reduzierung der Partikel- bzw. Aerosolschutzleistung bzw. -filterleistung einhergeht. Während im Stand der Technik allenfalls und sofern überhaupt wenige Regenerations- bzw. Waschvorgänge bzw. -zyklen (z.B. weniger als zehn und oftmals sogar deutlich weniger als sechs oder gar keine Regenerations- bzw. Waschvorgänge) möglich sind, resultiert für das erfindungsgemäße Schutz- bzw. Filtermaterial eine signifikant höhere Anzahl an möglichen Regenerations- bzw. Waschvorgängen, wonach nämlich zumindest mehr als 10, insbesondere mehr als 20, vorzugsweise mehr als 30, bevorzugt mehr als 40, Regenerations- bzw. Waschvorgänge bzw. -zyklen durchgeführt werden können, ohne dass dies mit einem übermäßigen Verlust der Schutzeigenschaften oder mit einer nachhaltigen Veränderung der Luftdurchlässigkeit verbunden ist.

Insbesondere ist die Filterleistung bzw. -effizienz des erfindungsgemäßen Materials gegenüber Partikeln bzw. Aerosolen auch nach einer Vielzahl an Regenerations- bzw. Waschvorgängen weiterhin gewährleistet. So ist auch bei hoher Anzahl an Regenerations- bzw. Waschvorgängen, wie zuvor angeführt, gewährleistet, dass die zugrundeliegende Filterleistung bzw. -effizienz im Rahmen der vorliegenden Erfindung insbesondere noch bei mindestens 80 % oder sogar mehr im Vergleich zu einem nicht behandelten Ausgangsmaterial liegt, wie nachfolgend noch im Detail angeführt. Demgegenüber liegt bei Materialien des Standes der Technik bei entsprechender Anzahl an Regenerations- bzw. Waschvorgängen eine deutlich reduzierte Filterleistung bzw. -effizienz gegenüber Partikeln bzw. Aerosolen vor, welche oftmals deutlich unterhalb von 30 % im Vergleich zu einem nicht behandelten Ausgangsmaterial liegt.

Im Rahmen der vorliegenden Erfindung dienen - ohne sich auf diese Theorie berufen oder beschränken zu wollen - die jeweiligen Trägerlagen der Partikel- bzw. Aerosolfilterschicht sozusagen als Schutzschicht für die dazwischen angeordnete Funktionslage mit Partikel- bzw. Aerosolfiltereigenschaften, so dass es bei entsprechender Regenerations- bzw. Waschbeanspruchung zu einer mechanischen Entlastung bzw. "Abschirmung" der Textilfasern bzw. Nanofasern der Funktionslage kommt. Insbesondere sind die jeweiligen äußeren Trägerlagen aufgrund ihres speziellen und nachfolgend noch im Detail angeführten Aufbaus sowie der diesbezüglichen Anordnung in der Partikel- bzw. Aerosolfilterschicht imstande, entsprechende Walk-, Biege-, Stauch-, Streck- bzw. Reibkräfte zur Entlastung der Funktionslage aufzunehmen, so dass die Funktionslage bzw. deren Fasern vor einer Beschädigung geschützt wird bzw. werden. Dies führt im Ergebnis zu einer erhöhten Langlebigkeit bzw. Dauerhaftigkeit auf Basis einer verbesserten Widerstandsfähigkeit bei Regenerations- bzw. Waschbeanspruchung. Folglich kann das erfindungsgemäße Schutz- bzw. Filtermaterial auch für eine große Anzahl an Anwendungs- bzw. Einsatzzyklen verwendet werden, beispielsweise im Hinblick auf hierauf basierende Schutzbekleidung, Filterelemente oder dergleichen.

Ohne sich auf diese Theorie beschränken oder berufen zu wollen, führen die erfindungsgemäßen Maßnahmen, wonach für die Partikel- bzw. Aerosolfilterschicht des erfindungsgemäßen Schutz- bzw. Filtermaterials die Funktionslage mit Partikel- bzw. Aerosolfiltereigenschaften sozusagen nach Art eines Sandwich zwischen mindestens jeweils einer äußeren Trägerlage, vorzugsweise unter Ausbildung eines Verbunds bzw. Laminats, angeordnet ist, zu einer nachhaltigen mechanischen Entlastung bzw. verringerten mechanischen Beanspruchung der die Funktionslage selbst ausbildenden Textilfasern bzw. Nanofasern.

Insbesondere wird die Einwirkung von bei einem Regenerations- bzw. Waschvorgang auftretenden Walk-, Biege-, Streck-, Stauch- und/oder Reibungskräften auf die Funktionslage verringert bzw. werden die empfindlichen Textilfasern der Funktionslage vor derartigen Krafteinwirkungen geschützt. Demzufolge bleibt die Struktur und Widerstandsfähigkeit der Funktionslage und folglich der Partikel- bzw. Aerosolfilterschicht insgesamt auch nach einer großen Anzahl an Regenerations- bzw. Waschvorgängen erhalten. Durch die verringerte Krafteinwirkung auf die Textilfasern bzw. Nanofasern der Funktionslage bzw. durch die Schutzwirkung der angrenzenden Textillagen des Verbunds der Partikel- bzw. Aerosolfilterschicht bleibt die dreidimensionale Faseranordnung bzw. -struktur in der Funktionslage auch unter bzw. nach Regenerations- bzw. Wascheinwirkung erhalten, wobei z.B. ein Reißen oder eine räumliche Umstrukturierung bzw. Desintegration der Fasern vermindert bzw. verhindert wird. Dies führt auch dazu, dass die durch die Textilfasern bzw. Nanofasern definierten bzw. hiervon begrenzten Poren bzw. Durchgänge für das aufzureinigende Medium, insbesondere Luft, in der Funktionslage in Größe und Struktur erhalten bleiben. Folglich bleiben die Porengrößen unter Regenerations- bzw. Wascheinwirkung zumindest im Wesentlichen unverändert, was sich im Ergebnis dadurch äußert, dass die Luftdurchlässigkeit des zugrundeliegenden Materials auch nach mehreren Regenerations- bzw. Waschvorgängen unverändert bleibt bzw. sich allenfalls geringfügig verändert. Zudem bleibt die Filtrationsleistung in Bezug auf Partikel bzw. Aerosole zumindest im Wesentlichen vollständig erhalten.

Weiterhin wird - gleichermaßen ohne sich auf diese Theorie beschränken bzw. berufen zu wollen - im Rahmen der vorliegenden Erfindung ein für die Textilfasern bzw. Nanofasern der Funktionslage etwaig vorliegender Schrumpfprozess, welcher insbesondere infolge einer Wärmeeinwirkung während des Regenerierens bzw. des Waschens auftreten kann, kompensiert bzw. in seinen nachteiligen Auswirkungen vermindert. Dies gilt insbesondere insofern, als die Fasern der Funktionslage aufgrund der Eigenschaften der erfindungsgemäßen Gesamtkonstruktion der Partikel- bzw. Aerosolfilterschicht stabilisiert bzw. im Gesamtgefüge sozusagen flexibel fixiert sind und Schrumpfprozesse durch eine gewisse Flexibilität in der Lagenanordnung möglich sind, ohne dass es zu einer übermäßigen Beanspruchung mit einem Reißen der Fasern oder zu einer nachhaltigen Änderung der Faseranordnung bzw. des Fasergefüges kommt.

Demgegenüber verhält es sich im Stand der Technik oftmals derart, dass aufgrund der dort andersartigen Ausbildung von partikel- bzw. aerosolfiltrierenden Schichten mit fehlenden Trägerlagen eine Wärmeeinwirkung bei der Regeneration bzw. beim Waschen zu einer Zerstörung bzw. einem Reißen der Fasern führen kann, was letztlich mit einer Zerstörung der zugrundeliegenden Schichtstruktur einhergeht. Im Gegensatz hierzu können im Rahmen der vorliegenden Erfindung etwaige wärmeinduzierte Schrumpfprozesse der (Textil-)Fasern aus den vorgenannten Gründen sogar zur gezielten und weiterführenden Erhöhung der Lebensdauer bzw. Regenerationsbeständigkeit, insbesondere Waschbeständigkeit, des erfindungsgemäßen Materials führen, da ein Schrumpfen bzw. eine Längenänderung der Fasern aufgrund der speziellen Fixierung zu einer Kompensation von mit Regenerations- bzw. Waschvorgängen gegebenenfalls einhergehenden geringfügigen Porenveränderungen, insbesondere Porenvergrößerungen, führen können.

Insbesondere ist es auch überraschend, dass die hohe Regenerations- bzw. Waschbeständigkeit des erfindungsgemäßen Schutz- bzw. Filtermaterials im Hinblick auf dessen Partikel- bzw. Aerosolfilterschicht mit der diesbezüglichen Funktionslage selbst dann gewährleistet ist, wenn das erfindungsgemäße Schutz- bzw. Filtermaterial - gemäß einer erfindungsgemäß besonders bevorzugten Ausführungsform - zusätzlich mit einer Adsorptionsschicht insbesondere auf Basis partikulärer Adsorbentien, wie Aktivkohle, zur Bereitstellung einer zusätzlichen bzw. ergänzenden Adsorptionsfilterfunktion ausgerüstet ist. Denn mit der erfindungsgemäßen Vorgehensweise wird - gleichermaßen ohne sich auf diese Theorie beschränken oder berufen zu wollen - die mit der Verwendung partikulärer Strukturen normalerweise einhergehende erhöhte kraftmäßige Beanspruchung der Funktionslage unterbunden bzw. verringert. Einwirkende Kräfte werden bei einhergehender Entlastung der Funktionslage auf die Trägerlagen verteilt, wobei zudem die Anordnung und Ausbildung der Schichten in der Partikel- bzw. Aerosolfilterschicht insgesamt eine verbesserte Kraftaufnahme und Kraftverteilung unter Schonung der Funktionslage gewährleistet.

Im Rahmen der vorliegenden Erfindung ist es dabei umso überraschender, dass auch für den Fall der Verwendung von Adsorbentien ein nachhaltiger Schutz bzw. eine deutliche Entlastung in Bezug auf die Funktionslage der Partikel- bzw. Aerosolfilterschicht bereitgestellt wird. Erfindungsgemäß können somit auch von daher leistungsfähige und zudem regenerations- bzw. waschbeständige Schutz- bzw. Filtermaterialien unter Bereitstellung kombinierter adsorptiver Eigenschaften wie auch Partikel- bzw. Aerosolfiltereigenschaften mit insgesamt hoher Schutzfunktion gegenüber Gift- bzw. Kampfstoffen bereitgestellt werden.

Das erfindungsgemäße Schutz- bzw. Filtermaterial vereint zudem die diametralen Eigenschaften einer hohen Luftdurchlässigkeit und einer effizienten Schutzfunktion gegenüber Schad- bzw. Giftstoffen, wie chemischen Kampfstoffen oder dergleichen, in ein und demselben Material, wobei das erfindungsgemäße Schutz- bzw. Filtermaterial eine hohe Filtrationsleistung gegenüber Aerosolen und Partikeln aufweist und gleichzeitig ziel- und zweckgerichtet mit adsorptiven Eigenschaften ausgerüstet werden kann. Wie zuvor dargelegt, können sich die diesbezüglichen Eigenschaften sogar in synergistischer Weise verstärken.

Dabei ist es im Rahmen der vorliegenden Erfindung erstmalig gelungen, bei gleichzeitig hoher Schutzfunktion und Gas- bzw. Luftdurchlässigkeit ein dauerhaftes bzw. beständiges Material mit hoher Regenerationsbeständigkeit, insbesondere Waschbeständigkeit, bereitzustellen, was gleichermaßen auch der Nachhaltigkeit sowie der Kosten/Nutzen-Bilanz zuträglich ist. Aufgrund der hohen Schutzleistung gegenüber Gift- bzw. Kampfstoffen einerseits und aufgrund der für das erfindungsgemäße Schutz- bzw. Filtermaterial eingesetzten Materialien andererseits ergibt sich insgesamt eine besonders hohe Langlebigkeit und Beständigkeit. Insbesondere liegt neben der verbesserten Regenerations- bzw. Waschbeständigkeit auch eine verbesserte Trage- bzw. Verschleißbeständigkeit vor, so dass das erfindungsgemäße Konzept in hohem Maße ökonomisch bzw. wirtschaftlich effizient ist.

Da das erfindungsgemäße Schutz- bzw. Filtermaterial ohne Weiteres nach einem Einsatz dekontaminiert und regeneriert werden kann, insbesondere durch Waschen, ohne dass die Schutzleistung gegenüber Gift- bzw. Kampfstoffen in nennenswertem Maße reduziert wird, ist das erfindungsgemäße Konzept ohne Weiteres kostengünstig umsetzbar, zumal insgesamt aufgrund der erhöhten Anzahl an Anwendungs- bzw. Einsatzzyklen auch die Logistik bzw. Bevorratung verbessert ist. Zudem ist hierdurch ein hoher Grad an Nachhaltigkeit gewährleistet.

Aufgrund des speziellen Aufbaus der Partikel- bzw. Aerosolfilterschicht weist das erfindungsgemäße Schutz- bzw. Filtermaterial auch hervorragende Dehn- bzw. Biegsamkeitseigenschaften auf, wobei hohe Dehnungen bzw. Biegungen realisiert werden können, ohne die Funktionslage der Partikel- bzw. Aerosolfilterschicht durch mechanische Einwirkung zu beschädigen. Auch hierdurch wird die Regenerations- bzw. Waschbeständigkeit zusätzlich erhöht. Zudem weisen aus dem erfindungsgemäßen Material hergestellte Schutzbekleidungen einen entsprechend hohen Tragekomfort auf, und zwar auch im Hinblick auf die hohe Anschmiegsamkeit und die vorteilhaften haptischen Eigenschaften des erfindungsgemäßen Schutz- bzw. Filtermaterials, zumal im Rahmen der vorliegenden Erfindung auch hohe Gas- bzw. Luftdurchlässigkeiten bei gleichzeitig hoher Schutzfunktion gegenüber Gift- bzw. Kampfstoffen bereitgestellt werden. Insgesamt lassen sich somit insbesondere Schutzanzüge mit hohem Tragekomfort bei gleichzeitig hoher Schutzfunktion realisieren, da das erfindungsgemäße Schutz- bzw. Flächenmaterial bei gleichzeitig geringem Flächengewicht auch hervorragende Eigenschaften hinsichtlich seiner Flexibilität bzw. seines Biegeverhaltens sowie der Dehnbarkeit aufweist. Auf dieser Basis liegen beim Tragen einer diesbezüglichen Schutzbekleidung auch eine hohe Anschmiegsamkeit und vorteilhafte haptische Eigenschaften vor.

Auch für technische Filteranwendungen liegt aufgrund der hohen Luftdurchlässigkeit und hervorragenden Filtereigenschaften eine zweckdienliche Eignung vor. Aufgrund seiner speziellen Eigenschaften eignet sich das erfindungsgemäße Schutz- bzw. Filtermaterial somit auch für technische Filtrationsanwendungen, beispielsweise in Bezug auf eine Verwendung in Filtern bzw. Filtermaterialien, wie sie z. B. zur Entfernung von Schad-, Geruchs- und Giftstoffen aller Art, beispielsweise aus Luft- bzw. Gasströmen, eingesetzt werden. Insbesondere wird bei guter Durchströmbarkeit für das aufzureinigende Medium auch eine gute Filtereffizienz erreicht, und dies gleichermaßen bei hoher Regenerierbarkeit bzw. Waschbarkeit und damit einhergehend zahlreichen Anwendungs- bzw. Einsatzzyklen der zugrundeliegenden Filter.

Wie nachfolgend gleichermaßen noch im Detail angeführt, ist eine erfindungsgemäß besonders bevorzugte Ausführungsform derart ausgestaltet, dass die Partikel- bzw. Aerosolfilterschicht in Form eines mehrlagigen Verbunds bzw. Laminats auf Basis der Trägerlagen sowie der dazwischen angeordneten Funktionslage ausgebildet ist, insbesondere wobei die Funktionslage(n) beidseitig (d. h. in Bezug auf deren jeweilige bzw. -fläche) vollflächig diskontinuierlich mit der jeweiligen, hieran angrenzenden Lage bzw. Trägerlage verbunden, insbesondere fest und/oder dauerhaft verbunden ist. Hierdurch wird sowohl die Stabilität der Partikel- bzw. Aerosolfilterschicht als auch der mechanische Schutz der Funktionslage bzw. der diesbezüglich zugrundeliegenden Textilfasern bei Regenerations- bzw. Waschbeanspruchung erhöht.

Erfindungsgemäß bilden dabei die Schichten der Partikel- bzw. Aerosolfilterschicht (d.h. die Funktionslage(n) sowie die beidseitig hierzu angeordneten Trägerlagen) einen festen Verbund bzw. ein Laminat aus. Erfindungsgemäß wird somit auf eine spezielle mehrlagige Partikel- und/oder Aerosolfilterschicht abgestellt, welche mindestens jeweils eine äußere Trägerlage und mindestens eine zwischen den äußeren Trägerlagen angeordnete und insbesondere hiermit verbundene Funktionslage mit Partikel- und/oder Aerosolfiltereigenschaften aufweist.

Die Partikel- bzw. Aerosolfilterschicht kann dabei in vielfältiger Art und Weise in das erfindungsgemäße Schutz- bzw. Filtermaterial integriert sein. Beispielsweise können sämtliche Schichten des Schutz- bzw. Filtermaterials fest miteinander verbunden, insbesondere aufeinander laminiert sein, insbesondere so dass in Bezug auf die Partikel- bzw. Aerosolfilterschicht sozusagen eine "Laminat-in-Laminat"-Ausbildung bzw. Anordnung realisiert sein kann. Zudem kann die Partikel- bzw. Aerosolfilterschicht flächenmäßig nur partiell, beispielsweise mittels randseitiger Vernähung und somit in den übrigen Bereichen sozusagen lose, mit den übrigen Schichten verbunden sein bzw. in dem Schutz- bzw. Filtermaterial vorliegen.

Im Nachfolgenden wird die vorliegende Erfindung anhand von bevorzugten Ausführungsformen bzw. darstellenden Zeichnungen bzw. Figurendarstellungen beschrieben, wobei die diesbezüglichen Ausführungen für sämtliche der erfindungsgemäßen Aspekte gelten und wobei die entsprechenden bevorzugten Ausführungsformen bzw. Ausgestaltungen der vorliegenden Erfindung keinesfalls beschränkend sind.

In den Figurendarstellungen zeigt:

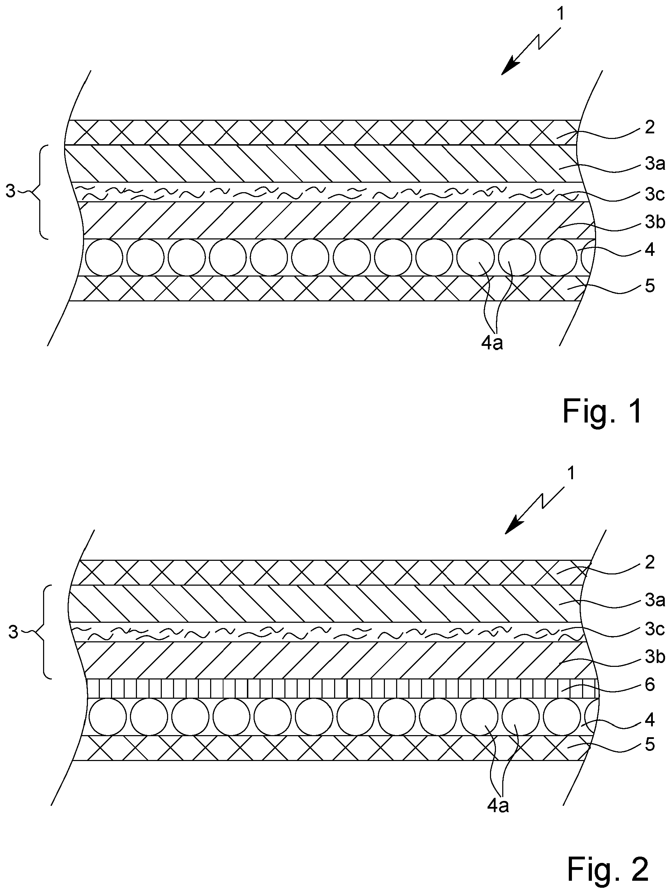

- Fig. 1: eine schematische Querschnittsdarstellung eines erfindungsgemäßen Schutz- bzw. Filtermaterials 1 gemäß einer Ausführungsform der vorliegenden Erfindung, wobei das Schutz- bzw. Filtermaterial 1 in der angeführten Abfolge eine erste textile Trägerschicht 2 sowie eine dieser Trägerschicht 2 zugeordnete mehrlagige und als Laminat ausgebildete Partikel- bzw. Aerosolfilterschicht 3 mit jeweils einer äußeren Trägerlage 3a, 3b und einer zwischen den äußeren Trägerlagen 3a, 3b angeordneten und hiermit verbundenen Funktionslage 3c mit Partikel- bzw. Aerosolfiltereigenschaften aufweist; zudem weist das Schutz- bzw. Filtermaterial 1 eine der Partikel- bzw. Aerosolfilterschicht 3 zugeordnete Adsorptionsschicht 4 mit einer Vielzahl einzelner bzw. diskreter Adsorberpartikel 4a sowie eine im Allgemeinen optionale zweite textile Trägerschicht 5 auf, welche in der vorliegenden Abfolge auf der der Partikel- bzw. Aerosolfilterschicht 3 abgewandten Seite der Adsorptionsschicht 4 angeordnet ist, wobei das Gesamtmaterial gemäß Fig. 1 gleichermaßen als Laminat bzw. als fester Verbund ausgebildet ist;
- Fig. 2: eine schematische Querschnittsdarstellung eines erfindungsgemäßen Schutz- bzw. Filtermaterials 1 gemäß einer weiteren erfindungsgemäßen Ausführungsform, wonach das Schutz- bzw. Filtermaterial 1 zusätzlich eine weitere textile Schicht in Form einer Abstandsschicht 6 aufweist, welche zwischen der Partikel- bzw. Aerosolfilterschicht 3 und der Adsorptionsschicht 4 angeordnet ist;

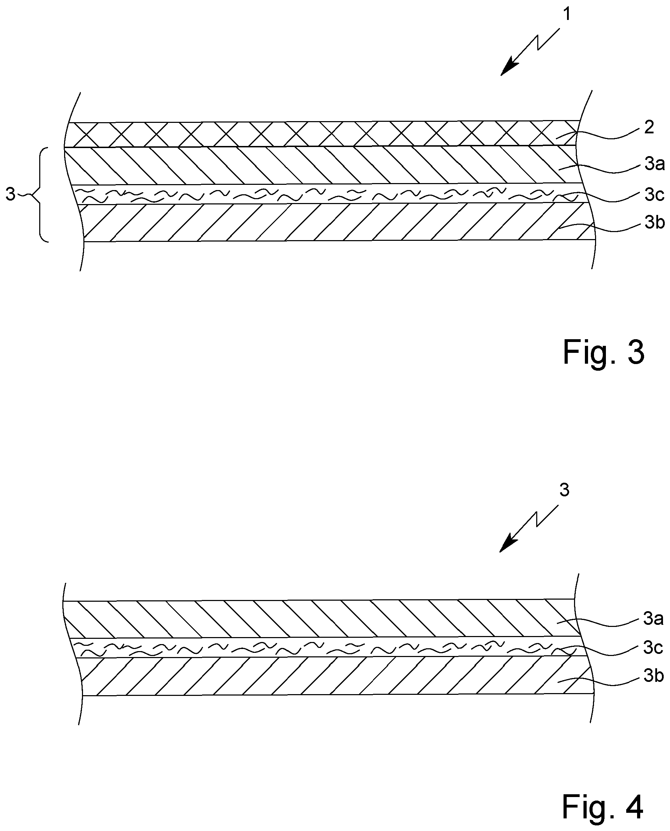

- Fig. 3: eine schematische Querschnittsdarstellung eines Schutz- bzw. Filtermaterials 1 (Vergleich), wobei das Filtermaterial eine erste textile Trägerschicht 2 und eine dieser Trägerschicht 2 zugeordnete Partikel- bzw. Aerosolfilterschicht 3 aufweist, wobei die Partikel- bzw. Aerosolfilterschicht 3 mehr- bzw. dreilagig ausgebildet ist und jeweils eine äußere Trägerlage 3a, 3b und eine zwischen den Trägerlagen 3a, 3b angeordnete und insbesondere hiermit verbundene Funktionslage 3c mit Partikel- bzw. Aerosolfiltereigenschaften aufweist;
- Fig. 4: eine schematische Querschnittsdarstellung einer erfindungsgemäßen Partikel- bzw. Aerosolfilterschicht 3 (bzw. eines diesbezüglichen Partikel- und/oder Aerosolfiltermaterial), wobei die Partikel- bzw. Aerosolfilterschicht 3 mehr- bzw. dreilagig ausgebildet ist und jeweils eine äußere Trägerlage 3a, 3b und eine zwischen den äußeren Trägerlagen 3a, 3b angeordnete bzw. hiermit jeweils verbundene Funktionslage 3c mit Partikel- bzw. Aerosolfiltereigenschaften aufweist, wobei die Partikel- bzw. Aerosolfilterschicht 3 als fester Verbund bzw. als Laminat ausgebildet ist;

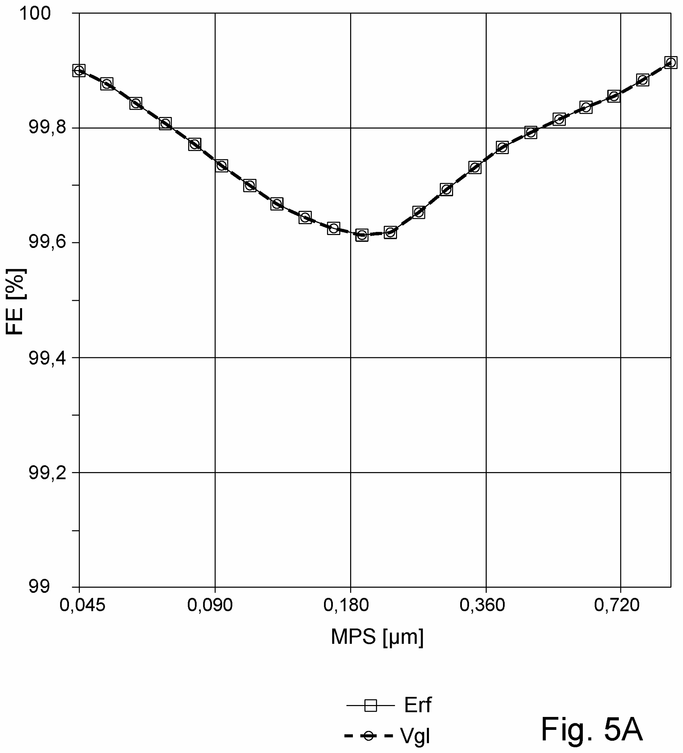

- Fig. 5A: eine Diagrammdarstellung zur mittleren Filtrationseffizienz eines erfindungsgemäßen Schutz- bzw. Filtermaterials ("Erf"; mit dreilagiger und in Form eines Laminats ausgebildeter Partikel- bzw. Aerosolfilterschicht mit jeweils einer äußeren Trägerlage und einer zwischen den äußeren Trägerlagen angeordneten Funktionslage mit Partikel- bzw. Aerosolfiltereigenschaften sowie mit einer an der Partikel- bzw. Aerosolfilterschicht fixierten Adsorptionsschicht jeweils einer außen textilen Träger- bzw. Abdeckschicht) und eines Vergleichsmaterials ("Vgl"; mit lediglich zweilagiger Partikel- bzw. Aerosolfilterschicht, bei welcher eine Funktionslage an lediglich einer Seite mit einer Trägerlage versehen ist sowie mit einer an der Funktionslage der Partikel- bzw. Aerosolfilterschicht fixierten Adsorptionsschicht und mit jeweils einer äußeren textilen Träger- bzw. Abdeckschicht) vor Durchführung von Regenerations- bzw. Waschvorgängen; d. h. im Ausgangszustand der jeweiligen Materialien, wobei die mittlere Filtrationseffizienz ("FE") in Abhängigkeit von der Partikelgröße in der mobilen Phase ("MPS", *Mobility Particle Size*) aufgetragen ist;

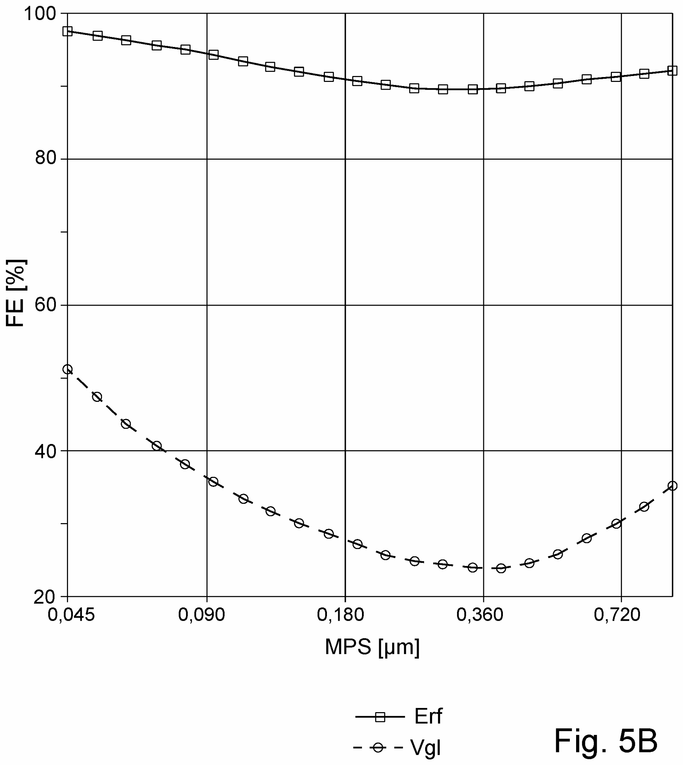

- Fig. 5B: eine weitere Diagrammdarstellung auf Basis des erfindungsgemäßen Schutz- bzw. Filtermaterials ("Erf") und des Vergleichsmaterials ("Vgl") gemäß Fig. 5A mit der diesbezüglichen mittleren Filtrationsleistung der jeweiligen Materialien nach Durchführung von insgesamt 40 Waschzyklen bzw. Waschvorgängen; d. h. im jeweils gewaschenen bzw. regenerierten Zustand, wobei die mittlere Filtrationseffizienz ("FE") in Abhängigkeit von der Partikelgröße in der mobilen Phase ("MPS", *Mobility Particle Size*) aufgetragen ist;

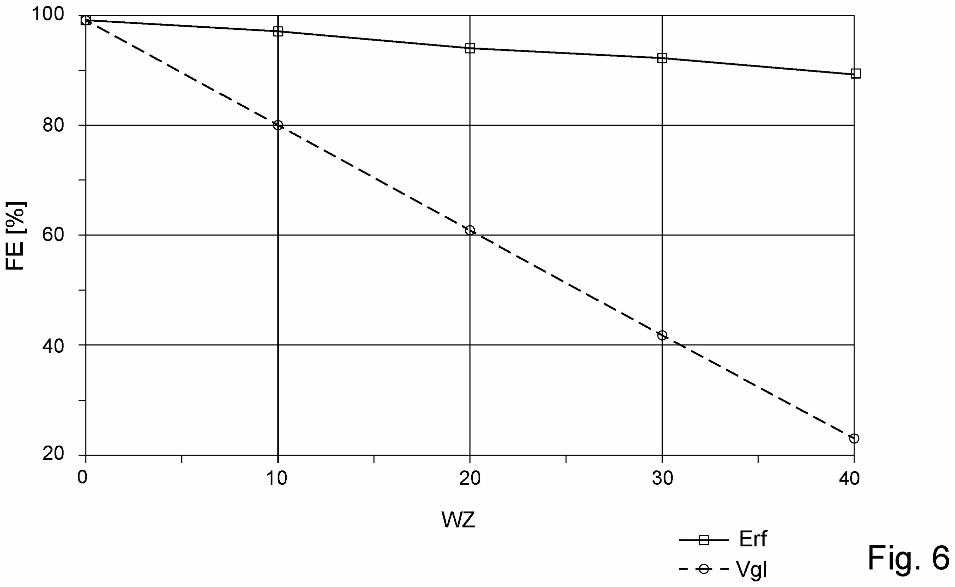

- Fig. 6: eine Diagrammdarstellung zur Entwicklung der Abscheideleistung eines wie zuvor gemäß Fig. 5A/5B angeführten erfindungsgemäßen Schutz- bzw. Filtermaterials ("Erf") bzw. eines wie gleichermaßen zuvor beschriebenen Vergleichsmaterials ("Vgl") in Abhängigkeit von der durchgeführten Anzahl an Regenerations- bzw. Waschzyklen, wobei die mittlere Filtrationseffizienz ("FE") in Abhängigkeit von der Anzahl der Waschzyklen bzw. Waschvorgänge ("WZ") aufgetragen ist;

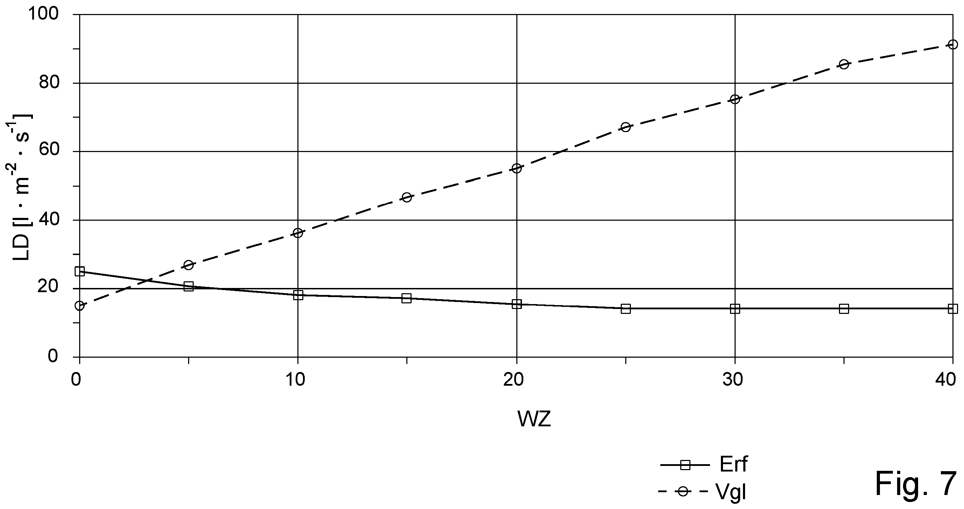

- Fig. 7: eine Diagrammdarstellung zur Entwicklung der Luftdurchlässigkeit eines wie gemäß Fig. 5A/5B definierten erfindungsgemäßen Schutz- bzw. Filtermaterials ("Erf") und eines gleichermaßen wie zuvor definierten Vergleichsmaterials ("Vgl") in Abhängigkeit von der Anzahl der durchgeführten Waschzyklen, wobei die Luftdurchlässigkeit ("LD") in Abhängigkeit von der Anzahl an durchgeführten Regenerations- bzw. Waschzyklen bzw. Waschvorgängen ("WZ") aufgetragen ist.

Im Nachfolgenden wird die vorliegende Erfindung anhand der die vorliegende Erfindung betreffenden Figurendarstellung, insbesondere gemäß Fig. 1 bis Fig. 4 weiterführend verdeutlicht. Zu den Fig. 5A bzw. 5B, Fig. 6 und Fig. 7 wird nachfolgend insbesondere in den Ausführungsbeispielen weiterführend Stellung genommen.

Die die vorliegende Erfindung betreffenden Figurendarstellung gemäß Fig. 1 bis Fig. 4 verdeutlichen dabei insbesondere auch den ersten Aspekt der vorliegenden Erfindung, wonach nämlich ein spezielles Schutz- und/oder Filtermaterial 1 bereitgestellt wird.

Insbesondere betrifft die vorliegende Erfindung gemäß dem ersten Aspekt der vorliegenden Erfindung somit ein textiles Schutz- und/oder Filtermaterial 1, vorzugsweise Adsorptionsfiltermaterial, mit Partikel- und/oder Aerosolfilterfunktion, vorzugsweise mit verbesserter Waschbeständigkeit, und mit Schutzfunktion gegenüber chemischen und/oder biologischen und/oder radioaktiven Schad- und/oder Kampfstoffen ("ABC- bzw. CBRN-Schutzfunktion"),
wobei das Schutz- und/oder Filtermaterial 1 als ein mehrlagiges (mehrschichtiges), eine Mehrzahl von miteinander verbundenen Schichten (Lagen) 2, 3, 4 aufweisendes textiles Verbundmaterial ausgebildet ist und
wobei das textile Schutzmaterial 1 die folgenden Schichten 2, 3, 4 in der nachfolgend genannten Abfolge aufweist:
   (a) eine erste textile Trägerschicht 2, insbesondere erste Abdeckschicht, wobei die erste textile Trägerschicht 2 als ein gasdurchlässiges, textiles Flächengebilde vorliegt und/oder ausgebildet ist;
   (b) eine der ersten textilen Trägerschicht 2 zugeordnete, insbesondere auf der ersten textilen Trägerschicht 2 angeordnete und/oder mit der ersten textilen Trägerschicht 2 verbundene, Partikel- und Aerosolfilterschicht 3,
      wobei die Partikel- und Aerosolfilterschicht 3 als ein gasdurchlässiges textiles Flächengebilde, welches eine Vielzahl einzelner Textilfasern umfasst oder hieraus gebildet ist, vorliegt und/oder ausgebildet ist und
      wobei die Partikel- und Aerosolfilterschicht 3 mehrlagig ausgebildet ist, wobei die Partikel- und Aerosolfilterschicht 3 mindestens jeweils eine äußere Trägerlage 3a, 3b und mindestens eine zwischen den äußeren Trägerlagen 3a, 3b angeordnete und mit den äußeren Trägerlagen 3a, 3b verbundene Funktionslage 3c mit Partikel- und Aerosolfiltereigenschaften, aufweist,
      wobei die Partikel- und Aerosolfilterschicht 3 als fester Verbund und/oder als Laminat ausgebildet ist, wobei die Lagen 3a, 3b, 3c jeweils an ihren Kontaktflächen fest miteinander verbunden und/oder zum Haften gebracht sind,
      wobei die jeweilige feste Verbindung und/oder Haftung vollflächig und/oder über die gesamte Kontaktfläche, aber diskontinuierlich, vorzugsweise punktweise und/oder mit Unterbrechungen, ausgebildet ist, so dass der Verbund und/oder das Laminat gasdurchlässig ausgebildet ist,
      wobei die Funktionslage 3c ein auf Basis von und/oder aus synthetischen Textilfasern gebildetes und/oder die vorgenannten Textilfasern aufweisendes textiles Flächengebilde mit einer durch die Textilfasern begrenzten und/oder ausgebildeten Vielzahl von Poren oder Maschen ist,
      wobei die Funktionslage 3c ein Flächengewicht im Bereich von 0,05 g/m² bis 50 g/m² aufweist, bestimmt gemäß DIN EN 12127, nach 24-stündiger Klimatisierung bei einer Temperatur von 20 °C und einer relativen Luftfeuchtigkeit von 65 %,
      wobei die Funktionslage 3c eine mittlere Porengröße oder mittlere Maschenweite von höchstens 100 µm aufweist, bestimmt gemäß ASTM F316-86, und
      wobei die Trägerlagen 3a, 3b, unabhängig voneinander, jeweils als ein Gelege oder Textilverbundstoff ausgebildet sind,
      wobei die Trägerlagen 3a, 3b, unabhängig voneinander, jeweils ein Flächengewicht im Bereich von 1 g/m² bis 100 g/m² aufweisen, bestimmt gemäß DIN EN 12127, nach 24-stündiger Klimatisierung bei einer Temperatur von 20 °C und einer relativen Luftfeuchtigkeit von 65 %;
   (c) eine der Partikel- und Aerosolfilterschicht 3 zugeordnete, insbesondere auf der Partikel- und Aerosolfilterschicht 3 angeordnete und/oder mit der Partikel- und Aerosolfilterschicht 3 verbundene, diskontinuierlich ausgebildete und/oder gasdurchlässige, bevorzugt luftdurchlässige, Adsorptionsschicht 4,
      wobei die Adsorptionsschicht 4 eine Vielzahl einzelner und/oder diskreter Adsorberpartikel 4a umfasst oder hieraus gebildet ist,
      wobei die Adsorberpartikel (4a) der Adsorptionsschicht (4) Aktivkohlepartikel, vorzugsweise in Form von Aktivkohlepartikeln in Kornform oder Aktivkohlepartikeln in Kugelform, sind.

Wie in Fig. 1 und Fig. 2 veranschaulicht, kann das Schutz- bzw. Filtermaterial 1 gemäß einer bevorzugten Ausführungsform zudem (d) eine zweite textile Trägerschicht 5 (synonym auch als "zweites textiles Flächengebilde" bzw. "Innenstoff" bzw. "Innenschicht" bezeichnet), insbesondere zweite textile Abdeckschicht 5, aufweisen. Die zweite textile Trägerschicht 5 kann insbesondere auf der der ersten Trägerschicht 2 gegenüberliegenden Seite des Schutz- bzw. Filtermaterials 1 angeordnet sein (vgl. auch nachfolgende Ausführungen).

Im Rahmen der vorliegenden Erfindung wird somit auf eine spezielle Partikel- bzw. Aerosolfilterschicht 3 abgestellt, bei welcher die Funktionslage 3c mit Partikel- bzw. Aerosolfiltereigenschaften zwischen mindestens jeweils einer äußeren Trägerlage 3a, 3b angeordnet bzw. hiermit jeweils verbunden ist. Erfindungsgemäß handelt es sich bei der Partikel- und/oder Aerosolfilterschicht 3 um ein Laminat bzw. um einen festen Verbund, wobei die Partikel- und Aerosolfilterschicht 3 jeweils eine äußere Trägerlage 3a, 3b und eine zwischen den äußeren Trägerlagen 3a, 3b angeordnete und hiermit verbundene Funktionslage 3c, wie zuvor definiert, aufweist bzw. hieraus besteht (vgl. z. B. Fig. 4).

Wie zuvor angeführt, führt der insbesondere sandwichartige Aufbau der Partikel- bzw. Aerosolfilterschicht 3, wonach die Funktionslage 3c sozusagen beidseitig mit jeweils mindestens einer äußeren Trägerlage 3a, 3b verbunden ist bzw. zwischen den Trägerlagen 3a, 3b angeordnet ist, zu einer nachhaltigen mechanischen Entlastung der Funktionslage 3c bei entsprechenden Regenerations- bzw. Waschvorgängen, so dass diesbezüglich insgesamt verbesserte Materialeigenschaften mit verbesserter Beständigkeit vorliegen.

Erfindungsgemäß verhält es sich derart, dass die Partikel- und Aerosolfilterschicht 3 mehrlagig, insbesondere dreilagig, ausgebildet ist, wobei die Partikel- und Aerosolfilterschicht 3 die (mindestens eine) erste äußere Trägerlage 3a und die (mindestens eine) zweite äußere Trägerlage 3b sowie die (mindestens eine) zwischen der (mindestens einen) ersten äußeren Trägerlage 3a und der (mindestens einen) zweiten äußeren Trägerlage 3b angeordnete, Funktionslage 3c mit Partikel- und Aerosolfiltereigenschaften aufweist oder hieraus besteht, wobei die Partikel- und Aerosolfilterschicht 3 als gasdurchlässiger, insbesondere luftdurchlässiger, Verbund bzw. fester Verbund, vorzugsweise Laminat, ausgebildet ist.

In Bezug auf die Partikel- und Aerosolfilterschicht 3 verhält es sich, wie auch in Fig. 1 bis Fig. 4 veranschaulicht, derart, dass die Trägerlage(n) 3a auf der einen Seite und/oder Fläche (d. h. insbesondere Flachseite) (erste Seite und/oder Fläche) der Funktionslage 3c angeordnet ist bzw. sind und dass die Trägerlage(n) 3b auf der gegenüberliegenden Seite und/oder Fläche (d. h. insbesondere Flachseite) (zweite Seite und/oder Fläche) der Funktionslage 3c angeordnet ist bzw. sind. Folglich wird die Funktionslage 3c beidseitig bzw. auf beiden Seiten von den jeweiligen Trägerlagen 3a, 3b zumindest im Wesentlichen vollflächig bedeckt, so dass sozusagen ein sandwichartiger Aufbau mit zwischen den Trägerlagen 3a, 3b angeordneter/n Funktionslage(n) 3c resultiert.

Erfindungsgemäß sind die Lagen 3a, 3c, 3b in diesem Zusammenhang derart angeordnet und/oder miteinander verbunden, dass ein gasdurchlässiger, insbesondere luftdurchlässiger, fester Verbund und/oder ein gasdurchlässiges, insbesondere luftdurchlässiges, Laminat resultiert.

Erfindungsgemäß ist die Partikel- und Aerosolfilterschicht 3 als ein gasdurchlässiger, insbesondere luftdurchlässiger, fester Verbund und/oder als ein gasdurchlässiges, insbesondere luftdurchlässiges, Laminat ausgebildet.

Was die Partikel- bzw. Aerosolfilterschicht 3 zudem anbelangt, so weist diese insbesondere ein definiertes Flächengewicht auf. Auch auf Basis der entsprechenden Flächengewichte werden entsprechend stabile Partikel- bzw. Aerosolfilterschichten 3 mit gleichzeitig hoher Filtrationseffizienz und hoher Luftdurchlässigkeit erhalten.

Insbesondere kann es im Rahmen der vorliegenden Erfindung vorgesehen sein, dass die Partikel- und Aerosolfilterschicht 3 ein (Gesamt-)Flächengewicht von höchstens 200 g/m², insbesondere höchstens 150 g/m², vorzugsweise höchstens 120 g/m², bevorzugt höchstens 100 g/m², besonders bevorzugt höchstens 80 g/m², aufweist, bestimmt gemäß DIN EN 12127, nach 24-stündiger Klimatisierung bei einer Temperatur von 20 °C und einer relativen Luftfeuchtigkeit von 65 %.

Diesbezüglich kann es erfindungsgemäß insbesondere vorgesehen sein, dass die Partikel- und Aerosolfilterschicht 3 ein (Gesamt-)Flächengewicht im Bereich von 5 g/m² bis 200 g/m², insbesondere im Bereich von 10 g/m² bis 150 g/m², vorzugsweise im Bereich von 15 g/m² bis 120 g/m², bevorzugt im Bereich von 20 g/m² bis 100 g/m², besonders bevorzugt im Bereich von 25 g/m² bis 80 g/m², aufweist, bestimmt gemäß DIN EN 12127, nach 24-stündiger Klimatisierung bei einer Temperatur von 20 °C und einer relativen Luftfeuchtigkeit von 65 %.

Auch der Dicke, insbesondere Gesamtquerschnittsdicke, der Partikel- bzw. Aerosolfilterschicht 3 kommt eine entsprechende Bedeutung hinsichtlich der funktionalen Eigenschaften beispielsweise im Hinblick auf Stabilität, Filtrationseigenschaften und Luftdurchlässigkeit zu.

Im Allgemeinen kann es erfindungsgemäß vorgesehen sein, dass die Partikel- und Aerosolfilterschicht 3 eine Dicke, insbesondere Gesamtquerschnittsdicke, von höchstens 5 mm, insbesondere höchstens 3 mm, vorzugsweise höchstens 2 mm, bevorzugt höchstens 1 mm, besonders bevorzugt höchstens 0,75 mm, weiter bevorzugt höchstens 0,5 mm, aufweist, bestimmt gemäß DIN EN ISO 9073-2.

Insbesondere kann die Partikel- und Aerosolfilterschicht 3 eine Dicke, insbesondere Gesamtquerschnittsdicke, im Bereich von 0,01 mm bis 5 mm, insbesondere im Bereich von 0,03 mm bis 3 mm, vorzugsweise im Bereich von 0,05 mm bis 2 mm, bevorzugt im Bereich von 0,07 mm bis 1 mm, besonders bevorzugt im Bereich von 0,09 mm bis 0,75 mm, weiter bevorzugt im Bereich von 0,1 mm bis 0,5 mm, aufweisen. Die Dicke wird gemäß DIN EN ISO 9073-2 bestimmt werden.

Insbesondere im Hinblick auf die Bereitstellung eines hohen Tragekomforts im Fall der Verwendung des Schutz- bzw. Filtermaterials 1 nach der Erfindung für oder als Schutzanzüge sowie hinsichtlich der Eigenschaften für Verwendungen in technischen Filteranwendungen ist es erfindungsgemäß insbesondere vorgesehen, dass die Partikel- und/oder Aerosolfilterschicht 3 gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist, bevorzugt luftdurchlässig und wasserdampfdurchlässig ausgebildet ist.

Es hat sich weiterhin als vorteilhaft erwiesen, wenn die Partikel- und Aerosolfilterschicht 3 eine Gasdurchlässigkeit, insbesondere Luftdurchlässigkeit, von mindestens 2 l·m ²·s⁻¹, insbesondere mindestens 5 l·m⁻²·s⁻¹, vorzugsweise mindestens 10 l·m⁻²·s⁻¹, bevorzugt mindestens 20 l·m⁻²·s⁻¹, besonders bevorzugt mindestens 25 l·m⁻²·s⁻¹, aufweist, insbesondere bestimmt gemäß DIN EN ISO 9237 und/oder insbesondere bestimmt bei einem Differenzdruck (Strömungswiderstand) von 127 Pascal.

Gemäß einer Ausführungsform der vorliegenden Erfindung kann die Partikel- und Aerosolfilterschicht 3 im Rahmen der vorliegenden Erfindung eine Gasdurchlässigkeit, insbesondere Luftdurchlässigkeit, im Bereich von 2 l·m⁻²·s⁻¹ bis 2.000 l·m⁻²·s⁻¹, insbesondere im Bereich von 5 l·m⁻²·s⁻¹ bis 1.000 l·m⁻²·s⁻¹, vorzugsweise im Bereich von 10 l·m⁻²·s⁻¹ bis 500 l·m⁻²·s⁻¹, bevorzugt im Bereich von 20 l·m⁻²·s⁻¹ bis 300 l·m⁻²·s⁻¹, besonders bevorzugt im Bereich von 25 l·m⁻²·s⁻¹ bis 200 l·m⁻²·s⁻¹, aufweisen, insbesondere bestimmt gemäß DIN EN ISO 9237 und/oder insbesondere bestimmt bei einem Differenzdruck (Strömungswiderstand) von 127 Pascal.

Weiterhin kann die Partikel- und Aerosolfilterschicht 3 eine Gasdurchlässigkeit, insbesondere Luftdurchlässigkeit, von mindestens 0,5 cfm (*cubic feet per minute* bzw. Kubikfuß pro Minute), insbesondere mindestens 1 cfm, vorzugsweise mindestens 2 cfm, bevorzugt mindestens 3 cfm, besonders bevorzugt mindestens 4 cfm, aufweisen, insbesondere bestimmt gemäß ASTM D737-96 und/oder insbesondere bestimmt bei einem Differenzdruck (Strömungswiderstand) von 127 Pascal.

Insbesondere kann die Partikel- und Aerosolfilterschicht 3 eine Gasdurchlässigkeit, insbesondere Luftdurchlässigkeit, im Bereich von 0,5 cfm bis 150 cfm, insbesondere im Bereich von 1 cfm bis 100 cfm, vorzugsweise im Bereich von 2 cfm bis 75 cfm, bevorzugt im Bereich von 3 cfm bis 50 cfm, besonders bevorzugt im Bereich von 4 cfm bis 25 cfm, aufweisen, insbesondere bestimmt gemäß ASTM D737-96 und/oder insbesondere bestimmt bei einem Differenzdruck (Strömungswiderstand) von 127 Pascal.

Weiterführend kann die Partikel- und Aerosolfilterschicht 3 eine Gasdurchlässigkeit, insbesondere Luftdurchlässigkeit, im Bereich von 1 mm/s bis 200 mm/s, insbesondere im Bereich von 2 mm/s bis 150 mm/s, vorzugsweise im Bereich von 3 mm/s bis 120 mm/s, bevorzugt im Bereich von 5 mm/s bis 100 mm/s, besonders bevorzugt im Bereich von 10 mm/s bis 75 mm/s, aufweisen, insbesondere bestimmt gemäß DIN EN ISO 9237 und/oder insbesondere bestimmt bei einem Differenzdruck (Strömungswiderstand) von 127 Pascal.

Auf dieser Basis wird im Fall der Verwendung für oder als Schutzanzüge ein hoher Tragekomfort sowie in Bezug auf technische Filteranwendungen, beispielsweise für oder als Luftfilter oder dergleichen, eine hohe Durchströmbarkeit des erfindungsgemäßen Schutz- bzw. Filtermaterials 1 mit dem aufzureinigenden Medium Luft, erhalten oder gewährleistet.

Darüber hinaus zeichnet sich die Partikel- bzw. Aerosolfilterschicht auch durch eine hohe Filtereffizient in Form eines hohen Abscheidegrads (Abscheideeffizienz), insbesondere einen hohen Fraktionsabscheidegrad, gemäß den nachfolgenden Bedingungen aus, was die hervorragenden Filtrationseigenschaften gegenüber Partikeln bzw. Aerosolen weiterführend charakterisiert:
Insbesondere ist es erfindungsgemäß vorgesehen, dass die Partikel- und Aerosolfilterschicht 3 einen Abscheidegrad (Abscheideeffizienz) von mindestens 80 %, insbesondere von mindestens 85 %, vorzugsweise von mindestens 90 %, bevorzugt mindestens 95 %, aufweist, bestimmt gemäß ISO 29463-3 bei einer Druckdifferenz von 15 Pascal und/oder bei einer Durchströmgeschwindigkeit von 5 m/s sowie bei einer Temperatur von 23 °C ± 3 °C und mit Kaliumchlorid (KCI) als Testsubstanz bei einer Partikelgröße im Bereich von 0,045 µm bis 0,931 µm und mit einer Aerosolkonzentration von < 3 mg/m³ sowie insbesondere bei einem Flächendurchmesser (Probengröße) der Partikel- und/oder Aerosolfilterschicht 3 von 150 mm und bei einer Testdauer von 300 s. Die vorgegebene Druckdifferenz bzw. Durchströmgeschwindigkeit bezieht sich dabei auf das heranzuziehende Material in Form der Partikel- und/oder Aerosolfilterschicht 3.

Zudem ist es erfindungsgemäß insbesondere vorgesehen, dass die Partikel- und Aerosolfilterschicht 3 einen Abscheidegrad (Abscheideeffizienz), insbesondere Fraktionsabscheidegrad, von mindestens 80 %, insbesondere von mindestens 85 %, vorzugsweise von mindestens 90 %, bevorzugt von mindestens 95 %, aufweist, bestimmt nach DIN EN 1822 bei einer Druckdifferenz von 15 Pascal mit Kaliumchlorid (KCI) als Testsubstanz (insbesondere 1 %) als Mindestwirkungsgrad (MPPS, insbesondere MPPS = 0,1 µm bis 0,3 µm). Das Bewertungskriterium MPPS (*Most Penetrating Particle Size*) bezeichnet die Partikelgröße, bei welcher ein Filtermaterial (hier konkret die Partikel- und/oder Aerosolfilterschicht 3) seinen niedrigsten Abscheidegrad verzeichnet.

Insbesondere kann die Partikel- und Aerosolfilterschicht 3 gemäß den nachfolgenden Bedingungen einen Abscheidegrad (Abscheideeffizienz) von mindestens 80 %, insbesondere von mindestens 85 %, vorzugsweise von mindestens 90 %, bevorzugt von mindestens 95 %, aufweisen, insbesondere bestimmt nach DIN EN 1822 und/oder insbesondere bestimmt bei einer Anströmgeschwindigkeit von 5,33 cm/s und/oder einer Flussrate von 32 I/min mit DOP (Dioctylphthalat) als Testsubstanz (DOP-Partikelgröße = 0,3 µm), insbesondere als Mindestwirkungsgrad (MPPS, insbesondere MPPS = 0,1 µm bis 0,3 µm).

Vorzugsweise weist das Partikel- und Aerosolfilterschicht 3 die vorgenannten Abscheidegrade (Abscheideeffizienzen) jeweils im ungewaschenen (nicht gewaschenen) und unbenutzten Zustand auf. Aufgrund der hohen Regenerations- und Waschbeständigkeit kann es erfindungsgemäß insbesondere auch gewährleistet sein, dass die Partikel- und Aerosolfilterschicht 3 die vorgenannten Abscheidegrade (Abscheideeffizienzen) jeweils auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweist.

Zudem zeichnet sich die erfindungsgemäß eingesetzte Partikel- bzw. Aerosolfilterschicht 3 auch durch einen hervorragenden mittleren Wirkungsgrad Eₘ aus: Insbesondere kann die Partikel- und/oder Aerosolfilterschicht 3 einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweisen. Zudem kann die Partikel- und Aerosolfilterschicht 3 einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweisen.

Darüber hinaus kann es erfindungsgemäß insbesondere vorgesehen sein, dass die Partikel- und Aerosolfilterschicht 3 einen integralen Anfangsdurchlassgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweist.

Weiterhin kann die Partikel- und Aerosolfilterschicht 3 bei einer Anströmgeschwindigkeit von 0,1 m/s eine mittlere Abscheiderate (mittlerer Abscheidegrad) gegenüber Partikeln und/oder Aerosolen mit Durchmessern im Bereich von 0,1 bis 0,3 µm (MPPS) von mindestens 80 %, insbesondere mindestens 90 %, vorzugsweise mindestens 95 %, aufweisen. Zudem kann die Partikel- und/oder Aerosolfilterschicht 3 bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweisen.

In diesem Zusammenhang kann es sich erfindungsgemäß insbesondere derart verhalten, dass die Partikel- und Aerosolfilterschicht 3 die vorgenannten Eigenschaften hinsichtlich des mittleren Wirkungsgrads Eₘ, des integralen Anfangsdurchlassgrads Dᵢ bzw. der mittleren Abscheiderate gegenüber den zuvor genannten Partikeln bzw. Aerosolen jeweils im ungewaschenen (nicht gewaschenen) bzw. unbenutzten Zustand aufweist. Auch in diesem Zusammenhang kann es erfindungsgemäß insbesondere gewährleistet sein, dass die Partikel- und Aerosolfilterschicht 3 die vorgenannten Werte bzw. Eigenschaften auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweist.

Zusammenfassend zeigen die vorgenannten Filtrationseigenschaften der in dem erfindungsgemäßen Schutz- bzw. Filtermaterial eingesetzten Partikel- bzw. Aerosolfilterschicht 3 die hervorragende Filtereffizienz der Partikel- bzw. Aerosolfilterschicht 3 bzw. des Schutz- bzw. Filtermaterials 1 nach der Erfindung als Ganzes, wobei im Rahmen der vorliegenden Erfindung insgesamt ein Material mit hervorragender Partikel- bzw. Aerosolfiltereigenschaften bereitgestellt wird.

Insgesamt kann es sich vor diesem Hintergrund im Rahmen der vorliegenden Erfindung insbesondere derart verhalten, dass die Partikel- bzw. Aerosolfilterschicht 3, insbesondere die Funktionslage 3c, als ein HEPA-Filter (*High Efficiency Penetration* oder *Particulate Air*) oder ULPA-Filter (*Ultra Low Penetration* oder *Particulate Air*) ausgebildet ist. In entsprechender Weise gilt somit auch für das erfindungsgemäße Schutz- bzw. Filtermaterial als solches, dass dieses als ein HEPA-Filter oder ULPA-Filter ausgebildet sein kann, insbesondere wobei die diesbezügliche funktionelle Eigenschaft durch die Partikel- bzw. Aerosolfilterschicht 3 bereitgestellt wird, wie zuvor angeführt.

Weiterführend kommt auch dem Aufbau der Funktionslage 3c im Hinblick auf dessen Filterfunktion und Stabilität eine hohe Bedeutung zu:
Im Allgemeinen kann es erfindungsgemäß in diesem Zusammenhang vorgesehen sein, dass die Funktionslage 3c eine Dicke, insbesondere Querschnittsdicke, von höchstens 50 µm, insbesondere höchstens 25 µm, vorzugsweise höchstens 20 µm, bevorzugt höchstens 15 µm, besonders bevorzugt höchstens 10 µm, weiter bevorzugt höchstens 6 µm, aufweist, insbesondere bestimmt gemäß DIN EN ISO 9073-2.

Erfindungsgemäß hat es sich in diesem Zusammenhang als vorteilhaft erwiesen, dass die Funktionslage 3c eine Dicke, insbesondere Querschnittsdicke, im Bereich von 0,5 µm bis 50 µm, insbesondere im Bereich von 1 µm bis 25 µm, vorzugsweise im Bereich von 1,25 µm bis 20 µm, bevorzugt im Bereich von 1,5 µm bis 15 µm, besonders bevorzugt im Bereich von 1,75 µm bis 10 µm, weiter bevorzugt im Bereich von 2 µm bis 6 µm, aufweist, insbesondere bestimmt gemäß DIN EN ISO 9073-2.

Auf Basis der vorgenannten Dicken, insbesondere Querschnittsdicken, der Funktionslage 3c kann insbesondere im Zusammenwirken mit den weiteren konstruktiven Maßnahmen eine hohe Partikel- bzw. Aerosolfiltereffizienz bei gleichzeitig hoher Stabilität der zugrundeliegenden Funktionslage 3c bereitgestellt bzw. gewährleistet werden.

Weiterführend kann die Funktionslage 3c ein Flächengewicht von höchstens 50 g/m², insbesondere höchstens 25 g/m², vorzugsweise höchstens 10 g/m², bevorzugt höchstens 5 g/m², besonders bevorzugt höchstens 3 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %.

In diesem Zusammenhang weist die Funktionslage 3c ein Flächengewicht im Bereich von 0,05 g/m² bis 50 g/m², insbesondere im Bereich von 0,1 g/m² bis 25 g/m², vorzugsweise im Bereich von 0,2 g/m² bis 10 g/m², bevorzugt im Bereich von 0,3 g/m² bis 5 g/m², besonders bevorzugt im Bereich von 0,5 g/m² bis 3 g/m², aufweisen, bestimmt gemäß DIN EN 12127, nach 24-stündiger Klimatisierung bei einer Temperatur von 20 °C und einer relativen Luftfeuchtigkeit von 65 %.

Erfindungsgemäß ist es insbesondere vorgesehen, dass die Funktionslage 3c gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist, bevorzugt luftdurchlässig und wasserdampfdurchlässig ausgebildet ist. Auch von daher weist das erfindungsgemäße Schutz- bzw. Filtermaterial 1 eine hervorragende Eignung zur Verwendung in oder als Schutzbekleidung sowie für technische Filteranwendungen, bei denen insgesamt hohe Luftdurchlässigkeiten von Vorteil, auf.

Die hervorragenden Partikel- bzw. Aerosolfiltereigenschaften bei gleichzeitig hoher Luftdurchlässigkeit werden für die erfindungsgemäß eingesetzte Partikel- bzw. Aerosolfilterschicht 3 auch durch folgende konstruktive Maßnahmen gewährleistet:
So ist es insbesondere vorgesehen, dass die Funktionslage 3c mindestens eine Textilfaser (Funktionslagen-Textilfaser), vorzugsweise eine Vielzahl an Textilfasern, aufweist und/oder hieraus gebildet ist bzw. besteht.

Insbesondere weist die Funktionslage 3c eine Vielzahl einzelner Textilfasern (Funktionslagen-Textilfasern) auf und/oder ist hieraus gebildet bzw. besteht, insbesondere wobei die Funktionslage 3c als gasdurchlässiges textiles Flächengebilde, welches eine Vielzahl einzelner Textilfasern umfasst oder hieraus gebildet ist bzw. besteht, vorliegt und/oder ausgebildet ist. Bei den diesbezüglichen Textilfasern kann es sich beispielsweise um sogenannte Nanofasern handeln.

Im Allgemeinen können die Textilfasern der Funktionslage 3c einen Faserdurchmesser von höchstens 1.500 nm, insbesondere höchstens 1.000 nm, vorzugsweise höchstens 800 nm, bevorzugt höchstens 600 nm, besonders bevorzugt höchstens 400 nm, aufweisen, insbesondere bestimmt gemäß DIN 53 811.

Insbesondere können die Textilfasern der Funktionslage 3c einen Faserdurchmesser im Bereich von 10 nm bis 1.500 nm, insbesondere im Bereich von 50 nm bis 1.000 nm, vorzugsweise im Bereich von 100 nm bis 800 nm, bevorzugt im Bereich von 150 nm bis 600 nm, besonders bevorzugt im Bereich von 200 nm bis 400 nm, aufweisen, insbesondere bestimmt gemäß DIN 53 811.

Auf dieser Basis können stabile Faseranordnung in der Funktionslage 3c bei gleichzeitig guten Partikel- bzw. Aerosolfiltereigenschaften bereitgestellt werden.

Was das für die Textilfasern eingesetzte Material bzw. die Textilfasern als solche anbelangt, so haben sich insbesondere die nachfolgend angeführten technischen Maßnahmen als vorteilhaft erwiesen:
So ist es im Rahmen der vorliegenden Erfindung insbesondere vorgesehen, dass die Textilfasern der Funktionslage 3c synthetische Fasern (Chemiefasern) sind. Insbesondere verhält es sich erfindungsgemäß derart, dass die Textilfasern der Funktionslage 3c ein Material aus der Gruppe von Polyurethanen (PU); Polyestern (PES); Polyolefinen (PO), wie Polyethylen (PE), Polypropylen (PP), Polyoxyethylen und Polyoxypropylen; Polyvinylchloriden (CLF); Polyvinylidenchloriden (CLF); Acetaten (CA); Triacetaten (CTA); Polyacryl (PAN), insbesondere Polyacrylnitrilen; Polyamiden (PA); Polyvinylalkohol (PVAL); Polyvinylestern; Poly(meth-)acrylaten; Polyvinylidenfluoriden (PVDF); sowie deren Mischungen und Kombinationen, vorzugsweise aus der Gruppe von Polyurethanen; Polyestern, Polyolefinen, Polyamiden, Polyacrylnitrilen, Poly(meth-)acrylaten und Polyvinylidenfluoriden; deren Copolymeren und deren Mischungen sowie Kombinationen, bevorzugt aus der Gruppe von Polyurethanen; Polyestern, Polyolefinen und Polyamiden; deren Copolymeren und deren Mischungen sowie Kombinationen, ganz besonders bevorzugt Polyurethanen, umfassen oder hieraus bestehen.

In diesem Zusammenhang ist es erfindungsgemäß bevorzugt, wenn die Textilfasern der Funktionslage 3c ausgewählt sind aus der Gruppe von Polyurethanfasern; Polyesterfasern, Polyolefinfasern und Polyamidfasern; deren Copolymeren sowie deren Kombinationen, insbesondere Polyurethanfasern. Textilfasern aus den vorgenannten Materialien gehen dabei insbesondere mit einer hohen Festigkeit und Zugkraftbeständigkeit einher. Zudem verhält es sich insbesondere für Textilfasern aus Polyurethan derart, dass diese zudem eine gewisse Elastizität bzw. Dehnbarkeit aufweisen, so dass derartige Textilfasern in besonderem Maße Kräfte bzw. Spannungen unter mechanischer Krafteinwirkung, wie während eines Regenerations- bzw. Waschvorgangs, aufnehmen können. Hierdurch wird die Stabilität und Beständigkeit des Schutz- bzw. Filtermaterials 1 nach der Erfindung insgesamt nochmals verbessert.

Insbesondere kann es sich erfindungsgemäß derart verhalten, dass die Funktionslage 3c Textilfasern, ausgewählt aus der Gruppe von Polyurethanfasern; Polyesterfasern, Polyolefinfasern und Polyamidfasern; und deren Mischungen sowie Kombinationen, insbesondere Polyurethanfasern, umfasst oder hieraus besteht.

Insbesondere sind die Textilfasern der Funktionslage 3c Polyurethanfasern, wobei die Funktionslage 3c Polyurethanfasern umfasst oder hieraus besteht.

Insbesondere kann die Funktionslage 3c die Textilfasern (Funktionslagen-Textilfasern) in einer Menge von mindestens 50 Gew.-%, insbesondere mindestens 75 Gew.-%, vorzugsweise mindestens 90 Gew.-%, bevorzugt mindestens 95 Gew.- %, besonders bevorzugt mindestens 98 Gew.-%, weiter bevorzugt mindestens 99 Gew.-%, bezogen auf die Funktionslage 3c aufweisen. Erfindungsgemäß ist es jedoch bevorzugt, wenn die Funktionslage 3c aus den Textilfasern (Funktionslagen-Textilfasern) besteht, d.h. dass die Funktionslage 3c die Textilfasern in einer Menge von 100 Gew.-%, bezogen auf die Funktionslage 3c aufweist bzw. hieraus gebildet ist.

Erfindungsgemäß hat es sich als vorteilhaft erwiesen, wenn die Funktionslage 3c durch Elektrospinnen, Spunbonding-Verfahren, Meltblow-Verfahren oder eine Kombination dieser Verfahren, vorzugsweise durch eine Kombination von Elektrospinnen und Meltblow-Verfahren oder aber durch Elektrospinnen, vorzugsweise durch Elektrospinnen, hergestellt ist. Hierdurch können besonders definierte Faseranordnungen in der Funktionslage 3c realisiert werden, was zu weiter definierten Partikel- bzw. Aerosolfiltereigenschaften und Luftdurchlässigkeiten führt.

Erfindungsgemäß ist es zudem bevorzugt, wenn die Funktionslage 3c als ein Gelege oder Textilverbundstoff, insbesondere Vlies (Non-Woven), besonders bevorzugt als ein Vlies (Non-Woven), ausgebildet ist.

Insbesondere kann die Funktionslage 3c als ein Gelege oder Textilverbundstoff, insbesondere Vlies (Non-Woven), besonders bevorzugt als ein Vlies (Non-Woven), auf Basis von und/oder aus Polyurethanfasern ausgebildet sein und/oder vorliegen.

Insbesondere kann die Funktionslage 3c ein auf Basis von und/oder aus Textilfasern, insbesondere synthetischen Textilfasern, insbesondere wie zuvor definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, sein.

Die Funktionslage 3c zeichnet sich durch das Vorliegen bzw. Vorhandensein einer definierten Porenstruktur aus, welche zum einen eine definierte Luftdurchlässigkeit und zum anderen gleichermaßen eine hohe Filtrationsleistung gegenüber Partikeln bzw. Aerosolen in einem aufzureinigenden Medium, wie Luft, gewährleistet. Die der Funktionslage 3c zugrundeliegenden Poren werden dabei im Allgemeinen durch die für die Funktionslage 3c eingesetzten Textilfasern begrenzt bzw. gebildet.

Erfindungsgemäß hat es sich im Hinblick auf die Gewährleistung einer hohen Partikel- bzw. Aerosolfiltereffizienz bei gleichzeitig hoher Gas- bzw. Luftdurchlässigkeit als vorteilhaft erwiesen, wenn die Funktionslage 3c eine mittlere Porengröße oder mittlere Maschenweite, insbesondere mittlere Porengröße, von höchstens 100 µm, insbesondere von höchstens 50 µm, vorzugsweise von höchstens 20 µm, bevorzugt von höchstens 10 µm, besonders bevorzugt von höchstens 5 µm, weiter bevorzugt von höchstens 3 µm, aufweist, bestimmt gemäß ASTM F316-86.

In diesem Zusammenhang ist es erfindungsgemäß von Vorteil, wenn die Funktionslage 3c eine mittlere Porengröße oder mittlere Maschenweite, insbesondere mittlere Porengröße, im Bereich von 0,05 µm bis 100 µm, insbesondere im Bereich von 0,1 µm bis 50 µm, vorzugsweise im Bereich von 0,2 µm bis 20 µm, bevorzugt im Bereich von 0,3 µm bis 10 µm, besonders bevorzugt im Bereich von 0,4 µm bis 5 µm, weiter bevorzugt im Bereich von 0,5 µm bis 3 µm, aufweist, bestimmt gemäß ASTM F316-86.

Weiterhin sollte die Funktionslage 3c im Hinblick auf die Gewährleistung besonders guter Partikel- bzw. Aerosolfiltereigenschaften eine maximale Porengröße oder maximale Maschenweite, insbesondere maximale Porengröße, von bis zu 200 µm, insbesondere von bis zu 100 µm, vorzugsweise von bis zu 50 µm, bevorzugt von höchstens 20 µm, besonders bevorzugt von bis zu 10 µm, weiter bevorzugt von bis zu 4 µm, aufweisen, bestimmt gemäß ASTM F316-86.

Erfindungsgemäß kann es somit zusammenfassend insbesondere vorgesehen sein, dass die Funktionslage 3c Poren oder Maschen, vorzugsweise Poren, insbesondere eine Vielzahl von Poren oder Maschen, vorzugsweise eine Vielzahl von Poren, aufweist. In diesem Zusammenhang kann die mittlere Porengröße oder mittlere Maschenweite, insbesondere die mittlere Porengröße, höchstens 100 µm, insbesondere höchstens 50 µm, vorzugsweise höchstens 20 µm, bevorzugt höchstens 10 µm, besonders bevorzugt höchstens 5 µm, weiter bevorzugt höchstens 3 µm, betragen, insbesondere bestimmt gemäß ASTM F316-86.

Insbesondere kann in diesem Zusammenhang die mittlere Porengröße oder mittlere Maschenweite, insbesondere die mittlere Porengröße, im Bereich von 0,05 µm bis 100 µm, insbesondere im Bereich von 0,1 µm bis 50 µm, vorzugsweise im Bereich von 0,2 µm bis 20 µm, bevorzugt im Bereich von 0,3 µm bis 10 µm, besonders bevorzugt im Bereich von 0,4 µm bis 5 µm, weiter bevorzugt im Bereich von 0,5 µm bis 3 µm, liegen, bestimmt gemäß ASTM F316-86.

Gemäß einer erfindungsgemäß bevorzugten Ausführungsform kann die Funktionslage 3c ein auf Basis von und/oder aus Textilfasern, insbesondere synthetische Textilfasern, insbesondere wie zuvor definiert, vorzugsweise Polyurethanfasern, gebildetes textiles Flächengebilde mit einer durch die Textilfasern begrenzten Vielzahl von Poren oder Maschen, insbesondere Poren, sein.

In diesem Zusammenhang kann in Bezug auf diese erfindungsgemäß bevorzugte Ausführungsform das Verhältnis der mittleren Porengröße oder Maschenweite, insbesondere mittleren Porengröße, zum mittleren Durchmesser der Textilfasern im Bereich von 0,05 bis 5.000, insbesondere im Bereich von 0,1 bis 1.000, vorzugsweise im Bereich von 1 bis 500, bevorzugt im Bereich von 5 bis 250, besonders bevorzugt im Bereich von 10 bis 100, liegen.

Erfindungsgemäß verhält es sich dabei insbesondere in diesem Zusammenhang insbesondere derart, dass die in Funktionslage 3c vorgenannten Eigenschaften hinsichtlich der Ausbildung der Poren im ungewaschenen (nicht gewaschenen) bzw. unbenutzten Zustand des zugrundeliegenden Schutz- bzw. Filtermaterials 1 aufweist. Aufgrund der vorliegenden Stabilisierung der Funktionslage 3c kann es sich erfindungsgemäß zudem derart verhalten, dass die Funktionslage 3c die vorgenannten Poreneigenschaften auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweist.

Was darüber hinaus die der Partikel- bzw. Aerosolfilterschicht 3 zugrundeliegenden äußeren Trägerlagen 3a, 3b anbelangt, so ist hierzu insbesondere auch Folgendes anzuführen:
Wie auch in Fig. 1 bis Fig. 4 verdeutlicht, können die Trägerlagen 3a, 3b derart angeordnet sein, dass die Partikel- und Aerosolfilterschicht 3 mindestens eine, vorzugsweise eine, auf der der Trägerschicht 2 zugewandten Seite und/oder Fläche der Funktionslage 3c angeordnete Trägerlage 3a (erste Trägerlage 3a) und mindestens eine, vorzugsweise eine, auf der der Trägerschicht 2 abgewandten Seite und/oder Fläche der Funktionslage 3c angeordnete Trägerlage 3b (zweite Trägerlage 3b) aufweist. Mit anderen Worten wird die Funktionslage 3c beidseitig jeweils von mindestens einer Trägerlage 3a, 3b bedeckt bzw. ist auf den entsprechenden Seiten mit jeweils einer Trägerlage 3a, 3b fest verbunden, insbesondere hieran jeweils befestigt bzw. fixiert. Wie nachfolgend angeführt, kann die Partikel- bzw. Aerosolfilterschicht 3 auch eine Mehrzahl an Trägerlagen 3a, 3b auf der jeweiligen Seite der Funktionslage 3c aufweisen. Dabei bilden die Funktionslage 3c und die Trägerlagen 3a, 3b insbesondere ein Laminat bzw. einen festen Verbund aus, insbesondere wobei die jeweils weiteren Trägerlagen, sofern vorhanden, mittelbar mit der Funktionslage 3c verbunden, insbesondere fest verbunden, vorzugsweise laminiert, sind.

Erfindungsgemäß weisen die Trägerlagen 3a, 3b, unabhängig voneinander, jeweils ein Flächengewicht im Bereich von 1 g/m² bis 100 g/m², insbesondere im Bereich von 2 g/m² bis 75 g/m², vorzugsweise im Bereich von 5 g/m² bis 50 g/m², bevorzugt im Bereich von 8 g/m² bis 40 g/m², besonders bevorzugt im Bereich von 10 g/m² bis 35 g/m², auf, bestimmt gemäß DIN EN 12127, nach 24-stündiger Klimatisierung bei einer Temperatur von 20 °C und einer relativen Luftfeuchtigkeit von 65 %.

Im Rahmen der vorgenannten Flächengewichte kann eine optimale Stabilisierung der Funktionslage 3c gewährleistet werden, und zwar auch im Hinblick auf einen Schutzeffekt vor übermäßiger mechanischer Krafteinwirkung bei entsprechenden Regenerations- bzw. Waschvorgängen.

In diesem Zusammenhang kann es insbesondere vorgesehen sein, dass die auf der der Trägerschicht 2 zugewandten Seite und/oder Fläche der Funktionslage 3c angeordnete Trägerlage 3a (erste Trägerlage 3a) und die auf der der Trägerschicht 2 abgewandten Seite und/oder Fläche der Funktionslage 3c angeordnete Trägerlage 3b (zweite Trägerlage 3b) zumindest im Wesentlichen identische Flächengewichte, insbesondere wie zuvor definiert, aufweisen.

Demgegenüber kann es gemäß einer erfindungsgemäßen Ausführungsform jedoch auch vorgesehen sein, dass die auf der der Trägerschicht 2 zugewandten Seite und/oder Fläche der Funktionslage 3c angeordnete Trägerlage 3a (erste Trägerlage 3a) ein größeres Flächengewicht als die auf der der Trägerschicht 2 abgewandten Seite und/oder Fläche der Funktionslage 3c angeordnete Trägerlage 3b (zweite Trägerlage 3b) aufweist.

In diesem Zusammenhang kann die erste Trägerlage 3a ein Flächengewicht von höchstens 100 g/m², insbesondere höchstens 75 g/m², vorzugsweise höchstens 50 g/m², bevorzugt höchstens 40 g/m², besonders bevorzugt höchstens 35 g/m², aufweisen und die zweite Trägerlage 3b ein Flächengewicht im Bereich von höchstens 50 g/m², insbesondere höchstens 35 g/m², vorzugsweise höchstens 25 g/m², bevorzugt höchstens 20 g/m², besonders bevorzugt höchstens 15 g/m², aufweisen, jeweils bestimmt gemäß DIN EN 12127, nach 24-stündiger Klimatisierung bei einer Temperatur von 20 °C und einer relativen Luftfeuchtigkeit von 65 %.

In diesem Zusammenhang kann es erfindungsgemäß insbesondere vorgesehen sein, dass das Verhältnis des Flächengewichts der ersten Trägerlage 3a zu dem Flächengewicht der zweiten Trägerlage 3b (Flächengewicht der ersten Trägerlage 3a : Flächengewicht der zweiten Trägerlage 3b) im Bereich von 1,05 : 1 bis 20 : 1, insbesondere im Bereich von 1,1 : 1 bis 15 : 1, vorzugsweise im Bereich von 1,2 : 1 bis 10 : 1, bevorzugt im Bereich von 1,3 : 1 bis 5:1, besonders bevorzugt im Bereich von 1,5 : 1 bis 3 : 1, liegt.

Weiterhin können die Trägerlagen 3a, 3b, unabhängig voneinander, jeweils eine Dicke, insbesondere Querschnittsdicke, von höchstens 2,5 mm, insbesondere höchstens 1,5 mm, vorzugsweise höchstens 1 mm, bevorzugt höchstens 0,5 mm, besonders bevorzugt höchstens 0,25 mm, weiter bevorzugt höchstens 0,1 mm, aufweisen, insbesondere bestimmt gemäß DIN EN ISO 9073-2.

Insbesondere können die Trägerlagen 3a, 3b, unabhängig voneinander, jeweils eine Dicke, insbesondere Querschnittsdicke, im Bereich von 0,001 mm bis 2,5 mm, insbesondere im Bereich von 0,005 mm bis 1,5 mm, vorzugsweise im Bereich von 0,01 mm bis 1 mm, bevorzugt im Bereich von 0,02 mm bis 0,5 mm, besonders bevorzugt im Bereich von 0,04 mm bis 0,25 mm, weiter bevorzugt im Bereich von 0,05 mm bis 0,1 mm, aufweisen, insbesondere bestimmt gemäß DIN EN ISO 9073-2.

Erfindungsgemäß kann es dabei insbesondere vorgesehen sein, dass die auf der der Trägerschicht 2 zugewandten Seite und/oder Fläche der Funktionslage 3c angeordnete Trägerlage 3a (erste Trägerlage 3) und die auf der der Trägerschicht 2 abgewandten Seite und/oder Fläche der Funktionslage 3c angeordnete Trägerlage 3b (zweite Trägerlage 3b) zumindest im Wesentlichen identische Dicken, insbesondere Querschnittsdicken, insbesondere wie zuvor definiert, aufweisen.

Demgegenüber kann es erfindungsgemäß jedoch auch vorgesehen sein, dass die auf der der Trägerschicht 2 zugewandten Seite und/oder Fläche der Funktionslage 3c angeordnete Trägerlage 3a (erste Trägerlage 3) eine größere Dicke, insbesondere größere Querschnittsdicke, als die auf der der Trägerschicht 2 abgewandten Seite und/oder Fläche der Funktionslage 3c angeordnete Trägerlage 3b (zweite Trägerlage 3b) aufweist. In diesem Zusammenhang kann es insbesondere vorgesehen sein, dass die Trägerlage 3a eine Dicke, insbesondere Querschnittsdicke, von höchstens 2,5 mm, insbesondere höchstens 1,5 mm, vorzugsweise höchstens 1 mm, bevorzugt höchstens 0,5 mm, besonders bevorzugt höchstens 0,25 mm, weiter bevorzugt höchstens 0,1 mm, aufweist und die Trägerlage 3b eine Dicke, insbesondere Querschnittsdicke, von höchstens 1,25 mm, insbesondere höchstens 0,75 mm, vorzugsweise höchstens 0,5 mm, bevorzugt höchstens 0,25 mm, besonders bevorzugt höchstens 0,125 mm, weiter bevorzugt höchstens 0,05 mm, aufweist, insbesondere jeweils bestimmt gemäß DIN EN ISO 9073-2.

In diesem Zusammenhang kann es zudem vorgesehen sein, dass das Verhältnis der Dicke, insbesondere Querschnittsdicke, der Trägerlage 3a zu der Dicke, insbesondere Querschnittsdicke, der Trägerlage 3b (Dicke, insbesondere Querschnittsdicke, der Trägerlage 3a : Dicke, insbesondere Querschnittsdicke, der Trägerlage 3b) im Bereich von 1,05 : 1 bis 20 : 1, insbesondere im Bereich von 1,1:1 bis 15 : 1, vorzugsweise im Bereich von 1,2 : 1 bis 10 : 1, bevorzugt im Bereich von 1,3 : 1 bis 5 : 1, besonders bevorzugt im Bereich von 1,5 : 1 bis 3 : 1, liegt.

Erfindungsgemäß verhält es sich insbesondere derart, dass die Trägerlagen 3a, 3b, unabhängig voneinander, jeweils gasdurchlässig, insbesondere luftdurchlässig, und/oder wasserdampfdurchlässig ausgebildet sind, vorzugsweise gasdurchlässig, insbesondere luftdurchlässig, und wasserdampfdurchlässig ausgebildet sind, bevorzugt luftdurchlässig und wasserdampfdurchlässig ausgebildet sind.

In diesem Zusammenhang werden besonders gute Eigenschaften hinsichtlich der Gas- bzw. Luftdurchlässigkeit erreicht, wenn die Trägerlagen 3a, 3b, unabhängig voneinander, jeweils durch Meltblow-Verfahren, Spunbonding-Verfahren, Elektrospinnen oder eine Kombination dieser Verfahren, vorzugsweise durch eine Kombination von Meltblow-Verfahren und Elektrospinnen oder aber durch Meltblow-Verfahren, vorzugsweise durch Meltblow-Verfahren, hergestellt sind.

Im Rahmen der vorliegenden Erfindung ist es vorgesehen, dass die Trägerlagen 3a, 3b, unabhängig voneinander, jeweils als ein Gelege oder Textilverbundstoff, insbesondere Vlies (Non-Woven), besonders bevorzugt als ein Vlies (Non-Woven), ausgebildet sind.

Auf Basis der vorgenannten Ausbildungen wird ein besonders guter Schutz im Hinblick auf die Funktionslage 3c bereitgestellt werden. Insbesondere weisen derart ausgebildete Trägerlagen 3a, 3b besonders gute Eigenschaften auch hinsichtlich ihrer Biegsamkeit und insbesondere reversiblen Kompression auf, so dass auch auf dieser Basis eine mechanische Krafteinwirkung, wie sie bei einem Regenerations- bzw. Waschvorgang auftritt, von den Trägerlagen sozusagen aufgenommen bzw. abgefangen werden können.

Zudem kann auf dieser Basis eine dauerhaft feste Verbindung zu der Funktionslage 3c bereitgestellt werden.

Gemäß einer erfindungsgemäß bevorzugten Ausführungsform sind die Trägerlagen 3a, 3b, unabhängig voneinander, jeweils als ein Gelege oder Textilverbundstoff, insbesondere Vlies (Non-Woven), besonders bevorzugt als ein Vlies (Non-Woven), auf Basis von und/oder aus Textilfasern aus thermoplastischem Polyurethan (Thermoplastisches-Polyurethan-Fasern) ausgebildet.

In diesem Zusammenhang kann es insbesondere vorgesehen sein, dass sowohl die Trägerlagen 3a, 3b als auch die Funktionslage 3c auf Basis von bzw. aus Textilfasern jeweils auf Basis von bzw. aus Textilfasern aus thermoplastischem Polyurethan gebildet sind. Hierdurch wird eine besonders hohe Kompatibilität erreicht, was auch der Dauerhaftigkeit und Stabilität des Materials zuträglich ist.

Insbesondere können die Trägerlagen 3a, 3b, unabhängig voneinander, jeweils mindestens eine Textilfaser (Trägerlagen-Textilfaser), vorzugsweise eine Vielzahl an Textilfasern (Trägerlagen-Textilfasern), aufweisen bzw. hieraus gebildet sein bzw. bestehen. Gleichermaßen können die Trägerlagen 3a, 3b, unabhängig voneinander, jeweils eine Vielzahl einzelner Textilfasern aufweisen oder hieraus bestehen. Weiterhin können die Trägerlagen 3a, 3b, unabhängig voneinander, jeweils als gasdurchlässiges textiles Flächengebilde, welches eine Vielzahl einzelner Textilfasern umfasst oder hieraus besteht, vorliegen bzw. ausgebildet sein.

Was die Textilfasern der jeweiligen Trägerlagen 3a, 3b (Trägerlagen-Textilfasern) anbelangt, so können diese insbesondere wie folgt ausgebildet sein. Insbesondere können die Textilfasern der Trägerlagen 3a, 3b, unabhängig voneinander, jeweils einen Faserdurchmesser von höchstens 50 µm, insbesondere höchstens 30 µm, vorzugsweise höchstens 25 µm, bevorzugt höchstens 20 µm, aufweisen, insbesondere bestimmt gemäß DIN 53 811. In diesem Zusammenhang kann es insbesondere vorgesehen sein, dass die Textilfasern der Trägerlagen 3a, 3b, unabhängig voneinander, jeweils einen Faserdurchmesser im Bereich von 0,1 µm bis 50 µm, insbesondere im Bereich von 1 µm bis 30 µm, vorzugsweise im Bereich von 1,5 µm bis 25 µm, bevorzugt im Bereich von 2 µm bis 20 µm, aufweisen, insbesondere bestimmt gemäß DIN 53 811.

Auf Basis der vorgenannten Fasereigenschaften können definierte und stabile Faseranordnungen in den jeweiligen Trägerlagen 3a, 3b bereitgestellt werden, wobei zudem auf dieser Basis auch eine weiterführend verbesserte Luftdurchlässigkeit der jeweiligen Trägerlagen 3a, 3b gegeben ist.

Erfindungsgemäß ist es bevorzugt, wenn die Textilfasern der Trägerlagen 3a, 3b, unabhängig voneinander, jeweils synthetische Fasern (Chemiefasern) sind. Insbesondere kann es sich im Rahmen der vorliegenden Erfindung derart verhalten, dass die Textilfasern der Trägerlagen 3a, 3b, unabhängig voneinander, jeweils ein Material aus der Gruppe von Polyurethanen (PU), vorzugsweise thermoplastischen Polyurethanen (TPU); Polyestern (PES); Polyamiden (PA); Polyolefinen (PO), wie Polyethylen (PE), Polypropylen (PP); Polyoxyethylen und Polyoxypropylen; Polyvinylchloriden (CLF); Polyvinylidenchloriden (CLF); Acetaten (CA); Triacetaten (CTA); Polyacryl (PAN), insbesondere Polyacrylnitrilen; Polyvinylalkohol (PVAL); Polyvinylestern; Poly(meth-)acrylaten; Polyvinylidenfluoriden (PVDF); deren Copolymeren und deren Mischungen sowie Kombinationen, vorzugsweise aus der Gruppe von thermoplastischen Polyurethanen (TPU); Polyestern (PES); Polyamiden (PA); Polyolefinen (PO); deren Copolymeren und deren Mischungen sowie Kombinationen, bevorzugt aus der Gruppe von thermoplastischen Polyurethanen (TPU); deren Copolymeren und deren Mischungen sowie Kombinationen, ganz besonders bevorzugt thermoplastischen Polyurethanen (TPU), umfassen oder hieraus bestehen.

Gemäß einer erfindungsgemäß bevorzugten Ausführungsform können die Textilfasern der Trägerlagen 3a, 3b, unabhängig voneinander, ausgewählt sein aus der Gruppe von Textilfasern aus thermoplastischem Polyurethan (Thermoplastisches-Polyurethan-Fasern); Polyesterfasern; Polyamidfasern; Polyolefinfasern; und deren Mischungen sowie Kombinationen.

Insbesondere können die Textilfasern der Trägerlagen 3a, 3b, unabhängig voneinander, jeweils Textilfasern aus thermoplastischem Polyurethan (Thermoplastisches-Polyurethan-Fasern) sein.

Zudem können die Trägerlagen 3a, 3b, unabhängig voneinander, jeweils Textilfasern aus thermoplastischem Polyurethan (Thermoplastisches-Polyurethan-Fasern) aufweisen oder hieraus bestehen.

Wie bereits zuvor angeführt, geht die Verwendung von Textilfasern auf Basis von Polyurethan auch mit einer hohen Stabilität bei definierter Luftdurchlässigkeit der auf dieser Basis hergestellten Trägerlagen einher. Zudem kann auf Basis von Textilfasern aus Polyurethan zusätzlich eine gewisse Wasserdampf- bzw. Feuchtigkeitsspeicherung gewährleistet werden, was im Fall der Verwendung des Schutz- bzw. Filtermaterials 1 nach der Erfindung in oder als Schutzbekleidung zu einem nochmals verbesserten Tragekomfort führt.

Im Allgemeinen können die Trägerlagen 3a, 3b, unabhängig voneinander, jeweils die Textilfasern (Trägerlagen-Textilfasern) in einer Menge von mindestens 50 Gew.-%, insbesondere mindestens 75 Gew.-%, vorzugsweise mindestens 90 Gew.-%, bevorzugt mindestens 95 Gew.-%, besonders bevorzugt mindestens 98 Gew.-%, weiter bevorzugt mindestens 99 Gew.-%, bezogen auf die jeweilige Trägerlage 3a, 3b, aufweisen. Erfindungsgemäß ist es bevorzugt, dass die Trägerlagen 3a, 3b, unabhängig voneinander, jeweils aus den Textilfasern (Trägerlagen-Textilfasern) bestehen, d. h. die Fasern in einer Menge von 100 Gew.-%, bezogen auf die jeweilige Trägerlage 3a, 3b aufweisen bzw. hieraus gebildet sind.

Erfindungsgemäß können insbesondere zu Zwecken der Verbesserung der Kompatibilität der jeweiligen Lagen der Partikel- bzw. Aerosolfilterschicht die Trägerlagen 3a, 3b aus Textilfasern aus demselben Material, insbesondere wie zuvor definiert, vorzugsweise jeweils Textilasern aus thermoplastischem Polyurethan (Thermoplastisches-Polyurethan-Fasern), gebildet sein bzw. hieraus bestehen.

Insbesondere kann es im Rahmen der vorliegenden Erfindung in diesem Zusammenhang vorgesehen sein, dass die auf der der Trägerschicht 2 zugewandten Seite und/oder Fläche der Funktionslage 3c angeordnete Trägerlage 3 (erste Trägerlage 3a) und die auf der der Trägerschicht 2 abgewandten Seite und/oder Fläche der Funktionslage 3c angeordnete Trägerlage 3b (zweite Trägerlage 3b) aus Textilfasern aus demselben Material, insbesondere wie zuvor definiert, vorzugsweise Textilfasern aus thermoplastischem Polyurethan (Thermoplastisches-Polyurethan-Fasern), gebildet sind bzw. hieraus bestehen.

In diesem Zusammenhang kann insbesondere auch die Funktionslage 3c aus Textilfasern aus thermoplastischem Polyurethan gebildet sein, wie zuvor angeführt. Dies führt zu einer besonders hohen Kompatibilität der jeweiligen Schichten zueinander.

Gemäß einer alternativen Ausführungsform der vorliegenden Erfindung kann es demgegenüber auch vorgesehen sein, dass die Trägerlagen 3a, 3b aus Textilfasern aus unterschiedlichen Materialien, insbesondere jeweils wie zuvor definiert, gebildet sind oder bestehen. Insbesondere kann es sich in diesem Zusammenhang derart verhalten, dass die auf der der Trägerschicht 2 zugewandten Seite und/oder Fläche der Funktionslage 3c angeordnete Trägerlage 3a (erste Trägerlage 3a) und die auf der der Trägerschicht 2 abgewandten Seite und/oder Fläche der Funktionslage 3c angeordnete Trägerlage 3b (zweite Trägerlage 3b) aus Textilfasern aus voneinander verschiedenen Materialien, insbesondere jeweils wie zuvor definiert, gebildet sind oder hieraus bestehen.

Erfindungsgemäß kann es im Allgemeinen vorgesehen sein, dass die Partikel- und Aerosolfilterschicht 3 eine oder mehrere, insbesondere zwei, drei oder mehr, Funktionslage(n) 3c, bevorzugt eine (einzige) Funktionslage 3c, aufweist. Für den Fall der Verwendung mehrerer Funktionslagen 3c verhält es sich insbesondere derart, dass die jeweiligen Funktionslagen gleichermaßen einen festen Verbund bzw. ein Laminat ausbilden, wobei die jeweils äußeren Funktionslagen 3c wiederum mit den jeweils hieran angrenzenden Trägerlagen 3a, 3b fest verbunden (befestigt bzw. fixiert), insbesondere laminiert, sind. Hierzu kann auch auf obige Ausführungen verwiesen werden.

Gleichermaßen kann es im Rahmen der vorliegenden Erfindung grundsätzlich auch vorgesehen sein, dass die Partikel- und Aerosolfilterschicht 3 auf der der Trägerschicht 2 zugewandten Seite und/oder Fläche der Funktionslage 3c eine oder mehrere, insbesondere zwei, drei oder mehr, Trägerlage(n) 3a (erste Trägerlage(n) 3a), vorzugsweise eine (einzige) Trägerlage 3a, aufweist. Zudem kann die Partikel- und Aerosolfilterschicht 3 auf der der Trägerschicht 2 abgewandten Seite und/oder Fläche der Funktionslage 3c eine oder mehrere, insbesondere zwei, drei oder mehr, Trägerlage(n) 3b (zweite Trägerlage(n) 3b), vorzugsweise eine (einzige) Trägerlage 3b, aufweisen. Für den Fall der Verwendung mehrerer Trägerlagen 3a, 3b auf den jeweiligen Seiten bzw. Flächen der Funktionslage 3c ist es insbesondere gleichermaßen vorgesehen, dass die jeweils aneinandergrenzenden Trägerlagen fest miteinander verbunden sind (befestigt bzw. fixiert), insbesondere laminiert, sind, so dass insgesamt in Bezug auf die Partikel- bzw. Aerosolfilterschicht ein fester Verbund bzw. ein Laminat vorliegt. Für den Fall der Verwendung mehrerer Trägerlagen 3a, 3b auf den jeweiligen Seiten der Funktionslage 3c verhält es sich insbesondere derart, dass die jeweils weiteren Trägerlagen 3a, 3b im Vergleich zu den jeweils unmittelbar mit der Funktionslage 3c in Kontakt stehenden Trägerlage mittelbar hierüber mit der Funktionslage 3c verbunden sein können.

Erfindungsgemäß kann es im Allgemeinen vorgesehen sein, dass die Partikel- und Aerosolfilterschicht 3 aus einer oder mehreren, Funktionslage(n) 3c, vorzugsweise einer (einzigen) Funktionslage 3c, und einer (einzigen) auf der der Trägerschicht 2 zugewandten Seite und/oder Fläche der Funktionslage 3c angeordneten Trägerlage 3a und einer (einzigen) auf der der Trägerschicht 2 abgewandten Seite und/oder Fläche der Funktionslage 3c angeordneten Trägerlage 3b besteht und/oder hieraus gebildet ist. Insbesondere kann es sich erfindungsgemäß derart verhalten, dass die Partikel- und Aerosolfilterschicht 3 aus der mindestens einen Funktionslage 3c, insbesondere der einen Funktionslage 3c, und der jeweils einen äußeren Trägerlage 3a, 3b besteht und/oder hieraus gebildet ist, wobei die Funktionslage(n) 3c zwischen der jeweils einen äußeren Trägerlage 3a, 3b angeordnet ist.

Insbesondere kann die Partikel- und Aerosolfilterschicht 3 aus der Funktionslage 3c und einer auf der der Trägerschicht 2 zugewandten Seite und/oder Fläche der Funktionslage 3c angeordneten Trägerlage 3a (erste Trägerlage 3a) und einer auf der der Trägerschicht 2 abgewandten Seite und/oder Fläche der Funktionslage 3c angeordneten Trägerlage 3b (zweite Trägerlage 3b) bestehen bzw. hieraus gebildet sein. Auf dieser Basis liegt insbesondere ein dreilagiger Verbund, bevorzugt fester Verbund, bzw. ein dreilagiges Laminat in Bezug auf die Partikel- bzw. Aerosolfilterschicht vor.

Weiterhin kann es erfindungsgemäß grundsätzlich auch vorgesehen sein, dass die Partikel- und/oder Aerosolfilterschicht 3 aus der Funktionslage 3c und einer auf der der Trägerschicht 2 zugewandten Seite und/oder Fläche der Funktionslage 3c angeordneten Trägerlage 3a (erste Trägerlage 3a) und einer auf der der Trägerschicht 2 abgewandten Seite und/oder Fläche der Funktionslage 3c angeordneten Trägerlage 3b (zweite Trägerlage 3b) besteht bzw. hieraus gebildet ist. Auch auf dieser Basis liegt in entsprechender Weise insbesondere ein dreilagiger Verbund, bevorzugt fester Verbund, bzw. ein dreilagiges Laminat in Bezug auf die Partikel- bzw. Aerosolfilterschicht 3 vor.

Erfindungsgemäß ist es vorgesehen, dass die Partikel- und/oder Aerosolfilterschicht 3 als fester Verbund und/oder als Laminat ausgebildet ist, wobei die Lagen 3a, 3c, 3b jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind. In diesem Zusammenhang ist es erfindungsgemäß vorgesehen, dass die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist. Auf dieser Basis resultiert ein insgesamt stabiler bzw. fester Verbund bzw. ein diesbezügliches Laminat mit hoher Stabilität und weiter verbessertem mechanischen Schutz der Funktionslage 3c, was die Regenerations- bzw. Waschbeständigkeit weiterführend verbessert.

Insbesondere ist die Funktionslage 3c mit den jeweiligen Trägerlagen 3a, 3b, insbesondere mit den jeweiligen der Funktionslage 3c unmittelbar zugeordneten (unmittelbar benachbarten) und/oder hiermit direkt in Kontakt stehenden Trägerlagen 3a, 3b, fest verbunden (befestigt, fixiert) und/oder zum Haften gebracht, insbesondere zumindest im Wesentlichen vollflächig und/oder zumindest im Wesentlichen ganzseitig fest verbunden (befestigt, fixiert) und/oder zum Haften gebracht, insbesondere laminiert, sein, vorzugsweise zumindest im Wesentlichen vollflächig verbunden (befestigt, fixiert) und/oder zum Haften gebracht, insbesondere laminiert, sein. Auch in diesem Zusammenhang ist es erfindungsgemäß vorgesehen, dass die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist.

**Im** Allgemeinen kann es im Rahmen der vorliegenden Erfindung vorgesehen sein, dass die feste Verbindung (Befestigung, Fixierung) und/oder Haftung, insbesondere Laminierung, der Funktionslage 3 mit den jeweiligen Trägerlagen 3a, 3b, insbesondere mit den jeweiligen der Funktionslage 3c unmittelbar zugeordneten (unmittelbar benachbarten) und/oder hiermit direkt in Kontakt stehenden Trägerlagen 3a, 3b, durch die Eigenklebrigkeit der die Funktionslage 3c ausbildenden Textilfasern und/oder der die Trägerlagen 3a, 3b ausbildenden Textilfasern, insbesondere im Rahmen der Herstellung der Partikel- und Aerosolfilterschicht 3, bzw. mittels eines diskontinuierlich, vorzugsweise punktweise und/oder mit Unterbrechungen, aufgebrachten Klebstoffs, vorzugsweise auf Basis eines thermoplastischen Polyurethans (TPU), erfolgt ist bzw. bereitgestellt ist. Die Eigenklebrigkeit kann beispielsweise im Rahmen der Herstellung unter entsprechender Erwärmung der Fasern beim Auftragen bzw. bei der Herstellung der jeweiligen Lagen vorliegen bzw. bereitgestellt werden. Durch die zusätzliche Verwendung eines Klebstoffs, wie zuvor angeführt, kann die mechanische Stabilität des zugrundeliegenden Verbunds bzw. Laminats nochmals angepasst werden.

Insgesamt wird im Rahmen der vorliegenden Erfindung für das Schutz- bzw. Flächenmaterial nach der Erfindung eine hocheffiziente Partikel- bzw. Aerosolfilterschicht 3 mit insgesamt hervorragenden Partikel- bzw. Aerosolfiltereigenschaften eingesetzt, wobei durch den speziellen Aufbau bzw. die spezielle Anordnung der der Partikel- bzw. Aerosolfilterschicht 3 zugrundeliegenden Lagen ein wirksamer Schutz vor mechanischer Krafteinwirkung gegenüber der Funktionslage 3c bereitgestellt wird, was auch im Zusammenwirken der jeweiligen Maßnahmen und der diesbezüglich speziellen Kombination zu einer verbesserten Regenerationsbeständigkeit, insbesondere Waschbeständigkeit, des erfindungsgemäßen Schutz- bzw. Filtermaterials 1 insgesamt führt, da die Anordnung der die Funktionslage 3c ausbildenden Textilfasern bzw. die diesbezüglichen Textilfasern als solche unter Krafteinwirkung nicht zerstört werden, insbesondere nicht reißen.

Nachfolgend wird nunmehr die textile Trägerschicht 2 in Bezug auf bevorzugte Ausführungsformen weiterführend beschrieben:
Erfindungsgemäß ist die erste textile Trägerschicht 2 als ein gasdurchlässiges, insbesondere luftdurchlässiges, textiles Flächengebilde, insbesondere als textile Maschenware, bevorzugt als Gewirke (Wirkware) oder Gestrick (Strickware), oder insbesondere als Gewebe, Gelege, Vlies oder Textilverbundstoff, ausgebildet. Weiterhin kann die erste textile Trägerschicht 2 Naturtextilfasern und/oder synthetische Textilfasern (Chemiefasern), vorzugsweise synthetische Textilfasern, umfassen oder hieraus gebildet sein. Zudem kann die erste textile Trägerschicht 2 synthetische Fasern (Chemiefasern) gegebenenfalls in Kombination mit Naturfasern, bevorzugt Baumwollfasern, umfassen oder hieraus gebildet sein.

Hierdurch können bei gleichzeitig hoher mechanischer sowie chemischer Beständigkeit die Materialeigenschaften beispielsweise hinsichtlich der Biegsamkeit oder dergleichen gezielt eingestellt werden.

Insbesondere kann die erste textile Trägerschicht 2 elastisch und/oder reversibel dehnbar ausgebildet sein. Hierdurch wird insbesondere im Hinblick auf Schutzbekleidung der Tragekomfort infolge einer verbesserten Anschmiegsamkeit bzw. der Sitz der Bekleidung verbessert. Insbesondere kann die erste textile Trägerschicht 2 Elastan, insbesondere Elastanfasern, umfassen, insbesondere in einer Menge von höchstens 10 Gew.-%, vorzugsweise höchstens 5 Gew.-%, bezogen auf die erste textile Trägerschicht 2. Hierdurch kann die Elastizität bzw. die reversible Dehnbarkeit erhöht bzw. eingestellt werden. Im Fall der Verwendung des erfindungsgemäßen Schutz- bzw. Filtermaterials kann hierdurch auch das Tragegefühl sowie der Sitz der Schutzbekleidung gezielt eingestellt bzw. verbessert werden.

Im Allgemeinen kann im Rahmen der vorliegenden Erfindung die erste textile Trägerschicht 2 ein Flächengewicht im Bereich von 5 g/m² bis 400 g/m², insbesondere im Bereich von 10 g/m² bis 300 g/m², vorzugsweise im Bereich von 20 g/m² bis 250 g/m², besonders bevorzugt im Bereich von 30 g/m² bis 175 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %.

Erfindungsgemäß ist es zudem von Vorteil, wenn die erste textile Trägerschicht 2 eine Dicke, insbesondere Querschnittsdicke, im Bereich von 0,001 mm bis 10 mm, insbesondere im Bereich von 0,01 mm bis 8 mm, vorzugsweise im Bereich von 0,05 mm bis 4 mm, bevorzugt im Bereich von 0,075 mm bis 2 mm, besonders bevorzugt im Bereich von 0,1 mm bis 2 mm, weiter bevorzugt im Bereich von 0,15 mm bis 1 mm, aufweist, insbesondere bestimmt gemäß DIN EN ISO 5084.

Zudem kann die erste textile Trägerschicht 2 eine Gasdurchlässigkeit, insbesondere Luftdurchlässigkeit, von mindestens 1,5 l·m⁻²·s⁻¹, insbesondere mindestens 3 l·m⁻²·s⁻¹, vorzugsweise mindestens 7 l·m⁻²·s⁻¹, bevorzugt mindestens 10 l·m⁻²·s⁻¹, besonders bevorzugt mindestens 20 l·m⁻²·s⁻¹ aufweisen, insbesondere bestimmt gemäß DIN EN ISO 9237 und/oder insbesondere bestimmt bei einem Differenzdruck (Strömungswiderstand) von 127 Pascal. Auch hierdurch wird ein guter Tragekomfort bzw. Durchströmbarkeit des Materials gewährleistet.

Erfindungsgemäß kann die erste textile Trägerschicht 2 ein Material, insbesondere Textilfasermaterial, bevorzugt Textilfasern, ausgewählt aus der Gruppe von Naturstoffen und Synthetikstoffen, insbesondere ausgewählt aus der Gruppe von Baumwolle (CO); Wolle; Leinen; Polyestern; Polyolefinen, Polyvinylchlorid; Polyvinylidenchlorid; Acetaten, insbesondere Celluloseacetaten; Triacetaten, insbesondere Cellulosetriacetaten; Aramiden, insbesondere Meta- und/oder Para-Amiden; gegebenenfalls modifizierten und/oder regenerierten Cellulosen; Polyacryl; Polyamid; Polyvinylalkohol; Polyurethanen; Polyvinylestern; modifizierten und/oder regenerierten Cellulosen, insbesondere Viskose; und deren Mischungen oder Kombinationen, vorzugsweise ausgewählt aus der Gruppe von modifizierten und/oder regenerierten Cellulosen, insbesondere Viskose; Aramiden, insbesondere Meta- und/oder Para-Amiden; Polyamid und deren Mischungen oder Kombinationen, aufweisen oder hieraus bestehen.

Im Allgemeinen kann das Material bzw. die Textilfasern auch als Garn, Faden, Zwirn bzw. dergleichen ausgebildet bzw. angeordnet sein.

Erfindungsgemäß kann es insbesondere anwendungs- bzw. einsatzbezogen, und zwar insbesondere im Hinblick auf die Verwendung des erfindungsgemäßen Schutz- bzw. Filtermaterials für oder als Schutzbekleidung, vorgesehen sein, dass die erste textile Trägerschicht 2 schwerentflammbar und/oder flammhemmend und/oder feuerbeständig und/oder flammbeständig ausgebildet ist und/oder wobei das erste textile Abdeckmaterial 8 mindestens ein schwerentflammbares und/der flammhemmendes und/oder feuerbeständiges und/oder flammbeständiges Material, insbesondere in Form oder als Bestandteil eines Garns und/oder Zwirns und/oder Fadens, aufweist.

In diesem Zusammenhang kann es insbesondere vorgesehen sein, dass das feuerbeständige und/oder flammbeständige Material mindestens ein Aramid, insbesondere Meta-Aramid und/oder Para-Aramid, und/oder eine modifizierte und/oder regenerierte Cellulose, ist; und dass die erste textile Trägerschicht 2 das schwerentflammbare und/oder flammhemmende und/oder feuerbeständige und/oder flammbeständige Material in einer Menge im Bereich von 1 Gew.-% bis 100 Gew.-%, insbesondere 2 Gew.-% bis 95 Gew.-%, vorzugsweise 5 Gew.-% bis 90 Gew.-%, bezogen auf die erste textile Trägerschicht 2, aufweist.

Zudem kann die erste textile Trägerschicht 2 antistatisch ausgebildet sein, insbesondere wobei das erste textile Abdeckmaterial 8 mindestens ein antistatisches Material, insbesondere in Form oder als Bestandteil eines Garns und/oder Zwirns und/oder Fadens, aufweist.

Im Allgemeinen ist die textile Trägerschicht 2 im Anwendungs- bzw. Verwendungsfall derart positioniert, dass die erste textile Trägerschicht 2 einer Schadstoffquelle zugewandt ist. In diesem Zusammenhang kann die erste textile Trägerschicht 2 sozusagen und insbesondere im Hinblick auf Schutzbekleidung die äußere Schicht bzw. Außenschicht des erfindungsgemäßen Schutz- bzw. Filtermaterials darstellen, welche im Anwendungs- bzw. Verwendungszustand auf der einem Träger bzw. einer Person abgewandten Seite des Schutz- bzw. Filtermaterials 1 angeordnet ist. Erfindungsgemäß kann es insbesondere vorgesehen sein, dass die erste textile Trägerschicht 2 als Oberstoff bzw. Obermaterial fungiert bzw. ausgebildet ist.

In diesem Zusammenhang kann die erste textile Trägerschicht 2 das antistatische Material in einer Menge im Bereich von 0,1 Gew.-% bis 10 Gew.-%, insbesondere 0,2 Gew.-% bis 5 Gew.-%, vorzugsweise 0,5 Gew.-% bis 3 Gew.-%, bezogen auf die erste textile Trägerschicht 2, aufweisen.

Zudem kann die erste textile Trägerschicht 2 eine oleophobe und/oder hydrophobe Ausrüstung und/oder Beschichtung aufweisen. Hierdurch kann beispielsweise im Fall von Schutzbekleidung die Schutzfunktion gegenüber Gift- bzw. Schadstoffen nochmals verbessert werden, da diese bereits an der Oberfläche sozusagen abperlen bzw. aufgehalten werden können.

Wie in Fig. 1 bis Fig. 3 aufgezeigt, kann die erste textile Trägerschicht 2 unmittelbar auf der Partikel- und Aerosolfilterschicht 3 angeordnet bzw. hiermit verbunden sein.

Insbesondere kann die erste textile Trägerschicht 2 auf der Trägerlage 3a (erste Trägerlage 3a), welche auf der der Trägerschicht 2 zugewandten Seite und/oder Fläche der Funktionslage 3c positioniert ist, angeordnet bzw. hiermit verbunden sein, wie gleichermaßen in Fig. 1 bis Fig. 3 aufgezeigt.

Gemäß einer ersten erfindungsgemäßen Ausführungsform kann es vorgesehen sein, dass die erste textile Trägerschicht 2 nur abschnittsweise, insbesondere linienförmig und/oder randseitig, mit der Partikel- und Aerosolfilterschicht 3 und/oder den weiteren Schichten des Schutz- und/oder Filtermaterials 1 fest verbunden (hieran befestigt bzw. fixiert) ist, insbesondere mittels Vernähen, Verschweißen, Vertackern, Verkleben oder dergleichen, und im Übrigen lose und/oder unverbunden auf der Partikel- und Aerosolfilterschicht 3 angeordnet ist, insbesondere hierauf aufliegt. Hierdurch ist sozusagen eine gewisse Bewegbarkeit der ersten textilen Trägerschicht 2 bzw. des Oberstoffs in Bezug auf die darunterliegenden Schichten, insbesondere die Partikel- bzw. Aerosolfilterschicht 3, realisierbar, was beispielsweise im Fall von Schutzbekleidung oder dergleichen vorteilhaft sein kann, da hierdurch die Biegsamkeit und Anschmiegsamkeit des Materials gezielt eingestellt bzw. vorgegeben werden kann. Insbesondere kann durch diese Maßnahme die mechanische Belastung bzw. die Einwirkung von Stauch- bzw. Streckbewegungen, insbesondere im Hinblick auf Regenerations- bzw. Waschvorgänge, auf die darunterliegende Partikel- bzw. Aerosolfilterschicht 3 und somit auf die Funktionslage 3c weiterführend verringert werden, da, wie zuvor angeführt, die erste textile Trägerschicht 2 in einem gewissen Rahmen auf der Partikel- bzw. Aerosolfilterschicht beweglich bzw. verschiebbar angeordnet ist.

Gemäß einer weiteren erfindungsgemäßen Ausführungsform kann es jedoch auch vorgesehen sein, dass die erste textile Trägerschicht 2 und die Partikel- und Aerosolfilterschicht 3 an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind.

In diesem Zusammenhang kann die feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet sein, insbesondere so dass der Verbund und/oder das Laminat gasdurchlässig, insbesondere luftdurchlässig, ausgebildet ist. Mit anderen Worten verhält es sich gemäß dieser erfindungsgemäßen Ausführungsform insbesondere derart, dass die erste textile Trägerschicht 2 bzw. der Oberstoff an bzw. auf der Partikel- bzw. Aerosolfilterschicht 3, insbesondere auf der ersten Trägerlage 3a befestigt bzw. hieran fixiert ist. Somit kann auch auf dieser Basis ein Verbund bzw. Laminat mit entsprechend mechanischer Festigkeit vorliegen.

Gemäß der vorliegenden Ausführungsform kann die erste textile Trägerschicht 2 mittels einer ersten Haftmittelschicht (Erste-Trägerschicht-Haftmittelschicht) auf der Partikel- und Aerosolfilterschicht 3 angeordnet und/oder mit der Partikel- und Aerosolfilterschicht 3 verbunden (befestigt, fixiert) sein. In diesem Zusammenhang kann die erste Haftmittelschicht als eine wasserdampf- und/oder gasdurchlässige, bevorzugt luftdurchlässige, und/oder diskontinuierlich ausgebildete Klebstoffschicht, vorzugsweise auf Basis eines Klebstoffpolymers, bevorzugt in Form von insbesondere (wärme-)schmelzbaren Kunststofffasern, vorliegen und/oder ausgebildet sein.

Zudem kann die erste Haftmittelschicht als ein Gelege oder Faserverbundstoff, insbesondere Vlies (Non-Woven), besonders bevorzugt als ein Vlies (Non-Woven), auf Basis von und/oder aus insbesondere (wärme-)schmelzbaren Kunststofffasern, insbesondere aus einem thermoplastischen Polyurethan (TPU), ausgebildet sein bzw. vorliegen.

In diesem Zusammenhang hat es sich erfindungsgemäß als vorteilhaft erwiesen, wenn die erste Haftmittelschicht ein Material, insbesondere einen Klebstoff, aus der Gruppe von thermoplastischen Polyurethanen (TPU); Co-Polyestern (Co-PES); Co-Polyamiden (Co-PA); Polyolefinen (PO); deren Mischungen sowie Kombinationen, vorzugsweise thermoplastischen Polyurethanen (TPU), umfasst oder hieraus besteht, vorzugsweise hieraus besteht.

Insbesondere kann die erste Haftmittelschicht mindestens einen reaktiven Klebstoff, insbesondere reaktiven Schmelzklebstoff (*Hotmelt*), bevorzugt reaktiven PUR-Schmelzklebstoff, aufweisen und/oder hierauf basieren und/oder hieraus gebildet sein. Bei dem reaktiven Klebstoff kann es sich insbesondere um einen feuchtigkeitsvernetzenden und/oder strahlenvernetzenden Klebstoff, vorzugsweise feuchtigkeitsvernetzenden Klebstoff, handeln. Insbesondere kann ein reaktiver Heißschmelzklebstoff auf PUR-Basis eingesetzt werden.

Bevorzugterweise können die Kunststofffasern der ersten Haftmittelschicht ausgewählt sein aus der Gruppe von Kunststofffasern aus thermoplastischem Polyurethan (Thermoplastisches-Polyurethan-Fasern); Co-Polyesterfasern; Co-Polyamidfasern; Polyolefinfasern; und deren Mischungen sowie Kombinationen.

Zudem kann die erste Haftmittelschicht Kunststofffasern aus thermoplastischem Polyurethan (Thermoplastisches-Polyurethan-Fasern) aufweisen bzw. hieraus bestehen.

Erfindungsgemäß kann die erste Haftmittelschicht, bezogen auf das Trockengewicht der Haftmittelschicht bzw. des Klebstoffs, ein Flächengewicht im Bereich von 5 g/m² bis 100 g/m², insbesondere im Bereich von 7 g/m² bis 75 g/m², vorzugsweise im Bereich von 10 g/m² bis 50 g/m², besonders bevorzugt im Bereich von 10 g/m² bis 30 g/m², aufweisen. Erfindungsgemäß ist auch die erste Haftmittelschicht insgesamt gasdurchlässig, insbesondere luftdurchlässig ausgebildet.

Erfindungsgemäß weist das Schutz- bzw. Filtermaterial 1 nach der Erfindung (c) eine Adsorptionsschicht 4 mit einer Vielzahl einzelner bzw. diskreter Adsorptionspartikel 4a auf. Hierdurch kann das erfindungsgemäße Schutz- bzw. Filtermaterial gezielt bzw. maßgeschneidert mit adsorptiven Eigenschaften insbesondere in Bezug auf die zugrundeliegenden Gift- bzw. Kampfstoffe ausgerüstet werden. Dabei ergänzen sich die durch die Partikel- bzw. Aerosolfilterschicht 3 bereitgestellte Partikel- bzw. Aerosolfiltereigenschaft einerseits und die durch die Adsorptionsschicht 4 bereitgestellten Adsorptionseigenschaften im Hinblick auf die Schutzfunktion gegenüber Gift- bzw. Kampfstoffen andererseits über die Summe der Einzelmaßnahmen hinaus und somit in synergistischer Weise. Insbesondere kann die Adsorptionsschicht 4 durch die Partikel- bzw. Aerosolfilterschicht entlastet werden, da bereits ein großer Teil von Schad- bzw. Giftstoffen, und zwar insbesondere in Form von Partikeln bzw. Aerosolen, von der Partikel- bzw. Aerosolfilterschicht aufgenommen und verzögert hierzu von der Adsorptionsschicht 4 adsorbiert werden. Auf diese Weise können insbesondere Durchbrüche bei hoher Schad- bzw. Giftstoffbelastung vermieden werden. Auch ist die Einsatzdauer hierdurch erhöht. In diesem Zusammenhang verhält es sich insbesondere derart, dass die Partikel- bzw. Aerosolfilterschicht 3 in Richtung einer Schadstoffquelle vor der Adsorptionsschicht 4 angeordnet ist und somit sozusagen zwischen Schadstoffquelle einerseits und Adsorptionsschicht 4 andererseits angeordnet ist.

Über die gezielte Auswahl der Adsorberpartikel 4a der Adsorptionsschicht 4 kann die Leistungsfähigkeit bzw. Schutzleistung gegenüber Gift- bzw. Kampfstoffen weiterführend gesteigert bzw. maßgeschneidert werden. Besonders gute Ergebnisse werden auf Basis der nachfolgenden Adsorberpartikel 4a erhalten. So kann es erfindungsgemäß insbesondere vorgesehen sein, dass die Adsorberpartikel 4a der Adsorptionsschicht 4 ausgewählt sind aus der Gruppe von
(i) Aktivkohlepartikeln, vorzugsweise in Form von Aktivkohlepartikeln in Kornform ("Kornkohle") oder Aktivkohlepartikeln Kugelform ("Kugelkohle").

Für die erfindungsgemäß einsetzbaren Adsorberpartikel 4a kann auch auf die nachfolgenden Ausführungen verwiesen werden.

Im Rahmen der vorliegenden Erfindung ist es somit vorgesehen, dass die Adsorberpartikel 4a der Adsorptionsschicht 4 Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind. In dieser Weise wird eine besonders gute Schutzleistung gegenüber Gift- bzw. Kampfstoffen erreicht. Diesbezüglich sind partikuläre Adsorbentien bzw. Adsorberpartikel 4a in Kugelform besonders bevorzugt, da hierdurch die mechanische Belastung auf die Partikel- bzw. Aerosolfilterschicht 3 nochmals verringert werden kann.

Erfindungsgemäß geeignete Adsorber bzw. Adsorberpartikel 4a, insbesondere in Form von Aktivkohlen, wie sie nachfolgend beschrieben wird, sind im Handel erhältlich bzw. kommerziell verfügbar, z. B. von der Blücher GmbH, Erkrath/Deutschland, oder anderen kommerziellen Herstellern und Anbietern von Aktivkohle.

Erfindungsgemäß besonders bevorzugt einsetzbare Adsorber bzw.

Adsorberpartikel 4a, insbesondere in Form von Aktivkohlen, mit den nachfolgend genannten Eigenschaften und Parametren sind insbesondere in den nachfolgenden Dokumenten des Standes der Technik beschrieben: DE 20 2006 016 898 U1, EP 1 918 022 und US 2008/0107589 A1, WO 01/83688 (PCT/EP 01/04615), WO 2011/003434 (PCT/EP 2009/007172), WO 2008/110233 (PCT/EP 2008/000606) sowie WO 2013/068060 (PCT/EP 2012/003743).

Die Größe der Adsorberpartikel 4a kann ebenfalls in weiten Bereichen variieren.

Erfindungsgemäß ist es jedoch bevorzugt, wenn Adsorberpartikel 4a mit den nachfolgend angeführten Partikel- bzw. Teilchengrößen eingesetzt werden. Im Rahmen der vorliegenden Erfindung können insbesondere relativ kleine Partikelgrößen zum Einsatz kommen, da dies, wie von der Anmelderin überraschenderweise gefunden, zu einer weiterführenden Verringerung der mechanischen Belastung der Partikel- bzw. Aerosolfilterschicht bzw. der diesbezüglichen Funktionslage führt. Diesbezüglich können insbesondere Aktivkohlepartikel in Form sogenannter *"fine beads"* eingesetzt werden.

Insbesondere können die Adsorberpartikel 4a in Form der Aktivkohlepartikel eine Partikelgröße, insbesondere einen Teilchendurchmesser, im Bereich von 0,05 mm bis 1 mm, insbesondere im Bereich von 0,075 mm bis 0,5 mm, vorzugsweise im Bereich von 0,1 mm bis 0,4 mm, bevorzugt im Bereich von 0,125 mm bis 0,35 mm, besonders bevorzugt im Bereich von 0,15 mm bis 0,3 mm, weiter bevorzugt im Bereich von 0,2 mm bis 0,28 mm, insbesondere bestimmt gemäß ASTM D2862, aufweisen. In diesem Zusammenhang können insbesondere mindestens 80 Gew.-%, insbesondere mindestens 90 Gew.-%, vorzugsweise mindestens 95 Gew.-%, bevorzugt mindestens 99 Gew.-%, der Adsorberpartikel 4a, insbesondere der Aktivkohlepartikel, Partikelgrößen, insbesondere Teilchendurchmesser, in den vorgenannten Bereichen aufweisen. Auch auf diese Weise ist eine gute Adsorptionskapazität und Beladbarkeit mit Gift- bzw. Schadstoffen bei gleichzeitig akzeptablen Schichtdicken und geringer mechanischer Belastung in Bezug auf die Partikel-bzw. Aerosolfilterschicht 3 gewährleistet.

In diesem Zusammenhang können die Adsorberpartikel 4a in Form der Aktivkohlepartikel eine mittlere Partikelgröße (D₅₀), insbesondere einen mittleren Teilchendurchmesser (D₅₀), im Bereich von 0,06 mm bis 0,9 mm, insbesondere im Bereich von 0,09 mm bis 0,4 mm, vorzugsweise im Bereich von 0,12 mm bis 0,35 mm, bevorzugt im Bereich von 0,15 mm bis 0,31 mm, besonders bevorzugt im Bereich von 0,19 mm bis 0,29 mm, weiter bevorzugt im Bereich von 0,21 mm bis 0,27 mm, insbesondere bestimmt gemäß ASTM D2862, aufweisen.

Insbesondere kann die Adsorptionsschicht 4 ein Flächengewicht (insbesondere bestimmt als Trockengewicht) im Bereich von 5 g/m² bis 500 g/m², insbesondere 10 g/m² bis 300 g/m², vorzugsweise 30 g/m² bis 200 g/m², bevorzugt 40 g/m² bis 150 g/m², aufweisen, insbesondere bestimmt gemäß DIN EN 12127, vorzugsweise nach 1-stündiger Trocknung bei 105 °C.

Die Menge, in welcher die Adsorberpartikel 4a vorhanden bzw. eingesetzt sind, kann gleichermaßen in weiten Bereichen variieren. Insbesondere kann es erfindungsgemäß vorgesehen sein, dass die Adsorberpartikel 4ain Form der Aktivkohlepartikel in einer Menge im Bereich von 5 g/m² bis 500 g/m², insbesondere 10 g/m² bis 300 g/m², vorzugsweise 30 g/m² bis 200 g/m², bevorzugt 40 g/m² bis 150 g/m², eingesetzt werden und/oder dass das Schutzmaterial 1, insbesondere die Adsorptionsschicht 4, die Adsorberpartikel 4ain Form der Aktivkohlepartikel in einer Menge im Bereich von 5 g/m² bis 500 g/m², insbesondere 10 g/m² bis 300 g/m², vorzugsweise 30 g/m² bis 200 g/m², bevorzugt 40 g/m² bis 150 g/m², aufweist.

Besonders gute Ergebnisse werden zudem erhalten, wenn die Adsorberpartikel 4a, in Form der Aktivkohlepartikel erhältlich sind durch Carbonisierung und nachfolgende Aktivierung eines synthetischen und/oder nicht-naturstoffbasierten partikulären Ausgangsmaterials, insbesondere auf Basis organischer Polymerpartikel. Hierdurch werden Aktivkohlen mit besonders definierten adsorptiven Eigenschaften bei definierter Ausbildung des Porensystems erhalten.

**In** diesem Zusammenhang ist es erfindungsgemäß gleichermaßen bevorzugt, dass die Adsorberpartikel 4ain Form der Aktivkohlepartikel aus einem partikulären Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten wird, insbesondere durch Carbonisierung und nachfolgende Aktivierung des Ausgangsmaterials, insbesondere wobei der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt.

Gemäß einer erfindungsgemäß bevorzugten Ausführungsform ist es vorgesehen, dass die Adsorberpartikel 4ain Form der Aktivkohlepartikel, auf Basis einer polymerbasierten sphärischen Aktivkohle (PBSAC; *Polymer-based Spherical Activated Carbon*) ausgebildet sind und/oder dass die Adsorberpartikel 4a, insbesondere der Aktivkohlepartikel, aus einer polymerbasierten sphärischen Aktivkohle (PBSAC) gebildet sind. Hierdurch werden besonders gute Adsorptionsergebnisse bei hoher mechanischer Stabilität der zugrundeliegenden Aktivkohlepartikel erhalten.

Erfindungsgemäß ist es vorgesehen, dass die Adsorberpartikel 4a der Adsorptionsschicht 4 Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform, sind. Auf diese Weise werden besonders gute Adsorptionsergebnisse erhalten. Zudem kann hierdurch, wie zuvor angeführt, die mechanische Belastung gegenüber der Partikel- bzw. Aerosolfilterschicht aufgrund der Kugelform der Aktivkohle verringert werden.

Insbesondere bei Einhaltung der nachfolgend genannten Parameter und Maßgaben lassen sich ausgezeichnete Ergebnisse in Bezug auf die Schutzleistung erzielen:
Insbesondere kann es erfindungsgemäß vorgesehen sein, dass die Aktivkohle ein Gesamtporenvolumen, insbesondere ein Gesamtporenvolumen nach Gurvich, im Bereich von 0,3 cm³/g bis 3,8 cm³/g, insbesondere im Bereich von 0,4 cm³/g bis 3,5 cm³/g, vorzugsweise im Bereich von 0,5 cm³/g bis 3 cm³/g, besonders bevorzugt im Bereich von 0,6 cm³/g bis 2,5 cm³/g, ganz besonders bevorzugt im Bereich von 0,5 cm³/g bis 1,5 cm³/g, aufweist. Insbesondere kann es in diesem Zusammenhang vorgesehen sein, dass mindestens 65 %, insbesondere mindestens 70 %, vorzugsweise mindestens 75 %, bevorzugt mindestens 80 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden.

Insbesondere kann es erfindungsgemäß in diesem Zusammenhang auch vorgesehen sein, dass 50 % bis 95 %, insbesondere 60 % bis 90 %, vorzugsweise 70 % bis 85 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden.

Was die Bestimmung des Gesamtporenvolumens nach Gurvich anbelangt, so handelt es sich um eine dem Fachmann auf diesem Gebiet an sich wohlbekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff. Insbesondere kann das Porenvolumen der Aktivkohle auf Basis der Gurvich-Regel gemäß der Formel V_{P} = Wₐ / ρ_{I} bestimmt werden, wobei Wₐ die adsorbierte Menge eines zugrundeliegenden Adsorbats und ρ_{I} die Dichte des eingesetzten Adsorbats darstellt (vgl. auch Formel (8.20) gemäß Seite 111, Kapitel 8.4.) von S. Lowell et al.).

Die Bestimmungsmethode nach Carbon Black ist dem Fachmann an sich bekannt, wobei zudem für weitergehende Einzelheiten zur Bestimmung der Porenoberfläche und des Porenvolumens nach Carbon Black beispielsweise verwiesen werden kann auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff*.* Insbesondere kann die diesbezügliche Auswertung mittels *t-plot-method* erfolgen.

Es hat sich als vorteilhaft erwiesen, wenn 1 % bis 60 %, insbesondere 5 % bis 50 %, vorzugsweise 10 % bis 40 %, bevorzugt 15 % bis 35 %, des Gesamtporenvolumens, insbesondere des Gesamtporenvolumens nach Gurvich, der Aktivkohle durch Poren mit Porendurchmessern von mehr als 2 nm, insbesondere durch Meso- und/oder Makroporen, gebildet werden.

Besonders bevorzugt ist vorgesehen, dass die Aktivkohle ein durch Poren mit Porendurchmessern von höchstens 2 nm (d.h. ≤ 2 nm) gebildetes Porenvolumen, insbesondere Mikroporenvolumen nach Carbon Black, im Bereich von 0,05 cm³/g bis 2,5 cm³/g, insbesondere 0,15 cm³/g bis 2 cm³/g, vorzugsweise 0,3 cm³/g bis 1,5 cm³/g, aufweist, insbesondere wobei 15 % bis 98 %, insbesondere 25 % bis 95 %, vorzugsweise 35 % bis 90 %, des Gesamtporenvolumens der Aktivkohle durch Poren mit Porendurchmessern von höchstens 2 nm, insbesondere durch Mikroporen, gebildet werden

Insbesondere kann die Aktivkohle eine spezifische BET-Oberfläche im Bereich von 600 m²/g bis 4.000 m²/g, insbesondere 800 m²/g bis 3.500 m²/g, vorzugsweise 1.000 m²/g bis 3.000 m²/g, besonders bevorzugt 1.200 m²/g bis 2.750 m²/g, ganz besonders bevorzugt 1.300 m²/g bis 2.500 m²/g, aufweisen.

Für weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart / New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Weiterhin kann die Aktivkohle eine durch Poren mit Porendurchmessern von höchstens 2 nm, insbesondere durch Mikroporen, gebildete Oberfläche im Bereich von 400 bis 3.500 m²/g, insbesondere 500 bis 3.000 m²/g, vorzugsweise 600 bis 2.500 m²/g, bevorzugt 700 bis 2.000 m²/g, aufweisen. Zudem kann es erfindungsgemäß vorgesehen sein, dass die Aktivkohle eine durch Poren mit Porendurchmessern im Bereich von 2 nm bis 50 nm, insbesondere durch Mesoporen, gebildete Oberfläche im Bereich von 200 bis 2.000 m²/g, insbesondere 300 bis 1.900 m²/g, vorzugsweise 400 bis 1.800 m²/g, bevorzugt 500 bis 1.700 m²/g, aufweist.

Im Rahmen der vorliegenden Erfindung bezeichnet der Begriff "Mikroporen" solche Poren mit Porendurchmessern von weniger als 2 nm, wohingegen der Begriff "Mesoporen" solche Poren mit Porendurchmessern im Bereich von 2 nm (d.h. 2 nm einschließlich) bis 50 nm einschließlich bezeichnet und der Begriff "Makroporen" solche Poren mit Porendurchmessern von mehr als 50 nm (d.h. > 50 nm) bezeichnet.

Insbesondere kann die Aktivkohle einen mittleren Porendurchmesser im Bereich von 0,1 nm bis 55 nm, insbesondere 0,2 nm bis 50 nm, vorzugsweise 0,5 nm bis 45 nm, bevorzugt 1 nm bis 40 nm, aufweisen.

Eine erfindungsgemäß bevorzugt eingesetzte Aktivkohle ,d. h Aktivkohlepartikel, vorzugsweise in Form von Aktivkohlepartikeln in Kornform ("Kornkohle") oder Aktivkohlepartikel in Kugelform ("Kugelkohle"), bevorzugt Aktivkohlepartikel in Kugelform, weist eine Abriebfestigkeit, bestimmt gemäß ASTM D3802:2016, von mindestens 90 %, insbesondere von mindestens 95 %, vorzugsweise von mindestens 98 %, besonders bevorzugt von mindestens 99 %, ganz besonders bevorzugt von 100 %, auf. Auf diese Weise ist unter Anwendungsbedingungen bzw. im Tragezustand eine besonders gute Verschleißbeständigkeit gewährleistet.

Eine erfindungsgemäß bevorzugt eingesetzte Aktivkohle, d. h Aktivkohlepartikel, vorzugsweise in Form von Aktivkohlepartikeln in Kornform ("Kornkohle") oder Aktivkohlepartikel in Kugelform ("Kugelkohle"), bevorzugt Aktivkohlepartikel in Kugelform, weist zudem eine Butanadsorption, bestimmt gemäß ASTM D5742-16, von mindestens 20 %, insbesondere von mindestens 30 %, vorzugsweise von mindestens 35 %, auf.

Insbesondere weist die Aktivkohle eine Butanadsorption, bestimmt gemäß ASTM D5742-16, im Bereich von 20 % bis 90 %, insbesondere im Bereich von 30 % bis 85 %, vorzugsweise im Bereich von 35 % bis 80 %, auf.

Auf diese Weise wird eine besonders gute Adsorptionsleistung in Bezug auf Gift- bzw. Kampfstoffe erreicht. Die Butanaktivität ist insbesondere ein Maß für das Mikroporenvolumen der Aktivkohle. Die Butanaktivität bestimmt in Übereinstimmung mit der vorgenannten Methode die Fähigkeit der Aktivkohle, Butan aus trockener Luft zu adsorbieren. Die Butanaktivität ist dabei insbesondere definiert als der Gradient bezüglich der adsorbierten Masse pro Masse der Probe im Gleichgewichtszustand.

Eine erfindungsgemäß bevorzugt eingesetzte Aktivkohle, d. h Aktivkohlepartikel, vorzugsweise in Form von Aktivkohlepartikeln in Kornform ("Kornkohle") oder Aktivkohlepartikel in Kugelform ("Kugelkohle"), bevorzugt Aktivkohlepartikel in Kugelform, weist zudem eine Iodzahl, bestimmt gemäß ASTM D4607:2014, von mindestens 900 mg/g, insbesondere mindestens 1.000 mg/g, bevorzugt mindestens 1.100 mg/g, auf.

Die Aktivkohle weist vorzugsweise eine Iodzahl, bestimmt gemäß ASTM D4607:2014, im Bereich von 900 mg/g bis 2.200 mg/g, insbesondere im Bereich von 1.000 mg/g bis 2.100 mg/g, vorzugsweise im Bereich von 1.100 mg/g bis 2.000 mg/g, auf. Auf diese Weise wird eine besonders gute Adsorptionsleistung in Bezug auf Gift- bzw. Kampfstoffe erreicht. Die Iodzahl kann insbesondere als ein Maß für diejenige verfügbare Oberfläche der Aktivkohle gewertet werden, welche überwiegend durch Mesoporen, insbesondere auch durch kleine Mesoporen, bereitgestellt wird. Die vorgenannten Werte der Iodzahl zeigen, dass die Aktivkohle, wie sie erfindungsgemäß in bevorzugter Weise eingesetzt wird, insbesondere über eine hohe Mesoporosität verfügt.

Was die Anordnung der Adsorptionsschicht 4 bzw. der Partikel- und Aerosolfilterschicht 3 anbelangt, so verhält es sich insbesondere derart, dass die Partikel- bzw. Aerosolfilterschicht 3 im Anwendungs- bzw. Verwendungszustand in Bezug auf eine Schadstoffquelle vor der Adsorptionsschicht 4 angeordnet ist bzw. dass die Adsorptionsschicht 4 in Bezug auf eine Schadstoffquelle hinter der Partikel -bzw. Aerosolfilterschicht 3 angeordnet ist. Somit durchströmt ein aufzureinigendes Medium, wie Luft, im Anwendungs- bzw. Verwendungszustand zunächst die Partikel- bzw. Aerosolfilterschicht bevor es auf die Adsorptionsschicht 4 trifft. Dies führt zu einer Entlastung der Adsorptionsschicht 4 und somit zu einer verbesserten Schutzfunktion des erfindungsgemäßen Schutz- bzw. Filtermaterials 1 insgesamt, und zwar auch im Hinblick auf die Vermeidung von Durchbrüchen bei übermäßig hoher Schad- bzw. Giftstoffkonzentration.

Erfindungsgemäß kann die Adsorptionsschicht 4 mittels einer zweiten Haftmittelschicht (Adsorptionsschicht-Haftmittelschicht) auf der Partikel- und Aerosolfilterschicht 3 angeordnet und/oder mit der Partikel- und Aerosolfilterschicht 3 verbunden (befestigt, fixiert) sein.

Insbesondere kann die Adsorptionsschicht 4 auf der Trägerlage 3b (zweite Trägerlage 3b), welche auf der der Trägerschicht 2 abgewandten Seite und/oder Fläche der Funktionslage 3c positioniert ist, angeordnet und/oder hiermit verbunden sein.

Erfindungsgemäß verhält es sich somit insbesondere derart, dass die Adsorptionsschicht 4 nicht unmittelbar in Kontakt mit der Funktionslage 3c der Partikel- bzw. Aerosolfilterschicht 3 steht, so dass auch infolgedessen ein weiterer Schutz der Funktionsschicht 3c vorliegt.

Insbesondere kann die zweite Haftmittelschicht als eine wasserdampf- und/oder gasdurchlässige, bevorzugt luftdurchlässige, und/oder diskontinuierlich ausgebildete Klebstoffschicht, vorzugsweise auf Basis eines Klebstoffpolymers, bevorzugt in Form von insbesondere (wärme-) schmelzbaren Kunststofffasern oder in Form von Klebstoff(polymer)punkten, vorliegen und/oder ausgebildet sein.

Zudem kann die zweite Haftmittelschicht als ein Gelege oder Faserverbundstoff, insbesondere Vlies (Non-Woven), besonders bevorzugt als ein Vlies (Non-Woven), auf Basis von und/oder aus insbesondere (wärme-)schmelzbaren Kunststofffasern, insbesondere aus einem thermoplastischen Polyurethan (TPU), ausgebildet sein bzw. vorliegen.

Besonders gute Ergebnisse werden dabei erhalten, wenn die zweite Haftmittelschicht in Form eines Rasters mit einer Vielzahl von zueinander beabstandeten Klebstoff(polymer)punkten, insbesondere aus einem thermoplastischen Polyurethan (TPU), ausgebildet ist; und/oder wenn die zweite Haftmittelschicht in Form eines Rasters einer Vielzahl von über der Adsorptionsschicht 4 und/oder der Partikel- und Aerosolfilterschicht 3 verteilten Klebstoff(polymer)punkten, insbesondere aus einem thermoplastischen Polyurethan (TPU), ausgebildet ist.

Insbesondere kann es erfindungsgemäß vorgesehen sein, dass die zweite Haftmittelschicht jeweils höchstens 75 % der Oberfläche der der Adsorptionsschicht 4 und/oder der Partikel- und Aerosolfilterschicht 3, vorzugsweise höchstens 60 % der Oberfläche der Adsorptionsschicht 4 und/oder der Partikel- und/oder Aerosolfilterschicht 3, besonders bevorzugt höchstens 50 % der Oberfläche der Adsorptionsschicht 4 und/oder der Partikel- und Aerosolfilterschicht 3, ganz besonders bevorzugt höchstens 40 % der Oberfläche der Adsorptionsschicht 4 und/oder der Partikel- und/oder Aerosolfilterschicht 3, bedeckt.

Was die zweite Haftmittelschicht weiterhin anbelangt, so kann diese ein Material, insbesondere einen Klebstoff, aus der Gruppe von thermoplastischen Polyurethanen (TPU); Co-Polyestern (Co-PES); Co-Polyamiden (Co-PA); Polyolefinen (PO); deren Mischungen sowie Kombinationen, vorzugsweise thermoplastischen Polyurethanen (TPU), umfassen bzw. hieraus bestehen, vorzugsweise hieraus bestehen.

Erfindungsgemäß kann die zweite Haftmittelschicht mindestens einen reaktiven Klebstoff, insbesondere reaktiven Schmelzklebstoff (*Hotmelt*), bevorzugt reaktiven PUR-Schmelzklebstoff, aufweisen und/oder hierauf basieren und/oder hieraus gebildet sein. Bei dem reaktiven Klebstoff kann es sich insbesondere um einen feuchtigkeitsvernetzenden und/oder strahlenvernetzenden Klebstoff, vorzugsweise feuchtigkeitsvernetzenden Klebstoff, handeln. Insbesondere kann ein reaktiver Heißschmelzklebstoff auf PUR-Basis eingesetzt werden.

Zum einen kann es erfindungsgemäß vorgesehen sein, dass die Kunststofffasern der zweiten Haftmittelschicht ausgewählt sind aus der Gruppe von Kunststofffasern aus thermoplastischem Polyurethan (Thermoplastisches-Polyurethan-Fasern); Co-Polyesterfasern; Co-Polyamidfasern; Polyolefinfasern; und deren Mischungen sowie Kombinationen. Insbesondere kann es erfindungsgemäß vorgesehen sein, dass die zweite Haftmittelschicht Kunststofffasern aus thermoplastischem Polyurethan (Thermoplastisches-Polyurethan-Fasern) aufweist oder hieraus besteht.

Andererseits kann es erfindungsgemäß demgegenüber auch vorgesehen sein, dass die Klebstoff(polymer)punkte der zweiten Haftmittelschicht ausgewählt sind aus der Gruppe von Klebstoff(polymer)punkten aus thermoplastischem Polyurethan; Co-Polyestern; Co-Polyamid; Polyolefin; und deren Mischungen sowie Kombinationen. Insbesondere kann die zweite Haftmittelschicht Klebstoff(polymer)punkte aus thermoplastischem Polyurethan aufweisen bzw. hieraus bestehen.

Hinsichtlich der Fixierung der zugrundeliegenden Schichten kann es erfindungsgemäß insbesondere vorgesehen sein, dass die zweite Haftmittelschicht, bezogen auf das Trockengewicht der Haftmittelschicht bzw. des Klebstoffs, ein Flächengewicht im Bereich von 5 g/m² bis 100 g/m², insbesondere im Bereich von 7 g/m² bis 75 g/m², vorzugsweise im Bereich von 10 g/m² bis 50 g/m², besonders bevorzugt im Bereich von 10 g/m² bis 30 g/m², aufweist.

Wie in Fig. 1 und Fig. 2 veranschaulicht, kann das Schutz- bzw. Filtermaterial 1 außerdem, wie auch zuvor angeführt, eine zweite textile Trägerschicht 5 (zweite textile Trägerschicht), insbesondere zweite textile Abdeckschicht 5, aufweisen. Die zweite textile Trägerschicht 5 kann insbesondere auf der der ersten Trägerschicht 2 gegenüberliegenden Seite des Schutz- bzw. Filtermaterials 1 angeordnet sein. Im Anwendungs- bzw. Verwendungszustand des erfindungsgemäßen Schutz- bzw. Filtermaterials, insbesondere als Schutzbekleidung, verhält es sich dabei insbesondere derart, dass die zweite textile Trägerschicht 5 insbesondere auf der dem Nutzer bzw. Anwender zugewandten Seite des Schutz- bzw. Filtermaterials 1 nach der Erfindung angeordnet ist ("Innenschicht"). Demgegenüber kann die erste Trägerschicht 2 im Anwendungs- bzw. Verwendungszustand des erfindungsgemäßen Schutz- bzw. Filtermaterials, insbesondere als Schutzbekleidung auf der dem Träger bzw. Nutzer abgewandten Seite des Schutz- bzw. Filtermaterials 1 angeordnet sein ("Außenschicht").

Im Hinblick auf eine Verwendung des Schutz- bzw. Filtermaterials als Filter im Bereich technischer Filteranwendungen verhält es sich insbesondere derart, dass die erste Trägerschicht 2 auf der einer Schadstoffquelle zugewandten Seite und/oder die zweite textile Trägerschicht 5 auf der einer Schadstoffquelle abgewandten Seite des Schutz- bzw. Filtermaterials angeordnet ist.

Insbesondere kann die zweite textile Trägerschicht 5 der Adsorptionsschicht 4 zugeordnet sein. Weiterhin kann es insbesondere vorgesehen sein, dass die zweite textile Trägerschicht 5 in der vorgenannten Abfolge nach der Adsorptionsschicht 4 angeordnet ist bzw. dass die zweite textile Trägerschicht 5 auf der der Partikel- und Aerosolfilterschicht 3 abgewandten Seite der Adsorptionsschicht 4 angeordnet ist.

Wie gleichermaßen in Fig. 1 und Fig. 2 dargestellt, kann die zweite textile Trägerschicht 5 auf der Adsorptionsschicht 4 angeordnet bzw. mit der Adsorptionsschicht 4 fest verbunden (befestigt, fixiert), vorzugsweise mittels Laminierung, sein, vorzugsweise mittels einer dritten Haftmittelschicht (Zweite-Trägerschicht-Haftmittelschicht).

Insbesondere kann die zweite textile Trägerschicht 5 mit der Adsorptionsschicht 4 vorzugsweise mittels einer dritten Haftmittelschicht fest verbunden (befestigt, fixiert), vorzugsweise mittels Laminierung, sein.

Erfindungsgemäß kann die zweite textile Trägerschicht 5 auf der der Partikel- und Aerosolfilterschicht 3 abgewandten Seite und/oder Fläche der Adsorptionsschicht 4 angeordnet und/oder mit der Adsorptionsschicht 4 auf deren der Partikel- und Aerosolfilterschicht 3 abgewandten Seite und/oder Fläche vorzugsweise mittels einer dritten Haftmittelschicht fest verbunden (befestigt, fixiert), vorzugsweise mittels Laminierung, sein.

Zudem kann die zweite textile Trägerschicht 5 als vorzugsweise gasdurchlässiges, insbesondere luftdurchlässiges, textiles Flächengebilde vorliegt und/oder ausgebildet sein.

Erfindungsgemäß kann die zweite textile Trägerschicht 5 zudem als ein luftdurchlässiges textiles Flächengebilde, bevorzugt als eine Maschenware, insbesondere als Gewirke (Wirkware) oder Gestrick (Strickware), ausgebildet sein.

Weiterhin kann die zweite textile Trägerschicht 5 Naturfasern und/oder synthetischen Fasern (Chemiefasern), bevorzugt Naturfasern, besonders bevorzugt Baumwollfasern, umfassen oder hieraus gebildet sein. Hierdurch wird insbesondere im Fall von Schutzbekleidung ein angenehmes Tragegefühl gewährleistet.

Weiterhin kann die zweite textile Trägerschicht 5 Naturfasern, besonders bevorzugt Baumwollfasern, gegebenenfalls in Kombination mit synthetischen Fasern (Chemiefasern), umfassen bzw. hieraus gebildet sein. Hierdurch können die Materialeigenschaften weiterführend eingestellt werden.

Insbesondere kann die zweite textile Trägerschicht 5 ein Material, insbesondere Textilfasermaterial, bevorzugt Textilfasern, ausgewählt aus der Gruppe von Naturstoffen und Synthetikstoffen, insbesondere ausgewählt aus der Gruppe von Baumwolle (CO); Wolle; Leinen; Polyestern; Polyolefinen, Polyvinylchlorid; Polyvinylidenchlorid; Acetaten, insbesondere Celluloseacetaten; Triacetaten, insbesondere Cellulosetriacetaten; Aramiden, insbesondere Meta- und/oder Para-Amiden; gegebenenfalls modifizierten und/oder regenerierten Cellulosen; Polyacryl; Polyamid; Polyvinylalkohol; Polyurethanen; Polyvinylestern; modifizierten und/oder regenerierten Cellulosen, insbesondere Viskose; und deren Mischungen oder Kombinationen, vorzugsweise ausgewählt aus der Gruppe von modifizierten und/oder regenerierten Cellulosen, insbesondere Viskose; Aramiden, insbesondere Meta- und/oder Para-Amiden; Polyamid und deren Mischungen oder Kombinationen, aufweisen oder hieraus bestehen.

Erfindungsgemäß ist es zudem bevorzugt, dass die zweite textile Trägerschicht 5 aus einem Material, insbesondere Textilfasermaterial, in Form einer Mischung aus Baumwolle und Polyester (CO/PES); oder einer Mischung aus Polyamid und Polyester (PA/PES); oder einer Mischung aus Baumwolle und Elastan (CO/EL); oder einer Mischung aus Polyester und Elastan (PES/EL); oder einer Mischung aus oder Polyamid und Elastan (PA/EL), vorzugsweise einer Mischung aus Baumwolle und Polyester (CO/PES), besteht.

Insbesondere kann die zweite textile Trägerschicht 5 aber auch aus einem Material, insbesondere Textilfasermaterial, in Form von Baumwolle (CO) oder Polyester (PES) bestehen.

Im Allgemeinen kann die zweite textile Trägerschicht 5 ein Flächengewicht im Bereich von 10 g/m² bis 350 g/m², insbesondere im Bereich von 15 g/m² bis 300 g/m², vorzugsweise im Bereich von 25 g/m² bis 250 g/m², besonders bevorzugt im Bereich von 30 g/m² bis 175 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %. Hierdurch wird auch eine gewisse Stabilität der zweiten textile Trägerschicht 5 gewährleistet.

Gemäß einer ersten Ausführungsform kann die zweite textile Trägerschicht 5 zumindest im Wesentlichen nicht-elastisch ausgebildet sein. In diesem Fall ist es insbesondere vorgesehen, dass die zweite textile Trägerschicht 5 zumindest im Wesentlichen kein Elastan bzw. keine Elastanfasern aufweist.

Demgegenüber kann die zweite textile Trägerschicht 5 elastisch und/oder reversibel dehnbar ausgebildet sein. Insbesondere kann die zweite textile Trägerschicht 5 vorzugsweise für diesen Zweck Elastan, insbesondere Elastanfasern, umfassen, insbesondere in einer Menge von höchstens 10 Gew.-%, vorzugsweise höchstens 5 Gew.-%, bezogen auf die zweite textile Trägerschicht 5.

Erfindungsgemäß kann die zweite textile Trägerschicht 5 auf der der Partikel- und/ Aerosolfilterschicht 3 abgewandten Seite und/oder Fläche der Adsorptionsschicht 4 angeordnet und/oder mit der Adsorptionsschicht 4 auf deren der Partikel- und Aerosolfilterschicht 3 abgewandten Seite und/oder Fläche vorzugsweise mittels einer dritten Haftmittelschicht fest verbunden (befestigt, fixiert), vorzugsweise mittels Laminierung, sein.

Was die zur Fixierung der zweite textilen Trägerschicht 5 eingesetzte dritte Haftmittelschicht anbelangt, so kann es insbesondere vorgesehen sein, dass die dritte Haftmittelschicht bzw. der Klebstoff der dritten Haftmittelschicht in einer Auftragsmenge im Bereich von 5 g/m² bis 80 g/m², insbesondere im Bereich von 10 g/m² bis 60 g/m², vorzugsweise im Bereich von 15 g/m² bis 50 g/m², auf die zweite Abdeckschicht 5 und/oder die Adsorptionsschicht 4 aufgebracht bzw. aufgetragen ist bzw. dass die dritte Haftmittelschicht, bezogen auf das Trockengewicht der Haftmittelschicht bzw. des Klebstoffs, ein Flächengewicht im Bereich von 5 g/m² bis 80 g/m², insbesondere im Bereich von 10 g/m² bis 60 g/m², vorzugsweise im Bereich von 15 g/m² bis 50 g/m², aufweist.

In diesem Zusammenhang werden erfindungsgemäß besonders gute Ergebnisse hinsichtlich der Fixierung der zweiten textilen Trägerschicht 5 erhalten, wenn das Material, insbesondere der Klebstoff und/oder das Klebstoffpolymer, der dritten Haftmittelschicht ausgewählt ist aus der Gruppe von Polyacrylaten (PA); Polymethacrylaten (PMA); Polymethylmethacrylaten (PMMA); Polycarbonaten (PC); Polyurethanen (PU), bevorzugt thermoplastischen Polyurethanen (TPU); Silikonen und deren Mischungen oder Kombinationen, vorzugsweise Polyurethan (PU), bevorzugt thermoplastischen Polyurethanen (TPU).

Erfindungsgemäß ist es dabei bevorzugt, dass das Material, insbesondere der Klebstoff und/oder das Klebstoffpolymer, ein Polyurethan (PU), bevorzugt thermoplastisches Polyurethan (TPU), ist.

Im Allgemeinen kann es erfindungsgemäß vorgesehen sein, dass die dritte Haftmittelschicht mindestens einen reaktiven Klebstoff, insbesondere reaktiven Schmelzklebstoff (*Hotmelt*)*,* bevorzugt reaktiven PUR-Schmelzklebstoff, aufweist und/oder hierauf basiert und/oder hieraus gebildet ist. Bei dem reaktiven Klebstoff kann es sich insbesondere um einen feuchtigkeitsvernetzenden und/oder strahlenvernetzenden Klebstoff, vorzugsweise feuchtigkeitsvernetzenden Klebstoff, handeln. Insbesondere kann ein reaktiver Heißschmelzklebstoff auf PUR-Basis eingesetzt werden.

Insbesondere kann die dritte Haftmittelschicht eine Dichte im Bereich von 100 g/l bis 500 g/l, insbesondere im Bereich von 150 g/l bis 400 g/l, vorzugsweise im Bereich von 200 g/l bis 350 g/l, aufweisen.

Insbesondere kann es erfindungsgemäß auch vorgesehen sein, dass die dritte Haftmittelschicht teilweise in die zweite textile Trägerschicht 5 eingedrungen vorliegt und/oder dass die dritte Haftmittelschicht sich in die zweite textile Trägerschicht 5 hineinerstreckt. Hierdurch kann eine besonders feste Verbindung der jeweiligen Schichten erhalten werden.

Erfindungsgemäß ist es zudem insbesondere vorgesehen, dass die dritte Haftmittelschicht und/oder der Klebstoff der dritten Haftmittelschicht als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die zweite textile Trägerschicht 5 und/oder die Adsorptionsschicht 4 aufgebracht und/oder aufgetragen ist, wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von insbesondere über die zweite textile Trägerschicht 5 und/oder die Adsorptionsschicht 4 verteilten Klebstoff(polymer)punkten ausgebildet ist, vorzugsweise in Form eines getrockneten und/oder ausgehärteten, insbesondere vernetzten, gebrochenen Klebstoffpolymerschaums.

Insbesondere kann die Klebstoffschicht entweder in Form eines getrockneten und/oder ausgehärteten, insbesondere vernetzten, gebrochenen Klebstoffpolymerschaums oder aber in Form eines Rasters einer Vielzahl von über die zweite textile Trägerschicht 5 und/oder die Adsorptionsschicht 4 verteilten Klebstoff(polymer)punkten ausgebildet sein, vorzugsweise in Form eines getrockneten und/oder ausgehärteten, insbesondere vernetzten, gebrochenen Klebstoffpolymerschaums.

Die Ausbildung der dritten Haftmittelschicht in Form eines getrockneten bzw. ausgehärteten, insbesondere vernetzten, gebrochenen Klebstoffpolymerschaums geht auch mit dem Vorteil einher, dass bei gleichzeitiger Aufrechterhaltung der hohen Luftdurchlässigkeit die Klebstoffschicht selbst in gewisser Weise als weiterführendes Filtermaterial fungieren kann.

Insbesondere kann die dritte Haftmittelschicht und/oder der Klebstoff der dritten Haftmittelschicht als eine wasserdampf- und/oder luftdurchlässige, vorzugsweise wasserdampf- und luftdurchlässige, und/oder diskontinuierlich ausgebildete Klebstoffschicht auf Basis eines getrockneten und/oder ausgehärteten, insbesondere vernetzten, gebrochenen Klebstoffpolymerschaums auf die zweite textile Trägerschicht 5 und/oder die Adsorptionsschicht 4 aufgebracht bzw. aufgetragen sein.

In diesem Zusammenhang kann der gebrochene Klebstoffpolymerschaum eine Vielzahl getrockneter und/oder ausgehärteter, insbesondere vernetzter, zerstörter und/oder geplatzter und/oder kollabierter Schaumblasen aufweisen.

Zudem kann der gebrochene Klebstoffpolymerschaum, insbesondere die getrockneten und/oder ausgehärteten, insbesondere vernetzten, zerstörten und/oder geplatzten und/oder kollabierten Schaumblasen des gebrochenen Klebstoffschaums, eine Vielzahl an zerstörten und/oder gebrochenen und/oder kollabierten Wandungen und/oder Stegen aus Klebstoffpolymer aufweist bzw. aufweisen.

Insbesondere kann es erfindungsgemäß in diesem Zusammenhang vorgesehen sein, dass der gebrochene Klebstoffpolymerschaum einen Anteil an zerstörten und/oder geplatzten und/oder kollabierten Schaumblasen von mindestens 10 %, insbesondere mindestens 30 %, vorzugsweise mindestens 50 %, bevorzugt mindestens 70 %, besonders bevorzugt mindestens 90 %, ganz besonders bevorzugt mindestens 95 %, bezogen auf die Gesamtanzahl an Schaumblasen in dem gebrochenen Klebstoffpolymerschaum, aufweisen kann.

Zudem kann es vorgesehen sein, dass der gebrochene Klebstoffpolymerschaum einen Anteil an zerstörten und/oder geplatzten und/oder kollabierten Schaumblasen im Bereich von 10 % bis 100 %, insbesondere im Bereich von 30 % bis 99,9 %, vorzugsweise im Bereich von 50 % bis 99 %, bevorzugt im Bereich von 70 % bis 99 %, besonders bevorzugt im Bereich von 90 % bis 98 %, bezogen auf die Gesamtanzahl an Schaumblasen in dem gebrochenen Klebstoffpolymerschaum, aufweist.

Weiterführend kann es erfindungsgemäß auch vorgesehen sein, dass der gebrochene Klebstoffpolymerschaum nicht geschlossen ausgebildet ist und/oder dass der gebrochene Klebstoffpolymerschaum eine Vielzahl von insbesondere sich in dem gebrochenen Klebstoffpolymerschaum erstreckenden Durchbrechungen, Poren, Kanäle und/oder Öffnungen und/oder eine Vielzahl von insbesondere die jeweiligen Außenseiten des gebrochenen Klebstoffpolymerschaums und/oder der Klebstoffschicht verbindenden Durchbrechungen, Poren, Kanäle und/oder Öffnungen aufweist.

Erfindungsgemäß kann der gebrochene Klebstoffpolymerschaum zusammenhängend bzw. kohärent ausgebildet sein. Auch dies führt zu einer hohen Stabilität des zugrundeliegenden Verbunds.

Erfindungsgemäß kann der gebrochene Klebstoffpolymerschaum zumindest im Wesentlichen vollflächig und/oder ganzseitig auf die textile Trägerschicht 2 aufgebracht bzw. aufgetragen sein, was gleichermaßen zu einer besonders stabilen Verbindung der Schichten führt.

Insbesondere kann der gebrochene Klebstoffpolymerschaum im Vergleich zu einem entsprechenden nichtgeschäumten und/oder kontinuierlich ausgebildeten Klebstoffpolymer eine bzw. ein um mindestens 5 %, insbesondere um mindestens 10 %, vorzugsweise um mindestens 15 %, bevorzugt um mindestens 20 %, besonders bevorzugt um mindestens 25 %, verringerte Dichte und/oder verringertes, insbesondere flächenbezogen verringertes, Volumengewicht, bezogen auf das nichtgeschäumte und/oder kontinuierlich ausgebildete Klebstoffpolymer, aufweisen.

Zudem kann der gebrochene Klebstoffpolymerschaum im Vergleich zu einem entsprechenden nichtgeschäumten und/oder kontinuierlich ausgebildeten Klebstoffpolymer eine bzw. ein im Bereich von 5 % bis 80 %, insbesondere im Bereich von 10 % bis 70 %, vorzugsweise im Bereich von 15 % bis 60 %, bevorzugt im Bereich von 20 % bis 55 %, verringerte Dichte und/oder verringertes, insbesondere flächenbezogen verringertes, Volumengewicht, bezogen auf das nichtgeschäumte und/oder kontinuierlich ausgebildete Klebstoffpolymer, aufweisen.

Weiterhin kann der gebrochene Klebstoffpolymerschaum im Vergleich zu einem entsprechenden intakten und/oder nichtgebrochenen Klebstoffpolymerschaum eine bzw. ein um höchstens 10 %, insbesondere höchstens 5 %, vorzugsweise höchstens 1 %, erhöhte Dichte und/oder erhöhtes, insbesondere flächenbezogen erhöhtes, Volumengewicht, bezogen auf den intakten und/oder nichtgebrochenen Klebstoffpolymerschaum, aufweisen.

Weiterführend kann der gebrochene Klebstoffpolymerschaum im Vergleich zu einem entsprechenden intakten und/oder nichtgebrochenen Klebstoffpolymerschaum eine um höchstens 30 %, insbesondere um höchstens 20 %, vorzugsweise höchstens um 10 %, bevorzugt um höchstens 5 %, verringerte Elastizität und/oder reversible Dehnbarkeit, bezogen auf den intakten und/oder nichtgebrochenen Klebstoffpolymerschaum, aufweisen.

Gemäß einer erfindungsgemäßen Ausführungsform kann der gebrochene Klebstoffpolymerschaum im Vergleich zu einem entsprechenden intakten und/oder nichtgebrochenen Klebstoffpolymerschaum eine im Bereich von 5 % bis 30 %, insbesondere im Bereich von 10 % bis 20 %, verringerte Elastizität und/oder reversible Dehnbarkeit, bezogen auf den intakten und/oder nichtgebrochenen Klebstoffpolymerschaum, aufweisen.

Weiterführend kann es erfindungsgemäß vorgesehen sein, dass der gebrochene Klebstoffpolymerschaum erhältlich ist durch Trocknung und/oder Aushärtung, insbesondere Vernetzung, einer aufgeschäumten, vorzugsweise unter mechanischem Energieeintrag aufgeschäumten, wässrig oder organisch basierten, vorzugsweise wässrig basierten, Lösung und/oder Dispersion des Klebstoffpolymers, insbesondere einhergehend mit einer zumindest teilweisen Brechung des durch die aufgeschäumte Lösung und/oder Dispersion des Klebstoffpolymers bereitgestellten Schaums, insbesondere wobei die Trocknung und/oder Aushärtung, insbesondere Vernetzung, in Gegenwart mindestens eines Schaumbildners und gegebenenfalls mindestens eines Schaumstabilisators und gegebenenfalls mindestens eines Vernetzers und gegebenenfalls mindestens eines Emulgators und gegebenenfalls mindestens eines Verdickers durchgeführt ist.

Für weitergehende diesbezügliche Einzelheiten in Bezug auf diese besondere Form der Ausbildung bzw. des Auftrags der dritten Haftmittelschicht, insbesondere des Auftrags des Klebstoffs bzw. Klebstoffpolymers, kann insbesondere auch verwiesen werden auf die internationale Offenlegungsschrift WO 2017/016694 A1, deren gesamter Offenbarungsgehalt hiermit durch Bezugnahme eingeschlossen ist.

Gemäß einer alternativen Ausführungsform der Erfindung kann es aber auch vorgesehen sein, dass die dritte Haftmittelschicht und/oder der Klebstoff der dritten Haftmittelschicht als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die zweite textile Trägerschicht 5 und/oder die Adsorptionsschicht 4 aufgebracht und/oder aufgetragen ist, wobei die Klebstoffschicht in Form eines Rasters einer Vielzahl von über die zweite textile Trägerschicht 5 und/oder die Adsorptionsschicht 4 verteilten Klebstoff(polymer)punkten ausgebildet ist.

Insbesondere ist die Klebstoffschicht in Form eines Rasters einer Vielzahl von über die zweite textile Trägerschicht 5 und/oder die Adsorptionsschicht 4 verteilten Klebstoff(polymer)punkten ausgebildet.

In diesem Zusammenhang ist es insbesondere vorgesehen, dass die dritte Haftmittelschicht höchstens 75 % der Oberfläche der zweiten textilen Trägerschicht 5 und/oder der Adsorptionsschicht 4, vorzugsweise höchstens 60 % der Oberfläche der zweiten Trägerschicht 5 und/oder der Adsorptionsschicht 4, besonders bevorzugt höchstens 50 % der Oberfläche der zweiten Trägerschicht 5 und/oder der Adsorptionsschicht 4, ganz besonders bevorzugt höchstens 40 % der Oberfläche der zweiten Trägerschicht 5 und/oder der Adsorptionsschicht 4, bedeckt.

Insbesondere kann es erfindungsgemäß vorgesehen sein, dass das Raster der Vielzahl von über die zweite textile Trägerschicht 5 und/oder die Adsorptionsschicht 4 verteilten Klebstoff(polymer)punkten regelmäßig oder unregelmäßig ausgebildet ist.

Weiterhin ist es insbesondere vorgesehen, dass die Klebstoff(polymer)punkte zumindest im Wesentlichen die gleiche Größe, insbesondere Größenausdehnung, besitzen.

Die Durchführung der Aufbringung der dritten Haftmittelschicht und insbesondere des Klebstoffs bzw. Klebstoffpolymers der dritten Haftmittelschicht gemäß dieser Ausführungsform ist dem Fachmann ebenfalls hinlänglich bekannt. Zu diesem Zweck kann beispielsweise das Klebstoffpolymer in Form einer Klebstoffpolymerdispersion oder in Form eines Schmelzklebstoffpolymers, beispielsweise mittels einer Schablone insbesondere auf die zweite textile Trägerschicht 5 aufgebracht werden, gefolgt von einem nachfolgenden Auftrag der Adsorberpartikel 4a der Adsorptionsschicht 4 mit anschließender Vernetzung und Aushärtung des Klebstoffs bzw. Klebstoffpolymers.

Gemäß einer weiteren Ausführungsform der vorliegenden Erfindung kann das Schutz- bzw. Filtermaterial 1 außerdem eine dritte textile Trägerschicht, insbesondere dritte und/oder weitere Abdeckschicht, aufweisen (in den Figuren nicht dargestellt).

Die dritte textile Trägerschicht kann insbesondere auf der zweiten Trägerschicht 5 angeordnet und/oder mit der zweiten textilen Trägerschicht 5 fest verbunden (befestigt, fixiert), vorzugsweise mittels Laminierung, sein, vorzugsweise mittels einer vierten Haftmittelschicht. Insbesondere kann die dritte textile Trägerschicht mit der zweiten Trägerschicht 5 vorzugsweise mittels einer vierten Haftmittelschicht fest verbunden (befestigt, fixiert), vorzugsweise mittels Laminierung sein.

Was die dritte textile Trägerschicht weiterhin anbelangt, so verhält es sich erfindungsgemäß insbesondere derart, dass diese auf der der Adsorptionsschicht 4 abgewandten Seite und/oder Fläche der zweiten textilen Trägerschicht 5 angeordnet und/oder mit der zweiten textilen Trägerschicht 5 auf deren der Adsorptionsschicht 4 und/oder der Partikel- bzw. Aerosolfilterschicht 3 abgewandten Seite und/oder Fläche vorzugsweise mittels einer vierten Haftmittelschicht fest verbunden (befestigt, fixiert), vorzugsweise mittels Laminierung, ist.

Was in diesem Zusammenhang die vierte Haftmittelschicht anbelangt, so kann diese grundsätzlich gleichermaßen auf Basis eines punktförmigen Klebstoffmittelauftrags erhalten sein. Diesbezüglich können die für die obigen Haftmittelschichten angeführten Materialien eingesetzt werden. Auch die vierte Haftmittelschicht ist grundsätzlich gas- bzw. luftdurchlässig ausgebildet.

Die dritte textile Trägerschicht kann insbesondere als vorzugsweise gasdurchlässiges textiles Flächengebilde ausgebildet sein bzw. vorliegen.

Erfindungsgemäß kann die dritte textile Trägerschicht als ein luftdurchlässiges textiles Flächengebilde, bevorzugt als eine Maschenware, insbesondere als Gewirke (Wirkware) oder Gestrick (Strickware), ausgebildet sein.

Weiterhin ist es insbesondere vorgesehen, dass die dritte textile Trägerschicht Naturfasern und/oder synthetischen Fasern (Chemiefasern), bevorzugt Naturfasern, besonders bevorzugt Baumwollfasern, umfasst oder hieraus gebildet ist.

Demgegenüber kann es aber auch vorgesehen sein, dass die dritte textile Trägerschicht Naturfasern, besonders bevorzugt Baumwollfasern, gegebenenfalls in Kombination mit synthetischen Fasern (Chemiefasern), umfasst oder hieraus gebildet ist.

Zudem kann die dritte textile Trägerschicht Naturfasern, besonders bevorzugt Baumwollfasern, gegebenenfalls in Kombination mit synthetischen Fasern (Chemiefasern), vorzugsweise Elastanfasern, umfassen bzw. hieraus gebildet sein., insbesondere im Hinblick auf die Einstellung definierter Elastizitätswerte. Insbesondere kann die dritte textile Trägerschicht Elastan (EL) aufweisen, z.B. in einer Menge von höchstens 10 Gew.-%, vorzugsweise höchstens 5 Gew.-%, bezogen auf die dritte textile Trägerschicht.

Im Allgemeinen kann die dritte textile Trägerschicht ein Flächengewicht im Bereich von 10 g/m² bis 275 g/m², insbesondere im Bereich von 15 g/m² bis 175 g/m², vorzugsweise im Bereich von 25 g/m² bis 150 g/m², besonders bevorzugt im Bereich von 30 g/m² bis 100 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %.

Die gegebenenfalls vorgesehene dritte textile Trägerschicht kann insbesondere in Bezug auf die Verwendung des Schutz- bzw. Filtermaterials nach der Erfindung für oder als Schutzbekleidung im Anwendungs- bzw. Verwendungszustand als innerste, den Träger bzw. Nutzer zugewandte Schicht dienen.

Gemäß einer weiteren erfindungsgemäßen Ausführungsform kann es zudem auch vorgesehen sein, dass das Schutz- und/oder Filtermaterial 1 nach der Erfindung außerdem eine Zwischenschicht 6 (textile Zwischenschicht), aufweist, wie in Fig. 2 veranschaulicht.

In diesem Zusammenhang kann die Zwischenschicht 6 insbesondere zwischen der Adsorptionsschicht 4 und der Partikel- und Aerosolfilterschicht 3 angeordnet sein und/oder mit der Adsorptionsschicht 4 und/oder der Partikel- und Aerosolfilterschicht 3, insbesondere (nur) mit der Adsorptionsschicht 4, fest verbunden (befestigt, fixiert), vorzugsweise mittels Laminierung, sein. Mit anderen Worten kann es sich gemäß dieser Ausführungsform insbesondere derart verhalten, dass die textile Zwischenschicht 6 sozusagen als innere Abdeckschicht auf der Adsorptionsschicht insbesondere vollflächig verbunden ist, beispielsweise mittels eines diskontinuierlich aufgetragenen Klebstoffs.

Insbesondere kann die Zwischenschicht 6 zwischen der Adsorptionsschicht 4 und der Partikel- und Aerosolfilterschicht 3 angeordnet sein bzw. mit der Adsorptionsschicht 4 und/oder der Partikel- und Aerosolfilterschicht 3, insbesondere mit der Adsorptionsschicht 4 fest verbunden (befestigt, fixiert), vorzugsweise mittels Laminierung, sein.

Im Allgemeinen kann die Zwischenschicht 6 auf der der Partikel- und Aerosolfilterschicht 3 zugewandten Seite und/oder Fläche der Adsorptionsschicht 4 angeordnet und/oder mit der Adsorptionsschicht 4 auf deren der Partikel- und Aerosolfilterschicht 3 zugewandten Seite und/oder Fläche fest verbunden (befestigt, fixiert), vorzugsweise mittels Laminierung, sein, vorzugsweise mittels einer fünften Haftmittelschicht.

Zudem kann die Zwischenschicht 6 nur abschnittsweise, insbesondere linienförmig und/oder randseitig, mit der Partikel- und Aerosolfilterschicht 3 und/oder den weiteren Schichten des Schutz- und/oder Filtermaterials 1 fest verbunden (hieran befestigt bzw. fixiert) sein, insbesondere mittels Vernähen, Verschweißen, Vertackern, Verkleben oder dergleichen, und im Übrigen lose und/oder unverbunden auf der Partikel- und Aerosolfilterschicht 3 angeordnet sein, insbesondere hierauf aufliegen.

Bei der insbesondere linienförmigen bzw. randseitigen Fixierung können auch die weiteren Schichten des erfindungsgemäßen Schutz- bzw. Filtermaterials 1 mitumfasst sein, beispielsweise im Hinblick auf sämtliche Schichten oder einen Teil der Schichten umfassende Vernähungen bzw. Vertackerungen oder dergleichen.

Des Weiteren kann die Zwischenschicht 6 als vorzugsweise gasdurchlässiges, insbesondere luftdurchlässiges, textiles Flächengebilde vorliegen bzw. ausgebildet sein.

Aufgrund der speziellen erfindungsgemäßen Maßnahmen weist auch das erfindungsgemäße Schutz- bzw. Filtermaterial 1 als solches definierte Eigenschaften bzw. Parameter auf, wie sie nachfolgend angeführt sind:
Im Allgemeinen kann das Schutz- und/oder Filtermaterial 1 ein (Gesamt-) Flächengewicht (insbesondere bestimmt als Trockengewicht) im Bereich von 30 g/m² bis 1.500 g/m², insbesondere im Bereich von 40 g/m² bis 1.000 g/m², vorzugsweise im Bereich von 50 g/m² bis 750 g/m², bevorzugt im Bereich von 60 g/m² bis 500 g/m², besonders bevorzugt im Bereich von 70 g/m² bis 400 g/m², aufweisen, insbesondere bestimmt gemäß DIN EN 12127, vorzugsweise nach 1-stündiger Trocknung bei 105 °C.

Zudem kann das Schutz- und/oder Filtermaterial 1 eine Dicke, insbesondere Gesamtquerschnittsdicke, im Bereich von 0,1 mm bis 25 mm, insbesondere im Bereich von 0,2 mm bis 15 mm, vorzugsweise im Bereich von 0,3 mm bis 10 mm, bevorzugt im Bereich von 0,4 mm bis 5 mm, besonders bevorzugt im Bereich von 0,5 mm bis 2 mm, weiter bevorzugt im Bereich von 0,5 mm bis 1,5 mm, aufweisen, insbesondere bestimmt gemäß DIN EN ISO 5084.

Zudem können die Schichten (Lagen) 2, 3, 4 des Schutz- und/oder Filtermaterials 1, unabhängig voneinander, gasdurchlässig, insbesondere luftdurchlässig, und/oder wasserdampfdurchlässig ausgebildet sein, vorzugsweise gasdurchlässig, insbesondere luftdurchlässig, und wasserdampfdurchlässig ausgebildet sein, bevorzugt luftdurchlässig und wasserdampfdurchlässig ausgebildet sein. Dies gilt auch neben den Schichten 2, 3, 4 im Übrigen auch für die weiteren Schichten, wie beispielsweise die zweite oder dritte Trägerschicht sowie die Zwischenschicht, wie zuvor definiert.

Im Allgemeinen verhält es sich im Rahmen der vorliegenden Erfindung insbesondere derart, dass das Schutz- und/oder Filtermaterial 1 gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist, bevorzugt luftdurchlässig und wasserdampfdurchlässig ausgebildet ist.

Insbesondere weist das Schutz- und/oder Filtermaterial 1 nach der Erfindung keine luftundurchlässige Sperrschicht, insbesondere keine luftundurchlässige Membran, auf. Insbesondere ist das erfindungsgemäße Schutz- und/oder Filtermaterial 1 frei von luftundurchlässigen Sperrschichten, insbesondere frei von luftundurchlässigen Membranen. Auch hierdurch wird die hohe Luftdurchlässigkeit des erfindungsgemäßen Schutz- und/oder Filtermaterials 1 gewährleistet.

Insbesondere kann das Schutz- und/oder Filtermaterial 1 eine Gasdurchlässigkeit, insbesondere Luftdurchlässigkeit, von mindestens 1 l·m⁻²·s⁻¹, insbesondere mindestens 2 l·m⁻²·s⁻¹, vorzugsweise mindestens 5 l·m⁻²·s⁻¹, bevorzugt mindestens 7 l·m⁻²·s⁻¹, besonders bevorzugt mindestens 10 l·m⁻²·s⁻¹ aufweisen, insbesondere bestimmt gemäß DIN EN ISO 9237 und/oder insbesondere bestimmt bei einem Differenzdruck (Strömungswiderstand) von 127 Pascal.

Zudem kann das Schutz- und/oder Filtermaterial 1 eine Gasdurchlässigkeit, insbesondere Luftdurchlässigkeit, im Bereich von 1 l·m⁻²·s⁻¹ bis 1.000 l·m⁻²·s⁻¹, insbesondere im Bereich von 2 l·m⁻²·s⁻¹ bis 500 l·m⁻²·s⁻¹, vorzugsweise im Bereich von 5 l·m⁻²·s⁻¹ bis 250 l·m⁻²·s⁻¹, bevorzugt im Bereich von 7 l·m⁻²·s⁻¹ bis 150 l·m⁻²·s⁻¹, besonders bevorzugt im Bereich von 10 l·m⁻²·s⁻¹ bis 100 l·m⁻²·s⁻¹, aufweisen, insbesondere bestimmt gemäß DIN EN ISO 9237 und/oder insbesondere bestimmt bei einem Differenzdruck (Strömungswiderstand) von 127 Pascal.

Weiterhin kann das Schutz- und/oder Filtermaterial 1 eine Gasdurchlässigkeit, insbesondere Luftdurchlässigkeit, von mindestens 0,1 cfm (*Cubic Feet per Minute* bzw. Kubikfuß pro Minute), insbesondere mindestens 0,2 cfm, vorzugsweise mindestens 0,5 cfm, bevorzugt mindestens 1 cfm, besonders bevorzugt mindestens 1,5 cfm aufweisen, insbesondere bestimmt gemäß ASTM D737-96 und/oder insbesondere bestimmt bei einem Differenzdruck (Strömungswiderstand) von 127 Pascal.

Erfindungsgemäß kann das Schutz- und/oder Filtermaterial 1 zudem eine Gasdurchlässigkeit, insbesondere Luftdurchlässigkeit, im Bereich von 0,1 cfm bis 100 cfm, insbesondere im Bereich von 0,2 cfm bis 80 cfm, vorzugsweise im Bereich von 0,5 cfm bis 40 cfm, bevorzugt im Bereich von 1 cfm bis 20 cfm, besonders bevorzugt im Bereich von 1,5 cfm bis 15 cfm aufweisen, insbesondere bestimmt gemäß ASTM D737-96 und/oder insbesondere bestimmt bei einem Differenzdruck (Strömungswiderstand) von 127 Pascal.

Im Allgemeinen kann im Rahmen der vorliegenden Erfindung das Schutz- und/oder Filtermaterial 1 eine Gasdurchlässigkeit, insbesondere Luftdurchlässigkeit, im Bereich von 0,5 mm/s bis 100 mm/s, insbesondere im Bereich von 1 mm/s bis 100 mm/s, vorzugsweise im Bereich von 2,5 mm/s bis 80 mm/s, besonders bevorzugt im Bereich von 3,5 mm/s bis 60 mm/s, ganz besonders bevorzugt im Bereich von 5 mm/s bis 50 mm/s, aufweisen, insbesondere bestimmt gemäß DIN EN ISO 9237 und/oder insbesondere bestimmt bei einem Differenzdruck (Strömungswiderstand) von 127 Pascal.

Insbesondere kann das Schutz- und/oder Filtermaterial 1 die vorgenannten Gasdurchlässigkeiten, insbesondere Luftdurchlässigkeiten, unabhängig voneinander, jeweils im ungewaschenen und unbenutzten (insbesondere neuen) Zustand aufweisen. Gleichermaßen kann das Schutz- und/oder Filtermaterial 1 die vorgenannten Gasdurchlässigkeiten, insbesondere Luftdurchlässigkeiten, unabhängig voneinander, jeweils auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweisen.

Erfindungsgemäß kann es dabei auch vorgesehen sein, dass die zuvor genannten Gasdurchlässigkeiten, insbesondere Luftdurchlässigkeiten, unabhängig voneinander, nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3,5 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Erfindungsgemäß kann es zudem vorgesehen sein, dass die zuvor genannten Gasdurchlässigkeiten, insbesondere Luftdurchlässigkeiten, unabhängig voneinander, nach 10 Waschzyklen, insbesondere gemäß DIN ISO 6330 4M (Trocknung F), jeweils um höchstens 15 %, insbesondere höchstens 10 %, vorzugsweise höchstens 7 %, bevorzugt höchstens 5 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Erfindungsgemäß kann es sich auch derart verhalten, dass die zuvor genannten Gasdurchlässigkeiten, insbesondere Luftdurchlässigkeiten, unabhängig voneinander, nach 20 Waschzyklen, insbesondere gemäß DIN ISO 6330 4M (Trocknung F), jeweils um höchstens 20 %, insbesondere höchstens 15 %, vorzugsweise höchstens 12 %, bevorzugt höchstens 10 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1. Erfindungsgemäß kann es sich weiterhin auch so verhalten, dass die zuvor genannten Gasdurchlässigkeiten, insbesondere Luftdurchlässigkeiten, unabhängig voneinander, nach 40 Waschzyklen, insbesondere gemäß DIN ISO 6330 4M (Trocknung F), jeweils um höchstens 30 %, insbesondere höchstens 25 %, vorzugsweise höchstens 20 %, bevorzugt höchstens 10 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Infolge der hohen Gas- bzw. Luftdurchlässigkeit auch des erfindungsgemäßen Schutz- bzw. Filtermaterials 1 als solches weist eine auf dieser Basis hergestellte Schutzbekleidung einen hohen Tragekomfort bei gleichzeitig hoher Schutzfunktion auf. Zudem ergeben sich für technische Filteranwendungen hohe Durchströmraten bei gleichzeitig hoher Filtereffizienz. Dabei wird die Luftdurchlässigkeit auch nach mehreren Regenerations- bzw. Waschvorgängen nicht übermäßig erhöht, insbesondere da die Partikel- bzw. Aerosolfilterschicht 3 auch unter Regenerations- bzw. Wascheinwirkung zumindest im Wesentlichen intakt bleibt.

Wie zuvor angeführt, weist das erfindungsgemäße Schutz- bzw. Filtermaterial 1 auch eine hervorragende Filtereffizienz gegenüber Schad- bzw. Giftstoffen auf, und dies auch nach zahlreichen Regenerations- bzw. Waschvorgängen:
So kann das Schutz- und/oder Filtermaterial 1 insgesamt einen Abscheidegrad (Abscheideeffizienz) von mindestens 80 %, insbesondere von mindestens 85 %, vorzugsweise von mindestens 90 %, bevorzugt mindestens 95 %, aufweist, bestimmt gemäß ISO 29463-3 bei einer Druckdifferenz von 15 Pascal und/oder bei einer Durchströmgeschwindigkeit von 5 m/s sowie bei einer Temperatur von 23 °C ± 3 °C und mit Kaliumchlorid (KCI) als Testsubstanz bei einer Partikelgröße im Bereich von 0,045 µm bis 0,931 µm und mit einer Aerosolkonzentration von < 3 mg/m³ sowie insbesondere bei einem Flächendurchmesser (Probengröße) des Schutz- und/oder Filtermaterials 1 von 150 mm und bei einer Testdauer von 300 s. Die vorgegebene Druckdifferenz bzw. Durchströmgeschwindigkeit bezieht sich dabei auf das heranzuziehende Material in Form des Schutz- und/oder Filtermaterials 1.

Zudem kann das Schutz- und/oder Filtermaterial 1 einen Abscheidegrad (Abscheideeffizienz), insbesondere Fraktionsabscheidegrad, von mindestens 80 %, insbesondere von mindestens 85 %, vorzugsweise von mindestens 90 %, aufweisen, bestimmt nach DIN EN 1822 bei einer Druckdifferenz von 15 Pascal mit Kaliumchlorid (KCI) als Testsubstanz (insbesondere 1 %) als Mindestwirkungsgrad (MPPS, insbesondere MPPS = 0,1 µm bis 0,3 µm).

Weiterhin kann das Schutz- und/oder Filtermaterial 1 einen Abscheidegrad (Abscheideeffizienz) von mindestens 80 %, insbesondere von mindestens 85 %, vorzugsweise von mindestens 90 %, aufweisen, insbesondere bestimmt nach DIN EN 1822 und/oder insbesondere bestimmt bei einer Anströmgeschwindigkeit von 5,33 cm/s und/oder einer Flussrate von 32 l/min mit DOP (Dioctylphthalat) als Testsubstanz (DOP-Partikelgröße = 0,3 µm), insbesondere als Mindestwirkungsgrad (MPPS, insbesondere MPPS = 0,1 µm bis 0,3 µm).

Insbesondere weist das Schutz- und/oder Filtermaterial 1 die vorgenannten Abscheidegrade (Abscheideeffizienzen), unabhängig voneinander, jeweils im ungewaschenen und unbenutzten (insbesondere neuen) Zustand des Schutz- und/oder Filtermaterials 1 auf. Erfindungsgemäß kann das Schutz- und/oder Filtermaterial 1 die jeweiligen vorgenannten Abscheidegrade (Abscheideeffizienzen), unabhängig voneinander, auch nach 5 oder mehr Waschzyklen, insbesondere nach 10 oder mehr Waschzyklen, vorzugsweise nach 20 oder mehr Waschzyklen, bevorzugt nach 40 oder mehr Waschzyklen, insbesondere gemäß DIN ISO 6330 4M (Trocknung F), aufweisen. Die hohe Filterleistung auch nach zahlreichen Waschzyklen wird insbesondere durch die hervorragende Regenerationsbeständigkeit, insbesondere Waschbeständigkeit, des erfindungsgemäßen Schutz- bzw. Filtermaterials 1 mit der speziellen Partikel- und/oder Aerosolfilterschicht 3 gewährleistet.

Insbesondere können die zuvor definierten Abscheidegrade, unabhängig voneinander, nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3 %, verringert sein, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Weiterhin können die zuvor definierten Abscheidegrade, unabhängig voneinander, nach 10 Waschzyklen, insbesondere gemäß DIN ISO 6330 4M (Trocknung F), jeweils um höchstens 15 %, insbesondere höchstens 10 %, vorzugsweise höchstens 7 %, bevorzugt höchstens 5 %, verringert sein, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Darüber hinaus können die zuvor definierten Abscheidegrade, unabhängig voneinander, nach 20 Waschzyklen, insbesondere gemäß DIN ISO 6330 4M (Trocknung F), jeweils um höchstens 20 %, insbesondere höchstens 15 %, vorzugsweise höchstens 12 %, bevorzugt höchstens 10 %, verringert sein, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Erfindungsgemäß können die zuvor definierten Abscheidegrade, unabhängig voneinander, nach 40 Waschzyklen, insbesondere gemäß DIN ISO 6330 4M (Trocknung F), jeweils um höchstens 30 %, insbesondere höchstens 25 %, vorzugsweise höchstens 20 %, bevorzugt höchstens 15 %, verringert sein, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Infolge des Waschens tritt somit allenfalls eine geringfügige Verringerung der Abscheidegrade auf, so dass auch von daher eine hohe Regenerations- bzw. Waschbeständigkeit vorliegt.

Insbesondere kann der Abscheidegrad (Abscheideeffizienz) nach DIN EN 1822 bei einer Druckdifferenz von 15 Pascal mit Kaliumchlorid (KCI) als Testsubstanz (insbesondere 1 %) als Mindestwirkungsgrad (MPPS, insbesondere MPPS = 0,1 µm bis 0,3 µm) oder bei einer Anströmgeschwindigkeit von 5,33 cm/s und/oder einer Flussrate von 32 l/min mit DOP (Dioctylphthalat) als Testsubstanz (DOP-Partikelgröße = 0,3 µm), insbesondere als Mindestwirkungsgrad (MPPS, insbesondere MPPS = 0,1 µm bis 0,3 µm), bestimmt sein.

Weiterführend kann das Schutz- und/oder Filtermaterial 1 einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweisen.

Weiterhin kann die Partikel- und Aerosolfilterschicht 3 einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweisen.

Erfindungsgemäß kann das Schutz- und/oder Filtermaterial 1 einen integralen Anfangsdurchlassgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweisen.

Weiterhin kann das Schutz- und/oder Filtermaterial 1 bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweisen.

Alternativ oder zusätzlich kann das Schutz- und/oder Filtermaterial 1 bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweisen.

Erfindungsgemäß kann das Schutz- und/oder Filtermaterial 1 den vorgenannten Wirkungsgrad Eₘ und/oder den vorgenannten integralen Anfangsdurchlassgrad Dᵢ und/oder die vorgenannte mittlere Abscheiderate, unabhängig voneinander, jeweils im ungewaschenen und unbenutzten (insbesondere neuen) Zustand aufweisen.

Insbesondere kann das Schutz- und/oder Filtermaterial 1 nach der Erfindung den vorgenannten Wirkungsgrad Eₘ und/oder den vorgenannten integralen Anfangsdurchlassgrad Dᵢ und/oder die vorgenannte mittlere Abscheiderate, unabhängig voneinander, jeweils auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweisen. Auch insofern liegt eine hervorragende Regenerations- und Waschbeständigkeit vor.

Erfindungsgemäß kann es insbesondere vorgesehen sein, dass der Wirkungsgrad Eₘ und/oder die mittlere Abscheiderate des Schutz- und/oder Filtermaterials 1, unabhängig voneinander, nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3 %, verringert sind und/oder wobei der integralen Anfangsdurchlassgrad Dᵢ nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3,5 %, vergrößert ist, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Erfindungsgemäß kann es zudem vorgesehen sein, dass der Wirkungsgrad Eₘ und/oder die mittlere Abscheiderate des Schutz- und/oder Filtermaterials 1, unabhängig voneinander, nach 10 Waschzyklen, insbesondere gemäß DIN ISO 6330 4M (Trocknung F), jeweils um höchstens 15 %, insbesondere höchstens 10 %, vorzugsweise höchstens 7 %, bevorzugt höchstens 5 %, verringert sind und/oder dass der integrale Anfangsdurchlassgrad Dᵢ nach 10 Waschzyklen, jeweils um höchstens 15 %, insbesondere höchstens 10 %, vorzugsweise höchstens 7 %, bevorzugt höchstens 5 %, vergrößert ist, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Erfindungsgemäß kann es weiterhin vorgesehen sein, dass der Wirkungsgrad Eₘ und/oder die mittlere Abscheiderate des Schutz- und/oder Filtermaterials 1, unabhängig voneinander, nach 20 Waschzyklen, insbesondere gemäß DIN ISO 6330 4M (Trocknung F), jeweils um höchstens 20 %, insbesondere höchstens 15 %, vorzugsweise höchstens 10 %, bevorzugt höchstens 5 %, verringert sind.

Besonders bevorzugt ist der integralen Anfangsdurchlassgrad Dᵢ nach 20 Waschzyklen, jeweils um höchstens 20 %, insbesondere höchstens 15 %, vorzugsweise höchstens 10 %, bevorzugt höchstens 5 %, vergrößert, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Erfindungsgemäß kann es weiterführend auch vorgesehen sein, dass der Wirkungsgrad Eₘ und/oder die mittlere Abscheiderate des Schutz- und/oder Filtermaterials 1, unabhängig voneinander, nach 40 Waschzyklen, insbesondere gemäß DIN ISO 6330 4M (Trocknung F), jeweils um höchstens 30 %, insbesondere höchstens 25 %, vorzugsweise höchstens 20 %, bevorzugt höchstens 10 %, verringert sind.

Alternativ oder zusätzlich ist der integrale Anfangsdurchlassgrad Dᵢ nach 40 Waschzyklen, jeweils um höchstens 30 %, insbesondere höchstens 25 %, vorzugsweise höchstens 20 %, bevorzugt höchstens 10 %, vergrößert, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials 1.

Insbesondere kann der Wirkungsgrad Eₘ in diesem Zusammenhang nach DIN EN 779 (Juli 1993) bestimmt sein, insbesondere wobei der integrale Anfangsdurchlassgrad Dᵢ nach DIN EN 1822 (April 1998; DEHS-Aerosol, MPPS = 0,1 bis 0,3 µm) und/oder die mittlere Abscheiderate bei einer Anströmgeschwindigkeit von 0,1 m/s gegenüber Partikeln und/oder Aerosolen mit Durchmessern im Bereich von 0,1 bis 0,3 µm bestimmt ist.

Im Anwendungs- und/der Verwendungszustand des Schutz- und/oder Filtermaterials 1 ist es insbesondere vorgesehen, wie auch zuvor angeführt, dass in Richtung einer Schadstoffquelle die Partikel- bzw. Aerosolfilterschicht 3 vor der Adsorptionsschicht 4 angeordnet und/oder positioniert ist. Hierdurch wird die Adsorptionsschicht 4 entlastet, da Gift- bzw. Schadstoffe zumindest teilweise zuvor von der Partikel- bzw. Aerosolfilterschicht 3 aufgenommen werden.

Im Rahmen der vorliegenden Erfindung kann es sich insbesondere derart verhalten, dass die Partikel- und Aerosolfilterschicht 3 nur abschnittsweise, insbesondere linienförmig und/oder randseitig, zumindest mit einem Teil der weiteren Schichten des Schutz- und/oder Filtermaterials 1, insbesondere mit der Abdeckschicht 2 und/oder der Adsorptionsschicht 4, fest verbunden (hieran befestigt bzw. fixiert) ist, insbesondere mittels Vernähen, Verschweißen, Vertackern, Verkleben oder dergleichen, und im Übrigen lose und/oder unverbunden zu diesen weiteren Schichten des Schutz- und/oder Filtermaterials 1 angeordnet ist, insbesondere auf der Partikel- und Aerosolfilterschicht 3 unmittelbar zugeordneten (unmittelbar benachbarten) Schichten aufliegt.

Demgegenüber kann es erfindungsgemäß vorgesehen sein, dass die Partikel- und Aerosolfilterschicht 3 mit zumindest einer, insbesondere mit beiden, der der Partikel- und Aerosolfilterschicht 3 unmittelbar zugeordneten (unmittelbar benachbarten) und/oder hiermit direkt in Kontakt stehenden Schichten des Schutz- und/oder Filtermaterials 1, insbesondere mit der Abdeckschicht 2 und/oder der Adsorptionsschicht 4, fest verbunden (befestigt, fixiert) und/oder zum Haften gebracht ist, insbesondere zumindest im Wesentlichen vollflächig und/oder zumindest im Wesentlichen ganzseitig fest verbunden (befestigt, fixiert) und/oder zum Haften gebracht, insbesondere laminiert, ist, vorzugsweise zumindest im Wesentlichen vollflächig, aber luftdurchlässig, verbunden (befestigt, fixiert) und/oder zum Haften gebracht, insbesondere laminiert, ist.

Auf Basis der vorgenannten Ausbildungen des erfindungsgemäßen Schutz- bzw. Filtermaterials 1 können flexible bzw. biegsame und gleichermaßen stabile Materialien bereitgestellt werden, und zwar gleichermaßen mit hohem Schutz der Funktionslage 3c der Partikel- bzw. Aerosolfilterschicht 3.

Die vorliegende Erfindung betrifft gemäß dem vorliegenden Aspekt auch das textile Schutz- und/oder Filtermaterial 1, vorzugsweise Adsorptionsfiltermaterial, mit Partikel- und Aerosolfilterfunktion, vorzugsweise mit Waschbeständigkeit, und mit Schutzfunktion gegenüber chemischen und/oder biologischen und/oder radioaktiven Schad- und/oder Kampfstoffen ("ABC- bzw. CBRN-Schutzfunktion"), insbesondere das wie zuvor definierte Schutz- und/oder Filtermaterial,
wobei das Schutz- und/oder Filtermaterial 1 als ein mehrlagiges (mehrschichtiges), eine Mehrzahl von miteinander verbundenen Schichten (Lagen) 2, 3, 4 aufweisendes textiles Verbundmaterial ausgebildet ist und
wobei das Schutz- und/oder Filtermaterial 1 die folgenden Schichten 2, 3, 4 in der nachfolgend genannten Abfolge aufweist:
   (a) eine erste textile Trägerschicht 2, insbesondere erste Abdeckschicht, wobei die erste textile Trägerschicht 2 als ein gasdurchlässiges, textiles Flächengebilde vorliegt und/oder ausgebildet ist;
   (b) eine der ersten textilen Trägerschicht 2 zugeordnete, insbesondere auf der ersten textilen Trägerschicht 2 angeordnete und/oder mit der ersten textilen Trägerschicht 2 verbundene, Partikel- und Aerosolfilterschicht 3,
      wobei die Partikel- und Aerosolfilterschicht 3 als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
      wobei die Partikel- und Aerosolfilterschicht 3 mehrlagig ausgebildet ist, wobei die Partikel- und Aerosolfilterschicht 3 mindestens jeweils eine äußere Trägerlage 3a, 3b und mindestens eine zwischen den äußeren Trägerlagen 3a, 3b angeordnete und mit den äußeren Trägerlagen 3a, 3b verbundene Funktionslage 3c mit Partikel- und Aerosolfiltereigenschaften aufweist,
      wobei die Partikel- und Aerosolfilterschicht 3 als fester Verbund und/oder als Laminat ausgebildet ist, wobei die Lagen 3a, 3c, 3b jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind,
      wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, so dass der Verbund und/oder das Laminat gasdurchlässig, insbesondere luftdurchlässig, ausgebildet ist,
      wobei die Funktionslage 3c ein auf Basis von und/oder aus synthetischen Textilfasern, insbesondere wie zuvor definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist,
      wobei die Funktionslage 3c ein Flächengewicht im Bereich von 0,05 g/m² bis 50 g/m², insbesondere im Bereich von 0,1 g/m² bis 25 g/m², vorzugsweise im Bereich von 0,2 g/m² bis 10 g/m², bevorzugt im Bereich von 0,3 g/m² bis 5 g/m², besonders bevorzugt im Bereich von 0,5 g/m² bis 3 g/m², aufweist, bestimmt gemäß DIN EN 12127, nach 24-stündiger Klimatisierung bei einer Temperatur von 20 °C und einer relativen Luftfeuchtigkeit von 65 %,
      wobei die Funktionslage 3c eine mittlere Porengröße oder mittlere Maschenweite, insbesondere mittlere Porengröße, von höchstens 100 µm, insbesondere von höchstens 50 µm, vorzugsweise von höchstens 20 µm, bevorzugt von höchstens 10 µm, besonders bevorzugt von höchstens 5 µm, weiter bevorzugt von höchstens 3 µm, aufweist, bestimmt gemäß ASTM F316-86, und
      wobei die Trägerlagen 3a, 3b, unabhängig voneinander, jeweils als ein Gelege oder Textilverbundstoff, insbesondere Vlies (Non-Woven), besonders bevorzugt als ein Vlies (Non-Woven), vorzugsweise auf Basis von und/oder aus Textilfasern aus thermoplastischem Polyurethan (Thermoplastisches-Polyurethan-Fasern), ausgebildet sind,
      wobei die Trägerlagen 3a, 3b, unabhängig voneinander, jeweils ein Flächengewicht im Bereich von 1 g/m² bis 100 g/m², insbesondere im Bereich von 2 g/m² bis 75 g/m², vorzugsweise im Bereich von 5 g/m² bis 50 g/m², bevorzugt im Bereich von 8 g/m² bis 40 g/m², besonders bevorzugt im Bereich von 10 g/m² bis 35 g/m², aufweisen, bestimmt gemäß DIN EN 12127, nach 24-stündiger Klimatisierung bei einer Temperatur von 20 °C und einer relativen Luftfeuchtigkeit von 65 %;
   (c) eine der Partikel- und Aerosolfilterschicht 3 zugeordnete, insbesondere auf der Partikel- und Aerosolfilterschicht 3 angeordnete und/oder mit der Partikel- und Aerosolfilterschicht 3 verbundene, diskontinuierlich ausgebildete und/oder gasdurchlässige, bevorzugt luftdurchlässige, Adsorptionsschicht 4,
      wobei die Adsorptionsschicht 4 eine Vielzahl einzelner und/oder diskreter Adsorberpartikel 4a umfasst oder hieraus gebildet ist,
      wobei die Adsorberpartikel 4a der Adsorptionsschicht 4 Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind.

Auch gemäß der obigen speziellen Ausgestaltungen der vorliegenden Erfindung kann das Schutz- bzw. Filtermaterial 1 zudem eine zweite textile Trägerschicht 5 (zweite textile Trägerschicht), insbesondere zweite textile Abdeckschicht 5, aufweisen, wie zuvor angeführt.

Darüber hinaus ist vorliegend beschrieben auch eine Partikel- bzw. Aerosolfilterschicht 3 (Partikel- und/oder Aerosolfiltermaterial), wie sie für das Schutz- bzw. Filtermaterial 1 nach der Erfindung eingesetzt werden kann, vorzugsweise Partikel- und Aerosolfilterschicht 3 (Partikel- und Aerosolfiltermaterial), mit Partikel- und/oder Aerosolfilterfunktion, vorzugsweise mit verbesserter Regenerationsbeständigkeit, insbesondere Waschbeständigkeit, bevorzugt Partikel- und/oder Aerosolfilterschicht 3 (Partikel- und/oder Aerosolfiltermaterial) mit Schutzfunktion gegenüber chemischen und/oder biologischen und/oder radioaktiven Schad- und/oder Kampfstoffen ("ABC- bzw. CBRN-Schutzfunktion"),
wobei die Partikel- und/oder Aerosolfilterschicht 3 als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
wobei die Partikel- und/oder Aerosolfilterschicht 3 mehrlagig ausgebildet ist, wobei die Partikel- und/oder Aerosolfilterschicht 3 mindestens jeweils eine äußere Trägerlage 3a, 3b und mindestens eine zwischen den äußeren Trägerlagen 3a, 3b angeordnete, insbesondere mit den äußeren Trägerlagen 3a, 3b verbundene Funktionslage 3c mit Partikel- und/oder Aerosolfiltereigenschaften, insbesondere mit Partikel- und Aerosolfiltereigenschaften, aufweist;
insbesondere wobei die Partikel- und/oder Aerosolfilterschicht 3 als fester Verbund und/oder als Laminat ausgebildet ist, insbesondere wobei die Lagen 3a, 3c, 3b jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind; und/oder
insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist; und/oder
insbesondere wobei die Funktionslage 3c ein auf Basis von und/oder aus Textilfasern, insbesondere synthetischen Textilfasern, insbesondere wie zuvor definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist; und/oder
insbesondere wobei die Trägerlagen 3a, 3b, unabhängig voneinander, jeweils als ein Gelege oder Textilverbundstoff, insbesondere Vlies (Non-Woven), besonders bevorzugt als ein Vlies (Non-Woven), auf Basis von und/oder aus Textilfasern aus thermoplastischem Polyurethan (Thermoplastisches-Polyurethan-Fasern) ausgebildet sind.

Vorliegend kann es sich dabei insbesondere derart verhalten, dass die Partikel- und/oder Aerosolfilterschicht 3
mit einer ersten textilen Trägerschicht 2, insbesondere ersten Abdeckschicht, wobei die erste textile Trägerschicht 2 als ein vorzugsweise gasdurchlässiges, textiles Flächengebilde vorliegt und/oder ausgebildet ist, und/oder
mit einer zweiten textilen Trägerschicht 5, insbesondere zweiten textilen Abdeckschicht 5, wobei die zweite textile Trägerschicht 5 als ein vorzugsweise gasdurchlässiges, textiles Flächengebilde vorliegt und/oder ausgebildet ist,
   und
gegebenenfalls mit einer Adsorptionsschicht 4, vorzugsweise diskontinuierlich ausgebildeten und/oder gasdurchlässigen, bevorzugt luftdurchlässigen, Adsorptionsschicht 4, wobei die Adsorptionsschicht (4) eine Vielzahl einzelner und/oder diskreter Adsorberpartikel (4a) umfasst oder hieraus gebildet ist,
kombiniert ist und/und oder in Kombination mit den vorgenannten Schichten vorliegt, insbesondere zur Ausbildung eines Schutz- und/oder Filtermaterials 1, bevorzugt wie zuvor definiert.

Diesbezüglich kann es sich insbesondere derart verhalten, dass
die erste textile Trägerschicht 2 auf der einen Seite der Partikel- und/oder Aerosolfilterschicht 3 und die zweite textile Trägerschicht 5 auf der anderen Seite der Partikel- und/oder Aerosolfilterschicht 3 angeordnet ist; und/oder
dass die Adsorptionsschicht 4 der Partikel- und/oder Aerosolfilterschicht 3 zugeordnet ist, vorzugsweise auf der Partikel- und/oder Aerosolfilterschicht 3 angeordnet und/oder mit der Partikel- und/oder Aerosolfilterschicht 3 verbunden ist bzw. dass die Adsorptionsschicht 4 auf der der ersten textilen Trägerschicht 2 abgewandten Seite der Partikel- und/oder Aerosolfilterschicht 3 angeordnet ist bzw. dass die Adsorptionsschicht 4 zwischen der Partikel- und/oder Aerosolfilterschicht 3 und der zweiten textilen Trägerschicht 5 angeordnet ist.

Für weitere Ausführungen zu der vorliegend beschriebenen Partikel- bzw. Aerosolfilterschicht 3 bzw. dem diesbezüglichen Material kann auf obige Ausführungen verwiesen werden, welche vorliegend entsprechend gelten.

Vorliegend beschrieben - gemäß einem weiteren Aspekt - auch die Verwendung von Trägerlagen 3a, 3b zur Stabilisierung einer Funktionslage 3c, wobei die Funktionslage 3c Partikel- und/oder Aerosolfiltereigenschaften, insbesondere Partikel- und Aerosolfiltereigenschaften, aufweist,
wobei die Funktionslage 3c zwischen den Trägerlagen 3a, 3b angeordnet und mit den jeweiligen Trägerlagen 3a, 3b verbunden, vorzugsweise zumindest im Wesentlichen vollflächig und gasdurchlässig, insbesondere luftdurchlässig, verbunden, bevorzugt laminiert, wird;
insbesondere so dass eine mehrlagig ausgebildete und luftdurchlässige Partikel- und/oder Aerosolfilterschicht 3 (Partikel- und/oder Aerosolfiltermaterial), vorzugsweise Partikel- und Aerosolfilterschicht 3 (Partikel- und Aerosolfiltermaterial), insbesondere in Form eines gasdurchlässigen, insbesondere luftdurchlässigen, festen Verbunds und/oder Laminats, insbesondere wie zuvor definiert, erhalten wird, und/oder
insbesondere so dass eine mehrlagig und gasdurchlässig, insbesondere luftdurchlässig, ausgebildete Partikel- und/oder Aerosolfilterschicht 3, insbesondere wie zuvor definiert, erhalten wird, wobei die Partikel- und/oder Aerosolfilterschicht 3 die mindestens jeweils eine äußere Trägerlage 3a, 3b und die mindestens eine zwischen den äußeren Trägerlagen 3a, 3b angeordnete, insbesondere mit den äußeren Trägerlagen 3a, 3b verbundene Funktionslage 3c aufweist.

Vorliegend wird somit auf eine spezielle Verwendung von Trägerlagen 3a, 3b abgestellt, bei welcher mindestens eine Funktionslage 3c zwischen den äußeren Trägerlagen 3a, 3b angeordnet ist und somit sozusagen beidseitig bzw. auf beiden Flachseiten von entsprechenden Trägerlagen 3a, 3b umgeben ist, so dass die Funktionslage(n) 3c beidseitig durch entsprechende Trägerlagen 3a, 3b geschützt ist bzw. sind.

Vorliegend beschrieben - gemäß einem weiteren Aspekt - ist zudem das Verfahren zur Stabilisierung einer Funktionslage 3c, wobei die Funktionslage 3c Partikel- und/oder Aerosolfiltereigenschaften, insbesondere Partikel- und Aerosolfiltereigenschaften, aufweist,
wobei die Funktionslage 3c zwischen Trägerlagen 3a, 3b angeordnet und insbesondere mit den jeweiligen Trägerlagen 3a, 3b verbunden, vorzugsweise zumindest im Wesentlichen vollflächig und luftdurchlässig verbunden, bevorzugt laminiert, wird, insbesondere so dass eine mehrlagig ausgebildete und luftdurchlässige Partikel- und/oder Aerosolfilterschicht 3 (Partikel- und/oder Aerosolfiltermaterial), vorzugsweise Partikel- und Aerosolfilterschicht 3 (Partikel- und Aerosolfiltermaterial), insbesondere wie zuvor definiert, erhalten wird.

Insbesondere ist es vorliegend vorgesehen, dass die Trägerlage 3a auf der einen Seite und/oder Fläche (erste Seite und/oder Fläche) der Funktionslage 3c angeordnet wird und dass die Trägerlage 3b auf der gegenüberliegenden Seite und/oder Fläche (zweite Seite und/oder Fläche) der Funktionslage 3c angeordnet wird.

Vorliegend werden die Lagen 3a, 3c, 3b insbesondere derart angeordnet und/oder verbunden, dass ein gasdurchlässiger, insbesondere luftdurchlässiger, fester Verbund und/oder ein gasdurchlässiges, insbesondere luftdurchlässiges, Laminat resultiert (nämlich in Form der Partikel- und/oder Aerosolfilterschicht 3 (Partikel- und/oder Aerosolfiltermaterial).

In bevorzugter Weise wird die Partikel- und/oder Aerosolfilterschicht 3 als ein gasdurchlässiger, insbesondere luftdurchlässiger, fester Verbund und/oder als ein gasdurchlässiges, insbesondere luftdurchlässiges, Laminat ausgebildet.

Was die vorliegend beschriebene Verwendung bzw. das vorliegend beschriebene Verfahren gemäß den vorgenannten Aspekten anbelangt, so kann es diesbezüglich vorgesehen sein, dass die Lagen 3a, 3c, 3b jeweils an ihren Kontaktflächen fest miteinander verbunden (befestigt, fixiert) und/oder zum Haften gebracht werden, insbesondere zumindest im Wesentlichen vollflächig und/oder zumindest im Wesentlichen ganzseitig fest verbunden (befestigt, fixiert) und/oder zum Haften gebracht, insbesondere laminiert, werden, vorzugsweise zumindest im Wesentlichen vollflächig fest verbunden (befestigt, fixiert) und/oder zum Haften gebracht, insbesondere laminiert, werden, insbesondere so dass eine als fester Verbund und/oder als Laminat ausgebildete Partikel- und/oder Aerosolfilterschicht 3 erhalten wird.

Zudem kann es vorgesehen sein, dass die jeweilige feste Verbindung (Befestigung, Fixierung) und/oder Haftung, insbesondere Laminierung, der Lagen 3a, 3c, 3b vollflächig und/oder über die gesamte Kontaktfläche, aber diskontinuierlich, vorzugsweise punktweise und/oder mit Unterbrechungen, ausgebildet wird, insbesondere so dass der Verbund und/oder das Laminat gasdurchlässig, insbesondere luftdurchlässig, ausgebildet wird.

Hinsichtlich der beiden vorgenannten Aspekte kann in Ergänzung auch auf die Ausführungen zu den weiteren Aspekten bzw. zu den weiteren Aspekten der vorliegenden Erfindung verwiesen werden, welche vorliegend entsprechend gelten.

Vorliegend beschrieben - gemäß einem weiteren Aspekt - ist zudem auch das Verfahren zur Herstellung eines Schutz- und/oder Filtermaterials 1, insbesondere textilen Schutz- und/oder Filtermaterials, vorzugsweise Adsorptionsfiltermaterials, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial 1 mit Schutzfunktion gegenüber chemischen und/oder biologischen und/oder radioaktiven Schad- und/oder Kampfstoffen ("ABC- bzw. CBRN-Schutzfunktion"), insbesondere wie zuvor definiert, wobei
(a) zunächst eine Partikel- und/oder Aerosolfilterschicht 3, vorzugsweise Partikel- und Aerosolfilterschicht 3, bereitgestellt und/oder hergestellt wird,
   wobei die Partikel- und/oder Aerosolfilterschicht 3 als ein gasdurchlässiges textiles Flächengebilde, welches eine Vielzahl einzelner Textilfasern umfasst oder hieraus gebildet ist, ausgebildet wird,
   wobei die Partikel- und/oder Aerosolfilterschicht 3 mehrlagig ausgebildet wird, wobei die Partikel- und/oder Aerosolfilterschicht 3 mindestens jeweils eine äußere Trägerlage 3a, 3b und mindestens eine zwischen den äußeren Trägerlagen 3a, 3b angeordnete, insbesondere mit den äußeren Trägerlagen 3a, 3b verbundene Funktionslage 3c mit Partikel- und/oder Aerosolfiltereigenschaften, insbesondere mit Partikel- und Aerosolfiltereigenschaften, aufweist,
   wobei die Lagen 3a, 3c, 3b jeweils an ihren Kontaktflächen fest miteinander verbunden (befestigt, fixiert) und/oder zum Haften gebracht werden, insbesondere zumindest im Wesentlichen vollflächig und/oder zumindest im Wesentlichen ganzseitig fest verbunden (befestigt, fixiert) und/oder zum Haften gebracht, insbesondere laminiert, werden, insbesondere so dass eine als fester Verbund und/oder als Laminat ausgebildete Partikel- und/oder Aerosolfilterschicht 3 erhalten wird; und/oder
   wobei die jeweilige feste Verbindung (Befestigung, Fixierung) und/oder Haftung, insbesondere Laminierung, der Lagen 3a, 3c, 3b zumindest im Wesentlichen vollflächig und/oder zumindest im Wesentlichen über die gesamte Kontaktfläche, aber diskontinuierlich, vorzugsweise punktweise und/oder mit Unterbrechungen, ausgebildet wird, insbesondere so dass der Verbund und/oder das Laminat gasdurchlässig, insbesondere luftdurchlässig, ausgebildet wird; und wobei anschließend
(b) die Partikel- und/oder Aerosolfilterschicht 3 mit einer ersten textilen Trägerschicht 2, insbesondere ersten Abdeckschicht, ausgerüstet und/oder versehen wird, insbesondere wobei die erste textile Trägerschicht 2 der Partikel- und/oder Aerosolfilterschicht 3 zugeordnet wird und/oder auf einer Seite der Partikel- und/oder Aerosolfilterschicht 3 angeordnet wird, wobei die erste textile Trägerschicht 2 als ein vorzugsweise gasdurchlässiges, bevorzugt luftdurchlässiges, textiles Flächengebilde ausgebildet ist; und
(c) gegebenenfalls die Partikel- und/oder Aerosolfilterschicht 3 mit einer Adsorptionsschicht 4 ausgerüstet und/oder versehen wird, insbesondere wobei die Adsorptionsschicht 4 der Partikel- und/oder Aerosolfilterschicht 3 zugeordnet wird und/oder auf der der ersten Trägerschicht 2 abgewandten Seite, insbesondere Flachseite, der Partikel- und/oder Aerosolfilterschicht 3 angeordnet wird, wobei die Adsorptionsschicht 4 vorzugsweise diskontinuierlich ausgebildet und/oder gasdurchlässig, bevorzugt luftdurchlässig, ausgebildet ist und wobei die Adsorptionsschicht 4 eine Vielzahl einzelner und/oder diskreter Adsorberpartikel 4a umfasst oder hieraus gebildet ist.

In diesem Zusammenhang kann es vorliegend vorgesehen sein, dass die Partikel- und/oder Aerosolfilterschicht 3 nur abschnittsweise, insbesondere linienförmig und/oder randseitig, zumindest mit einem Teil der weiteren Schichten des Schutz- und/oder Filtermaterials 1, insbesondere mit der Trägerschicht 2 und/oder der Adsorptionsschicht 4, fest verbunden (hieran befestigt bzw. fixiert) wird, insbesondere mittels Vernähen, Verschweißen, Vertackern, Verkleben oder dergleichen, und im Übrigen lose und/oder unverbunden zu diesen weiteren Schichten des Schutz- und/oder Filtermaterials 1 angeordnet ist, insbesondere auf den der Partikel- und/oder Aerosolfilterschicht 3 unmittelbar zugeordneten (unmittelbar benachbarten) Schichten aufliegt.

Zudem kann es vorgesehen sein, dass die Partikel- und/oder Aerosolfilterschicht 3 mit zumindest einer, insbesondere mit beiden, der der Partikel- und/oder Aerosolfilterschicht 3 unmittelbar zugeordneten (unmittelbar benachbarten) und/oder hiermit direkt in Kontakt stehenden Schichten des Schutz- und/oder Filtermaterials 1, insbesondere mit der Abdeckschicht 2 und/oder der Adsorptionsschicht 4, fest verbunden (befestigt, fixiert) und/oder zum Haften gebracht wird, insbesondere zumindest im Wesentlichen vollflächig und/oder zumindest im Wesentlichen ganzseitig fest verbunden (befestigt, fixiert) und/oder zum Haften gebracht, insbesondere laminiert, ist, vorzugsweise zumindest im Wesentlichen vollflächig, aber luftdurchlässig, verbunden (befestigt, fixiert) und/oder zum Haften gebracht, insbesondere laminiert, wird.

Hinsichtlich des vorliegenden Aspekts kann in Ergänzung auch auf die Ausführungen zu den weiteren Aspekten bzw. zu den weiteren Aspekten der vorliegenden Erfindung verwiesen werden, welche vorliegend entsprechend gelten.

Die vorliegende Erfindung betrifft weiterhin auch - gemäß einem **weiteren** Aspekt der vorliegenden Erfindung - die erfindungsgemäße Verwendung des Schutz- und/oder Filtermaterials, wie zuvor definiert,
zur Herstellung von Schutzausrüstung und/oder Schutzgegenständen aller Art, insbesondere von Schutzbekleidung, insbesondere für den zivilen oder militärischen Bereich (wie z.B. im militärischen Bereich für militärisches Personal bzw. Soldaten und wie z.B. im zivilen Bereich für im Katastrophen- bzw. Brandeinsatz befindliches Personal, wie Feuerwehrleuten, oder im Rahmen von Industrieanwendungen, beispielsweise in der chemischen Industrie), wie Schutzanzügen, Schutzhandschuhen, Schutzschuhwerk, Schutzsocken, Kopfschutzbekleidung, oder dergleichen, und/oder zur Herstellung von Schutzabdeckungen aller Art, vorzugsweise alle vorgenannten Schutzmaterialien und/oder Schutzbekleidungsstücke für den ABC-Einsatz und/oder mit Schutzfunktion gegenüber chemischen, biologischen und/oder radioaktiven Schad- und Giftstoffen.

Gemäß dem vorliegenden Aspekt betrifft die vorliegende Erfindung auch die Verwendung eines Schutz- und/oder Filtermaterials, wie zuvor definiert,
zur Herstellung von Filtern und Filtermaterialien aller Art, insbesondere zur Entfernung von Schad-, Geruchs- und Giftstoffen aller Art, vorzugsweise zur Entfernung von chemischen biologischen und/oder radioaktiven Schad- und Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Hinsichtlich des vorliegenden Aspekts kann in Ergänzung auch auf die Ausführungen zu den weiteren Aspekten der vorliegenden Erfindung bzw. zu den weiteren Aspekten verwiesen werden, welche vorliegend entsprechend gelten.

Darüber hinaus betrifft die vorliegende Erfindung - gemäß einem nochmals **weiteren** Aspekt der vorliegenden Erfindung - auch die erfindungsgemäßen Schutzausrüstungen und/oder Schutzgegenstände aller Art, insbesondere für den zivilen oder militärischen Bereich (wie z.B. im militärischen Bereich für militärisches Personal bzw. Soldaten und wie z.B. im zivilen Bereich für im Katastrophen- bzw. Brandeinsatz befindliches Personal, wie Feuerwehrleuten, oder im Rahmen von Industrieanwendungen, beispielsweise in der chemischen Industrie), insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber chemischen, biologischen und/oder radioaktiven Schad- und Giftstoffen,
hergestellt unter Verwendung eines Schutz- und/oder Filtermaterials 1, wie zuvor definiert, und/oder aufweisend ein Schutz- und/oder Filtermaterial 1, wie zuvor definiert.

Hinsichtlich des vorliegenden Aspekts kann in Ergänzung auch auf die Ausführungen zu den weiteren Aspekten der vorliegenden Erfindung bzw. zu den weiteren Aspekten verwiesen werden, welche vorliegend entsprechend gelten.

Die vorliegende Erfindung betrifft weiterhin auch - gemäß einem wiederum **weiteren** Aspekt der vorliegenden Erfindung - auch die erfindungsgemäßen Filter und Filtermaterialien aller Art, insbesondere zur Entfernung von Schad-, Geruchs- und Giftstoffen aller Art, vorzugsweise zur Entfernung von chemischen, biologischen und/oder radioaktiven Schad- und Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich,
hergestellt unter Verwendung eines Schutz- und/oder Filtermaterials 1, wie zuvor definiert, und/oder aufweisend ein Schutz- und/oder Filtermaterial 1, wie zuvor definiert.

Hinsichtlich des vorliegenden Aspekts kann in Ergänzung auch auf die Ausführungen zu den weiteren Aspekten der vorliegenden Erfindung bzw. zu den weiteren Aspekten verwiesen werden, welche vorliegend entsprechend gelten.

Insgesamt wird im Rahmen der vorliegenden Erfindung ein leistungsfähiges sowie hocheffizientes Schutz- bzw. Filtermaterial 1 bereitgestellt, welches eine hohe Regenerationsbeständigkeit, insbesondere Waschbeständigkeit, aufweist. Auch infolgedessen eignet sich das erfindungsgemäße Schutz- bzw. Filtermaterial 1 für zahlreiche Einsatz- bzw. Anwendungsmöglichkeiten, wie vorliegend definiert.

Für weitergehende Einzelheiten zu den zuvor beschriebenen erfindungsgemäßen Aspekt kann Bezug genommen werden auf die Ausführungen zu den weiteren erfindungsgemäßen Aspekten bzw. zu den weiteren Aspekten, wobei diese Ausführungen in Bezug auf den vorliegenden Aspekt bzw. das Schutz- bzw. Filtermaterial 1 nach der Erfindung entsprechend gelten.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

1. Es werden unterschiedliche Schutz- bzw. Filtermaterialien bereitgestellt bzw. hergestellt, und zwar
   A) ein erfindungsgemäßes Schutz- bzw. Filtermaterial A mit einer luftdurchlässigen und dreilagig ausgebildeten Partikel- bzw. Aerosolfilterschicht, bei welcher eine Funktionslage zwischen zwei Trägerlagen angeordnet wird, so dass die Funktionslage auf beiden Seiten von jeweils einer äußeren Trägerlage bedeckt bzw. hiermit verbunden ist ("Sandwich-Aufbau"). Die Partikel- bzw. Aerosolfilterschicht wird dabei als fester Verbund mit vollflächiger Verbindung der Schichten bzw. als Laminat ausgebildet;
      die Trägerlagen sind jeweils als Vlies auf Basis von Textilfasern aus thermoplastischem Polyurethan (TPU) ausgebildet, und zwar durch Meltblown-Verfahren ("Meltblown-Vlies aus TPU"). Die jeweiligen Trägerlagen weisen ein Flächengewicht von etwa 30 g/m² auf;
      die partikel- bzw. aerosolfiltrierende Funktionslage weist ein Flächengewicht von etwa 1 g/m² und eine Dicke von etwa 4 µm auf. Die Funktionslage wird durch Elektrospinnen hergestellt und ist als Vlies aus Polyurethan (PUR)-Nanofasern ausgebildet ("Nanofaser-Vlies aus PUR"). Der Faserdurchmesser der in der Funktionslage vorliegenden PUR-Nanofasern beträgt etwa 250 nm bis 350 nm; die mittlere Porengröße der Funktionslage liegt bei etwa 0,8 µm bei einer maximalen Porengröße von etwa 1,5 µm;
      die erhaltene bzw. vorliegende Partikel- bzw. Aerosolfilterschicht weist ein Flächengewicht von etwa 61 g/m² und eine Dicke von etwa 0,2 mm auf;
      das Schutz- bzw. Filtermaterial A wird zudem mit einer Adsorptionsschicht auf Basis kugelförmiger Aktivkohlepartikel ausgerüstet, welche als sogenannte *"fine beads"* vorliegen (Teilchen- bzw. Partikeldurchmesser im Bereich von 0,22 mm bis 0,26 mm); die die Adsorptionsschicht ausbildenden Adsorbentien sind mit der Partikel- und/oder Aerosolfilterschicht fest verbunden, und zwar mittels einer der diesbezüglichen Haftmittelschicht bzw. Trägerlage; hierzu wird ein luftdurchlässiges Klebstoffvlies aus thermoplastischem Polyurethan (TPU) eingesetzt ("Klebstoffvlies bzw. -nonwoven aus schmelzbaren Fasern"); das Flächengewicht des Klebstoffvlies beträgt dabei etwa 16 g/m²;
      auf der der Partikel- bzw. Aerosolfilterschicht abgewandten Seite der Adsorptionsschicht ist weiterhin eine textile Trägerschicht angeordnet, wobei es sich hierbei um ein textiles Material auf Basis einer Baumwolle/Polyester-Mischung (CO/PES) mit einem Flächengewicht von etwa 225 g/m² handelt; die Trägerschicht wird an der Seite bzw. Fläche der Adsorptionsschicht, welche der Partikel- bzw. Aerosolfilterschicht abgewandt ist, mittels einer weiteren Haftmittelschicht in Form Klebepunkten aus thermoplastischem Polyurethan (TPU) bzw. einem reaktiven Heißschmelzklebstoff auf PUR-Basis befestigt;
      weiterhin weist das Schutz- und/oder Filtermaterial A zudem auf der Seite bzw. Fläche der Partikel- und/oder Aerosolfilterschicht, welche der Adsorptionsschicht abgewandt ist, eine textile Trägerschicht auf, welche mittels einer Haftmittelschicht in Form eines luftdurchlässigen Klebstoffvlieses aus thermoplastischem Polyurethan (TPU) an der Partikel- und/oder Aerosolfilterschicht fixiert ist, und zwar auf der der Adsorptionsschicht abgewandten Trägerlage; das diesbezügliche textile Trägermaterial weist ein Flächengewicht von etwa 175 g/m² auf;
      insgesamt resultiert somit ein erfindungsgemäßes Schutz- und/oder Filtermaterial A mit sandwichartigem bzw. dreilagigem Aufbau der Partikel- und/oder Aerosolfilterschicht mit zwischen zwei Trägerlagen angeordneter Funktionslage;
   B) ein weiteres Schutz- bzw. Filtermaterial B (Vergleich), welches dem zuvor in Abschnitt A beschriebenem Material mit der Maßgabe entspricht, dass eine lediglich zweischichtige Partikel- bzw. Aerosolfilterschicht eingesetzt wird, welche eine partikel- bzw. aerosolfiltrierende Funktionslage und lediglich eine hierauf angeordnete bzw. befestigte Trägerlage aufweist; bei dem Schutz- bzw. Filtermaterial B ist die Adsorptionsschicht über ein Klebstoffvlies somit unmittelbar auf bzw. an der Funktionslage der Partikel- und/oder Aerosolfilterschicht fixiert (und zwar auf der der Trägerlage abgewandten, sozusagen freien Seite bzw. Fläche der Funktionslage).
2. Die vorgenannten Schutz- bzw. Filtermaterialien A und B werden hinsichtlich ihrer Regenerations- bzw. Waschbeständigkeit untersucht, wobei entsprechende Proben der jeweiligen Schutz- und/oder Filtermaterialien A bzw. B definierten Wasch- und Trocknungsvorgängen (Waschzyklen) unterzogen werden, und zwar auf Basis der Norm DIN ISO 6330 4M (Trocknung F).
   Zur Beurteilung der Regenerations- bzw. Waschbeständigkeit werden die entsprechenden Aerosol- bzw. Partikelfiltereigenschaften sowie die Luftdurchlässigkeiten der zugrundeliegenden Materialien ermittelt.
   Die Bestimmung der diesbezüglichen Filtereigenschaften erfolgt dabei unter Heranziehung der Norm ISO 29463-3 bei einer Druckdifferenz von 15 Pa und/oder bei einer Durchströmgeschwindigkeit von 5 m/s (die vorgegebene Druckdifferenz bzw. Durchströmgeschwindigkeit bezieht sich dabei auf das untersuchte Material in Form der jeweiligen Schutz- bzw. Filtermaterialien A bzw. B) sowie bei einer Temperatur von 23 °C ± 3 °C und mit Kaliumchlorid (KCI) als Testsubstanz bei einer Partikelgröße im Bereich von 0,045 µm bis 0,931 µm und bei einer Aerosolkonzentration von < 3 mg/m³. Die Untersuchungen erfolgen an jeweiligen Proben der eingesetzten Schutz- bzw. Filtermaterialien A bzw. B bei einem Flächendurchmesser (Probengröße) von 150 mm und einer Testdauer von 300 s.
   In diesem Zusammenhang zeigt Fig. 5A die jeweiligen Partikel- bzw. Aerosolfiltereigenschaften auf Basis der mittleren Filtrationseffizienz des erfindungsgemäßen Schutz- bzw. Filtermaterials A ("Erf") sowie des Vergleich-Schutz- bzw. Vergleich-Filtermaterials B ("Vgl") vor Durchführung von Regenerations- bzw. Waschvorgängen, d. h. im ungewaschenen Zustand bzw. im Ausgangszustand der jeweiligen Materialien, wobei die mittlere Filtrationseffizienz ("FE") in Abhängigkeit von der Partikelgröße in der mobilen Phase ("MPS") angegeben ist; Fig. 5A verdeutlich dabei, dass vor Durchführung von Regenerations- bzw. Waschvorgängen die untersuchten Materialien A, B vergleichbare Partikel- bzw. Aerosolfiltereigenschaften aufweisen.
   Weiterhin zeigt Fig. 5B die Partikel- bzw. Aerosolfiltereigenschaften des erfindungsgemäßen Schutz- bzw. Filtermaterials A ("Erf") einerseits und des Vergleichsmaterials B ("Vgl") nach 40 Waschzyklen, d. h. im gewaschenen bzw. regenerierten Zustand der Materialien; Fig. 5B veranschaulicht dabei, dass für das erfindungsgemäße Material A weiterhin hervorragende Partikel- bzw. Aerosolfiltereigenschaften vorliegen, während demgegenüber für das Vergleichsmaterial B ein erheblicher Rückgang der diesbezüglichen Filtereigenschaften vorliegt.
   Weiterhin zeigt Fig. 6 die Veränderung bzw. den Verlauf der Partikel- bzw. Aerosolfiltereigenschaften des erfindungsgemäßen Materials A ("Erf") und des Vergleichsmaterials B ("Vgl") in Abhängigkeit von der Anzahl an durchgeführten Waschzyklen; während für das erfindungsgemäße Material B ein nur geringer Rückgang der diesbezüglichen Eigenschaften vorliegt, liegt bei dem Vergleichsmaterial B mit zunehmender Anzahl an Waschvorgängen ein deutlicher Rückgang der Partikel- bzw. Aerosolfiltereigenschaften vor;
   Fig. 7 zeigt die Entwicklung der Luftdurchlässigkeit für das erfindungsgemäße Material A ("Erf") einerseits und des Vergleichsmaterials B ("Vgl") andererseits in Abhängigkeit von der Anzahl an Waschzyklen; in diesem Zusammenhang verdeutlicht Fig. 7, dass für das erfindungsgemäße Material A die Luftdurchlässigkeit mit steigender Anzahl der durchgeführten Waschzyklen relativ konstant bleibt bzw. nur leicht abnimmt, während für das Vergleichsmaterial B eine starke Zunahme der Luftdurchlässigkeit zu beobachten ist, was auf eine Desintegration bzw. Zerstörung der Faserstruktur in der Funktionslage zurückzuführt werden kann.

Insgesamt zeigen die Untersuchungen die hervorragende Regenerations- bzw. Waschbeständigkeit des erfindungsgemäßen Schutz- bzw. Filtermaterialien gegenüber dem diesbezüglichen Vergleichsmaterial. Insbesondere verhält es sich für das erfindungsgemäße Schutz- bzw. Filtermaterialien derart, dass die Funktionalität der Partikel- bzw. Aerosolfilterschicht mitsamt der Funktionslage auch nach zahlreichen Waschzyklen erhalten bleibt. Dies ist darauf zurückzuführen, dass die Funktionslage durch die ziel- und zweckgerichtete beidseitige Anordnung von Trägerlagen nachhaltig vor mechanischer Krafteinwirkung während des Waschens bzw. Trocknens geschützt wird und somit auch keine Desintegration bzw. Zerstörung der Funktionslage bzw. der der Funktionslage zugrundeliegenden Faseranordnung und -ausbildung vorliegt. Somit zeigen die obigen Untersuchungen insgesamt die hervorragende Wirksamkeit und Effizienz der erfindungsgemäßen technischen Maßnahmen.

### Bezugszeichenliste

- 1: Schutz- und/oder Filtermaterial
- 2: erste textile Trägerschicht ("erstes textiles Flächengebilde" bzw. "Oberstoff" bzw. "Oberschicht")
- 3: Partikel- und/oder Aerosolfilterschicht
- 3a: äußere Trägerlage
- 3b: äußere Trägerlage
- 3c: Funktionslage
- 4: Adsorptionsschicht
- 4a: Adsorberpartikel
- 5: zweite textile Trägerschicht ("zweites textiles Flächengebilde" bzw. "Innenstoff" bzw. "Innenschicht")
- 6: Zwischenschicht

### Aspekte der vorliegenden Erfindung:

Die vorliegende Erfindung wird im Folgenden durch die nachfolgend genannten Aspekte 1 bis 117 weiterführend beschrieben bzw. offenbart und veranschaulicht:
1. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"),
   wobei das Schutz- und/oder Filtermaterial (1) als ein mehrlagiges (mehrschichtiges), eine Mehrzahl von miteinander verbundenen Schichten (Lagen) (2, 3, 4) aufweisendes textiles Verbundmaterial ausgebildet ist und
   wobei das Schutz- und/oder Filtermaterial (1) die folgenden Schichten (2, 3, 4), vorzugsweise in der nachfolgend genannten Abfolge, aufweist:
      (a) eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges textiles Flächengebilde, welches eine Vielzahl einzelner Textilfasern umfasst oder hieraus gebildet ist, vorliegt und/oder ausgebildet ist und
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist;
      (c) gegebenenfalls eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
      wobei die Adsorptionsschicht (4) eine Vielzahl einzelner und/oder diskreter Adsorberpartikel (4a) umfasst oder hieraus gebildet ist.
2. Schutz- und/oder Filtermaterial nach Aspekt 1,
   wobei die Partikel- und/oder Aerosolfilterschicht (3) mehrlagig, insbesondere dreilagig, ausgebildet ist, wobei die Partikel- und/oder Aerosolfilterschicht (3) die (mindestens eine) erste äußere Trägerlage (3a) und die (mindestens eine) zweite äußere Trägerlage (3b) sowie die (mindestens eine) zwischen der (mindestens einen) ersten äußeren Trägerlage (3a) und der (mindestens einen) zweiten äußeren Trägerlage (3b) angeordnete, Funktionslage (3c) mit Partikel- und/oder Aerosolfiltereigenschaften, insbesondere mit Partikel- und Aerosolfiltereigenschaften, aufweist oder hieraus besteht, wobei die Partikel- und/oder Aerosolfilterschicht (3) als gasdurchlässiger, insbesondere luftdurchlässiger, Verbund, vorzugsweise Laminat, ausgebildet ist.
3. Schutz- und/oder Filtermaterial nach Aspekt 1 oder 2,
   wobei die Partikel- und/oder Aerosolfilterschicht (3) ein (Gesamt-) Flächengewicht von höchstens 200 g/m², insbesondere höchstens 150 g/m², vorzugsweise höchstens 120 g/m², bevorzugt höchstens 100 g/m², besonders bevorzugt höchstens 80 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %; und/oder
   wobei die Partikel- und/oder Aerosolfilterschicht (3) ein (Gesamt-) Flächengewicht im Bereich von 5 g/m² bis 200 g/m², insbesondere im Bereich von 10 g/m² bis 150 g/m², vorzugsweise im Bereich von 15 g/m² bis 120 g/m², bevorzugt im Bereich von 20 g/m² bis 100 g/m², besonders bevorzugt im Bereich von 25 g/m² bis 80 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %.
4. Schutz- und/oder Filtermaterial nach einem der vorangehenden Aspekte,
   wobei die Partikel- und/oder Aerosolfilterschicht (3) eine Dicke, insbesondere Gesamtquerschnittsdicke, von höchstens 5 mm, insbesondere höchstens 3 mm, vorzugsweise höchstens 2 mm, bevorzugt höchstens 1 mm, besonders bevorzugt höchstens 0,75 mm, weiter bevorzugt höchstens 0,5 mm, aufweist, insbesondere bestimmt gemäß DIN EN ISO 9073-2; und/oder
   wobei die Partikel- und/oder Aerosolfilterschicht (3) eine Dicke, insbesondere Gesamtquerschnittsdicke, im Bereich von 0,01 mm bis 5 mm, insbesondere im Bereich von 0,03 mm bis 3 mm, vorzugsweise im Bereich von 0,05 mm bis 2 mm, bevorzugt im Bereich von 0,07 mm bis 1 mm, besonders bevorzugt im Bereich von 0,09 mm bis 0,75 mm, weiter bevorzugt im Bereich von 0,1 mm bis 0,5 mm, aufweist, insbesondere bestimmt gemäß DIN EN ISO 9073-2.
5. Schutz- und/oder Filtermaterial nach einem der vorangehenden Aspekte,
   wobei die Partikel- und/oder Aerosolfilterschicht (3) gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist, bevorzugt luftdurchlässig und wasserdampfdurchlässig ausgebildet ist.
6. Schutz- und/oder Filtermaterial nach einem der vorangehenden Aspekte,
   wobei die Partikel- und/oder Aerosolfilterschicht (3) eine Gasdurchlässigkeit, insbesondere Luftdurchlässigkeit, von mindestens 2 l.m⁻².s⁻¹, insbesondere mindestens 5 l·m⁻²·s⁻¹, vorzugsweise mindestens 10 l·m⁻²·s⁻¹, bevorzugt mindestens 20 l.m⁻².s⁻¹, besonders bevorzugt mindestens 25 l·m⁻²·s⁻¹, aufweist, insbesondere bestimmt gemäß DIN EN ISO 9237 und/oder insbesondere bestimmt bei einem Differenzdruck (Strömungswiderstand) von 127 Pascal; und/oder
   wobei die Partikel- und/oder Aerosolfilterschicht (3) eine Gasdurchlässigkeit, insbesondere Luftdurchlässigkeit, im Bereich von 2 l·m⁻²·s⁻¹ bis 2.000 l.m⁻².s⁻¹, insbesondere im Bereich von 5 l·m⁻²·s⁻¹ bis 1.000 l·m⁻²·s⁻¹, vorzugsweise im Bereich von 10 l·m⁻²·s⁻¹ bis 500 l.m⁻².s⁻¹, bevorzugt im Bereich von 20 l·m⁻²·s⁻¹ bis 300 l.m⁻².s⁻¹, besonders bevorzugt im Bereich von 25 l·m⁻²·s⁻¹ bis 200 l.m⁻².s⁻¹, aufweist, insbesondere bestimmt gemäß DIN EN ISO 9237 und/oder insbesondere bestimmt bei einem Differenzdruck (Strömungswiderstand) von 127 Pascal.
7. Schutz- und/oder Filtermaterial nach einem der vorangehenden Aspekte,
   wobei die Partikel- und/oder Aerosolfilterschicht (3) eine Gasdurchlässigkeit, insbesondere Luftdurchlässigkeit, von mindestens 0,5 cfm (*cubic feet per minute* bzw. Kubikfuß pro Minute), insbesondere mindestens 1 cfm, vorzugsweise mindestens 2 cfm, bevorzugt mindestens 3 cfm, besonders bevorzugt mindestens 4 cfm, aufweist, insbesondere bestimmt gemäß ASTM D737-96 und/oder insbesondere bestimmt bei einem Differenzdruck (Strömungswiderstand) von 127 Pascal; und/oder
   wobei die Partikel- und/oder Aerosolfilterschicht (3) eine Gasdurchlässigkeit, insbesondere Luftdurchlässigkeit, im Bereich von 0,5 cfm bis 150 cfm, insbesondere im Bereich von 1 cfm bis 100 cfm, vorzugsweise im Bereich von 2 cfm bis 75 cfm, bevorzugt im Bereich von 3 cfm bis 50 cfm, besonders bevorzugt im Bereich von 4 cfm bis 25 cfm, aufweist, insbesondere bestimmt gemäß ASTM D737-96 und/oder insbesondere bestimmt bei einem Differenzdruck (Strömungswiderstand) von 127 Pascal; und/oder
   wobei die Partikel- und/oder Aerosolfilterschicht (3) eine Gasdurchlässigkeit, insbesondere Luftdurchlässigkeit, im Bereich von 1 mm/s bis 200 mm/s, insbesondere im Bereich von 2 mm/s bis 150 mm/s, vorzugsweise im Bereich von 3 mm/s bis 120 mm/s, bevorzugt im Bereich von 5 mm/s bis 100 mm/s, besonders bevorzugt im Bereich von 10 mm/s bis 75 mm/s, aufweist, insbesondere bestimmt gemäß DIN EN ISO 9237 und/oder insbesondere bestimmt bei einem Differenzdruck (Strömungswiderstand) von 100 Pascal (127).
8. Schutz- und/oder Filtermaterial nach einem der vorangehenden Aspekte,
   wobei die Partikel- und/oder Aerosolfilterschicht (3) einen Abscheidegrad (Abscheideeffizienz) von mindestens 80 %, insbesondere von mindestens 85 %, vorzugsweise von mindestens 90 %, bevorzugt mindestens 95 %, aufweist, bestimmt gemäß ISO 29463-3 bei einer Druckdifferenz von 15 Pascal und/oder mit einer Durchströmgeschwindigkeit von 5 m/s sowie bei einer Temperatur von 23 °C ± 3 °C und mit Kaliumchlorid (KCI) als Testsubstanz bei einer Partikelgröße im Bereich von 0,045 µm bis 0,931 µm und einer Aerosolkonzentration von < 3 mg/m³ (Testdauer: 300 s); und/oder
   wobei die Partikel- und/oder Aerosolfilterschicht (3) einen Abscheidegrad (Abscheideeffizienz), insbesondere Fraktionsabscheidegrad, von mindestens 80 %, insbesondere von mindestens 85 %, vorzugsweise von mindestens 90 %, bevorzugt von mindestens 95 %, aufweist, bestimmt nach DIN EN 1822 bei einer Druckdifferenz von 15 Pascal mit Kaliumchlorid (KCI) als Testsubstanz (insbesondere 1 %) als Mindestwirkungsgrad (MPPS, insbesondere MPPS = 0,1 µm bis 0,3 µm); und/oder
   wobei die Partikel- und/oder Aerosolfilterschicht (3) einen Abscheidegrad (Abscheideeffizienz) von mindestens 80 %, insbesondere von mindestens 85 %, vorzugsweise von mindestens 90 %, bevorzugt von mindestens 95 %, aufweist, insbesondere bestimmt nach DIN EN 1822 und/oder insbesondere bestimmt bei einer Anströmgeschwindigkeit von 5,33 cm/s und/oder einer Flussrate von 32 l/min mit DOP (Dioctylphthalat) als Testsubstanz (DOP-Partikelgröße = 0,3 µm), insbesondere als Mindestwirkungsgrad (MPPS, insbesondere MPPS = 0,1 µm bis 0,3 µm).
9. Schutz- und/oder Filtermaterial nach einem der vorangehenden Aspekte,
   wobei die Partikel- und/oder Aerosolfilterschicht (3) einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweist und/oder wobei die Partikel- und/oder Aerosolfilterschicht (3) einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweist; und/oder
   wobei die Partikel- und/oder Aerosolfilterschicht (3) einen integralen Anfangsdurchlassgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweist; und/oder
   wobei die Partikel- und/oder Aerosolfilterschicht (3) bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist und/oder wobei die Partikel- und/oder Aerosolfilterschicht (3) bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweist.
10. Schutz- und/oder Filtermaterial nach einem der vorangehenden Aspekte,
   wobei die Partikel- und/oder Aerosolfilterschicht (3), insbesondere die Funktionslage (3c), als ein HEPA-Filter (*High Efficiency Penetration* oder *Particulate Air*) oder ULPA-Filter (*Ultra Low Penetration* oder *Particulate Air*) ausgebildet ist.
11. Schutz- und/oder Filtermaterial nach einem der vorangehenden Aspekte,
   wobei die Funktionslage (3c) eine Dicke, insbesondere Querschnittsdicke, von höchstens 50 µm, insbesondere höchstens 25 µm, vorzugsweise höchstens 20 µm, bevorzugt höchstens 15 µm, besonders bevorzugt höchstens 10 µm, weiter bevorzugt höchstens 6 µm, aufweist, insbesondere bestimmt gemäß DIN EN ISO 9073-2; und/oder
   wobei die Funktionslage (3c) eine Dicke, insbesondere Querschnittsdicke, im Bereich von 0,5 µm bis 50 µm, insbesondere im Bereich von 1 µm bis 25 µm, vorzugsweise im Bereich von 1,25 µm bis 20 µm, bevorzugt im Bereich von 1,5 µm bis 15 µm, besonders bevorzugt im Bereich von 1,75 µm bis 10 µm, weiter bevorzugt im Bereich von 2 µm bis 6 µm, aufweist, insbesondere bestimmt gemäß DIN EN ISO 9073-2.
12. Schutz- und/oder Filtermaterial nach einem der vorangehenden Aspekte,
   wobei die Funktionslage (3c) ein Flächengewicht von höchstens 50 g/m², insbesondere höchstens 25 g/m², vorzugsweise höchstens 10 g/m², bevorzugt höchstens 5 g/m², besonders bevorzugt höchstens 3 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %; und/oder
   wobei die Funktionslage (3c) ein Flächengewicht im Bereich von 0,05 g/m² bis 50 g/m², insbesondere im Bereich von 0,1 g/m² bis 25 g/m², vorzugsweise im Bereich von 0,2 g/m² bis 10 g/m², bevorzugt im Bereich von 0,3 g/m² bis 5 g/m², besonders bevorzugt im Bereich von 0,5 g/m² bis 3 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %.
13. Schutz- und/oder Filtermaterial nach einem der vorangehenden Aspekte,
   wobei die Funktionslage (3c) gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist, bevorzugt luftdurchlässig und wasserdampfdurchlässig ausgebildet ist.
14. Schutz- und/oder Filtermaterial nach einem der vorangehenden Aspekte,
   wobei die Funktionslage (3c) mindestens eine Textilfaser (Funktionslagen-Textilfaser), vorzugsweise eine Vielzahl an Textilfasern, aufweist und/oder hieraus gebildet ist; und/oder wobei die Funktionslage (3c) eine Vielzahl einzelner Textilfasern (Funktionslagen-Textilfasern) aufweist und/oder hieraus gebildet ist; und/oder wobei die Funktionslage (3c) als gasdurchlässiges textiles Flächengebilde, welches eine Vielzahl einzelner Textilfasern umfasst oder hieraus gebildet ist, vorliegt und/oder ausgebildet ist.
15. Schutz- und/oder Filtermaterial nach einem der vorangehenden Aspekte,
   wobei die Textilfasern der Funktionslage (3c) einen Faserdurchmesser von höchstens 1.500 nm, insbesondere höchstens 1.000 nm, vorzugsweise höchstens 800 nm, bevorzugt höchstens 600 nm, besonders bevorzugt höchstens 400 nm, aufweisen, insbesondere bestimmt gemäß DIN 53 811; und/oder
   wobei die Textilfasern der Funktionslage (3c) einen Faserdurchmesser im Bereich von 10 nm bis 1.500 nm, insbesondere im Bereich von 50 nm bis 1.000 nm, vorzugsweise im Bereich von 100 nm bis 800 nm, bevorzugt im Bereich von 150 nm bis 600 nm, besonders bevorzugt im Bereich von 200 nm bis 400 nm, aufweisen, insbesondere bestimmt gemäß DIN 53 811.
16. Schutz- und/oder Filtermaterial nach einem der vorangehenden Aspekte,
   wobei die Textilfasern der Funktionslage (3c) synthetische Fasern (Chemiefasern) sind; und/oder wobei die Textilfasern der Funktionslage (3c) ein Material aus der Gruppe von Polyurethanen (PU); Polyestern (PES); Polyolefinen (PO), wie Polyethylen (PE), Polypropylen (PP), Polyoxyethylen und Polyoxypropylen; Polyvinylchloriden (CLF); Polyvinylidenchloriden (CLF); Acetaten (CA); Triacetaten (CTA); Polyacryl (PAN), insbesondere Polyacrylnitrilen; Polyamiden (PA); Polyvinylalkohol (PVAL); Polyvinylestern; Poly(meth-)acrylaten; Polyvinylidenfluoriden (PVDF); sowie deren Mischungen und Kombinationen, vorzugsweise aus der Gruppe von Polyurethanen; Polyestern, Polyolefinen, Polyamiden, Polyacrylnitrilen, Poly(meth-)acrylaten und Polyvinylidenfluoriden; deren Copolymeren und deren Mischungen sowie Kombinationen, bevorzugt aus der Gruppe von Polyurethanen; Polyestern, Polyolefinen und Polyamiden; deren Copolymeren und deren Mischungen sowie Kombinationen, ganz besonders bevorzugt Polyurethanen, umfassen oder hieraus bestehen; und/oder
   wobei die Textilfasern der Funktionslage (3c) ausgewählt sind aus der Gruppe von Polyurethanfasern; Polyesterfasern, Polyolefinfasern und Polyamidfasern; deren Copolymeren sowie deren Kombinationen, insbesondere Polyurethanfasern.
17. Schutz- und/oder Filtermaterial nach einem der vorangehenden Aspekte,
   wobei die Funktionslage (3c) Textilfasern, ausgewählt aus der Gruppe von Polyurethanfasern; Polyesterfasern, Polyolefinfasern und Polyamidfasern; und deren Mischungen sowie Kombinationen, insbesondere Polyurethan-fasern, umfasst oder hieraus besteht; und/oder
   wobei die Textilfasern der Funktionslage (3c) Polyurethanfasern sind; und/oder wobei die Funktionslage (3c) Polyurethanfasern umfasst oder hieraus besteht.
18. Schutz- und/oder Filtermaterial nach einem der Aspekte 15 bis 17,
   wobei die Funktionslage (3c) die Textilfasern (Funktionslagen-Textilfasern) in einer Menge von mindestens 50 Gew.-%, insbesondere mindestens 75 Gew.-%, vorzugsweise mindestens 90 Gew.-%, bevorzugt mindestens 95 Gew.-%, besonders bevorzugt mindestens 98 Gew.-%, weiter bevorzugt mindestens 99 Gew.-%, bezogen auf die Funktionslage (3c), aufweist oder wobei die Funktionslage (3c) aus den Textilfasern (Funktionslagen-Textilfasern) besteht.
19. Schutz- und/oder Filtermaterial nach einem der vorangehenden Aspekte,
   wobei die Funktionslage (3c) durch Elektrospinnen, Spunbonding-Verfahren, Meltblow-Verfahren oder eine Kombination dieser Verfahren, vorzugsweise durch eine Kombination von Elektrospinnen und Meltblow-Verfahren oder aber durch Elektrospinnen, vorzugsweise durch Elektrospinnen, hergestellt ist.
20. Schutz- und/oder Filtermaterial nach einem der vorangehenden Aspekte,
   wobei die Funktionslage (3c) als ein Gelege oder Textilverbundstoff, insbesondere Vlies (Non-Woven), besonders bevorzugt als ein Vlies (Non-Woven), ausgebildet ist; und/oder
   wobei die Funktionslage (3c) als ein Gelege oder Textilverbundstoff, insbesondere Vlies (Non-Woven), besonders bevorzugt als ein Vlies (Non-Woven), auf Basis von und/oder aus Polyurethanfasern ausgebildet ist und/oder vorliegt.
21. Schutz- und/oder Filtermaterial nach einem der vorangehenden Aspekte,
   wobei die Funktionslage (3c) ein auf Basis von und/oder aus Textilfasern, insbesondere synthetischen Textilfasern, insbesondere wie in einem der Aspekte 15 bis 18 definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist.
22. Schutz- und/oder Filtermaterial nach einem der vorangehenden Aspekte,
   wobei die Funktionslage (3c) eine mittlere Porengröße oder mittlere Maschenweite, insbesondere mittlere Porengröße, von höchstens 100 µm, insbesondere von höchstens 50 µm, vorzugsweise von höchstens 20 µm, bevorzugt von höchstens 10 µm, besonders bevorzugt von höchstens 5 µm, weiter bevorzugt von höchstens 3 µm, aufweist, insbesondere bestimmt gemäß ASTM F316-86; und/oder
   wobei die Funktionslage (3c) eine mittlere Porengröße oder mittlere Maschenweite, insbesondere mittlere Porengröße, im Bereich von 0,05 µm bis 100 µm, insbesondere im Bereich von 0,1 µm bis 50 µm, vorzugsweise im Bereich von 0,2 µm bis 20 µm, bevorzugt im Bereich von 0,3 µm bis 10 µm, besonders bevorzugt im Bereich von 0,4 µm bis 5 µm, weiter bevorzugt im Bereich von 0,5 µm bis 3 µm, aufweist, insbesondere bestimmt gemäß ASTM F316-86; und/oder
   wobei die Funktionslage (3c) eine maximale Porengröße oder maximale Maschenweite, insbesondere maximale Porengröße, von bis zu 200 µm, insbesondere von bis zu 100 µm, vorzugsweise von bis zu 50 µm, bevorzugt von höchstens 20 µm, besonders bevorzugt von bis zu 10 µm, weiter bevorzugt von bis zu 4 µm, aufweist, insbesondere bestimmt gemäß ASTM F316-86.
23. Schutz- und/oder Filtermaterial nach einem der vorangehenden Aspekte,
   wobei die Funktionslage (3c) Poren oder Maschen, vorzugsweise Poren, insbesondere eine Vielzahl von Poren oder Maschen, vorzugsweise eine Vielzahl von Poren, aufweist;
   insbesondere wobei die mittlere Porengröße oder mittlere Maschenweite, insbesondere die mittlere Porengröße, höchstens 100 µm, insbesondere höchstens 50 µm, vorzugsweise höchstens 20 µm, bevorzugt höchstens 10 µm, besonders bevorzugt höchstens 5 µm, weiter bevorzugt höchstens 3 µm, beträgt, insbesondere bestimmt gemäß ASTM F316-86; und/oder
   insbesondere wobei die mittlere Porengröße oder mittlere Maschenweite, insbesondere die mittlere Porengröße, im Bereich von 0,05 µm bis 100 µm, insbesondere im Bereich von 0,1 µm bis 50 µm, vorzugsweise im Bereich von 0,2 µm bis 20 µm, bevorzugt im Bereich von 0,3 µm bis 10 µm, besonders bevorzugt im Bereich von 0,4 µm bis 5 µm, weiter bevorzugt im Bereich von 0,5 µm bis 3 µm, liegt, insbesondere bestimmt gemäß ASTM F316-86.
24. Schutz- und/oder Filtermaterial nach einem der vorangehenden Aspekte,
   wobei die Funktionslage (3c) ein auf Basis von und/oder aus Textilfasern, insbesondere synthetische Textilfasern, insbesondere wie in einem der Aspekte 15 bis 18 definiert, vorzugsweise Polyurethanfasern, gebildetes textiles Flächengebilde mit einer durch die Textilfasern begrenzten Vielzahl von Poren oder Maschen, insbesondere Poren, ist;
   insbesondere wobei das Verhältnis der mittleren Porengröße oder Maschenweite, insbesondere mittleren Porengröße, zum mittleren Durchmesser der Textilfasern im Bereich von 0,05 bis 5.000, insbesondere im Bereich von 0,1 bis 1.000, vorzugsweise im Bereich von 1 bis 500, bevorzugt im Bereich von 5 bis 250, besonders bevorzugt im Bereich von 10 bis 100, liegt.
25. Schutz- und/oder Filtermaterial nach einem der vorangehenden Aspekte,
   wobei die Trägerlagen (3a, 3b) derart angeordnet sind, dass die Partikel- und/oder Aerosolfilterschicht (3) mindestens eine, vorzugsweise eine, auf der der Trägerschicht (2) zugewandten Seite und/oder Fläche der Funktionslage (3c) angeordnete Trägerlage (3a) (erste Trägerlage (3a)) und mindestens eine, vorzugsweise eine, auf der der Trägerschicht (2) abgewandten Seite und/oder Fläche der Funktionslage (3c) angeordnete Trägerlage (3b) (zweite Trägerlage (3b)) aufweist.
26. Schutz- und/oder Filtermaterial nach einem der vorangehenden Aspekte,
   wobei die Trägerlagen (3a, 3b), unabhängig voneinander, jeweils ein Flächengewicht von höchstens 100 g/m², insbesondere höchstens 75 g/m², vorzugsweise höchstens 50 g/m², bevorzugt höchstens 40 g/m², besonders bevorzugt höchstens 35 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %; und/oder
   wobei die Trägerlagen (3a, 3b), unabhängig voneinander, jeweils ein Flächengewicht im Bereich von 1 g/m² bis 100 g/m², insbesondere im Bereich von 2 g/m² bis 75 g/m², vorzugsweise im Bereich von 5 g/m² bis 50 g/m², bevorzugt im Bereich von 8 g/m² bis 40 g/m², besonders bevorzugt im Bereich von 10 g/m² bis 35 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %.
27. Schutz- und/oder Filtermaterial nach einem der vorangehenden Aspekte,
   wobei die auf der der Trägerschicht (2) zugewandten Seite und/oder Fläche der Funktionslage (3c) angeordnete Trägerlage (3a) (erste Trägerlage (3a)) und die auf der der Trägerschicht (2) abgewandten Seite und/oder Fläche der Funktionslage (3c) angeordnete Trägerlage (3b) (zweite Trägerlage (3b)) zumindest im Wesentlichen identische Flächengewichte, insbesondere wie in Aspekt 26 definiert, aufweisen; oder
   wobei die auf der der Trägerschicht (2) zugewandten Seite und/oder Fläche der Funktionslage (3c) angeordnete Trägerlage (3a) (erste Trägerlage (3a)) ein größeres Flächengewicht als die auf der der Trägerschicht (2) abgewandten Seite und/oder Fläche der Funktionslage (3c) angeordnete Trägerlage (3b) (zweite Trägerlage (3b)) aufweist,
   insbesondere wobei die erste Trägerlage (3a) ein Flächengewicht von höchstens 100 g/m², insbesondere höchstens 75 g/m², vorzugsweise höchstens 50 g/m², bevorzugt höchstens 40 g/m², besonders bevorzugt höchstens 35 g/m², aufweist und wobei die zweite Trägerlage (3b) ein Flächengewicht im Bereich von höchstens 50 g/m², insbesondere höchstens 35 g/m², vorzugsweise höchstens 25 g/m², bevorzugt höchstens 20 g/m², besonders bevorzugt höchstens 15 g/m², aufweist, insbesondere jeweils bestimmt gemäß DIN EN 12127, vorzugsweise nach 24-stündiger Klimatisierung bei einer Temperatur von 20 °C und einer relativen Luftfeuchtigkeit von 65 %; und/oder
   insbesondere wobei das Verhältnis des Flächengewichts der ersten Trägerlage (3a) zu dem Flächengewicht der zweiten Trägerlage (3b) (Flächengewicht der ersten Trägerlage (3a) : Flächengewicht der zweiten Trägerlage (3b)) im Bereich von 1,05 : 1 bis 20 : 1, insbesondere im Bereich von 1,1 : 1 bis 15 : 1, vorzugsweise im Bereich von 1,2 : 1 bis 10 : 1, bevorzugt im Bereich von 1,3 : 1 bis 5 : 1, besonders bevorzugt im Bereich von 1,5 : 1 bis 3 : 1, liegt.
28. Schutz- und/oder Filtermaterial nach einem der vorangehenden Aspekte,
   wobei die Trägerlagen (3a, 3b), unabhängig voneinander, jeweils eine Dicke, insbesondere Querschnittsdicke, von höchstens 2,5 mm, insbesondere höchstens 1,5 mm, vorzugsweise höchstens 1 mm, bevorzugt höchstens 0,5 mm, besonders bevorzugt höchstens 0,25 mm, weiter bevorzugt höchstens 0,1 mm, aufweisen, insbesondere bestimmt gemäß DIN EN ISO 9073-2; und/oder
   wobei die Trägerlagen (3a, 3b), unabhängig voneinander, jeweils eine Dicke, insbesondere Querschnittsdicke, im Bereich von 0,001 mm bis 2,5 mm, insbesondere im Bereich von 0,005 mm bis 1,5 mm, vorzugsweise im Bereich von 0,01 mm bis 1 mm, bevorzugt im Bereich von 0,02 mm bis 0,5 mm, besonders bevorzugt im Bereich von 0,04 mm bis 0,25 mm, weiter bevorzugt im Bereich von 0,05 mm bis 0,1 mm, aufweisen, insbesondere bestimmt gemäß DIN EN ISO 9073-2; und/oder
   wobei die auf der der Trägerschicht (2) zugewandten Seite und/oder Fläche der Funktionslage (3c) angeordnete Trägerlage (3a) (erste Trägerlage (3a)) und die auf der der Trägerschicht (2) abgewandten Seite und/oder Fläche der Funktionslage (3c) angeordnete Trägerlage (3b) (zweite Trägerlage (3b)) zumindest im Wesentlichen identische Dicken, insbesondere Querschnittsdicken, insbesondere wie zuvor definiert, aufweisen.
29. Schutz- und/oder Filtermaterial nach einem der vorangehenden Aspekte,
   wobei die auf der der Trägerschicht (2) zugewandten Seite und/oder Fläche der Funktionslage (3c) angeordnete Trägerlage (3a) (erste Trägerlage (3a)) eine größere Dicke, insbesondere größere Querschnittsdicke, als die auf der der Trägerschicht (2) abgewandten Seite und/oder Fläche der Funktionslage (3c) angeordnete Trägerlage (3b) (zweite Trägerlage (3b)) aufweist,
   insbesondere wobei die Trägerlage (3a) eine Dicke, insbesondere Querschnittsdicke, von höchstens 2,5 mm, insbesondere höchstens 1,5 mm, vorzugsweise höchstens 1 mm, bevorzugt höchstens 0,5 mm, besonders bevorzugt höchstens 0,25 mm, weiter bevorzugt höchstens 0,1 mm, aufweist und wobei die Trägerlage (3b) eine Dicke, insbesondere Querschnittsdicke, von höchstens 1,25 mm, insbesondere höchstens 0,75 mm, vorzugsweise höchstens 0,5 mm, bevorzugt höchstens 0,25 mm, besonders bevorzugt höchstens 0,125 mm, weiter bevorzugt höchstens 0,05 mm, aufweist, insbesondere jeweils bestimmt gemäß DIN EN ISO 9073-2; und/oder
   insbesondere wobei das Verhältnis der Dicke, insbesondere Querschnittsdicke, der Trägerlage (3a) zu der Dicke, insbesondere Querschnittsdicke, der Trägerlage (3b) (Dicke, insbesondere Querschnittsdicke, der Trägerlage (3a) : Dicke, insbesondere Querschnittsdicke, der Trägerlage (3b)) im Bereich von 1,05 : 1 bis 20 : 1, insbesondere im Bereich von 1,1 : 1 bis 15 : 1, vorzugsweise im Bereich von 1,2 : 1 bis 10 : 1, bevorzugt im Bereich von 1,3 : 1 bis 5 : 1, besonders bevorzugt im Bereich von 1,5 : 1 bis 3 : 1, liegt.
30. Schutz- und/oder Filtermaterial nach einem der vorangehenden Aspekte,
   wobei die Trägerlagen (3a, 3b), unabhängig voneinander, jeweils gasdurchlässig, insbesondere luftdurchlässig, und/oder wasserdampfdurchlässig ausgebildet sind, vorzugsweise gasdurchlässig, insbesondere luftdurchlässig, und wasserdampfdurchlässig ausgebildet sind, bevorzugt luftdurchlässig und wasserdampfdurchlässig ausgebildet sind.
31. Schutz- und/oder Filtermaterial nach einem der vorangehenden Aspekte,
   wobei die Trägerlagen (3a, 3b), unabhängig voneinander, jeweils durch Meltblow-Verfahren, Spunbonding-Verfahren, Elektrospinnen oder eine Kombination dieser Verfahren, vorzugsweise durch eine Kombination von Meltblow-Verfahren und Elektrospinnen oder aber durch Meltblow-Verfahren, vorzugsweise durch Meltblow-Verfahren, hergestellt sind.
32. Schutz- und/oder Filtermaterial nach einem der vorangehenden Aspekte,
   wobei die Trägerlagen (3a, 3b), unabhängig voneinander, jeweils als ein Gelege oder Textilverbundstoff, insbesondere Vlies (Non-Woven), besonders bevorzugt als ein Vlies (Non-Woven), ausgebildet sind; und/oder
   wobei die Trägerlagen (3a, 3b), unabhängig voneinander, jeweils als ein Gelege oder Textilverbundstoff, insbesondere Vlies (Non-Woven), besonders bevorzugt als ein Vlies (Non-Woven), auf Basis von und/oder aus Textilfasern aus thermoplastischem Polyurethan (Thermoplastisches-Polyurethan-Fasern) ausgebildet sind.
33. Schutz- und/oder Filtermaterial nach einem der vorangehenden Aspekte,
   wobei die Trägerlagen (3a, 3b), unabhängig voneinander, jeweils mindestens eine Textilfaser (Trägerlagen-Textilfaser), vorzugsweise eine Vielzahl an Textilfasern (Trägerlagen-Textilfasern), aufweisen und/oder hieraus gebildet sind; und/oder wobei die Trägerlagen (3a, 3b), unabhängig voneinander, jeweils eine Vielzahl einzelner Textilfasern aufweisen oder hieraus bestehen; und/oder wobei die Trägerlagen (3a, 3b), unabhängig voneinander, jeweils als gasdurchlässiges textiles Flächengebilde, welches eine Vielzahl einzelner Textilfasern umfasst oder hieraus besteht, vorliegen und/oder ausgebildet sind.
34. Schutz- und/oder Filtermaterial nach einem der vorangehenden Aspekte,
   wobei die Textilfasern der Trägerlagen (3a, 3b), unabhängig voneinander, jeweils einen Faserdurchmesser von höchstens 50 µm, insbesondere höchstens 30 µm, vorzugsweise höchstens 25 µm, bevorzugt höchstens 20 µm, aufweisen, insbesondere bestimmt gemäß DIN 53 811; und/oder
   wobei die Textilfasern der die Trägerlagen (3a, 3b), unabhängig voneinander, jeweils einen Faserdurchmesser im Bereich von 20 nm bis 2.000 nm, insbesondere im Bereich von 0,1 µm bis 50 µm, insbesondere im Bereich von 1 µm bis 30 µm, vorzugsweise im Bereich von 1,5 µm bis 25 µm, bevorzugt im Bereich von 2 µm bis 20 µm, aufweisen, insbesondere bestimmt gemäß DIN 53 811.
35. Schutz- und/oder Filtermaterial nach einem der vorangehenden Aspekte,
   wobei die Textilfasern der Trägerlagen (3a, 3b), unabhängig voneinander, jeweils synthetische Fasern (Chemiefasern) sind; und/oder wobei die Textilfasern der Trägerlagen (3a, 3b), unabhängig voneinander, jeweils ein Material aus der Gruppe von Polyurethanen (PU), vorzugsweise thermoplastischen Polyurethanen (TPU); Polyestern (PES); Polyamiden (PA); Polyolefinen (PO), wie Polyethylen (PE), Polypropylen (PP); Polyoxyethylen und Polyoxypropylen; Polyvinylchloriden (CLF); Polyvinylidenchloriden (CLF); Acetaten (CA); Triacetaten (CTA); Polyacryl (PAN), insbesondere Polyacrylnitrilen; Polyvinylalkohol (PVAL); Polyvinylestern; Poly(meth-)acrylaten; Polyvinylidenfluoriden (PVDF); deren Copolymeren und deren Mischungen sowie Kombinationen, vorzugsweise aus der Gruppe von thermoplastischen Polyurethanen (TPU); Polyestern (PES); Polyamiden (PA); Polyolefinen (PO); deren Copolymeren und deren Mischungen sowie Kombinationen, bevorzugt aus der Gruppe von thermoplastischen Polyurethanen (TPU); deren Copolymeren und deren Mischungen sowie Kombinationen, ganz besonders bevorzugt thermoplastischen Polyurethanen (TPU), umfassen oder hieraus bestehen; und/oder
   wobei die Textilfasern der Trägerlagen (3a, 3b), unabhängig voneinander, ausgewählt sind aus der Gruppe von Textilfasern aus thermoplastischem Polyurethan (Thermoplastisches-Polyurethan-Fasern); Polyesterfasern; Polyamidfasern; Polyolefinfasern; und deren Mischungen sowie Kombinationen; und/oder
   wobei die Textilfasern der Trägerlagen (3a, 3b), unabhängig voneinander, jeweils Textilfasern aus thermoplastischem Polyurethan (Thermoplastisches-Polyurethan-Fasern) sind;
   und/oder wobei die Trägerlagen (3a, 3b), unabhängig voneinander, jeweils Textilfasern aus thermoplastischem Polyurethan (Thermoplastisches-Polyurethan-Fasern) aufweisen oder hieraus bestehen.
36. Schutz- und/oder Filtermaterial nach einem der vorangehenden Aspekte,
   wobei die Trägerlagen (3a, 3b), unabhängig voneinander, jeweils die Textilfasern (Trägerlagen-Textilfasern) in einer Menge von mindestens 50 Gew.-%, insbesondere mindestens 75 Gew.-%, vorzugsweise mindestens 90 Gew.-%, bevorzugt mindestens 95 Gew.-%, besonders bevorzugt mindestens 98 Gew.-%, weiter bevorzugt mindestens 99 Gew.-%, bezogen auf die jeweilige Trägerlage (3a, 3b), aufweisen oder wobei die Trägerlagen (3a, 3b), unabhängig voneinander, jeweils aus den Textilfasern (Trägerlagen-Textilfasern) bestehen.
37. Schutz- und/oder Filtermaterial nach einem der Aspekte 1 bis 36,
   wobei die Trägerlagen (3a, 3b) aus Textilfasern aus demselben Material, insbesondere wie in einem der Aspekte 34 bis 36 definiert, vorzugsweise jeweils Textilasern aus thermoplastischem Polyurethan (Thermoplastisches-Polyurethan-Fasern), gebildet sind oder hieraus bestehen; und/oder
   wobei die auf der der Trägerschicht (2) zugewandten Seite und/oder Fläche der Funktionslage (3c) angeordnete Trägerlage (3a) (erste Trägerlage (3a)) und die auf der der Trägerschicht (2) abgewandten Seite und/oder Fläche der Funktionslage (3c) angeordnete Trägerlage (3b) (zweite Trägerlage (3b)) aus Textilfasern aus demselben Material, insbesondere wie in einem der Aspekte 34 bis 36 definiert, vorzugsweise Textilfasern aus thermoplastischem Polyurethan (Thermoplastisches-Polyurethan-Fasern), gebildet sind oder hieraus bestehen.
38. Schutz- und/oder Filtermaterial nach einem der Aspekte 1 bis 36,
   wobei die Trägerlagen (3a, 3b) aus Textilfasern aus unterschiedlichen Materialien, insbesondere jeweils wie in einem der Aspekte 34 bis 36 definiert, gebildet sind oder bestehen; und/oder
   wobei die auf der der Trägerschicht (2) zugewandten Seite und/oder Fläche der Funktionslage (3c) angeordnete Trägerlage (3a) (erste Trägerlage (3a)) und die auf der der Trägerschicht (2) abgewandten Seite und/oder Fläche der Funktionslage (3c) angeordnete Trägerlage (3b) (zweite Trägerlage (3b)) aus Textilfasern aus voneinander verschiedenen Materialien, insbesondere jeweils wie in einem der Aspekte 34 bis 36 definiert, gebildet sind oder hieraus bestehen.
39. Schutz- und/oder Filtermaterial nach einem der vorangehenden Aspekte,
   wobei die Partikel- und/oder Aerosolfilterschicht (3) eine oder mehrere, insbesondere zwei, drei oder mehr, Funktionslage(n) (3c), bevorzugt eine (einzige) Funktionslage (3c), aufweist; und/oder
   wobei die Partikel- und/oder Aerosolfilterschicht (3) auf der der Trägerschicht (2) zugewandten Seite und/oder Fläche der Funktionslage (3c) eine oder mehrere, insbesondere zwei, drei oder mehr, Trägerlage(n) (3a) (erste Trägerlage(n) (3a)), vorzugsweise eine (einzige) Trägerlage (3a), aufweist; und/oder
   wobei die Partikel- und/oder Aerosolfilterschicht (3) auf der der Trägerschicht (2) abgewandten Seite und/oder Fläche der Funktionslage (3c) eine oder mehrere, insbesondere zwei, drei oder mehr, Trägerlage(n) (3b) (zweite Trägerlage(n) (3b)), vorzugsweise eine (einzige) Trägerlage (3b), aufweist.
40. Schutz- und/oder Filtermaterial nach einem der vorangehenden Aspekte,
   wobei die Partikel- und/oder Aerosolfilterschicht (3) aus einer oder mehreren, Funktionslage(n) (3c), vorzugsweise einer (einzigen) Funktionslage (3c), und einer (einzigen) auf der der Trägerschicht (2) zugewandten Seite und/oder Fläche der Funktionslage (3c) angeordneten Trägerlage (3a) und einer (einzigen) auf der der Trägerschicht (2) abgewandten Seite und/oder Fläche der Funktionslage (3c) angeordneten Trägerlage (3b) besteht und/oder hieraus gebildet ist.
41. Schutz- und/oder Filtermaterial nach einem der Aspekte 1 bis 40,
   wobei die Partikel- und/oder Aerosolfilterschicht (3) aus der mindestens einen Funktionslage (3c), insbesondere der einen Funktionslage (3c), und der jeweils einen äußeren Trägerlage (3a, 3b) besteht und/oder hieraus gebildet ist, wobei die Funktionslage(n) (3c) zwischen der jeweils einen äußeren Trägerlage (3a, 3b) angeordnet ist; und/oder
   wobei die Partikel- und/oder Aerosolfilterschicht (3) aus der Funktionslage (3c) und einer auf der der Trägerschicht (2) zugewandten Seite und/oder Fläche der Funktionslage (3c) angeordneten Trägerlage (3a) (erste Trägerlage (3a)) und einer auf der der Trägerschicht (2) abgewandten Seite und/oder Fläche der Funktionslage (3c) angeordneten Trägerlage (3b) (zweite Trägerlage (3b)) besteht bzw. hieraus gebildet ist, insbesondere wobei die Partikel- und/oder Aerosolfilterschicht (3) dreilagig, insbesondere als dreilagiger Verbund, bevorzugt fester Verbund, und/oder als dreilagiges Laminat, ausgebildet ist.
42. Schutz- und/oder Filtermaterial nach einem der Aspekte 1 bis 40,
   wobei die Partikel- und/oder Aerosolfilterschicht (3) aus der Funktionslage (3c) und einer auf der der Trägerschicht (2) zugewandten Seite und/oder Fläche der Funktionslage (3c) angeordneten Trägerlage (3a) (erste Trägerlage (3a)) und einer auf der der Trägerschicht (2) abgewandten Seite und/oder Fläche der Funktionslage (3c) angeordneten Trägerlage (3b) (zweite Trägerlage (3b)) besteht bzw. hieraus gebildet ist.
43. Schutz- und/oder Filtermaterial nach einem der vorangehenden Aspekte,
   wobei die Partikel- und/oder Aerosolfilterschicht (3) als fester Verbund und/oder als Laminat ausgebildet ist; insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind;
   insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist.
44. Schutz- und/oder Filtermaterial nach einem der vorangehenden Aspekte,
   wobei die Funktionslage (3c) mit den jeweiligen Trägerlagen (3a, 3b), insbesondere mit den jeweiligen der Funktionslage (3c) unmittelbar zugeordneten (unmittelbar benachbarten) und/oder hiermit direkt in Kontakt stehenden Trägerlagen (3a, 3b), fest verbunden (befestigt, fixiert) und/oder zum Haften gebracht ist, insbesondere zumindest im Wesentlichen vollflächig und/oder zumindest im Wesentlichen ganzseitig fest verbunden (befestigt, fixiert) und/oder zum Haften gebracht, insbesondere laminiert, ist, vorzugsweise zumindest im Wesentlichen vollflächig verbunden (befestigt, fixiert) und/oder zum Haften gebracht, insbesondere laminiert, ist,
   insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist.
45. Schutz- und/oder Filtermaterial nach einem der vorangehenden Aspekte,
   wobei die feste Verbindung (Befestigung, Fixierung) und/oder Haftung, insbesondere Laminierung, der Funktionslage (3c) mit den jeweiligen Trägerlagen (3a, 3b), insbesondere mit den jeweiligen der Funktionslage (3c) unmittelbar zugeordneten (unmittelbar benachbarten) und/oder hiermit direkt in Kontakt stehenden Trägerlagen (3a, 3b), durch die Eigenklebrigkeit der die Funktionslage (3c) ausbildenden Textilfasern und/oder der die Trägerlagen (3a, 3b) ausbildenden Textilfasern, insbesondere im Rahmen der Herstellung der Partikel- und/oder Aerosolfilterschicht (3), und/oder mittels eines diskontinuierlich, vorzugsweise punktweise und/oder mit Unterbrechungen, aufgebrachten Klebstoffs, vorzugsweise auf Basis eines thermoplastischen Polyurethans (TPU), erfolgt ist und/oder bereitgestellt ist.
46. Schutz- und/oder Filtermaterial nach einem der vorangehenden Aspekte,
   wobei die erste textile Trägerschicht (2) als ein gasdurchlässiges, insbesondere luftdurchlässiges, textiles Flächengebilde, insbesondere als textile Maschenware, bevorzugt als Gewirke (Wirkware) oder Gestrick (Strickware), oder insbesondere als Gewebe, Gelege, Vlies oder Textilverbundstoff, ausgebildet ist; und/oder
   wobei die erste textile Trägerschicht (2) Naturtextilfasern und/oder synthetische Textilfasern (Chemiefasern), vorzugsweise synthetische Textilfasern, umfasst oder hieraus gebildet ist; und/oder
   wobei die erste textile Trägerschicht (2) synthetische Fasern (Chemiefasern) gegebenenfalls in Kombination mit Naturfasern, bevorzugt Baumwollfasern, umfasst oder hieraus gebildet ist; und/oder
   wobei die erste textile Trägerschicht (2) Elastan (EL), insbesondere Elastanfasern, umfasst; und/oder
   wobei die erste textile Trägerschicht (2) ein Flächengewicht im Bereich von 5 g/m² bis 400 g/m², insbesondere im Bereich von 10 g/m² bis 300 g/m², vorzugsweise im Bereich von 20 g/m² bis 250 g/m², besonders bevorzugt im Bereich von 30 g/m² bis 175 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %; und/oder
   wobei die erste textile Trägerschicht (2) eine Dicke, insbesondere Querschnittsdicke, im Bereich von 0,001 mm bis 10 mm, insbesondere im Bereich von 0,01 mm bis 8 mm, vorzugsweise im Bereich von 0,05 mm bis 4 mm, bevorzugt im Bereich von 0,075 mm bis 2 mm, besonders bevorzugt im Bereich von 0,1 mm bis 2 mm, weiter bevorzugt im Bereich von 0,15 mm bis 1 mm, aufweist, insbesondere bestimmt gemäß DIN EN ISO 5084; und/oder
   wobei die erste textile Trägerschicht (2) eine Gasdurchlässigkeit, insbesondere Luftdurchlässigkeit, von mindestens 1,5 l.m⁻².s⁻¹, insbesondere mindestens 3 l.m⁻².s⁻¹, vorzugsweise mindestens 7 l.m⁻².s⁻¹, bevorzugt mindestens 10 l.m⁻².s⁻¹, besonders bevorzugt mindestens 20 l·m⁻²·s⁻¹ aufweist, insbesondere bestimmt gemäß DIN EN ISO 9237 und/oder insbesondere bestimmt bei einem Differenzdruck (Strömungswiderstand) von 127 Pascal.
47. Schutz- und/oder Filtermaterial nach einem der vorangehenden Aspekte,
   wobei die erste textile Trägerschicht (2) ein Material, insbesondere Textilfasermaterial, bevorzugt Textilfasern, ausgewählt aus der Gruppe von Naturstoffen und Synthetikstoffen, insbesondere ausgewählt aus der Gruppe von Baumwolle (CO); Wolle; Leinen; Polyestern; Polyolefinen, Polyvinylchlorid; Polyvinylidenchlorid; Acetaten, insbesondere Celluloseacetaten; Triacetaten, insbesondere Cellulosetriacetaten; Aramiden, insbesondere Meta- und/oder Para-Amiden; gegebenenfalls modifizierten und/oder regenerierten Cellulosen; Polyacryl; Polyamid; Polyvinylalkohol; Polyurethanen; Polyvinylestern; modifizierten und/oder regenerierten Cellulosen, insbesondere Viskose; und deren Mischungen oder Kombinationen, vorzugsweise ausgewählt aus der Gruppe von modifizierten und/oder regenerierten Cellulosen, insbesondere Viskose; Aramiden, insbesondere Meta- und/oder Para-Amiden; Polyamid und deren Mischungen oder Kombinationen, aufweist oder hieraus besteht.
48. Schutz- und/oder Filtermaterial nach einem der vorangehenden Aspekte,
   wobei die erste textile Trägerschicht (2) schwerentflammbar und/oder flammhemmend und/oder feuerbeständig und/oder flammbeständig ausgebildet ist und/oder wobei das erste textile Abdeckmaterial (8) mindestens ein schwerentflammbares und/der flammhemmendes und/oder feuerbeständiges und/oder flammbeständiges Material, insbesondere in Form oder als Bestandteil eines Garns und/oder Zwirns und/oder Fadens, aufweist;
   insbesondere wobei das feuerbeständige und/oder flammbeständige Material mindestens ein Aramid, insbesondere Meta-Aramid und/oder Para-Aramid, und/oder eine modifizierte und/oder regenerierte Cellulose, ist; und/oder
   insbesondere wobei die erste textile Trägerschicht (2) das schwerentflammbare und/oder flammhemmende und/oder feuerbeständige und/oder flammbeständige Material in einer Menge im Bereich von 1 Gew.-% bis 100 Gew.-%, insbesondere 2 Gew.-% bis 95 Gew.-%, vorzugsweise 5 Gew.-% bis 90 Gew.-%, bezogen auf die erste textile Trägerschicht (2), aufweist.
49. Schutz- und/oder Filtermaterial nach einem der vorangehenden Aspekte,
   wobei die erste textile Trägerschicht (2) antistatisch ausgebildet ist und/oder wobei das erste textile Abdeckmaterial (8) mindestens ein antistatisches Material, insbesondere in Form oder als Bestandteil eines Garns und/oder Zwirns und/oder Fadens, aufweist;
   insbesondere wobei die erste textile Trägerschicht (2) das antistatische Material in einer Menge im Bereich von 0,1 Gew.-% bis 10 Gew.-%, insbesondere 0,2 Gew.-% bis 5 Gew.-%, vorzugsweise 0,5 Gew.-% bis 3 Gew.-%, bezogen auf die erste textile Trägerschicht (2), aufweist.
50. Schutz- und/oder Filtermaterial nach einem der vorangehenden Aspekte,
   wobei die erste textile Trägerschicht (2) eine oleophobe und/oder hydrophobe Ausrüstung und/oder Beschichtung aufweist.
51. Schutz- und/oder Filtermaterial nach einem der vorangehenden Aspekte,
   wobei die erste textile Trägerschicht (2) unmittelbar auf der Partikel- und/oder Aerosolfilterschicht (3) angeordnet ist und/oder hiermit verbunden ist; und/oder
   wobei die erste textile Trägerschicht (2) auf der Trägerlage (3a) (erste Trägerlage (3a)), welche auf der der Trägerschicht (2) zugewandten Seite und/oder Fläche der Funktionslage (3c) positioniert ist, angeordnet und/oder hiermit verbunden ist.
52. Schutz- und/oder Filtermaterial nach einem der Aspekte 1 bis 51,
   wobei die erste textile Trägerschicht (2) nur abschnittsweise, insbesondere linienförmig und/oder randseitig mit der Partikel- und/oder Aerosolfilterschicht (3) und/oder den weiteren Schichten des Schutz- und/oder Filtermaterials (1) fest verbunden (hieran befestigt bzw. fixiert) ist, insbesondere mittels Vernähen, Verschweißen, Vertackern, Verkleben oder dergleichen, und im Übrigen lose und/oder unverbunden auf der Partikel- und/oder Aerosolfilterschicht (3) angeordnet ist, insbesondere hierauf aufliegt.
53. Schutz- und/oder Filtermaterial nach einem der Aspekte 1 bis 51,
   wobei die erste textile Trägerschicht (2) und die Partikel- und/oder Aerosolfilterschicht (3) an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind;
   insbesondere wobei die feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist.
54. Schutz- und/oder Filtermaterial nach Aspekt 53,
   wobei die erste textile Trägerschicht (2) mittels einer ersten Haftmittelschicht (Erste-Trägerschicht-Haftmittelschicht) auf der Partikel- und/oder Aerosolfilterschicht (3) angeordnet und/oder mit der Partikel- und/oder Aerosolfilterschicht (3) verbunden (befestigt, fixiert) ist.
55. Schutz- und/oder Filtermaterial nach Aspekt 54,
   wobei die erste Haftmittelschicht als eine wasserdampf- und/oder gasdurchlässige, bevorzugt luftdurchlässige, und/oder diskontinuierlich ausgebildete Klebstoffschicht, vorzugsweise auf Basis eines Klebstoffpolymers, bevorzugt in Form von insbesondere (wärme-) schmelzbaren Kunststofffasern, vorliegt und/oder ausgebildet ist.
56. Schutz- und/oder Filtermaterial nach Aspekt 54 oder 55,
   wobei die erste Haftmittelschicht als ein Gelege oder Faserverbundstoff, insbesondere Vlies (Non-Woven), besonders bevorzugt als ein Vlies (Non-Woven), auf Basis von und/oder aus insbesondere (wärme-)schmelzbaren Kunststofffasern, insbesondere aus einem thermoplastischen Polyurethan (TPU), ausgebildet ist und/oder vorliegt.
57. Schutz- und/oder Filtermaterial nach einem der Aspekte 54 bis 56,
   wobei die erste Haftmittelschicht ein Material, insbesondere einen Klebstoff, aus der Gruppe von thermoplastischen Polyurethanen (TPU); Co-Polyestern (Co-PES); Co-Polyamiden (Co-PA); Polyolefinen (PO); deren Mischungen sowie Kombinationen, vorzugsweise thermoplastischen Polyurethanen (TPU), umfasst oder hieraus besteht, vorzugsweise hieraus besteht; und/oder
   wobei die Kunststofffasern der ersten Haftmittelschicht ausgewählt sind aus der Gruppe von Kunststofffasern aus thermoplastischem Polyurethan (Thermoplastisches-Polyurethan-Fasern); Co-Polyesterfasern; Co-Polyamidfasern; Polyolefinfasern; und deren Mischungen sowie Kombinationen; und/oder
   wobei die ersten Haftmittelschicht Kunststofffasern aus thermoplastischem Polyurethan (Thermoplastisches-Polyurethan-Fasern) aufweist oder hieraus besteht.
58. Schutz- und/oder Filtermaterial nach einem der Aspekte 54 bis 57,
   wobei die erste Haftmittelschicht, bezogen auf das Trockengewicht der Haftmittelschicht bzw. des Klebstoffs, ein Flächengewicht im Bereich von 5 g/m² bis 100 g/m², insbesondere im Bereich von 7 g/m² bis 75 g/m², vorzugsweise im Bereich von 10 g/m² bis 50 g/m², besonders bevorzugt im Bereich von 10 g/m² bis 30 g/m², aufweist.
59. Schutz- und/oder Filtermaterial nach einem der vorangehenden Aspekte,
   wobei die Adsorberpartikel (4a) der Adsorptionsschicht (4) ausgewählt sind aus der Gruppe von
      (i) insbesondere partikulärer Aktivkohle und/oder Aktivkohlepartikeln, vorzugsweise in Form von Aktivkohlepartikeln in Kornform ("Kornkohle") oder Aktivkohlepartikeln Kugelform ("Kugelkohle");
      (ii) Zeolithen, insbesondere natürlichen und/oder synthetischen Zeolithen;
      (iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
      (iv) Metalloxid- und/oder Metallpartikeln;
      (v) Ionenaustauscherharzen, insbesondere polydispersen und/oder monodispersen Kationen- und/oder Anionenaustauschern, insbesondere vom Geltyp und/oder makroporösen Typ;
      (vi) anorganischen Oxiden, insbesondere Siliciumdioxiden, Silicagelen und/oder Aluminiumoxiden;
      (vii) porösen organischen Polymeren und/oder porösen organischanorganischen Hybridpolymeren und/oder metallorganischen Gerüstmaterialien, insbesondere MOFs (*Metall Organic Framework*), COFs (*Covalent Organic Framework*), ZIFs (*Zeolithe Imidazolate Framework*), POMs (*Polymer Organic Material*) und/oder OFCs;
      (viii) mineralischen Granulaten;
      (ix) Klathraten; sowie
      (x) deren Mischungen und/oder Kombinationen;
   wobei (i) besonders bevorzugt ist.
60. Schutz- und/oder Filtermaterial nach einem der vorangehenden Aspekte,
   wobei die Adsorberpartikel (4a) der Adsorptionsschicht (4) Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind; und/oder
   wobei die Adsorberpartikel (4a) der Adsorptionsschicht (4) Aktivkohlefasern und/oder Aktivkohlefilamente, insbesondere in Form eines Aktivkohlefaserflächengebildes, sind.
61. Schutz- und/oder Filtermaterial nach einem der vorangehenden Aspekte,
   wobei die Adsorberpartikel (4a), insbesondere die Aktivkohlepartikel, eine Partikelgröße, insbesondere einen Teilchendurchmesser, im Bereich von 0,05 mm bis 1 mm, insbesondere im Bereich von 0,075 mm bis 0,5 mm, vorzugsweise im Bereich von 0,1 mm bis 0,4 mm, bevorzugt im Bereich von 0,125 mm bis 0,35 mm, besonders bevorzugt im Bereich von 0,15 mm bis 0,3 mm, weiter bevorzugt im Bereich von 0,2 mm bis 0,28 mm, insbesondere bestimmt gemäß ASTM D2862, aufweisen,
   insbesondere wobei mindestens 80 Gew.-%, insbesondere mindestens 90 Gew.-%, vorzugsweise mindestens 95 Gew.-%, bevorzugt mindestens 99 Gew.-%, der Adsorberpartikel (4a), insbesondere der Aktivkohlepartikel, Partikelgrößen, insbesondere Teilchendurchmesser, in den vorgenannten Bereichen aufweisen.
62. Schutz- und/oder Filtermaterial nach einem der vorangehenden Aspekte,
   wobei die Adsorberpartikel (4a), insbesondere die Aktivkohlepartikel, eine mittlere Partikelgröße (D₅₀), insbesondere einen mittleren Teilchendurchmesser (D₅₀), im Bereich von 0,06 mm bis 0,9 mm, insbesondere im Bereich von 0,09 mm bis 0,4 mm, vorzugsweise im Bereich von 0,12 mm bis 0,35 mm, bevorzugt im Bereich von 0,15 mm bis 0,31 mm, besonders bevorzugt im Bereich von 0,19 mm bis 0,29 mm, weiter bevorzugt im Bereich von 0,21 mm bis 0,27 mm, insbesondere bestimmt gemäß ASTM D2862, aufweisen.
63. Schutz- und/oder Filtermaterial nach einem der vorangehenden Aspekte,
   wobei die Adsorptionsschicht (4) ein Flächengewicht (insbesondere bestimmt als Trockengewicht) im Bereich von 5 g/m² bis 500 g/m², insbesondere 10 g/m² bis 300 g/m², vorzugsweise 30 g/m² bis 200 g/m², bevorzugt 40 g/m² bis 150 g/m², aufweist, insbesondere bestimmt gemäß DIN EN 12127, vorzugsweise nach 1-stündiger Trocknung bei 105 °C; und/oder
   wobei die Adsorberpartikel (4a), insbesondere die Aktivkohlepartikel, in einer Menge im Bereich von 5 g/m² bis 500 g/m², insbesondere 10 g/m² bis 300 g/m², vorzugsweise 30 g/m² bis 200 g/m², bevorzugt 40 g/m² bis 150 g/m², eingesetzt werden und/oder wobei das Schutzmaterial (1), insbesondere die Adsorptionsschicht (4), die Adsorberpartikel (4a), insbesondere die Aktivkohlepartikel, in einer Menge im Bereich von 5 g/m² bis 500 g/m², insbesondere 10 g/m² bis 300 g/m², vorzugsweise 30 g/m² bis 200 g/m², bevorzugt 40 g/m² bis 150 g/m², aufweist; und/oder
   wobei die Adsorberpartikel (4a), insbesondere der Aktivkohlepartikel, erhältlich sind durch Carbonisierung und nachfolgende Aktivierung eines synthetischen und/oder nicht-naturstoffbasierten partikulären Ausgangsmaterials, insbesondere auf Basis organischer Polymerpartikel; und/oder
   wobei die Adsorberpartikel (4a), insbesondere der Aktivkohlepartikel, aus einem partikulären Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten wird, insbesondere durch Carbonisierung und nachfolgende Aktivierung des Ausgangsmaterials, insbesondere wobei der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt; und/oder
   wobei die Adsorberpartikel (4a), insbesondere der Aktivkohlepartikel, auf Basis einer polymerbasierten sphärischen Aktivkohle (PBSAC; *Polymerbased Spherical Activated Carbon*) ausgebildet sind und/oder wobei die Adsorberpartikel (4a), insbesondere der Aktivkohlepartikel, aus einer polymerbasierten sphärischen Aktivkohle (PBSAC) gebildet sind.
64. Schutz- und/oder Filtermaterial nach einem der vorangehenden Aspekte,
   wobei die Adsorberpartikel (4a) der Adsorptionsschicht (4) Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform, sind;
   insbesondere wobei die Aktivkohle ein Gesamtporenvolumen, insbesondere ein Gesamtporenvolumen nach Gurvich, im Bereich von 0,3 cm³/g bis 3,8 cm³/g, insbesondere im Bereich von 0,4 cm³/g bis 3,5 cm³/g, vorzugsweise im Bereich von 0,5 cm³/g bis 3 cm³/g, besonders bevorzugt im Bereich von 0,6 cm³/g bis 2,5 cm³/g, ganz besonders bevorzugt im Bereich von 0,5 cm³/g bis 1,5 cm³/g, aufweist; und/oder
   insbesondere wobei mindestens 65 %, insbesondere mindestens 70 %, vorzugsweise mindestens 75 %, bevorzugt mindestens 80 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden; und/oder
   insbesondere wobei 50 % bis 95 %, insbesondere 60 % bis 90 %, vorzugsweise 70 % bis 85 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden; und/oder
   insbesondere wobei 1 % bis 60 %, insbesondere 5 % bis 50 %, vorzugsweise 10 % bis 40 %, bevorzugt 15 % bis 35 %, des Gesamtporenvolumens, insbesondere des Gesamtporenvolumens nach Gurvich, der Aktivkohle durch Poren mit Porendurchmessern von mehr als 2 nm, insbesondere durch Meso- und/oder Makroporen, gebildet werden; und/oder
   insbesondere wobei die Aktivkohle ein durch Poren mit Porendurchmessern von höchstens 2 nm (d.h. ≤ 2 nm) gebildetes Porenvolumen, insbesondere Mikroporenvolumen nach Carbon Black, im Bereich von 0,05 cm³/g bis 2,5 cm³/g, insbesondere 0,15 cm³/g bis 2 cm³/g, vorzugsweise 0,3 cm³/g bis 1,5 cm³/g, aufweist, insbesondere wobei 15 % bis 98 %, insbesondere 25 % bis 95 %, vorzugsweise 35 % bis 90 %, des Gesamtporenvolumens der Aktivkohle durch Poren mit Porendurchmessern von höchstens 2 nm, insbesondere durch Mikroporen, gebildet werden; und/oder
   insbesondere wobei die Aktivkohle eine spezifische BET-Oberfläche im Bereich von 600 m²/g bis 4.000 m²/g, insbesondere 800 m²/g bis 3.500 m²/g, vorzugsweise 1.000 m²/g bis 3.000 m²/g, besonders bevorzugt 1.200 m²/g bis 2.750 m²/g, ganz besonders bevorzugt 1.300 m²/g bis 2.500 m²/g, aufweist; und/oder
   insbesondere wobei die Aktivkohle eine durch Poren mit Porendurchmessern von höchstens 2 nm, insbesondere durch Mikroporen, gebildete Oberfläche im Bereich von 400 bis 3.500 m²/g, insbesondere 500 bis 3.000 m²/g, vorzugsweise 600 bis 2.500 m²/g, bevorzugt 700 bis 2.000 m²/g, aufweist; und/oder
   insbesondere wobei die Aktivkohle eine durch Poren mit Porendurchmessern im Bereich von 2 nm bis 50 nm, insbesondere durch Mesoporen, gebildete Oberfläche im Bereich von 200 bis 2.000 m²/g, insbesondere 300 bis 1.900 m²/g, vorzugsweise 400 bis 1.800 m²/g, bevorzugt 500 bis 1.700 m²/g, aufweist; und/oder
   insbesondere wobei die Aktivkohle einen mittleren Porendurchmesser im Bereich von 0,1 nm bis 55 nm, insbesondere 0,2 nm bis 50 nm, vorzugsweise 0,5 nm bis 45 nm, bevorzugt 1 nm bis 40 nm, aufweist.
65. Schutz- und/oder Filtermaterial nach einem der vorangehenden Aspekte,
   wobei die Adsorberpartikel (4a) der Adsorptionsschicht (4) Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform, sind;
   insbesondere wobei die Aktivkohle eine Abriebfestigkeit, bestimmt gemäß ASTM D3802:2016, von mindestens 90 %, insbesondere von mindestens 95 %, vorzugsweise von mindestens 98 %, besonders bevorzugt von mindestens 99 %, ganz besonders bevorzugt von 100 %, aufweist; und/oder
   insbesondere wobei die Aktivkohle eine Butanadsorption, bestimmt gemäß ASTM D5742-16, von mindestens 20 %, insbesondere von mindestens 30 %, vorzugsweise von mindestens 35 %, aufweist und/oder insbesondere wobei die Aktivkohle eine Butanadsorption, bestimmt gemäß ASTM D5742-16, im Bereich von 20 % bis 90 %, insbesondere im Bereich von 30 % bis 85 %, vorzugsweise im Bereich von 35 % bis 80 %, aufweist; und/oder
   insbesondere wobei die Aktivkohle eine Iodzahl, bestimmt gemäß ASTM D4607:2014, von mindestens 900 mg/g, insbesondere mindestens 1.000 mg/g, bevorzugt mindestens 1.100 mg/g, aufweist und/oder insbesondere wobei die Aktivkohle eine Iodzahl, bestimmt gemäß ASTM D4607:2014, im Bereich von 900 mg/g bis 2.200 mg/g, insbesondere im Bereich von 1.000 mg/g bis 2.100 mg/g, vorzugsweise im Bereich von 1.100 mg/g bis 2.000 mg/g, aufweist.
66. Schutz- und/oder Filtermaterial nach einem der vorangehenden Aspekte,
   wobei die Adsorptionsschicht (4) mittels einer zweiten Haftmittelschicht (Adsorptionsschicht-Haftmittelschicht) auf der Partikel- und/oder Aerosolfilterschicht (3) angeordnet und/oder mit der Partikel- und/oder Aerosolfilterschicht (3) verbunden (befestigt, fixiert) ist;
   insbesondere wobei die Adsorptionsschicht (4) auf der Trägerlage (3b) (zweite Trägerlage (3b)), welche auf der der Trägerschicht (2) abgewandten Seite und/oder Fläche der Funktionslage (3c) positioniert ist, angeordnet und/oder hiermit verbunden ist.
67. Schutz- und/oder Filtermaterial nach Aspekt 66,
   wobei die zweite Haftmittelschicht als eine wasserdampf- und/oder gasdurchlässige, bevorzugt luftdurchlässige, und/oder diskontinuierlich ausgebildete Klebstoffschicht, vorzugsweise auf Basis eines Klebstoffpolymers, bevorzugt in Form von insbesondere (wärme-) schmelzbaren Kunststofffasern oder in Form von Klebstoff(polymer)punkten, vorliegt und/oder ausgebildet ist; und/oder
   wobei die zweite Haftmittelschicht als ein Gelege oder Faserverbundstoff, insbesondere Vlies (Non-Woven), besonders bevorzugt als ein Vlies (Non-Woven), auf Basis von und/oder aus insbesondere (wärme-)schmelzbaren Kunststofffasern, insbesondere aus einem thermoplastischen Polyurethan (TPU), ausgebildet ist und/oder vorliegt; oder
   wobei die zweite Haftmittelschicht in Form eines Rasters mit einer Vielzahl von zueinander beabstandeten Klebstoff(polymer)punkten insbesondere aus einem thermoplastischen Polyurethan (TPU) ausgebildet ist; und/oder wobei die zweite Haftmittelschicht in Form eines Rasters einer Vielzahl von über der Adsorptionsschicht (4) und/oder der Partikel- und/oder Aerosolfilterschicht (3) verteilten Klebstoff(polymer)punkten insbesondere aus einem thermoplastischen Polyurethan (TPU) ausgebildet ist;
   insbesondere wobei die zweite Haftmittelschicht jeweils höchstens 75 % der Oberfläche der der Adsorptionsschicht (4) und/oder der Partikel- und/oder Aerosolfilterschicht (3), vorzugsweise höchstens 60 % der Oberfläche der Adsorptionsschicht (4) und/oder der Partikel- und/oder Aerosolfilterschicht (3), besonders bevorzugt höchstens 50 % der Oberfläche der Adsorptionsschicht (4) und/oder der Partikel- und/oder Aerosolfilterschicht (3), ganz besonders bevorzugt höchstens 40 % der Oberfläche der Adsorptionsschicht (4) und/oder der Partikel- und/oder Aerosolfilterschicht (3), bedeckt.
68. Schutz- und/oder Filtermaterial nach Aspekt 66 oder 67,
   wobei die zweite Haftmittelschicht ein Material, insbesondere einen Klebstoff, aus der Gruppe von thermoplastischen Polyurethanen (TPU); Co-Polyestern (Co-PES); Co-Polyamiden (Co-PA); Polyolefinen (PO); deren Mischungen sowie Kombinationen, vorzugsweise thermoplastischen Polyurethanen (TPU), umfasst oder hieraus besteht, vorzugsweise hieraus besteht; und/oder
   wobei die Kunststofffasern der zweiten Haftmittelschicht ausgewählt sind aus der Gruppe von Kunststofffasern aus thermoplastischem Polyurethan (Thermoplastisches-Polyurethan-Fasern); Co-Polyesterfasern; Co-Polyamidfasern; Polyolefinfasern; und deren Mischungen sowie Kombinationen; und/oder wobei die zweite Haftmittelschicht Kunststofffasern aus thermoplastischem Polyurethan (Thermoplastisches-Polyurethan-Fasern) aufweist oder hieraus besteht; oder
   wobei die Klebstoff(polymer)punkte der zweiten Haftmittelschicht ausgewählt sind aus der Gruppe von Klebstoff(polymer)punkten aus thermoplastischem Polyurethan; Co-Polyestern; Co-Polyamid; Polyolefin; und deren Mischungen sowie Kombinationen; und/oder wobei die zweite Haftmittelschicht Klebstoff(polymer)punkte aus thermoplastischem Polyurethan aufweist oder hieraus besteht.
69. Schutz- und/oder Filtermaterial nach einem der Aspekte 66 bis 68,
   wobei die zweite Haftmittelschicht, bezogen auf das Trockengewicht der Haftmittelschicht bzw. des Klebstoffs, ein Flächengewicht im Bereich von 5 g/m² bis 100 g/m², insbesondere im Bereich von 7 g/m² bis 75 g/m², vorzugsweise im Bereich von 10 g/m² bis 50 g/m², besonders bevorzugt im Bereich von 10 g/m² bis 30 g/m², aufweist.
70. Schutz- und/oder Filtermaterial nach einem der vorangehenden Aspekte,
   wobei das Schutz- und/oder Filtermaterial (1) außerdem eine zweite textile Trägerschicht (5), insbesondere zweite textile Abdeckschicht (5), aufweist;
   insbesondere wobei die zweite textile Trägerschicht (5) der Adsorptionsschicht (4) zugeordnet ist; und/oder
   insbesondere wobei die zweite textile Trägerschicht (5) in der vorgenannten Abfolge nach der Adsorptionsschicht (4) angeordnet ist; und/oder
   insbesondere wobei die zweite textile Trägerschicht (5) auf der der Partikel- und/oder Aerosolfilterschicht (3) abgewandten Seite der Adsorptionsschicht (4) angeordnet ist; und/oder
   insbesondere wobei die zweite textile Trägerschicht (5) auf der Adsorptionsschicht (4) angeordnet und/oder mit der Adsorptionsschicht (4) fest verbunden (befestigt, fixiert), vorzugsweise mittels Laminierung, ist, vorzugsweise mittels einer dritten Haftmittelschicht (Zweite-Trägerschicht-Haftmittelschicht); und/oder
   insbesondere wobei die zweite textile Trägerschicht (5) mit der Adsorptionsschicht (4) vorzugsweise mittels einer dritten Haftmittelschicht fest verbunden (befestigt, fixiert), vorzugsweise mittels Laminierung, ist; und/oder
   insbesondere wobei die zweite textile Trägerschicht (5) auf der der Partikel- und/oder Aerosolfilterschicht (3) abgewandten Seite und/oder Fläche der Adsorptionsschicht (4) angeordnet und/oder mit der Adsorptionsschicht (4) auf deren der Partikel- und/oder Aerosolfilterschicht (3) abgewandten Seite und/oder Fläche vorzugsweise mittels einer dritten Haftmittelschicht fest verbunden (befestigt, fixiert), vorzugsweise mittels Laminierung, ist; und/oder
   insbesondere wobei die zweite textile Trägerschicht (5) als vorzugsweise gasdurchlässiges, insbesondere luftdurchlässiges, textiles Flächengebilde vorliegt und/oder ausgebildet ist; und/oder
   insbesondere wobei die zweite textile Trägerschicht (5) als ein luftdurchlässiges textiles Flächengebilde, bevorzugt als eine Maschenware, insbesondere als Gewirke (Wirkware) oder Gestrick (Strickware), ausgebildet ist; und/oder
   insbesondere wobei die zweite textile Trägerschicht (5) Naturfasern und/oder synthetischen Fasern (Chemiefasern), bevorzugt Naturfasern, besonders bevorzugt Baumwollfasern, umfasst oder hieraus gebildet ist; und/oder
   insbesondere wobei die zweite textile Trägerschicht (5) Naturfasern, besonders bevorzugt Baumwollfasern, gegebenenfalls in Kombination mit synthetischen Fasern (Chemiefasern), umfasst oder hieraus gebildet ist; und/oder
   insbesondere wobei die zweite textile Trägerschicht (5) ein Material, insbesondere Textilfasermaterial, bevorzugt Textilfasern, ausgewählt aus der Gruppe von Naturstoffen und Synthetikstoffen, insbesondere ausgewählt aus der Gruppe von Baumwolle (CO); Wolle; Leinen; Polyestern; Polyolefinen, Polyvinylchlorid; Polyvinylidenchlorid; Acetaten, insbesondere Celluloseacetaten; Triacetaten, insbesondere Cellulosetriacetaten; Aramiden, insbesondere Meta- und/oder Para-Amiden; gegebenenfalls modifizierten und/oder regenerierten Cellulosen; Polyacryl; Polyamid; Polyvinylalkohol; Polyurethanen; Polyvinylestern; modifizierten und/oder regenerierten Cellulosen, insbesondere Viskose; und deren Mischungen oder Kombinationen, vorzugsweise ausgewählt aus der Gruppe von modifizierten und/oder regenerierten Cellulosen, insbesondere Viskose; Aramiden,
   insbesondere Meta- und/oder Para-Amiden; Polyamid und deren Mischungen oder Kombinationen, aufweist oder hieraus besteht; und/oder
   insbesondere wobei die zweite textile Trägerschicht (5) aus einem Material, insbesondere Textilfasermaterial, in Form einer Mischung aus Baumwolle und Polyester (CO/PES); oder einer Mischung aus Polyamid und Polyester (PA/PES); oder einer Mischung aus Baumwolle und Elastan (CO/EL); oder einer Mischung aus Polyester und Elastan (PES/EL); oder einer Mischung aus oder Polyamid und Elastan (PA/EL), vorzugsweise einer Mischung aus Baumwolle und Polyester (CO/PES), besteht; und/oder
   insbesondere wobei die zweite textile Trägerschicht (5) aus einem Material, insbesondere Textilfasermaterial, in Form von Baumwolle (CO) oder Polyester (PES) besteht; und/oder
   insbesondere wobei die zweite textile Trägerschicht (5) ein Flächengewicht im Bereich von 10 g/m² bis 350 g/m², insbesondere im Bereich von 15 g/m² bis 300 g/m², vorzugsweise im Bereich von 25 g/m² bis 250 g/m², besonders bevorzugt im Bereich von 30 g/m² bis 175 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %.
71. Schutz- und/oder Filtermaterial nach Aspekt 70,
   wobei die dritte Haftmittelschicht und/oder das Material, insbesondere der Klebstoff, der dritten Haftmittelschicht in einer Auftragsmenge im Bereich von 5 g/m² bis 80 g/m², insbesondere im Bereich von 10 g/m² bis 60 g/m², vorzugsweise im Bereich von 15 g/m² bis 50 g/m², auf die zweite Abdeckschicht (5) und/oder die Adsorptionsschicht (4) aufgebracht und/oder aufgetragen ist; und/oder
   wobei die dritte Haftmittelschicht ein Flächengewicht, bezogen auf das Trockengewicht der Haftmittelschicht bzw. des Klebstoffs, im Bereich von 5 g/m² bis 80 g/m², insbesondere im Bereich von 10 g/m² bis 60 g/m², vorzugsweise im Bereich von 15 g/m² bis 50 g/m², aufweist.
72. Schutz- und/oder Filtermaterial nach Aspekt 70 oder 71,
   wobei das Material, insbesondere der Klebstoff und/oder das Klebstoffpolymer, der dritten Haftmittelschicht ausgewählt ist aus der Gruppe von Polyacrylaten (PA); Polymethacrylaten (PMA); Polymethylmethacrylaten (PMMA); Polycarbonaten (PC); Polyurethanen (PU), bevorzugt thermoplastischen Polyurethanen (TPU); Silikonen und deren Mischungen oder Kombinationen, vorzugsweise Polyurethan (PU), bevorzugt thermoplastischen Polyurethanen (TPU), und/oder
   wobei das Material, insbesondere der Klebstoff und/oder das Klebstoffpolymer, ein Polyurethan (PU) bevorzugt thermoplastisches Polyurethan (TPU), ist; und/oder
   wobei die dritte Haftmittelschicht eine Dichte im Bereich von 100 g/l bis 500 g/l, insbesondere im Bereich von 150 g/l bis 400 g/l, vorzugsweise im Bereich von 200 g/l bis 350 g/l, aufweist.
73. Schutz- und/oder Filtermaterial nach einem der Aspekte 70 bis 72,
   wobei die dritte Haftmittelschicht teilweise in die zweite Trägerschicht (5) eingedrungen vorliegt und/oder wobei die dritte Haftmittelschicht sich in die zweite Trägerschicht (5) hineinerstreckt.
74. Schutz- und/oder Filtermaterial nach einem der Aspekte 70 bis 73,
   wobei die dritte Haftmittelschicht und/oder der Klebstoff der dritten Haftmittelschicht als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die zweite Trägerschicht (5) und/oder die Adsorptionsschicht (4) aufgebracht und/oder aufgetragen ist, wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von insbesondere über die zweite Trägerschicht (5) und/oder die Adsorptionsschicht (4) verteilten Klebstoff(polymer)punkten ausgebildet ist, vorzugsweise in Form eines getrockneten und/oder ausgehärteten, insbesondere vernetzten, gebrochenen Klebstoffpolymerschaums; und/oder
   wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von über die zweite Trägerschicht (5) und/oder die Adsorptionsschicht (4) verteilten Klebstoff(polymer)punkten ausgebildet ist, vorzugsweise in Form eines getrockneten und/oder ausgehärteten, insbesondere vernetzten, gebrochenen Klebstoffpolymerschaums.
75. Schutz- und/oder Filtermaterial nach einem der Aspekte 70 bis 74,
   wobei die dritte Haftmittelschicht und/oder der Klebstoff der dritten Haftmittelschicht als eine wasserdampf- und/oder luftdurchlässige, vorzugsweise wasserdampf- und luftdurchlässige, und/oder diskontinuierlich ausgebildete Klebstoffschicht auf Basis eines getrockneten und/oder ausgehärteten, insbesondere vernetzten, gebrochenen Klebstoffpolymerschaums auf die zweite Trägerschicht (5) und/oder die Adsorptionsschicht (4) aufgebracht und/oder aufgetragen ist;
   insbesondere wobei der gebrochene Klebstoffpolymerschaum eine Vielzahl getrockneter und/oder ausgehärteter, insbesondere vernetzter, zerstörter und/oder geplatzter und/oder kollabierter Schaumblasen aufweist; und/oder
   insbesondere wobei der gebrochene Klebstoffpolymerschaum, insbesondere die getrockneten und/oder ausgehärteten, insbesondere vernetzten, zerstörten und/oder geplatzten und/oder kollabierten Schaumblasen des gebrochenen Klebstoffschaums, eine Vielzahl an zerstörten und/oder gebrochenen und/oder kollabierten Wandungen und/oder Stegen aus Klebstoffpolymer aufweist bzw. aufweisen; und/oder
   insbesondere wobei der gebrochene Klebstoffpolymerschaum einen Anteil an zerstörten und/oder geplatzten und/oder kollabierten Schaumblasen von mindestens 10 %, insbesondere mindestens 30 %, vorzugsweise mindestens 50 %, bevorzugt mindestens 70 %, besonders bevorzugt mindestens 90 %, ganz besonders bevorzugt mindestens 95 %, bezogen auf die Gesamtanzahl an Schaumblasen in dem gebrochenen Klebstoffpolymerschaum, aufweist; und/oder
   insbesondere wobei der gebrochene Klebstoffpolymerschaum einen Anteil an zerstörten und/oder geplatzten und/oder kollabierten Schaumblasen im Bereich von 10 % bis 100 %, insbesondere im Bereich von 30 % bis 99,9 %, vorzugsweise im Bereich von 50 % bis 99 %, bevorzugt im Bereich von 70 % bis 99 %, besonders bevorzugt im Bereich von 90 % bis 98 %, bezogen auf die Gesamtanzahl an Schaumblasen in dem gebrochenen Klebstoffpolymerschaum, aufweist; und/oder
   insbesondere wobei der gebrochene Klebstoffpolymerschaum nicht geschlossen ausgebildet ist und/oder insbesondere wobei der gebrochene Klebstoffpolymerschaum eine Vielzahl von insbesondere sich in dem gebrochenen Klebstoffpolymerschaum erstreckenden Durchbrechungen, Poren, Kanäle und/oder Öffnungen und/oder eine Vielzahl von insbesondere die jeweiligen Außenseiten des gebrochenen Klebstoffpolymerschaums und/oder der Klebstoffschicht verbindenden Durchbrechungen, Poren, Kanäle und/oder Öffnungen aufweist; und/oder
   insbesondere wobei der gebrochene Klebstoffpolymerschaum zusammenhängend und/oder kohärent ausgebildet ist; und/oder
   insbesondere wobei der gebrochene Klebstoffpolymerschaum zumindest im Wesentlichen vollflächig und/oder ganzseitig auf die textile Trägerschicht (2) aufgebracht und/oder aufgetragen ist; und/oder
   insbesondere wobei der gebrochene Klebstoffpolymerschaum im Vergleich zu einem entsprechenden nichtgeschäumten und/oder kontinuierlich ausgebildeten Klebstoffpolymer eine bzw. ein um mindestens 5 %, insbesondere um mindestens 10 %, vorzugsweise um mindestens 15 %, bevorzugt um mindestens 20 %, besonders bevorzugt um mindestens 25 %, verringerte Dichte und/oder verringertes, insbesondere flächenbezogen verringertes, Volumengewicht, bezogen auf das nichtgeschäumte und/oder kontinuierlich ausgebildete Klebstoffpolymer, aufweist; und/oder
   insbesondere wobei der gebrochene Klebstoffpolymerschaum im Vergleich zu einem entsprechenden nichtgeschäumten und/oder kontinuierlich ausgebildeten Klebstoffpolymer eine bzw. ein im Bereich von 5 % bis 80 %, insbesondere im Bereich von 10 % bis 70 %, vorzugsweise im Bereich von 15 % bis 60 %, bevorzugt im Bereich von 20 % bis 55 %, verringerte Dichte und/oder verringertes, insbesondere flächenbezogen verringertes, Volumengewicht, bezogen auf das nichtgeschäumte und/oder kontinuierlich ausgebildete Klebstoffpolymer, aufweist; und/oder
   insbesondere wobei der gebrochene Klebstoffpolymerschaum im Vergleich zu einem entsprechenden intakten und/oder nichtgebrochenen Klebstoffpolymerschaum eine bzw. ein um höchstens 10 %, insbesondere höchstens 5 %, vorzugsweise höchstens 1 %, erhöhte Dichte und/oder erhöhtes, insbesondere flächenbezogen erhöhtes, Volumengewicht, bezogen auf den intakten und/oder nichtgebrochenen Klebstoffpolymerschaum, aufweist; und/oder
   insbesondere wobei der gebrochene Klebstoffpolymerschaum im Vergleich zu einem entsprechenden intakten und/oder nichtgebrochenen Klebstoffpolymerschaum eine um höchstens 30 %, insbesondere um höchstens 20 %, vorzugsweise höchstens um 10 %, bevorzugt um höchstens 5 %, verringerte Elastizität und/oder reversible Dehnbarkeit, bezogen auf den intakten und/oder nichtgebrochenen Klebstoffpolymerschaum, aufweist; und/oder
   insbesondere wobei der gebrochene Klebstoffpolymerschaum im Vergleich zu einem entsprechenden intakten und/oder nichtgebrochenen Klebstoffpolymerschaum eine im Bereich von 5 % bis 30 %, insbesondere im Bereich von 10 % bis 20 %, verringerte Elastizität und/oder reversible Dehnbarkeit, bezogen auf den intakten und/oder nichtgebrochenen Klebstoffpolymerschaum, aufweist; und/oder
   insbesondere wobei der gebrochene Klebstoffpolymerschaum erhältlich ist durch Trocknung und/oder Aushärtung, insbesondere Vernetzung, einer aufgeschäumten, vorzugsweise unter mechanischem Energieeintrag aufgeschäumten, wässrig oder organisch basierten, vorzugsweise wässrig basierten, Lösung und/oder Dispersion des Klebstoffpolymers, insbesondere einhergehend mit einer zumindest teilweisen Brechung des durch die aufgeschäumte Lösung und/oder Dispersion des Klebstoffpolymers bereitgestellten Schaums, insbesondere wobei die Trocknung und/oder Aushärtung, insbesondere Vernetzung, in Gegenwart mindestens eines Schaumbildners und gegebenenfalls mindestens eines Schaumstabilisators und gegebenenfalls mindestens eines Vernetzers und gegebenenfalls mindestens eines Emulgators und gegebenenfalls mindestens eines Verdickers durchgeführt ist.
76. Schutz- und/oder Filtermaterial nach einem der Aspekte 70 bis 74,
   wobei die dritte Haftmittelschicht und/oder der Klebstoff der dritten Haftmittelschicht als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die zweite Trägerschicht (5) und/oder die Adsorptionsschicht (4) aufgebracht und/oder aufgetragen, wobei die Klebstoffschicht in Form eines Rasters einer Vielzahl von über die zweite Trägerschicht (5) und/oder die Adsorptionsschicht (4) verteilten Klebstoff(polymer)punkten ausgebildet ist; und/oder wobei die Klebstoffschicht in Form eines Rasters einer Vielzahl von über die zweite Trägerschicht (5) und/oder die Adsorptionsschicht (4) verteilten Klebstoff(polymer)punkten ausgebildet ist;
   insbesondere wobei die dritte Haftmittelschicht höchstens 75 % der Oberfläche der zweiten Trägerschicht (5) und/oder der Adsorptionsschicht (4), vorzugsweise höchstens 60 % der Oberfläche der zweiten Trägerschicht (5) und/oder der Adsorptionsschicht (4), besonders bevorzugt höchstens 50 % der Oberfläche der zweiten Trägerschicht (5) und/oder der Adsorptionsschicht (4), ganz besonders bevorzugt höchstens 40 % der Oberfläche der zweiten Trägerschicht (5) und/oder der Adsorptionsschicht (4), bedeckt; und/oder
   insbesondere wobei das Raster der Vielzahl von über die zweite Trägerschicht (5) und/oder die Adsorptionsschicht (4) verteilten Klebstoff(polymer)punkten regelmäßig oder unregelmäßig ausgebildet ist; und/oder
   insbesondere wobei die Klebstoff(polymer)punkte zumindest im Wesentlichen die gleiche Größe, insbesondere Größenausdehnung, besitzen.
77. Schutz- und/oder Filtermaterial nach einem der vorangehenden Aspekte,
   wobei das Schutz- und/oder Filtermaterial (1) außerdem eine dritte textile Trägerschicht, insbesondere dritte und/oder weitere textile Abdeckschicht, aufweist;
   insbesondere wobei die dritte textile Trägerschicht auf der zweiten Trägerschicht (5) angeordnet und/oder mit der zweiten textilen Trägerschicht (5) fest verbunden (befestigt, fixiert), vorzugsweise mittels Laminierung, ist, vorzugsweise mittels einer vierten Haftmittelschicht; und/oder
   insbesondere wobei die dritte textile Trägerschicht mit der zweiten textilen Trägerschicht (5) vorzugsweise mittels einer vierten Haftmittelschicht fest verbunden (befestigt, fixiert), vorzugsweise mittels Laminierung, ist; und/oder
   insbesondere wobei die dritte textile Trägerschicht auf der der Adsorptionsschicht (4) abgewandten Seite und/oder Fläche der zweiten textilen Trägerschicht (5) angeordnet und/oder mit der zweiten textilen Trägerschicht (5) auf deren der Adsorptionsschicht (4) und/oder der Partikel- bzw. Aerosolfilterschicht (3) abgewandten Seite und/oder Fläche vorzugsweise mittels einer vierten Haftmittelschicht fest verbunden (befestigt, fixiert), vorzugsweise mittels Laminierung, ist; und/oder
   insbesondere wobei die dritte textile Trägerschicht als vorzugsweise gasdurchlässiges textiles Flächengebilde ausgebildet ist und/oder vorliegt; und/oder
   insbesondere wobei die dritte textile Trägerschicht als ein luftdurchlässiges textiles Flächengebilde, bevorzugt als eine Maschenware, insbesondere als Gewirke (Wirkware) oder Gestrick (Strickware), ausgebildet ist; und/oder
   insbesondere wobei die dritte textile Trägerschicht Naturfasern und/oder synthetischen Fasern (Chemiefasern), bevorzugt Naturfasern, besonders bevorzugt Baumwollfasern, umfasst oder hieraus gebildet ist; und/oder
   insbesondere wobei die dritte textile Trägerschicht Naturfasern, besonders bevorzugt Baumwollfasern, gegebenenfalls in Kombination mit synthetischen Fasern (Chemiefasern), umfasst oder hieraus gebildet ist; und/oder
   insbesondere wobei die dritte textile Trägerschicht Naturfasern, besonders bevorzugt Baumwollfasern, gegebenenfalls in Kombination mit synthetischen Fasern (Chemiefasern), vorzugsweise Elastanfasern, umfasst oder hieraus gebildet ist; und/oder
   insbesondere wobei die dritte textile Trägerschicht ein Flächengewicht im Bereich von 10 g/m² bis 275 g/m², insbesondere im Bereich von 15 g/m² bis 175 g/m², vorzugsweise im Bereich von 25 g/m² bis 150 g/m², besonders bevorzugt im Bereich von 30 g/m² bis 100 g/m², aufweist, vorzugsweise nach 24-stündiger Klimatisierung bei einer Temperatur von 20 °C und einer relativen Luftfeuchtigkeit von 65 %.
78. Schutz- und/oder Filtermaterial nach einem der vorangehenden Aspekte,
   wobei das Schutz- und/oder Filtermaterial (1) außerdem eine Zwischenschicht (6) (textile Zwischenschicht), aufweist;
   insbesondere wobei die Zwischenschicht (6) zwischen der Adsorptionsschicht (4) und der Partikel- und/oder Aerosolfilterschicht (3) angeordnet ist und/oder mit der Adsorptionsschicht (4) und/oder der Partikel- und/oder Aerosolfilterschicht (3), insbesondere (nur) mit der Adsorptionsschicht (4), fest verbunden (befestigt, fixiert), vorzugsweise mittels Laminierung, ist; und/oder
   insbesondere wobei die Zwischenschicht (6) zwischen der Adsorptionsschicht (4) und der Partikel- und/oder Aerosolfilterschicht (3) angeordnet ist und/oder mit der Adsorptionsschicht (4) und/oder der Partikel- und/oder Aerosolfilterschicht (3), insbesondere mit der Adsorptionsschicht (4) fest verbunden (befestigt, fixiert), vorzugsweise mittels Laminierung, ist; und/oder
   insbesondere wobei die Zwischenschicht (6) auf der der Partikel- und/oder Aerosolfilterschicht (3) zugewandten Seite und/oder Fläche der Adsorptionsschicht (4) angeordnet und/oder mit der Adsorptionsschicht (4) auf deren der Partikel- und/oder Aerosolfilterschicht (3) zugewandten Seite und/oder Fläche fest verbunden (befestigt, fixiert), vorzugsweise mittels Laminierung, ist, vorzugsweise mittels einer fünften Haftmittelschicht; und/oder
   insbesondere wobei die Zwischenschicht (6) nur abschnittsweise, insbesondere linienförmig und/oder randseitig, mit der Partikel- und/oder Aerosolfilterschicht (3) und/oder den weiteren Schichten des Schutz- und/oder Filtermaterials (1) fest verbunden (hieran befestigt bzw. fixiert) ist, insbesondere mittels Vernähen, Verschweißen, Vertackern, Verkleben oder dergleichen, und im Übrigen lose und/oder unverbunden auf der Partikel- und/oder Aerosolfilterschicht (3) angeordnet ist, insbesondere hierauf aufliegt; und/oder
   insbesondere wobei die Zwischenschicht (6) als vorzugsweise gasdurchlässiges, insbesondere luftdurchlässiges, textiles Flächengebilde vorliegt und/oder ausgebildet ist; und/oder
   insbesondere wobei die Zwischenschicht (6) als ein luftdurchlässiges textiles Flächengebilde, insbesondere als Maschenware, Gewebe, Gelege oder Textilverbundstoff, vorzugsweise Vlies (Non-Woven), besonders bevorzugt als ein Vlies (Non-Woven), ausgebildet ist.
79. Schutz- und/oder Filtermaterial nach einem der vorangehenden Aspekte,
   wobei das Schutz- und/oder Filtermaterial (1) keine Adsorptionsschicht, insbesondere keine Adsorberpartikel, aufweist;
   insbesondere wobei die zweite Trägerschicht (5) (zweite textile Trägerschicht), insbesondere zweite Abdeckschicht (5), auf der Partikel- und/oder Aerosolfilterschicht (3) angeordnet und/oder mit der Partikel- und/oder Aerosolfilterschicht (3) fest verbunden (befestigt, fixiert), vorzugsweise mittels Laminierung, ist; und/oder
   insbesondere wobei die zweite Trägerschicht (5) mit der Partikel- und/oder Aerosolfilterschicht (3) fest verbunden (befestigt, fixiert), vorzugsweise mittels Laminierung, ist; und/oder
   insbesondere wobei die zweite Trägerschicht (5) auf der der ersten Trägerschicht (2) abgewandten Seite und/oder Fläche der Partikel- und/oder Aerosolfilterschicht (3) angeordnet und/oder mit der Partikel- und/oder Aerosolfilterschicht (3) auf deren der ersten Trägerschicht (2) abgewandten Seite und/oder Fläche fest verbunden (befestigt, fixiert), vorzugsweise mittels Laminierung, ist.
80. Schutz- und/oder Filtermaterial nach einem der vorangehenden Aspekte,
   wobei das Schutz- und/oder Filtermaterial (1) ein (Gesamt-)Flächengewicht (insbesondere bestimmt als Trockengewicht) im Bereich von 30 g/m² bis 1.500 g/m², insbesondere im Bereich von 40 g/m² bis 1.000 g/m², vorzugsweise im Bereich von 50 g/m² bis 750 g/m², bevorzugt im Bereich von 60 g/m² bis 500 g/m², besonders bevorzugt im Bereich von 70 g/m² bis 400 g/m², aufweist, insbesondere bestimmt gemäß DIN EN 12127, vorzugsweise nach 1-stündiger Trocknung bei 105 °C.
81. Schutz- und/oder Filtermaterial nach einem der vorangehenden Aspekte,
   wobei das Schutz- und/oder Filtermaterial (1) eine Dicke, insbesondere Gesamtquerschnittsdicke, im Bereich von 0,1 mm bis 25 mm, insbesondere im Bereich von 0,2 mm bis 15 mm, vorzugsweise im Bereich von 0,3 mm bis 10 mm, bevorzugt im Bereich von 0,4 mm bis 5 mm, besonders bevorzugt im Bereich von 0,5 mm bis 2 mm, weiter bevorzugt im Bereich von 0,5 mm bis 1,5 mm, aufweist, insbesondere bestimmt gemäß DIN EN ISO 5084.
82. Schutz- und/oder Filtermaterial nach einem der vorangehenden Aspekte,
   wobei die Schichten (Lagen) (2, 3, 4) des Schutz- und/oder Filtermaterials (1), unabhängig voneinander, gasdurchlässig, insbesondere luftdurchlässig, und/oder wasserdampfdurchlässig ausgebildet sind, vorzugsweise gasdurchlässig, insbesondere luftdurchlässig, und wasserdampfdurchlässig ausgebildet sind, bevorzugt luftdurchlässig und wasserdampfdurchlässig ausgebildet sind.
83. Schutz- und/oder Filtermaterial nach einem der vorangehenden Aspekte,
   wobei das Schutz- und/oder Filtermaterial (1) gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist, bevorzugt luftdurchlässig und wasserdampfdurchlässig ausgebildet ist; und/oder
   wobei das Schutz- und/oder Filtermaterial (1) keine luftundurchlässige Sperrschicht, insbesondere keine luftundurchlässige Membran, aufweist; und/oder wobei das Schutz- und/oder Filtermaterial (1) frei von luftundurchlässigen Sperrschichten, insbesondere frei von luftundurchlässigen Membranen, ist.
84. Schutz- und/oder Filtermaterial nach einem der vorangehenden Aspekte,
   wobei das Schutz- und/oder Filtermaterial (1) eine Gasdurchlässigkeit, insbesondere Luftdurchlässigkeit, von mindestens 1 l.m⁻².s⁻¹, insbesondere mindestens 2 l.m⁻².s⁻¹, vorzugsweise mindestens 5l.m⁻².s⁻¹, bevorzugt mindestens 7 l.m⁻².s⁻¹, besonders bevorzugt mindestens 10 l·m⁻²·s⁻¹ aufweist, insbesondere bestimmt gemäß DIN EN ISO 9237 und/oder insbesondere bestimmt bei einem Differenzdruck (Strömungswiderstand) von 127 Pascal; und/oder
   wobei das Schutz- und/oder Filtermaterial (1) eine Gasdurchlässigkeit, insbesondere Luftdurchlässigkeit, im Bereich von 1 l·m⁻²·s⁻¹ bis 1.000 l.m⁻².s⁻¹, insbesondere im Bereich von 2 l·m⁻²·s⁻¹ bis 500 l·m⁻²·s⁻¹, vorzugsweise im Bereich von 5 l·m⁻²·s⁻¹ bis 250 l·m⁻²·s⁻¹, bevorzugt im Bereich von 7 l·m⁻²·s⁻¹ bis 150 l.m⁻².s⁻¹, besonders bevorzugt im Bereich von 10 l·m⁻²·s⁻¹ bis 100 l·m⁻²·s⁻¹, aufweist, insbesondere bestimmt gemäß DIN EN ISO 9237 und/oder insbesondere bestimmt bei einem Differenzdruck (Strömungswiderstand) von 127 Pascal.
85. Schutz- und/oder Filtermaterial nach einem der vorangehenden Aspekte,
   wobei das Schutz- und/oder Filtermaterial (1) eine Gasdurchlässigkeit, insbesondere Luftdurchlässigkeit, von mindestens 0,1 cfm (*Cubic Feet per Minute* bzw. Kubikfuß pro Minute), insbesondere mindestens 0,2 cfm, vorzugsweise mindestens 0,5 cfm, bevorzugt mindestens 1 cfm, besonders bevorzugt mindestens 1,5 cfm aufweist, insbesondere bestimmt gemäß ASTM D737-96 und/oder insbesondere bestimmt bei einem Differenzdruck (Strömungswiderstand) von 127 Pascal; und/oder
   wobei das Schutz- und/oder Filtermaterial (1) eine Gasdurchlässigkeit, insbesondere Luftdurchlässigkeit, im Bereich von 0,1 cfm bis 100 cfm, insbesondere im Bereich von 0,2 cfm bis 80 cfm, vorzugsweise im Bereich von 0,5 cfm bis 40 cfm, bevorzugt im Bereich von 1 cfm bis 20 cfm, besonders bevorzugt im Bereich von 1,5 cfm bis 15 cfm aufweist, insbesondere bestimmt gemäß ASTM D737-96 und/oder insbesondere bestimmt bei einem Differenzdruck (Strömungswiderstand) von 127 Pascal; und/oder
   wobei das Schutz- und/oder Filtermaterial (1) eine Gasdurchlässigkeit, insbesondere Luftdurchlässigkeit, im Bereich von 0,5 mm/s bis 100 mm/s, insbesondere im Bereich von 1 mm/s bis 100 mm/s, vorzugsweise im Bereich von 2,5 mm/s bis 80 mm/s, besonders bevorzugt im Bereich von 3,5 mm/s bis 60 mm/s, ganz besonders bevorzugt im Bereich von 5 mm/s bis 50 mm/s, aufweist, insbesondere bestimmt gemäß DIN EN ISO 9237 und/oder insbesondere bestimmt bei einem Differenzdruck (Strömungswiderstand) von 100 Pascal (127).
86. Schutz- und/oder Filtermaterial nach Aspekt 84 oder 85,
   wobei das Schutz- und/oder Filtermaterial (1) die vorgenannten Gasdurchlässigkeiten, insbesondere Luftdurchlässigkeiten, unabhängig voneinander, jeweils im ungewaschenen und unbenutzten (insbesondere neuen) Zustand aufweist; und/oder
   wobei das Schutz- und/oder Filtermaterial (1) die vorgenannten Gasdurchlässigkeiten, insbesondere Luftdurchlässigkeiten, unabhängig voneinander, jeweils auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweist.
87. Schutz- und/oder Filtermaterial nach einem der Aspekte 84 oder 86,
   wobei die Gasdurchlässigkeiten, insbesondere Luftdurchlässigkeiten, unabhängig voneinander, nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3,5 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei die Gasdurchlässigkeiten, insbesondere Luftdurchlässigkeiten, unabhängig voneinander, nach 10 Waschzyklen, insbesondere gemäß DIN ISO 6330 4M (Trocknung F), jeweils um höchstens 15 %, insbesondere höchstens 10 %, vorzugsweise höchstens 7 %, bevorzugt höchstens 5 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei die Gasdurchlässigkeiten, insbesondere Luftdurchlässigkeiten, unabhängig voneinander, nach 20 Waschzyklen, insbesondere gemäß DIN ISO 6330 4M (Trocknung F), jeweils um höchstens 20 %, insbesondere höchstens 15 %, vorzugsweise höchstens 12 %, bevorzugt höchstens 10 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei die Gasdurchlässigkeiten, insbesondere Luftdurchlässigkeiten, unabhängig voneinander, nach 40 Waschzyklen, insbesondere gemäß DIN ISO 6330 4M (Trocknung F), jeweils um höchstens 30 %, insbesondere höchstens 25 %, vorzugsweise höchstens 20 %, bevorzugt höchstens 10 %, vergrößert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1).
88. Schutz- und/oder Filtermaterial nach einem der vorangehenden Aspekte,
   wobei das Schutz- und/oder Filtermaterial (1) einen Abscheidegrad (Abscheideeffizienz) von mindestens 80 %, insbesondere von mindestens 85 %, vorzugsweise von mindestens 90 %, bevorzugt mindestens 95 %, aufweist, bestimmt gemäß ISO 29463-3 bei einer Druckdifferenz von 15 Pascal und/oder bei einer Durchströmgeschwindigkeit von 5 m/s sowie bei einer Temperatur von 23 °C ± 3 °C und mit Kaliumchlorid (KCI) als Testsubstanz bei einer Partikelgröße im Bereich von 0,045 µm bis 0,931 µm und mit einer Aerosolkonzentration von < 3 mg/m³ sowie insbesondere bei einem Flächendurchmesser (Probengröße) des Schutz- und/oder Filtermaterials (1) von 150 mm und bei einer Testdauer von 300 s; und/oder
   wobei das Schutz- und/oder Filtermaterial (1) einen Abscheidegrad (Abscheideeffizienz), insbesondere Fraktionsabscheidegrad, von mindestens 80 %, insbesondere von mindestens 85 %, vorzugsweise von mindestens 90 %, bevorzugt mindestens 95 %, aufweist, bestimmt nach DIN EN 1822 bei einer Druckdifferenz von 15 Pascal mit Kaliumchlorid (KCI) als Testsubstanz (insbesondere 1 %) als Mindestwirkungsgrad (MPPS, insbesondere MPPS = 0,1 µm bis 0,3 µm);
   wobei das Schutz- und/oder Filtermaterial (1) einen Abscheidegrad (Abscheideeffizienz) von mindestens 80 %, insbesondere von mindestens 85 %, vorzugsweise von mindestens 90 %, bevorzugt mindestens 95 %, aufweist, insbesondere bestimmt nach DIN EN 1822 und/oder insbesondere bestimmt bei einer Anströmgeschwindigkeit von 5,33 cm/s und/oder einer Flussrate von 32 l/min mit DOP (Dioctylphthalat) als Testsubstanz (DOP-Partikelgröße = 0,3 µm), insbesondere als Mindestwirkungsgrad (MPPS, insbesondere MPPS = 0,1 µm bis 0,3 µm).
89. Schutz- und/oder Filtermaterial nach Aspekt 88,
   wobei das Schutz- und/oder Filtermaterial (1) die vorgenannten Abscheidegrade (Abscheideeffizienzen), unabhängig voneinander, jeweils im ungewaschenen und unbenutzten (insbesondere neuen) Zustand aufweist; und/oder
   wobei das Schutz- und/oder Filtermaterial (1) die vorgenannten Abscheidegrade (Abscheideeffizienzen), unabhängig voneinander, jeweils auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweist.
90. Schutz- und/oder Filtermaterial nach Aspekt 88 oder 89,
   wobei die Abscheidegrade, unabhängig voneinander, nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 4 %, verringert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei die Abscheidegrade, unabhängig voneinander, nach 10 Waschzyklen, insbesondere gemäß DIN ISO 6330 4M (Trocknung F), jeweils um höchstens 15 %, insbesondere höchstens 10 %, vorzugsweise höchstens 7 %, bevorzugt höchstens 5 %, verringert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei die Abscheidegrade, unabhängig voneinander, nach 20 Waschzyklen, insbesondere gemäß DIN ISO 6330 4M (Trocknung F), jeweils um höchstens 20 %, insbesondere höchstens 15 %, vorzugsweise höchstens 12 %, bevorzugt höchstens 10 %, verringert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei die Abscheidegrade, unabhängig voneinander, nach 40 Waschzyklen, insbesondere gemäß DIN ISO 6330 4M (Trocknung F), jeweils um höchstens 30 %, insbesondere höchstens 25 %, vorzugsweise höchstens 20 %, bevorzugt höchstens 15 %, verringert sind, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1).
91. Schutz- und/oder Filtermaterial nach einem der vorangehenden Aspekte,
   wobei das Schutz- und/oder Filtermaterial (1) einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweist und/oder wobei die Partikel- und/oder Aerosolfilterschicht (3) einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweist; und/oder
   wobei das Schutz- und/oder Filtermaterial (1) einen integralen Anfangsdurchlassgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweist; und/oder
   wobei das Schutz- und/oder Filtermaterial (1) bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist und/oder wobei das Schutz- und/oder Filtermaterial (1) bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweist.
92. Schutz- und/oder Filtermaterial nach Aspekt 91,
   wobei das Schutz- und/oder Filtermaterial (1) den vorgenannten Wirkungsgrad Eₘ und/oder den vorgenannten integralen Anfangsdurchlassgrad Dᵢ und/oder die vorgenannte mittlere Abscheiderate, unabhängig voneinander, jeweils im ungewaschenen und unbenutzten (insbesondere neuen) Zustand aufweist; und/oder
   wobei das Schutz- und/oder Filtermaterial (1) den vorgenannten Wirkungsgrad Eₘ und/oder den vorgenannten integralen Anfangsdurchlassgrad Dᵢ und/oder die vorgenannte mittlere Abscheiderate, unabhängig voneinander, jeweils auch nach mindestens 5 Waschzyklen, insbesondere mindestens 10 Waschzyklen, vorzugsweise mindestens 20 Waschzyklen, bevorzugt mindestens 40 Waschzyklen, insbesondere gemäß DIN ISO 6330 4M (Trocknung F), aufweist.
93. Schutz- und/oder Filtermaterial nach Aspekt 91 oder 92,
   wobei der Wirkungsgrad Eₘ und/oder die mittlere Abscheiderate des Schutz- und/oder Filtermaterials (1), unabhängig voneinander, nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3 %, verringert sind und/oder wobei der integralen Anfangsdurchlassgrad Dᵢ nach 5 Waschzyklen, insbesondere gemäß DIN ISO 6330 4M (Trocknung F), jeweils um höchstens 10 %, insbesondere höchstens 5 %, vorzugsweise höchstens 4 %, bevorzugt höchstens 3,5 %, vergrößert ist, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei der Wirkungsgrad Eₘ und/oder die mittlere Abscheiderate des Schutz- und/oder Filtermaterials (1), unabhängig voneinander, nach 10 Waschzyklen, insbesondere gemäß DIN ISO 6330 4M (Trocknung F), jeweils um höchstens 15 %, insbesondere höchstens 10 %, vorzugsweise höchstens 7 %, bevorzugt höchstens 5 %, verringert sind und/oder wobei der integralen Anfangsdurchlassgrad Dᵢ nach 10 Waschzyklen, jeweils um höchstens 15 %, insbesondere höchstens 10 %, vorzugsweise höchstens 7 %, bevorzugt höchstens 5 %, vergrößert ist, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei der Wirkungsgrad Eₘ und/oder die mittlere Abscheiderate des Schutz- und/oder Filtermaterials (1), unabhängig voneinander, nach 20 Waschzyklen, insbesondere gemäß DIN ISO 6330 4M (Trocknung F), jeweils um höchstens 20 %, insbesondere höchstens 15 %, vorzugsweise höchstens 10 %, bevorzugt höchstens 5 %, verringert sind und/oder wobei der integralen Anfangsdurchlassgrad Dᵢ nach 20 Waschzyklen, jeweils um höchstens 20 %, insbesondere höchstens 15 %, vorzugsweise höchstens 10 %, bevorzugt höchstens 5 %, vergrößert ist, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1); und/oder
   wobei der Wirkungsgrad Eₘ und/oder die mittlere Abscheiderate des Schutz- und/oder Filtermaterials (1), unabhängig voneinander, nach 40 Waschzyklen, insbesondere gemäß DIN ISO 6330 4M (Trocknung F), jeweils um höchstens 30 %, insbesondere höchstens 25 %, vorzugsweise höchstens 20 %, bevorzugt höchstens 10 %, verringert sind und/oder wobei der integralen Anfangsdurchlassgrad Dᵢ nach 40 Waschzyklen, jeweils um höchstens 30 %, insbesondere höchstens 25 %, vorzugsweise höchstens 20 %, bevorzugt höchstens 10 %, vergrößert ist, bezogen auf den jeweiligen Wert vor Durchführung der Waschzyklen und/oder bezogen auf den jeweiligen Wert im ungewaschenen und unbenutzten (insbesondere neuen) Zustand des Schutz- und/oder Filtermaterials (1).
94. Schutz- und/oder Filtermaterial nach einem der vorangehenden Aspekte,
   wobei im Anwendungs- und/der Verwendungszustand des Schutz- und/oder Filtermaterials (1) die Partikel- bzw. Aerosolfilterschicht (3) in Richtung einer Schadstoffquelle vor der Adsorptionsschicht (4) angeordnet und/oder positioniert ist.
95. Schutz- und/oder Filtermaterial nach einem der vorangehenden Aspekte,
   wobei die Partikel- und/oder Aerosolfilterschicht (3) nur abschnittsweise, insbesondere linienförmig und/oder randseitig, zumindest mit einem Teil der weiteren Schichten des Schutz- und/oder Filtermaterials (1), insbesondere mit der Abdeckschicht (2) und/oder der Adsorptionsschicht (4), fest verbunden (hieran befestigt bzw. fixiert) ist, insbesondere mittels Vernähen, Verschweißen, Vertackern, Verkleben oder dergleichen, und im Übrigen lose und/oder unverbunden zu diesen weiteren Schichten des Schutz- und/oder Filtermaterials (1) angeordnet ist, insbesondere auf der Partikel- und/oder Aerosolfilterschicht (3) unmittelbar zugeordneten (unmittelbar benachbarten) Schichten aufliegt; und/oder
   wobei die Partikel- und/oder Aerosolfilterschicht (3) mit zumindest einer, insbesondere mit beiden, der der Partikel- und/oder Aerosolfilterschicht (3) unmittelbar zugeordneten (unmittelbar benachbarten) und/oder hiermit direkt in Kontakt stehenden Schichten des Schutz- und/oder Filtermaterials (1), insbesondere mit der Abdeckschicht (2) und/oder der Adsorptionsschicht (4), fest verbunden (befestigt, fixiert) und/oder zum Haften gebracht ist, insbesondere zumindest im Wesentlichen vollflächig und/oder zumindest im Wesentlichen ganzseitig fest verbunden (befestigt, fixiert) und/oder zum Haften gebracht, insbesondere laminiert, ist, vorzugsweise zumindest im Wesentlichen vollflächig, aber luftdurchlässig, verbunden (befestigt, fixiert) und/oder zum Haften gebracht, insbesondere laminiert, ist.
96. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (2, 3, 4) aufweisendes textiles Verbundmaterial ausgebildet ist und
   wobei das Schutz- und/oder Filtermaterial (1) die folgenden Schichten (2, 3, 4), vorzugsweise in der nachfolgend genannten Abfolge, aufweist:
      (a) eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist, und
         wobei die Partikel- und/oder Aerosolfilterschicht (3) als fester Verbund und/oder als Laminat ausgebildet ist, insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind,
         insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist;
      (c) eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
      wobei die Adsorptionsschicht (4) eine Vielzahl einzelner und/oder diskreter Adsorberpartikel (4a) umfasst oder hieraus gebildet ist.
97. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (2, 3, 4) aufweisendes textiles Verbundmaterial ausgebildet ist und
   wobei das Schutz- und/oder Filtermaterial (1) die folgenden Schichten (2, 3, 4), vorzugsweise in der nachfolgend genannten Abfolge, aufweist:
      (a) eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
         wobei die Partikel- und/oder Aerosolfilterschicht (3) als fester Verbund und/oder als Laminat ausgebildet ist, insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind,
         insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist, und
         wobei die Funktionslage (3c) ein auf Basis von und/oder aus Textilfasern, insbesondere synthetischen Textilfasern, insbesondere wie in einem der Aspekte 15 bis 18 definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist;
      (c) eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
         wobei die Adsorptionsschicht (4) eine Vielzahl einzelner und/oder diskreter Adsorberpartikel (4a) umfasst oder hieraus gebildet ist.
98. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (2, 3, 4) aufweisendes textiles Verbundmaterial ausgebildet ist und
   wobei das Schutz- und/oder Filtermaterial (1) die folgenden Schichten (2, 3, 4), vorzugsweise in der nachfolgend genannten Abfolge, aufweist:
      (a) eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
         wobei die Partikel- und/oder Aerosolfilterschicht (3) als fester Verbund und/oder als Laminat ausgebildet ist, insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind,
         insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist,
         wobei die Funktionslage (3c) ein auf Basis von und/oder aus Textilfasern, insbesondere synthetischen Textilfasern, insbesondere wie in einem der Aspekte 15 bis 18 definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist und
         wobei die Trägerlagen (3a, 3b), unabhängig voneinander, jeweils als ein Gelege oder Textilverbundstoff, insbesondere Vlies (Non-Woven), besonders bevorzugt als ein Vlies (Non-Woven), vorzugsweise auf Basis von und/oder aus Textilfasern aus thermoplastischem Polyurethan (Thermoplastisches-Polyurethan-Fasern), ausgebildet sind;
      (c) eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
         wobei die Adsorptionsschicht (4) eine Vielzahl einzelner und/oder diskreter Adsorberpartikel (4a) umfasst oder hieraus gebildet ist,
         wobei die Adsorberpartikel (4a) der Adsorptionsschicht (4) Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind.
99. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (2, 3, 4) aufweisendes textiles Verbundmaterial ausgebildet ist und
   wobei das Schutz- und/oder Filtermaterial (1) die folgenden Schichten (2, 3, 4), vorzugsweise in der nachfolgend genannten Abfolge, aufweist:
      (a) eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
         wobei die Partikel- und/oder Aerosolfilterschicht (3) als fester Verbund und/oder als Laminat ausgebildet ist, insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind,
         insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist,
         wobei die Funktionslage (3c) ein auf Basis von und/oder aus Textilfasern, insbesondere synthetischen Textilfasern, insbesondere wie in einem der Aspekte 15 bis 18 definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist
         wobei die Funktionslage (3c) ein Flächengewicht im Bereich von 0,05 g/m² bis 50 g/m², insbesondere im Bereich von 0,1 g/m² bis 25 g/m², vorzugsweise im Bereich von 0,2 g/m² bis 10 g/m², bevorzugt im Bereich von 0,3 g/m² bis 5 g/m², besonders bevorzugt im Bereich von 0,5 g/m² bis 3 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %,
         wobei die Funktionslage (3c) eine mittlere Porengröße oder mittlere Maschenweite, insbesondere mittlere Porengröße, von höchstens 100 µm, insbesondere von höchstens 50 µm, vorzugsweise von höchstens 20 µm, bevorzugt von höchstens 10 µm, besonders bevorzugt von höchstens 5 µm, weiter bevorzugt von höchstens 3 µm, aufweist, insbesondere bestimmt gemäß ASTM F316-86, und
         wobei die Trägerlagen (3a, 3b), unabhängig voneinander, jeweils als ein Gelege oder Textilverbundstoff, insbesondere Vlies (Non-Woven), besonders bevorzugt als ein Vlies (Non-Woven), vorzugsweise auf Basis von und/oder aus Textilfasern aus thermoplastischem Polyurethan (Thermoplastisches-Polyurethan-Fasern), ausgebildet sind,
         wobei die Trägerlagen (3a, 3b), unabhängig voneinander, jeweils ein Flächengewicht im Bereich von 1 g/m² bis 100 g/m², insbesondere im Bereich von 2 g/m² bis 75 g/m², vorzugsweise im Bereich von 5 g/m² bis 50 g/m², bevorzugt im Bereich von 8 g/m² bis 40 g/m², besonders bevorzugt im Bereich von 10 g/m² bis 35 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %;
      (c) eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
         wobei die Adsorptionsschicht (4) eine Vielzahl einzelner und/oder diskreter Adsorberpartikel (4a) umfasst oder hieraus gebildet ist,
         wobei die Adsorberpartikel (4a) der Adsorptionsschicht (4) Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind.
100. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (2, 3, 4) aufweisendes textiles Verbundmaterial ausgebildet ist und
   wobei das Schutz- und/oder Filtermaterial (1) die folgenden Schichten (2, 3, 4), vorzugsweise in der nachfolgend genannten Abfolge, aufweist:
      (a) eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
         wobei die Partikel- und/oder Aerosolfilterschicht (3) als fester Verbund und/oder als Laminat ausgebildet ist, insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind,
         insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist,
         wobei die Funktionslage (3c) ein auf Basis von und/oder aus Textilfasern, insbesondere synthetischen Textilfasern, insbesondere wie in einem der Aspekte 15 bis 18 definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist,
         wobei die Funktionslage (3c) ein Flächengewicht im Bereich von 0,05 g/m² bis 50 g/m², insbesondere im Bereich von 0,1 g/m² bis 25 g/m², vorzugsweise im Bereich von 0,2 g/m² bis 10 g/m², bevorzugt im Bereich von 0,3 g/m² bis 5 g/m², besonders bevorzugt im Bereich von 0,5 g/m² bis 3 g/m², aufweist, insbesondere bestimmt gemäß DIN EN 12127, vorzugsweise nach 24-stündiger Klimatisierung bei einer Temperatur von 20 °C und einer relativen Luftfeuchtigkeit von 65 %,
         wobei die Funktionslage (3c) eine mittlere Porengröße oder mittlere Maschenweite, insbesondere mittlere Porengröße, von höchstens 100 µm, insbesondere von höchstens 50 µm, vorzugsweise von höchstens 20 µm, bevorzugt von höchstens 10 µm, besonders bevorzugt von höchstens 5 µm, weiter bevorzugt von höchstens 3 µm, aufweist, insbesondere bestimmt gemäß ASTM F316-86, und
         wobei die Trägerlagen (3a, 3b), unabhängig voneinander, jeweils als ein Gelege oder Textilverbundstoff, insbesondere Vlies (Non-Woven), besonders bevorzugt als ein Vlies (Non-Woven), vorzugsweise auf Basis von und/oder aus Textilfasern aus thermoplastischem Polyurethan (Thermoplastisches-Polyurethan-Fasern), ausgebildet sind,
         wobei die Trägerlagen (3a, 3b), unabhängig voneinander, jeweils ein Flächengewicht im Bereich von 1 g/m² bis 100 g/m², insbesondere im Bereich von 2 g/m² bis 75 g/m², vorzugsweise im Bereich von 5 g/m² bis 50 g/m², bevorzugt im Bereich von 8 g/m² bis 40 g/m², besonders bevorzugt im Bereich von 10 g/m² bis 35 g/m², aufweisen, insbesondere bestimmt gemäß DIN EN 12127, vorzugsweise nach 24-stündiger Klimatisierung bei einer Temperatur von 20 °C und einer relativen Luftfeuchtigkeit von 65 %;
      (c) eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
         wobei die Adsorptionsschicht (4) eine Vielzahl einzelner und/oder diskreter Adsorberpartikel (4a) umfasst oder hieraus gebildet ist,
         wobei die Adsorberpartikel (4a) der Adsorptionsschicht (4) Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind;
   wobei das Schutz- und/oder Filtermaterial (1) eine Gasdurchlässigkeit, insbesondere Luftdurchlässigkeit, von mindestens 1 l·m⁻²·s⁻¹, insbesondere mindestens 2 l·m⁻²·s⁻¹, vorzugsweise mindestens 5 l·m⁻²·s⁻¹, bevorzugt mindestens 7 l·m⁻²·s⁻¹, besonders bevorzugt mindestens 10 l·m⁻²·s⁻¹ aufweist, insbesondere bestimmt gemäß DIN EN ISO 9237 und/oder insbesondere bestimmt bei einem Differenzdruck (Strömungswiderstand) von 127 Pascal; und/oder
   wobei das Schutz- und/oder Filtermaterial (1) einen Abscheidegrad (Abscheideeffizienz) von mindestens 80 %, insbesondere von mindestens 85 %, vorzugsweise von mindestens 90 %, bevorzugt mindestens 95 %, aufweist, bestimmt gemäß ISO 29463-3 bei einer Druckdifferenz von **15 Pascal** und/oder bei einer Durchströmgeschwindigkeit von 5 m/s sowie bei einer Temperatur von 23 °C ± 3 °C und mit Kaliumchlorid (KCI) als Testsubstanz bei einer Partikelgröße im Bereich von 0,045 µm bis 0,931 µm und mit einer Aerosolkonzentration von < 3 mg/m³ sowie insbesondere bei einem Flächendurchmesser (Probengröße) des Schutz- und/oder Filtermaterials (1) von 150 mm und bei einer Testdauer von 300 s.
101. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (2, 3, 4, 5) aufweisendes textiles Verbundmaterial ausgebildet ist und
   wobei das Schutz- und/oder Filtermaterial (1) die folgenden Schichten (2, 3, 4, 5), vorzugsweise in der nachfolgend genannten Abfolge, aufweist:
      (a) gegebenenfalls eine erste textile Trägerschicht (2), insbesondere erste Abdeckschicht, wobei die erste textile Trägerschicht (2) als ein vorzugsweise gasdurchlässiges, textiles Flächengebilde vorliegt und/oder ausgebildet ist;
      (b) eine Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges textiles Flächengebilde, welches eine Vielzahl einzelner Textilfasern umfasst oder hieraus gebildet ist, vorliegt und/oder ausgebildet ist und
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
         insbesondere wobei die Partikel- und/oder Aerosolfilterschicht (3) der ersten textilen Trägerschicht (2) zugeordnet ist, insbesondere auf der ersten textilen Trägerschicht (2) angeordnet und/oder mit der ersten textilen Trägerschicht (2) verbunden ist;
      (c) gegebenenfalls eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
         wobei die Adsorptionsschicht (4) eine Vielzahl einzelner und/oder diskreter Adsorberpartikel (4a) umfasst oder hieraus gebildet ist;
      (d) eine zweite textile Trägerschicht (5), insbesondere zweite textile Abdeckschicht (5),
         insbesondere wobei die zweite textile Trägerschicht 5 der Adsorptionsschicht 4 zugeordnet ist, insbesondere auf der Adsorptionsschicht 4 angeordnet und/oder mit der Adsorptionsschicht 4 verbunden ist.
102. Schutz- und/oder Filtermaterial (1), insbesondere textiles Schutz- und/oder Filtermaterial, vorzugsweise Adsorptionsfiltermaterial, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere Schutz- und/oder Filtermaterial nach einem der vorangehenden Aspekte,
   wobei das Schutz- und/oder Filtermaterial (1) als ein mehrlagiges (mehrschichtiges), eine Mehrzahl von miteinander verbundenen Schichten (Lagen) (3, 4, 5) aufweisendes textiles Verbundmaterial ausgebildet ist und
   wobei das Schutz- und/oder Filtermaterial (1) die folgenden Schichten (3, 4, 5), vorzugsweise in der nachfolgend genannten Abfolge, aufweist:
      (b) eine Partikel- und/oder Aerosolfilterschicht (3), vorzugsweise Partikel- und Aerosolfilterschicht (3),
         wobei die Partikel- und/oder Aerosolfilterschicht (3) als ein gasdurchlässiges textiles Flächengebilde, welches eine Vielzahl einzelner Textilfasern umfasst oder hieraus gebildet ist, vorliegt und/oder ausgebildet ist und
         wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
      (c) eine der Partikel- und/oder Aerosolfilterschicht (3) zugeordnete, insbesondere auf der Partikel- und/oder Aerosolfilterschicht (3) angeordnete und/oder mit der Partikel- und/oder Aerosolfilterschicht (3) verbundene, Adsorptionsschicht (4), vorzugsweise diskontinuierlich ausgebildete und/oder gasdurchlässige, bevorzugt luftdurchlässige, Adsorptionsschicht (4),
         wobei die Adsorptionsschicht (4) eine Vielzahl einzelner und/oder diskreter Adsorberpartikel (4a) umfasst oder hieraus gebildet ist;
      (d) eine zweite textile Trägerschicht (5), insbesondere zweite textile Abdeckschicht (5),
         wobei die zweite textile Trägerschicht (5) der Adsorptionsschicht (4) zugeordnet ist, insbesondere auf der Adsorptionsschicht (4) angeordnet und/oder mit der Adsorptionsschicht (4) verbunden ist.
103. Schutz- und/oder Filtermaterial nach Aspekt 102,
   wobei das Schutz- und/oder Filtermaterial (1) zudem (a) eine erste textile Trägerschicht (2), insbesondere erste Abdeckschicht, aufweist, wobei die erste textile Trägerschicht (2) als ein vorzugsweise gasdurchlässiges, textiles Flächengebilde vorliegt und/oder ausgebildet ist;
   insbesondere wobei die Partikel- und/oder Aerosolfilterschicht (3) der ersten textilen Trägerschicht (2) zugeordnet ist, insbesondere auf der ersten textilen Trägerschicht (2) angeordnet und/oder mit der ersten textilen Trägerschicht (2) verbunden ist; und/oder
   insbesondere wobei die erste textile Trägerschicht (2) in der vorgenannten Abfolge vor der Partikel- und/oder Aerosolfilterschicht (3) angeordnet ist; und/oder
   insbesondere wobei die erste textile Trägerschicht (2) auf der der Adsorptionsschicht (4) abgewandten Seite der Partikel- und/oder Aerosolfilterschicht (3) angeordnet ist.
104. Partikel- und/oder Aerosolfilterschicht (3) (Partikel- und/oder Aerosolfiltermaterial), vorzugsweise Partikel- und Aerosolfilterschicht (3) (Partikel- und Aerosolfiltermaterial), mit Partikel- und/oder Aerosolfilterfunktion, vorzugsweise mit verbesserter Regenerationsbeständigkeit, insbesondere Waschbeständigkeit, bevorzugt Partikel- und/oder Aerosolfilterschicht (3) (Partikel- und/oder Aerosolfiltermaterial) mit Schutzfunktion gegenüber chemischen und/oder biologischen und/oder radioaktiven Schad- und/oder Kampfstoffen ("ABC- bzw. CBRN-Schutzfunktion"),
   wobei die Partikel- und/oder Aerosolfilterschicht (3) als ein gasdurchlässiges, insbesondere luftdurchlässiges, textiles Flächengebilde, welches eine Vielzahl einzelner Textilfasern umfasst oder hieraus gebildet ist, vorliegt und/oder ausgebildet ist,
   wobei die Partikel- und/oder Aerosolfilterschicht (3) mehrlagig ausgebildet ist, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist;
   insbesondere wobei die Partikel- und/oder Aerosolfilterschicht (3) als fester Verbund und/oder als Laminat ausgebildet ist, insbesondere wobei die Lagen (3a, 3c, 3b) jeweils an ihren Kontaktflächen fest miteinander verbunden (befestigt, fixiert) und/oder zum Haften gebracht sind, insbesondere zumindest im Wesentlichen vollflächig und/oder zumindest im Wesentlichen ganzseitig fest verbunden (befestigt, fixiert) und/oder zum Haften gebracht, insbesondere laminiert, sind, vorzugsweise zumindest im Wesentlichen vollflächig fest verbunden (befestigt, fixiert) und/oder zum Haften gebracht, insbesondere laminiert, sind; und/oder
   insbesondere wobei die jeweilige feste Verbindung (Befestigung, Fixierung) und/oder Haftung, insbesondere Laminierung, vollflächig und/oder über die gesamte Kontaktfläche, aber diskontinuierlich, vorzugsweise punktweise und/oder mit Unterbrechungen, ausgebildet ist, insbesondere so dass der Verbund und/oder das Laminat gasdurchlässig, insbesondere luftdurchlässig, ausgebildet ist; und/oder
   insbesondere wobei die Funktionslage (3c) ein auf Basis von und/oder aus Textilfasern, insbesondere synthetischen Textilfasern, insbesondere wie in einem der Aspekte 15 bis 18 definiert, vorzugsweise Polyurethanfasern, gebildetes und/oder die vorgenannten Textilfasern aufweisendes textiles Flächengebilde, insbesondere Gelege oder Textilverbundstoff, vorzugsweise Vlies (Non-Woven), mit einer durch die Textilfasern begrenzten und/oder ausgebildeten Vielzahl von Poren oder Maschen, insbesondere Poren, ist; und/oder
   insbesondere wobei die Trägerlagen (3a, 3b), unabhängig voneinander, jeweils als ein Gelege oder Textilverbundstoff, insbesondere Vlies (Non-Woven), besonders bevorzugt als ein Vlies (Non-Woven), auf Basis von und/oder aus Textilfasern aus thermoplastischem Polyurethan (Thermoplastisches-Polyurethan-Fasern) ausgebildet sind.
105. Partikel- und/oder Aerosolfilterschicht (Partikel- und/oder Aerosolfiltermaterial) nach Aspekt 104,
   wobei die Partikel- und/oder Aerosolfilterschicht (3)
      mit einer ersten textilen Trägerschicht (2), insbesondere ersten Abdeckschicht, wobei die erste textile Trägerschicht (2) als ein vorzugsweise gasdurchlässiges, textiles Flächengebilde vorliegt und/oder ausgebildet ist, und/oder
      mit einer zweiten textilen Trägerschicht (5), insbesondere zweiten textilen Abdeckschicht (5), wobei die zweite textile Trägerschicht (5) als ein vorzugsweise gasdurchlässiges, textiles Flächengebilde vorliegt und/oder ausgebildet ist,
         und
      gegebenenfalls mit einer Adsorptionsschicht (4), vorzugsweise diskontinuierlich ausgebildeten und/oder gasdurchlässigen, bevorzugt luftdurchlässigen, Adsorptionsschicht (4), wobei die Adsorptionsschicht (4) eine Vielzahl einzelner und/oder diskreter Adsorberpartikel (4a) umfasst oder hieraus gebildet ist,
   kombiniert ist und/und oder in Kombination mit den vorgenannten Schichten vorliegt, insbesondere zur Ausbildung eines Schutz- und/oder Filtermaterials (1), bevorzugt wie in einem der Aspekte 1 bis 103 definiert.
106. Partikel- und/oder Aerosolfilterschicht (Partikel- und/oder Aerosolfiltermaterial) nach Aspekt 104 oder 105,
   wobei die erste textile Trägerschicht (2) auf der einen Seite der Partikel- und/oder Aerosolfilterschicht (3) und die zweite textile Trägerschicht (5) auf der anderen Seite der Partikel- und/oder Aerosolfilterschicht (3) angeordnet ist; und/oder
   wobei die Adsorptionsschicht (4) der Partikel- und/oder Aerosolfilterschicht (3) zugeordnet ist, vorzugsweise auf der Partikel- und/oder Aerosolfilterschicht (3) angeordnet und/oder mit der Partikel- und/oder Aerosolfilterschicht (3) verbunden ist, und/oder insbesondere wobei die Adsorptionsschicht (4) auf der der ersten textilen Trägerschicht (2) abgewandten Seite der Partikel- und/oder Aerosolfilterschicht (3) angeordnet ist und/oder insbesondere wobei die Adsorptionsschicht (4) zwischen der Partikel- und/oder Aerosolfilterschicht (3) und der zweiten textilen Trägerschicht (5) angeordnet ist.
107. Partikel- und/oder Aerosolfilterschicht (Partikel- und/oder Aerosolfiltermaterial) nach einem der Aspekte 104 bis 106,
   gekennzeichnet durch eines oder mehrere der Merkmale der Aspekte 1 bis 45.
108. Verwendung von Trägerlagen (3a, 3b) zur Stabilisierung einer Funktionslage (3c), wobei die Funktionslage (3c) Partikel- und/oder Aerosolfiltereigenschaften, insbesondere Partikel- und Aerosolfiltereigenschaften, aufweist,
   wobei die Funktionslage (3c) zwischen den Trägerlagen (3a, 3b) angeordnet und mit den jeweiligen Trägerlagen (3a, 3b) verbunden, vorzugsweise zumindest im Wesentlichen vollflächig und gasdurchlässig, insbesondere luftdurchlässig, verbunden, bevorzugt laminiert, wird;
   insbesondere so dass eine mehrlagig und gasdurchlässig, insbesondere luftdurchlässig, ausgebildete Partikel- und/oder Aerosolfilterschicht (3) (Partikel- und/oder Aerosolfiltermaterial), vorzugsweise Partikel- und Aerosolfilterschicht (3) (Partikel- und Aerosolfiltermaterial), insbesondere in Form eines gasdurchlässigen, insbesondere luftdurchlässigen, festen Verbunds und/oder Laminats, insbesondere wie in einem der Aspekte 104 bis 107 definiert, erhalten wird.
109. Verfahren zur Stabilisierung einer Funktionslage (3c), wobei die Funktionslage (3c) Partikel- und/oder Aerosolfiltereigenschaften, insbesondere Partikel- und Aerosolfiltereigenschaften, aufweist,
   wobei die Funktionslage (3c) zwischen Trägerlagen (3a, 3b) angeordnet und insbesondere mit den jeweiligen Trägerlagen (3a, 3b) verbunden, vorzugsweise zumindest im Wesentlichen vollflächig und luftdurchlässig verbunden, bevorzugt laminiert, wird;
   insbesondere so dass eine mehrlagig ausgebildete und luftdurchlässige Partikel- und/oder Aerosolfilterschicht (3) (Partikel- und/oder Aerosolfiltermaterial), vorzugsweise Partikel- und Aerosolfilterschicht (3) (Partikel- und Aerosolfiltermaterial), insbesondere wie in einem der Aspekte 104 bis 107 definiert, erhalten wird.
110. Verfahren nach Aspekt 109 oder Verwendung nach Aspekt 108,
   wobei die Trägerlage (3a) auf der einen Seite und/oder Fläche (erste Seite und/oder Fläche) der Funktionslage (3c) angeordnet wird und wobei die Trägerlage (3b) auf der gegenüberliegenden Seite und/oder Fläche (zweite Seite und/oder Fläche) der Funktionslage (3c) angeordnet wird; und/oder
   wobei die Lagen (3a, 3c, 3b) derart angeordnet und/oder verbunden werden, dass ein gasdurchlässiger, insbesondere luftdurchlässiger, fester Verbund und/oder ein gasdurchlässiges, insbesondere luftdurchlässiges, Laminat resultiert; und/oder
   wobei die Partikel- und/oder Aerosolfilterschicht (3) als ein gasdurchlässiger, insbesondere luftdurchlässiger, fester Verbund und/oder als ein gasdurchlässiges, insbesondere luftdurchlässiges, Laminat ausgebildet wird; und/oder
   wobei die Lagen (3a, 3c, 3b) jeweils an ihren Kontaktflächen fest miteinander verbunden (befestigt, fixiert) und/oder zum Haften gebracht werden, insbesondere zumindest im Wesentlichen vollflächig und/oder zumindest im Wesentlichen ganzseitig fest verbunden (befestigt, fixiert) und/oder zum Haften gebracht, insbesondere laminiert, werden, vorzugsweise zumindest im Wesentlichen vollflächig fest verbunden (befestigt, fixiert) und/oder zum Haften gebracht, insbesondere laminiert, werden, insbesondere so dass eine als fester Verbund und/oder als Laminat ausgebildete Partikel- und/oder Aerosolfilterschicht (3) erhalten wird; und/oder
   wobei die jeweilige feste Verbindung (Befestigung, Fixierung) und/oder Haftung, insbesondere Laminierung, der Lagen (3a, 3c, 3b) vollflächig und/oder über die gesamte Kontaktfläche, aber diskontinuierlich, vorzugsweise punktweise und/oder mit Unterbrechungen, ausgebildet wird, insbesondere so dass der Verbund und/oder das Laminat gasdurchlässig, insbesondere luftdurchlässig, ausgebildet wird.
111. Verfahren zur Herstellung eines Schutz- und/oder Filtermaterials (1), insbesondere textilen Schutz- und/oder Filtermaterials, vorzugsweise Adsorptionsfiltermaterials, mit Partikel- und/oder Aerosolfilterfunktion, vorzugsweise mit verbesserter Regenerationsbeständigkeit, insbesondere Waschbeständigkeit, bevorzugt Schutz- und/oder Filtermaterial (1) mit Schutzfunktion gegenüber chemischen und/oder biologischen und/oder radioaktiven Schad- und/oder Kampfstoffen ("ABC- bzw. CBRN-Schutzfunktion"), insbesondere wie in einem der Aspekte 1 bis 103 definiert, wobei
   (a) zunächst eine Partikel- und/oder Aerosolfilterschicht (3), vorzugsweise Partikel- und Aerosolfilterschicht (3), bereitgestellt und/oder hergestellt wird,
      wobei die Partikel- und/oder Aerosolfilterschicht (3) als ein gasdurchlässiges textiles Flächengebilde, welches eine Vielzahl einzelner Textilfasern umfasst oder hieraus gebildet ist, ausgebildet wird,
      wobei die Partikel- und/oder Aerosolfilterschicht (3) mehrlagig ausgebildet wird, wobei die Partikel- und/oder Aerosolfilterschicht (3) mindestens jeweils eine äußere Trägerlage (3a, 3b) und mindestens eine zwischen den äußeren Trägerlagen (3a, 3b) angeordnete, insbesondere mit den äußeren Trägerlagen (3a, 3b) verbundene Funktionslage (3c) mit Partikel- und/oder Aerosolfiltereigenschaften, insbesondere mit Partikel- und Aerosolfiltereigenschaften, aufweist,
      wobei die Lagen (3a, 3c, 3b) jeweils an ihren Kontaktflächen fest miteinander verbunden (befestigt, fixiert) und/oder zum Haften gebracht werden, insbesondere zumindest im Wesentlichen vollflächig und/oder zumindest im Wesentlichen ganzseitig fest verbunden (befestigt, fixiert) und/oder zum Haften gebracht, insbesondere laminiert, werden, insbesondere so dass eine als fester Verbund und/oder als Laminat ausgebildete Partikel- und/oder Aerosolfilterschicht (3) erhalten wird; und/oder
      wobei die jeweilige feste Verbindung (Befestigung, Fixierung) und/oder Haftung, insbesondere Laminierung, der Lagen (3a, 3c, 3b) zumindest im Wesentlichen vollflächig und/oder zumindest im Wesentlichen über die gesamte Kontaktfläche, aber diskontinuierlich, vorzugsweise punktweise und/oder mit Unterbrechungen, ausgebildet wird, insbesondere so dass der Verbund und/oder das Laminat gasdurchlässig, insbesondere luftdurchlässig, ausgebildet wird; und wobei anschließend
   (b) die Partikel- und/oder Aerosolfilterschicht (3) mit einer ersten textilen Trägerschicht (2), insbesondere ersten Abdeckschicht, ausgerüstet und/oder versehen wird, insbesondere wobei die erste textile Trägerschicht (2) der Partikel- und/oder Aerosolfilterschicht (3) zugeordnet wird und/oder auf einer Seite der Partikel- und/oder Aerosolfilterschicht (3) angeordnet wird, wobei die erste textile Trägerschicht (2) als ein vorzugsweise gasdurchlässiges, bevorzugt luftdurchlässiges, textiles Flächengebilde ausgebildet ist; und
   (c) gegebenenfalls die Partikel- und/oder Aerosolfilterschicht (3) mit einer Adsorptionsschicht (4) ausgerüstet und/oder versehen wird, insbesondere wobei die Adsorptionsschicht (4) der Partikel- und/oder Aerosolfilterschicht (3) zugeordnet wird und/oder auf der der ersten Trägerschicht (2) abgewandten Seite, insbesondere Flachseite, der Partikel- und/oder Aerosolfilterschicht (3) angeordnet wird, wobei die Adsorptionsschicht (4) vorzugsweise diskontinuierlich ausgebildet und/oder gasdurchlässig, bevorzugt luftdurchlässig, ausgebildet ist und wobei die Adsorptionsschicht (4) eine Vielzahl einzelner und/oder diskreter Adsorberpartikel (4a) umfasst oder hieraus gebildet ist.
112. Verfahren nach Aspekt 111,
   wobei die Partikel- und/oder Aerosolfilterschicht (3) nur abschnittsweise, insbesondere linienförmig und/oder randseitig, zumindest mit einem Teil der weiteren Schichten des Schutz- und/oder Filtermaterials (1), insbesondere mit der Trägerschicht (2) und/oder der Adsorptionsschicht (4), fest verbunden (hieran befestigt bzw. fixiert) wird, insbesondere mittels Vernähen, Verschweißen, Vertackern, Verkleben oder dergleichen, und im Übrigen lose und/oder unverbunden zu diesen weiteren Schichten des Schutz- und/oder Filtermaterials (1) angeordnet ist, insbesondere auf den der Partikel- und/oder Aerosolfilterschicht (3) unmittelbar zugeordneten (unmittelbar benachbarten) Schichten aufliegt; und/oder
   wobei die Partikel- und/oder Aerosolfilterschicht (3) mit zumindest einer, insbesondere mit beiden, der der Partikel- und/oder Aerosolfilterschicht (3) unmittelbar zugeordneten (unmittelbar benachbarten) und/oder hiermit direkt in Kontakt stehenden Schichten, des Schutz- und/oder Filtermaterials (1), insbesondere mit der Abdeckschicht (2) und/oder der Adsorptionsschicht (4), fest verbunden (befestigt, fixiert) und/oder zum Haften gebracht wird, insbesondere zumindest im Wesentlichen vollflächig und/oder zumindest im Wesentlichen ganzseitig fest verbunden (befestigt, fixiert) und/oder zum Haften gebracht, insbesondere laminiert, ist, vorzugsweise zumindest im Wesentlichen vollflächig, aber luftdurchlässig, verbunden (befestigt, fixiert) und/oder zum Haften gebracht, insbesondere laminiert, wird.
113. Verwendung eines Schutz- und/oder Filtermaterials, wie in einem der Aspekte 1 bis 103 definiert, und/oder einer Partikel- und/oder Aerosolfilterschicht (3) (Partikel- und/oder Aerosolfiltermaterial), wie in einem der Aspekte 104 bis 107 definiert,
   zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung, oder dergleichen, und/oder zur Herstellung von Schutzabdeckungen aller Art, vorzugsweise alle vorgenannten Schutzmaterialien und/oder Schutzbekleidungsstücke für den ABC-Einsatz und/oder mit Schutzfunktion gegenüber chemischen, biologischen und/oder radioaktiven Schad- und Giftstoffen.
114. Verwendung eines Schutz- und/oder Filtermaterials, wie in einem der Aspekte 1 bis 103 definiert, und/oder einer Partikel- und/oder Aerosolfilterschicht (3) (Partikel- und/oder Aerosolfiltermaterial), wie in einem der Aspekte 104 bis 107 definiert,
   zur Herstellung von Filtern und Filtermaterialien aller Art, insbesondere zur Entfernung von Schad-, Geruchs- und Giftstoffen aller Art, vorzugsweise zur Entfernung von chemischen biologischen und/oder radioaktiven Schad- und Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.
115. Schutzausrüstungen und/oder Schutzgegenstände aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber chemischen, biologischen und/oder radioaktiven Schad- und Giftstoffen,
   hergestellt unter Verwendung eines Schutz- und/oder Filtermaterials (1) , wie in einem der Aspekte 1 bis 103 definiert, und/oder aufweisend ein Schutz- und/oder Filtermaterial (1), wie in einem der Aspekte 1 bis 103 definiert; und/oder
   hergestellt unter Verwendung einer Partikel- und/oder Aerosolfilterschicht (3) (Partikel- und/oder Aerosolfiltermaterial), wie in einem der Aspekte 104 bis 107 definiert, und/oder aufweisend eine Partikel- und/oder Aerosolfilterschicht (3) (Partikel- und/oder Aerosolfiltermaterial), wie in einem der Aspekte 104 bis 107 definiert.
116. Filter und Filtermaterialien aller Art, insbesondere zur Entfernung von Schad-, Geruchs- und Giftstoffen aller Art, vorzugsweise zur Entfernung von chemischen, biologischen und/oder radioaktiven Schad- und Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich,
   hergestellt unter Verwendung eines Schutz- und/oder Filtermaterials (1), wie in einem der Aspekte 1 bis 103 definiert, und/oder aufweisend ein Schutz- und/oder Filtermaterial (1), wie in einem der Aspekte 1 bis 103 definiert; und/oder
   hergestellt unter Verwendung einer Partikel- und/oder Aerosolfilterschicht (3) (Partikel- und/oder Aerosolfiltermaterial), wie in einem der Aspekte 104 bis 107 definiert, und/oder aufweisend eine Partikel- und/oder Aerosolfilterschicht (3) (Partikel- und/oder Aerosolfiltermaterial), wie in einem der Aspekte 104 bis 107 definiert.
117. Partikel- und/oder Aerosolfilterschicht (3) (Partikel- und/oder Aerosolfiltermaterial) nach einem der Aspekte 104 bis 107, Verwendung nach Aspekt 108 oder 110, Verfahren nach Aspekt 109 oder 110, Verfahren nach Aspekt 111 oder 112, Verwendung nach Aspekt 113 oder 114, Schutzausrüstungen und/oder Schutzgegenstände nach Aspekt 115 oder Filter und Filtermaterialien nach Aspekt 116,
   gekennzeichnet durch eines oder mehrere der Merkmale der Aspekte 1 bis 103.

## Patentansprüche

1. Textiles Schutz- und/oder Filtermaterial (1) mit Partikel- und Aerosolfilterfunktion, vorzugsweise mit verbesserter Waschbeständigkeit, und mit Schutzfunktion gegenüber chemischen und/oder biologischen und/oder radioaktiven Schad- und/oder Kampfstoffen,
wobei das textile Schutz- und/oder Filtermaterial (1) als ein mehrlagiges, eine Mehrzahl von miteinander verbundenen Schichten (2, 3, 4) aufweisendes textiles Verbundmaterial ausgebildet ist und
wobei das textile Schutz- und/oder Filtermaterial (1) die folgenden Schichten (2, 3, 4) in der nachfolgend genannten Abfolge aufweist:
(a) eine erste textile Trägerschicht (2), insbesondere erste Abdeckschicht, wobei die erste textile Trägerschicht (2) als ein gasdurchlässiges textiles Flächengebilde vorliegt und/oder ausgebildet ist;
(b) eine der ersten textilen Trägerschicht (2) zugeordnete, insbesondere auf der ersten textilen Trägerschicht (2) angeordnete und/oder mit der ersten textilen Trägerschicht (2) verbundene, Partikel- und Aerosolfilterschicht (3),
wobei die Partikel- und Aerosolfilterschicht (3) als ein gasdurchlässiges textiles Flächengebilde, welches eine Vielzahl einzelner Textilfasern umfasst oder hieraus gebildet ist, vorliegt und/oder ausgebildet ist,
wobei die Partikel- und Aerosolfilterschicht (3) mehrlagig ausgebildet ist, wobei die Partikel- und Aerosolfilterschicht (3) mindestens jeweils eine äußere Trägerlage (3a, 3b) und mindestens eine zwischen den äußeren Trägerlagen (3a, 3b) angeordnete und mit den äußeren Trägerlagen (3a, 3b) verbundene Funktionslage (3c) mit Partikel- und Aerosolfiltereigenschaften aufweist,
wobei die Partikel- und Aerosolfilterschicht (3) als fester Verbund und/oder als Laminat ausgebildet ist, wobei die Lagen (3a, 3c, 3b) jeweils an ihren Kontaktflächen fest miteinander verbunden und/oder zum Haften gebracht sind,
wobei die jeweilige feste Verbindung und/oder Haftung vollflächig und/oder über die gesamte Kontaktfläche, aber diskontinuierlich, vorzugsweise punktweise und/oder mit Unterbrechungen, ausgebildet ist, so dass der Verbund und/oder das Laminat gasdurchlässig ausgebildet ist,
wobei die Funktionslage (3c) ein auf Basis von und/oder aus synthetischen Textilfasern gebildetes und/oder die vorgenannten Textilfasern aufweisendes textiles Flächengebilde mit einer durch die Textilfasern begrenzten und/oder ausgebildeten Vielzahl von Poren oder Maschen ist,
wobei die Funktionslage (3c) ein Flächengewicht im Bereich von 0,05 g/m² bis 50 g/m² aufweist, bestimmt gemäß DIN EN 12127, nach 24-stündiger Klimatisierung bei einer Temperatur von 20 °C und einer relativen Luftfeuchtigkeit von 65 %,
wobei die Funktionslage (3c) eine mittlere Porengröße oder mittlere Maschenweite von höchstens 100 µm aufweist, bestimmt gemäß ASTM F316-86, und
wobei die Trägerlagen (3a, 3b), unabhängig voneinander, jeweils als ein Gelege oder Textilverbundstoff ausgebildet sind,
wobei die Trägerlagen (3a, 3b), unabhängig voneinander, jeweils ein Flächengewicht im Bereich von 1 g/m² bis 100 g/m² aufweisen, bestimmt gemäß DIN EN 12127, nach 24-stündiger Klimatisierung bei einer Temperatur von 20 °C und einer relativen Luftfeuchtigkeit von 65 %;
(c) eine der Partikel- und Aerosolfilterschicht (3) zugeordnete, insbesondere auf der Partikel- und Aerosolfilterschicht (3) angeordnete und/oder mit der Partikel- und Aerosolfilterschicht (3) verbundene, diskontinuierlich ausgebildete und/oder gasdurchlässige Adsorptionsschicht (4),
wobei die Adsorptionsschicht (4) eine Vielzahl einzelner und/oder diskreter Adsorberpartikel (4a) umfasst oder hieraus gebildet ist,
wobei die Adsorberpartikel (4a) der Adsorptionsschicht (4) Aktivkohlepartikel, vorzugsweise in Form von Aktivkohlepartikeln in Kornform oder Aktivkohlepartikeln in Kugelform, sind.

2. Textiles Schutz- und/oder Filtermaterial nach Anspruch 1,
wobei die Partikel- und Aerosolfilterschicht (3) ein Flächengewicht im Bereich von 5 g/m² bis 200 g/m², insbesondere im Bereich von 10 g/m² bis 150 g/m², vorzugsweise im Bereich von 15 g/m² bis 120 g/m², bevorzugt im Bereich von 20 g/m² bis 100 g/m², besonders bevorzugt im Bereich von 25 g/m² bis 80 g/m², aufweist, bestimmt gemäß DIN EN 12127, nach 24-stündiger Klimatisierung bei einer Temperatur von 20 °C und einer relativen Luftfeuchtigkeit von 65 %; und/oder
wobei die Partikel- und Aerosolfilterschicht (3) eine Dicke, insbesondere Gesamtquerschnittsdicke, im Bereich von 0,01 mm bis 5 mm, insbesondere im Bereich von 0,03 mm bis 3 mm, vorzugsweise im Bereich von 0,05 mm bis 2 mm, bevorzugt im Bereich von 0,07 mm bis 1 mm, besonders bevorzugt im Bereich von 0,09 mm bis 0,75 mm, weiter bevorzugt im Bereich von 0,1 mm bis 0,5 mm, aufweist, bestimmt gemäß DIN EN ISO 9073-2.

3. Textiles Schutz- und/oder Filtermaterial nach Anspruch 1 oder 2,
wobei die die Funktionslage (3c) ein Flächengewicht im Bereich von 0,1 g/m² bis 25 g/m², vorzugsweise im Bereich von 0,2 g/m² bis 10 g/m², bevorzugt im Bereich von 0,3 g/m² bis 5 g/m², besonders bevorzugt im Bereich von 0,5 g/m² bis 3 g/m², aufweist, bestimmt gemäß DIN EN 12127, nach 24-stündiger Klimatisierung bei einer Temperatur von 20 °C und einer relativen Luftfeuchtigkeit von 65 %; und/oder
wobei die Funktionslage (3c) ein auf Basis von und/oder aus synthetischen Textilfasern, vorzugsweise ausgewählt aus Polyurethanfasern, gebildetes und/oder die vorgenannten Textilfasern aufweisendes textiles Flächengebilde in Form eines Geleges oder Textilverbundstoffs, vorzugsweise Vlies, mit einer durch die Textilfasern begrenzten und/oder ausgebildeten Vielzahl von Poren oder Maschen, insbesondere Poren, ist.

4. Textiles Schutz- und/oder Filtermaterial nach einem der vorangehenden Ansprüche,
wobei die synthetischen Textilfasern der Funktionslage (3c) ausgewählt sind aus Polyurethanfasern.

5. Textiles Schutz- und/oder Filtermaterial nach einem der vorangehenden Ansprüche,
wobei die Trägerlagen (3a, 3b), unabhängig voneinander, jeweils ein Flächengewicht im Bereich von 2 g/m² bis 75 g/m², vorzugsweise im Bereich von 5 g/m² bis 50 g/m², bevorzugt im Bereich von 8 g/m² bis 40 g/m², besonders bevorzugt im Bereich von 10 g/m² bis 35 g/m², aufweisen, bestimmt gemäß DIN EN 12127, nach 24-stündiger Klimatisierung bei einer Temperatur von 20 °C und einer relativen Luftfeuchtigkeit von 65 %; und/oder
wobei die Trägerlagen (3a, 3b), unabhängig voneinander, jeweils als ein Gelege oder Textilverbundstoff, insbesondere Vlies, besonders bevorzugt als ein Vlies, auf Basis von und/oder aus Textilfasern, vorzugsweise aus thermoplastischem Polyurethan, ausgebildet sind.

6. Textiles Schutz- und/oder Filtermaterial nach einem der vorangehenden Ansprüche,
wobei die erste textile Trägerschicht (2) als ein gasdurchlässiges textiles Flächengebilde, insbesondere als textile Maschenware, bevorzugt als Gewirke oder Gestrick, oder insbesondere als Gewebe, Gelege, Vlies oder Textilverbundstoff, ausgebildet ist; und/oder
wobei die erste textile Trägerschicht (2) Naturtextilfasern und/oder synthetische Textilfasern, vorzugsweise synthetische Textilfasern, umfasst oder hieraus gebildet ist.

7. Textiles Schutz- und/oder Filtermaterial nach einem der vorangehenden Ansprüche,
wobei die Adsorberpartikel (4a), insbesondere die Aktivkohlepartikel, eine Partikelgröße, insbesondere einen Teilchendurchmesser, im Bereich von 0,05 mm bis 1 mm, insbesondere im Bereich von 0,075 mm bis 0,5 mm, vorzugsweise im Bereich von 0,1 mm bis 0,4 mm, bevorzugt im Bereich von 0,125 mm bis 0,35 mm, besonders bevorzugt im Bereich von 0,15 mm bis 0,3 mm, weiter bevorzugt im Bereich von 0,2 mm bis 0,28 mm, bestimmt gemäß ASTM D2862, aufweisen; und/oder
wobei die Adsorberpartikel (4a) in einer Menge im Bereich von 5 g/m² bis 500 g/m², insbesondere 10 g/m² bis 300 g/m², vorzugsweise 30 g/m² bis 200 g/m², bevorzugt 40 g/m² bis 150 g/m², eingesetzt werden und/oder wobei das textile Schutzmaterial (1), insbesondere die Adsorptionsschicht (4), die Adsorberpartikel (4a) in einer Menge im Bereich von 5 g/m² bis 500 g/m², insbesondere 10 g/m² bis 300 g/m², vorzugsweise 30 g/m² bis 200 g/m², bevorzugt 40 g/m² bis 150 g/m², aufweist.

8. Textiles Schutz- und/oder Filtermaterial nach einem der vorangehenden Ansprüche,
wobei das textile Schutz- und/oder Filtermaterial (1) außerdem eine zweite textile Trägerschicht (5), insbesondere zweite textile Abdeckschicht (5), aufweist;
insbesondere wobei die zweite textile Trägerschicht (5) auf der der Partikel- und Aerosolfilterschicht (3) abgewandten Seite der Adsorptionsschicht (4) angeordnet ist.

9. Verwendung eines textilen Schutz- und/oder Filtermaterials, wie in einem der Ansprüche 1 bis 8 definiert,
zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung, oder dergleichen, und/oder zur Herstellung von Schutzabdeckungen aller Art, vorzugsweise alle vorgenannten Schutzmaterialien und/oder Schutz-bekleidungsstücke für den ABC-Einsatz und/oder mit Schutzfunktion gegenüber chemischen, biologischen und/oder radioaktiven Schad- und Giftstoffen.

10. Verwendung eines textilen Schutz- und/oder Filtermaterials, wie in einem der Ansprüche 1 bis 8 definiert,
zur Herstellung von Filtern und Filtermaterialien aller Art, insbesondere zur Entfernung von Schad-, Geruchs- und Giftstoffen aller Art, vorzugsweise zur Entfernung von chemischen biologischen und/oder radioaktiven Schad- und Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

11. Schutzausrüstungen und/oder Schutzgegenstände aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber chemischen, biologischen und/oder radioaktiven Schad- und Giftstoffen,
hergestellt unter Verwendung eines textilen Schutz- und/oder Filtermaterials (1) , wie in einem der Ansprüche 1 bis 8 definiert, und/oder aufweisend ein textiles Schutz- und/oder Filtermaterial (1), wie in einem der Ansprüche 1 bis 8 definiert.

12. Filter und Filtermaterialien aller Art, insbesondere zur Entfernung von Schad-, Geruchs- und Giftstoffen aller Art, vorzugsweise zur Entfernung von chemischen, biologischen und/oder radioaktiven Schad- und Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich,
hergestellt unter Verwendung eines textilen Schutz- und/oder Filtermaterials (1), wie in einem der Ansprüche 1 bis 8 definiert, und/oder aufweisend ein textiles Schutz- und/oder Filtermaterial (1), wie in einem der Ansprüche 1 bis 8 definiert.

## Claims

1. A textile protective and/or filter material (1) with a particle and aerosol filtering function, preferably with improved wash resistance, and with a protective function against chemical and/or biological and/or radioactive harmful substances and/or chemical warfare agents,
wherein the textile protective and/or filter material (1) is configured as a multilayer textile composite material comprising a plurality of interconnected layers (2, 3, 4), and
wherein the textile protective and/or filter material (1) comprises the following layers (2, 3, 4) in the sequence specified below:
(a) a first textile support layer (2), in particular a first covering layer, wherein the first textile support layer (2) is present and/or formed as a gas-permeable textile fabric;
(b) a particle and aerosol filter layer (3) assigned to the first textile support layer (2), in particular arranged on the first textile support layer (2) and/or connected to the first textile support layer (2),
wherein the particle and aerosol filter layer (3) is present and/or formed as a gas-permeable textile fabric comprising a plurality of individual textile fibres or formed therefrom,
wherein the particle and aerosol filter layer (3) is multilayered, wherein the particle and aerosol filter layer (3) comprises at least one outer support layer (3a, 3b) and at least one functional layer (3c) with particle and aerosol filter properties, which is arranged between the outer support layers (3a, 3b) and connected to the outer support layers (3a, 3b),
wherein the particle and aerosol filter layer (3) is formed as a solid composite and/or as a laminate, wherein the layers (3a, 3c, 3b) are fixedly connected to one another and/or made to adhere to one another at their contact surfaces,
wherein the respective fixed connection and/or adhesion extends over the entire surface and/or across the entire contact surface, but is discontinuous, preferably dot-wise and/or with interruptions, such that the composite and/or the laminate is gas-permeable,
wherein the functional layer (3c) is a textile fabric formed on the basis of and/or from synthetic textile fibres and/or comprising the aforementioned textile fibres, with a plurality of pores or meshes bounded and/or formed by the textile fibres,
wherein the functional layer (3c) has a basis weight in the range of from 0.05 g/m² to 50 g/m², determined in accordance with DIN EN 12127 after 24 hours of conditioning at a temperature of 20 °C and a relative humidity of 65%,
wherein the functional layer (3c) has an average pore size or average mesh size of not exceeding 100 µm, determined in accordance with ASTM F316-86, and
wherein the support layers (3a, 3b), independently of one another, are each formed as a laid fabric or textile composite material,
wherein the support layers (3a, 3b), independently of one another, each have a basis weight in the range of from 1 g/m² to 100 g/m², determined in accordance with DIN EN 12127, after 24 hours of conditioning at a temperature of 20 °C and a relative humidity of 65%;
(c) a discontinuous and/or gas-permeable adsorption layer (4) assigned to the particle and aerosol filter layer (3), in particular, arranged on the particle and aerosol filter layer (3) and/or connected to the particle and aerosol filter layer (3,
wherein the adsorption layer (4) comprises a plurality of individual and/or discrete adsorbent particles (4a) or is formed therefrom,
wherein the adsorbent particles (4a) of the adsorption layer (4) are activated carbon particles, preferably in the form of granular activated carbon particles or spherical activated carbon particles.

2. A textile protective and/or filter material according to claim 1,
wherein the particle and aerosol filter layer (3) has a basis weight in the range of from 5 g/m² to 200 g/m², in particular in the range of from 10 g/m² to 150 g/m², preferably in the range of from 15 g/m² to 120 g/m², more preferably in the range of from 20 g/m² to 100 g/m², and most preferably in the range of from 25 g/m² to 80 g/m², determined in accordance with DIN EN 12127 after 24 hours of conditioning at a temperature of 20 °C and a relative humidity of 65%; and/or
wherein the particle and aerosol filter layer (3) has a thickness, in particular a total cross-sectional thickness, in the range of from 0.01 mm to 5 mm, in particular in the range of from 0.03 mm to 3 mm, preferably in the range of from 0.05 mm to 2 mm, more preferably in the range of from 0.07 mm to 1 mm, particularly preferably in the range of from 0.09 mm to 0.75 mm, and further preferably in the range of from 0.1 mm to 0.5 mm, as determined in accordance with DIN EN ISO 9073-2.

3. A textile protective and/or filter material according to claim 1 or 2,
wherein the functional layer (3c) has a basis weight in the range of from 0.1 g/m² to 25 g/m², preferably in the range of from 0.2 g/m² to 10 g/m², more preferably in the range of from 0.3 g/m² to 5 g/m², and most preferably in the range of from 0.5 g/m² to 3 g/m², determined in accordance with DIN EN 12127 after 24 hours of conditioning at a temperature of 20 °C and a relative humidity of 65%; and/or
wherein the functional layer (3c) is a textile fabric formed on the basis of and/or from synthetic textile fibres, preferably selected from polyurethane fibres, and/or comprising the aforementioned textile fibres, in the form of a laid fabric or textile composite, preferably a fleece (nonwoven), with a pluarlity of pores or meshes bounded and/or formed by the textile fibres, in particular pores.

4. A textile protective and/or filter material according to any one of the preceding claims, wherein the synthetic textile fibres of the functional layer (3c) are selected from polyurethane fibres.

5. A textile protective and/or filter material according to any one of the preceding claims,
wherein the support layers (3a, 3b), independently of one another, each have a basis weight in the range of from 2 g/m² to 75 g/m², in particular in the range of from 5 g/m² to 50 g/m², preferably in the range of from 8 g/m² to 40 g/m², and more preferably in the range from 10 g/m² to 35 g/m², determined in accordance with DIN EN 12127 after 24 hours of conditioning at a temperature of 20 °C and a relative humidity of 65%; and/or
wherein the support layers (3a, 3b), independently of one another, are each present as a laid fabric or textile composite, in particular a fleece (nonwoven), most preferably as a fleece (nonwoven), formed on the basis of and/or composed of textile fibres, preferably thermoplastic polyurethane.

6. A textile protective and/or filter material according to any one of the preceding claims,
wherein the first textile support layer (2) is formed as a gas-permeable textile fabric, in particular as a knitted fabric, preferably as a warp-knitted or weft-knitted fabric, or in particular as a woven fabric, laid fabric, fleece (nonwoven), or textile composite; and/or
wherein the first textile support layer (2) comprises natural textile fibres and/or synthetic textile fibres, preferably synthetic textile fibres, or is formed therefrom.

7. A textile protective and/or filter material according to any one of the preceding claims,
wherein the adsorbent particles (4a), in particular the activated carbon particles, have a particle size, in particular a particle diameter, in the range of from 0.05 mm to 1 mm, in particular in the range of from 0.075 mm to 0.5 mm, preferably in the range of from 0.1 mm to 0.4 mm, more preferably in the range of from 0.125 mm to 0.35 mm, most preferably in the range of from 0.15 mm to 0.3 mm, and further preferably in the range of from 0.2 mm to 0.28 mm, determined in accordance with ASTM D2862; and/or
wherein the adsorbent particles (4a) are used in an amount ranging from 5 g/m² to 500 g/m², in particular 10 g/m² to 300 g/m², preferably 30 g/m² to 200 g/m², and most preferably 40 g/m² to 150 g/m², and/or wherein the textile protective material (1), in particular the adsorption layer (4), contains the adsorbent particles (4a) in an amount in the range of from 5 g/m² to 500 g/m², in particular 10 g/m² to 300 g/m², preferably 30 g/m² to 200 g/m², and more preferably 40 g/m² to 150 g/m².

8. A textile protective and/or filter material according to any one of the preceding claims,
wherein the textile protective and/or filter material (1) further comprises a second textile support layer (5), in particular a second textile cover layer (5);
in particular, wherein the second textile support layer (5) is arranged on the side of the adsorption layer (4) facing away from the particle and aerosol filter layer (3).

9. Use of a textile protective and/or filter material, as defined in any one of claims 1 to 8,
for the manufacture of protective equipment and/or protective articles of all kinds, in particular protective clothing, especially for civil or military use, such as protective suits, protective gloves, protective footwear, protective socks, head protection, or the like, and/or for the manufacture of protective covers of all kinds, preferably all of the aforementioned protective materials and/or protective clothing for NBC use and/or with a protective function against chemical, biological, and/or radioactive harmful substances and toxic substances.

10. Use of a protective and/or filter textile material, as defined in any of claims 1 to 8,
for the manufacture of filters and filter materials of all kinds, in particular for the removal of harmful substances, odors, and toxic substances of all kinds, preferably for the removal of chemical, biological, and/or radioactive harmful substances and toxic substances, in particular from air and/or gas streams, such as NBC protective mask filters, odor filters, surface filters, air filters in particular filters for room air purification, adsorbent carrier structures, and filters for medical applications.

11. Protective equipment and/or protective items of all kinds, in particular for civil or military use, especially protective clothing, such as protective suits, protective gloves, protective footwear, protective socks, head protection, and the like, and for the manufacturing of protective covers of all kinds, preferably all of the aforementioned protective equipment and/or protective items for NBC use and/or with protective function against chemical, biological, and/or radioactive harmful substances and toxic substances,
manufactured using a textile protective and/or filter material (1), as defined in any one of claims 1 to 8, and/or comprising a textile protective and/or filter material (1), as defined in any one of claims 1 through 8.

12. Filters and filter materials of all kinds, in particular for the removal of harmful substances, odorous, and toxic substances of all kinds, preferably for the removal of chemical, biological, and/or radioactive harmful substances and toxic substances, in particular from air and/or gas streams, such as protective mask filters, odor filters, surface filters, air filters in particular filters for room air purification, adsorbent carrier structures, and filters for medical applications,
manufactured using a textile protective and/or filter material (1), as defined in any one of claims 1 to 8, and/or comprising a textile protective and/or filter material (1), as defined in any one of claims 1 to 8.

## Revendications

1. Matériau textile de protection et/ou de filtration (1) ayant une fonction de filtration des particules et des aérosols, de préférence présentant une résistance au lavage améliorée, et ayant une fonction de protection contre les substances nocives et/ou les agents de guerre chimiques et/ou biologiques et/ou radioactifs,
le matériau textile de protection et/ou de filtration (1) étant réalisé sous la forme d'un matériau textile composite multicouche comprenant une pluralité de couches (2, 3, 4) reliées entre elles, et
le matériau textile de protection et/ou de filtration (1) comprenant les couches (2, 3, 4) suivantes, dans l'ordre indiqué ci-après :
(a) une première couche textile de support (2), en particulier une première couche de recouvrement, la première couche textile de support (2) se présentant sous la forme d'un matériau textile plat perméable aux gaz et/ou étant conçue comme tel;
(b) une couche de filtration des particules et des aérosols (3) associée à la première couche textile de support textile (2), en particulier disposée sur la première couche textile de support (2) et/ou reliée à celle-ci,
la couche filtrante pour particules et aérosols (3) se présentant sous la forme d'un matériau textile plat perméable aux gaz, qui comprend une multitude de fibres textiles individuelles ou qui est constituée de celles-ci, et/ou étant conçue comme tel,
la couche filtrante pour particules et aérosols (3) étant constituée de plusieurs couches, la couche filtrante pour particules et aérosols (3) comprenant au moins une couche textile de support extérieure (3a, 3b) et au moins une couche fonctionnelle (3c) ayant propriétés de filtration des particules et des aérosols, disposée entre les couches textiles de support extérieures (3a, 3b) et reliée aux couches textiles de support extérieures (3a, 3b),
la couche filtrante pour particules et aérosols (3) étant réalisée sous forme d'un assemblage solidement lié et/ou d'un stratifié, les couches (3a, 3c, 3b) étant chacune solidement reliées les unes aux autres au niveau de leurs surfaces de contact respectives et/ou rendues adhérentes les unes aux autres au niveau de celles-ci, l'assemblage solidement lié et/ou l'adhérence respective s'étendant sur toute la surface et/ou sur l'ensemble de la surface de contact, mais de manière discontinue, de préférence par points et/ou avec des interruptions, de sorte que le composite et/ou le stratifié soit perméable aux gaz,
la couche fonctionnelle (3c) étant un matériau textile plat formé à base de et/ou à partir de fibres textiles synthétiques et/ou comprenant les fibres textiles susmentionnées, présentant une pluralité de pores ou de mailles délimités et/ou formés par les fibres textiles,
la couche fonctionnelle (3c) présentant un grammage compris entre 0,05 g/m² et 50 g/m², déterminé conformément à la norme DIN EN 12127, après 24 heures de conditionnement climatique à une température de 20 °C et une humidité relative de 65 %,
la couche fonctionnelle (3c) présentant une taille moyenne des pores ou une ouverture moyenne des mailles d'au plus 100 µm, déterminée selon la norme ASTM F316-86, et
les couches textiles de support (3a, 3b) étant chacune, indépendamment l'une de l'autre, constituées d'un non-tissé ou d'un composite textile,
les couches textiles de support (3a, 3b), indépendamment l'une de l'autre, présentant chacune un grammage compris entre 1 g/m² à 100 g/m², déterminé selon la norme DIN EN 12127, après 24 heures de conditionnement climatique à une température de 20 °C et une humidité relative de 65 %;
(c) une couche d'adsorption (4) associée à la couche de filtration des particules et des aérosols (3), en particulier disposée sur la couche de filtration des particules et des aérosols (3) et/ou reliée à celle-ci, de structure discontinue et/ou perméable aux gaz,
la couche d'adsorption (4) comprenant une multitude de particules d'adsorption (4a) individuelles et/ou discrètes ou étant formée à partir de celles-ci,
les particules d'adsorption (4a) de la couche d'adsorption (4) étant des particules de charbon actif, de préférence sous forme de particules de charbon actif granulaires ou sphériques.

2. Matériau textile de protection et/ou de filtration selon la revendication 1,
la couche filtrante pour particules et aérosols (3) présentant un grammage compris entre 5 g/m² et 200 g/m², en particulier entre 10 g/m² et 150 g/m², de préférence entre 15 g/m² à 120 g/m², de préférence dans la plage de 20 g/m² à 100 g/m², et de manière particulièrement préférée dans la plage de 25 g/m² à 80 g/m², déterminée selon la norme DIN EN 12127, après 24 heures de conditionnement climatique à une température de 20 °C et une humidité relative de 65 %; et/ou
la couche de filtration des particules et des aérosols (3) présentant une épaisseur, en particulier une épaisseur totale en section transversale, comprise entre 0,01 mm et 5 mm, en particulier entre 0,03 mm et 3 mm, de préférence entre 0,05 mm et 2 mm, de préférence encore entre 0,07 mm et 1 mm, particulièrement de préférence comprise entre 0,09 mm et 0,75 mm, et encore de préférence comprise entre 0,1 mm et 0,5 mm, déterminée conformément à la norme DIN EN ISO 9073-2.

3. Matériau textile de protection et/ou de filtration selon la revendication 1 ou 2,
la couche fonctionnelle (3c) présentant un grammage compris entre 0,1 g/m² et 25 g/m², de préférence entre 0,2 g/m² et 10 g/m², et de manière particulièrement préférée entre 0,3 g/m² à 5 g/m², et de préférence encore dans la plage de 0,5 g/m² à 3 g/m², déterminé selon la norme DIN EN 12127, après 24 heures de conditionnement climatique à une température de 20 °C et une humidité relative de 65 % ; et/ou
la couche fonctionnelle (3c) est un matériau textile plat formé à partir de et/ou à base de fibres textiles synthétiques, de préférence choisies parmi les fibres de polyuréthane, et/ou comprenant les fibres textiles susmentionnées, sous la forme d'un non-tissé ou d'un composite textile, de préférence un composite non-tissé, présentant une multitude de pores ou de mailles délimités et/ou formés par les fibres textiles, en particulier des pores.

4. Matériau textile de protection et/ou de filtration selon l'une des revendications précédentes,
où les fibres textiles synthétiques de la couche fonctionnelle (3c) sont choisies parmi des fibres de polyuréthane.

5. Matériau textile de protection et/ou de filtration selon l'une des revendications précédentes,
où les couches de support (3a, 3b), indépendamment l'une de l'autre, présentent chacune un grammage compris entre 2 g/m² et 75 g/m², de préférence entre 5 g/m² et 50 g/m², de préférence encore entre 8 g/m² à 40 g/m², et de préférence encore dans la plage de 10 g/m² à 35 g/m², déterminé selon la norme DIN EN 12127, après 24 heures de conditionnement climatique à une température de 20 °C et une humidité relative de 65 % ; et/ou
les couches textiles de support (3a, 3b) étant chacune, indépendamment l'une de l'autre, réalisées sous la forme d'un non-tissé ou d'un composite textile, en particulier d'un composite non-tissé, de préférence d'un composite non-tissé, à base de et/ou constituées de fibres textiles, de préférence en polyuréthane thermoplastique.

6. Matériau textile de protection et/ou de filtration selon l'une des revendications précédentes,
où la première couche textile de support (2) est réalisée sous la forme d'un matériau textile plat perméable aux gaz, en particulier sous la forme d'un tricot, de préférence d'un tricot chaîne ou trame, ou en particulier sous la forme d'un tissu, d'un non-tissé, d'un composite non-tissé ou d'un composite textile ; et/ou
où la première textile couche de support (2) comprend des fibres textiles naturelles et/ou des fibres textiles synthétiques, de préférence des fibres textiles synthétiques, ou est constituée de celles-ci.

7. Matériau textile de protection et/ou de filtration selon l'une des revendications précédentes,
les particules d'adsorbant (4a), en particulier les particules de charbon actif, présentant une taille de particule, en particulier un diamètre de particule, comprise entre 0,05 mm et 1 mm, en particulier entre 0,075 mm et 0,5 mm, de préférence entre 0,1 mm et 0,4 mm, de préférence comprise entre 0,125 mm et 0,35 mm, plus particulièrement comprise entre 0,15 mm et 0,3 mm, et encore plus particulièrement comprise entre 0,2 mm et 0,28 mm, déterminée selon la norme ASTM D2862; et/ou
les particules adsorbantes (4a) étant utilisées en une quantité comprise entre 5 g/m² et 500 g/m², en particulier entre 10 g/m² et 300 g/m², de préférence entre 30 g/m² et 200 g/m², de préférence encore 40 g/m² à 150 g/m², et/ou où le matériau textile de protection (1), en particulier la couche d'adsorption (4), contient les particules adsorbantes (4a) en une quantité comprise entre 5 g/m² et 500 g/m², en particulier entre 10 g/m² à 300 g/m², de préférence de 30 g/m² à 200 g/m², et de préférence encore de 40 g/m² à 150 g/m².

8. Matériau textile de protection et/ou de filtration selon l'une des revendications précédentes,
le matériau textile de protection et/ou de filtration (1) comprenant en outre une deuxième couche textile de support (5), en particulier une deuxième couche textile de recouvrement (5);
en particulier, la deuxième couche textile de support (5) étant disposée sur la face de la couche d'adsorption (4) opposée à la couche de filtration des particules et des aérosols (3).

9. Utilisation d'un matériau textile de protection et/ou de filtration, tel que défini dans l'une des revendications 1 à 8,
pour la fabrication d'équipements de protection et/ou d'articles de protection de toutes sortes, en particulier de vêtements de protection, notamment pour le domaine civil ou militaire, tels que des combinaisons de protection, des gants de protection, des chaussures de protection, des chaussettes de protection, de couvre-chefs, ou similaires, et/ou pour la fabrication de revêtements de protection de toutes sortes, de préférence tous les matériaux de protection et/ou vêtements de protection susmentionnés destinés à une utilisation NBC et/ou offrant une fonction de protection contre les substances nocives et toxiques chimiques, biologiques et/ou radioactives.

10. Utilisation d'un matériau textile de protection et/ou de filtration, tel que défini dans l'une des revendications 1 à 8,
pour la fabrication de filtres et de matériaux filtrants de toutes sortes, en particulier pour l'élimination de substances nocives, odorantes et substances toxiques de toutes sortes, de préférence pour l'élimination de substances nocives et toxiques chimiques, biologiques et/ou radioactives, notamment dans les flux d'air et/ou de gaz, tels que les filtres de masques de protection NBC, filtres anti-odeurs, filtres plats, filtres à air, notamment les filtres destinés à la purification de l'air ambiant, les structures de support adsorbantes et les filtres destinés au secteur médical.

11. Équipements et/ou articles de protection de toutes sortes, notamment pour le domaine civil ou militaire, en particulier les vêtements de protection, tels que les combinaisons de protection, les gants de protection, les chaussures de protection, les chaussettes de protection, les couvre-chefs de protection et autres articles similaires, ainsi que les housses de protection, de préférence tous les équipements et/ou articles de protection susmentionnés destinés à une utilisation NBC et/ou offrant une protection contre les substances nocives et toxiques chimiques, biologiques et/ou radioactives,
fabriqués à l'aide d'un matériau textile de protection et/ou de filtration (1), tel que défini dans l'une des revendications 1 à 8, et/ou comprenant un matériau textile de protection et/ou de filtration (1), tel que défini dans l'une des revendications 1 à 8.

12. Filtres et matériaux filtrants de toutes sortes, en particulier destinés à éliminer les substances nocives, odorantes et substances toxiques de toutes sortes, de préférence destinés à éliminer les substances nocives et toxiques chimiques, biologiques et/ou radioactives, notamment des flux d'air et/ou de gaz, tels que les filtres pour masques de protection, filtres anti-odeurs, filtres plats, filtres à air, notamment des filtres destinés à la purification de l'air ambiant, des structures de support adsorbantes et des filtres destinés au domaine médical,
fabriqués à l'aide d'un matériau textile de protection et/ou de filtration (1), tel que défini dans l'une des revendications 1 à 8, et/ou comprenant un matériau textile de protection et/ou de filtration (1), tel que défini dans l'une des revendications 1 à 8.
